# EUROPEAN PATENT APPLICATION

(11) **EP 4 507 422 A1**
(43) Date of publication of application: **12.02.2025**
(21) Application number: 22936218.1
(22) Date of filing: 08.04.2022
(51) Int. Cl.: H04W 72/04

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HOU, Ronghui, Dongguan, Guangdong 523860 (CN); HUANG, Lei, 049483 Singapore (SG); DU, Haoyuan, Dongguan, Guangdong 523860 (CN); ZHOU, Pei, Dongguan, Guangdong 523860 (CN); LUO, Chaoming, Dongguan, Guangdong 523860 (CN)
(74) Representative: RGTH
(86) International application number: PCT/CN2022/085980
(87) International publication number: WO 2023/193281

(57) **Abstract**

A communication method and a device are provided by the present disclosure. The communication method includes: sending, by a first station (STA), a trigger frame, and the trigger frame is used to establish a coordinated transmission between multiple STAs. A solution for efficiently establishing a multi-STA cooperation is provided by the embodiments of the present disclosure.

## Description

### TECHNICAL FIELD

The present disclosure relates to the field of communication, and in particular, to a communication method and a device.

### BACKGROUND

In wireless communication, a mechanism based on triggered Transmission Opportunity sharing (Triggered TXOP sharing) mechanism allows an AP to share a part of its obtained transmission opportunity(Transmission Opportunity, TXOP) to a STA. However, how to efficiently perform multi-STA coordinated transmission is a problem that needs to be considered.

### SUMMARY

Embodiments of the present disclosure provide a communication method and a device.

The embodiments of the present disclosure provide a communication method, including: sending, by a first station (STA), a trigger frame, where the trigger frame is used to establish a coordinated transmission between multiple STAs.

The embodiments of the present disclosure provide a communication method, including: receiving, by a second station (STA), a trigger frame sent from a first STA, where the trigger frame is used to establish a coordinated transmission between multiple STAs.

The embodiments of the present disclosure provide a communication method, including: receiving, by a third station (STA), a trigger frame sent from a first STA, where the trigger frame is used to establish a coordinated transmission between multiple STAs; and the third STA is associated with the first STA.

The embodiments of the present disclosure provide a communication method, including: receiving, by a fourth station (STA), a trigger frame sent from a first STA, where the trigger frame is used to establish a coordinated transmission between multiple STAs; and the fourth STA is not associated with the first STA.

The embodiments of the present disclosure provide a first STA, including: a first communication unit, configured to send a trigger frame, where the trigger frame is used to establish a coordinated transmission between multiple STAs.

The embodiments of the present disclosure provide a second STA, including: a second communication unit, configured to receive a trigger frame sent from a first STA, where the trigger frame is used to establish a coordinated transmission between multiple STAs.

The embodiments of the present disclosure provide a third STA, including: a third communication unit, configured to receive a trigger frame sent from a first STA, where the trigger frame is used to establish a coordinated transmission between multiple STAs; and the third STA is associated with the first STA.

The embodiments of the present disclosure provide a fourth STA, including: a fourth communication unit, configured to receive a trigger frame sent from a first STA, where the trigger frame is used to establish a coordinated transmission between multiple STAs; and the fourth STA is not associated with the first STA.

The embodiments of the present disclosure provide a communication device, including: a processor and a memory. The memory is configured to store a computer program, and the processor is used to call and run the computer program stored in the memory, so as to enable the communication device to perform the method of any one of the embodiments of the present disclosure.

The embodiments of the present disclosure provide a chip for implementing the above methods. Specifically, the chip includes: a processor, configured to call a computer program from a memory and run the computer program, so as to enable a device equipped with the chip to perform the method of any one of the embodiments of the present disclosure.

The embodiments of the present disclosure provide a computer-readable storage medium for storing a computer program, and the computer program, upon being executed on a device, enables the device to perform the method of any one of the embodiments of the present disclosure.

The embodiments of the present disclosure provide a computer program product, including computer program instructions, and the computer program instructions enable a computer to perform the method of any one of the embodiments of the present disclosure.

The embodiments of the present disclosure provide a computer program, where the computer program, upon being executed on a computer, enables the computer to perform the method of any one of the embodiments of the present disclosure.

In the embodiments of the present disclosure, a trigger frame is sent from a first STA, and a coordinated transmission between multiple STAs can be established through the trigger frame, thereby providing a solution for efficiently establishing a multi-STA cooperation.

### BRIEF DESCRIPTION OF THE DRAWINGS

FIG. 1 is a schematic diagram of an application scenario according to the embodiments of the present disclosure.
FIG. 2 is a schematic flow chart of a communication method according to the embodiments of the present disclosure.
FIG. 3 to FIG. 9 are various schematic diagrams of formats of trigger frames according to the present disclosure.
FIG. 10 is a processing flow schematic diagram of a preparation phase of a multi-STA interactive transmission.
FIG. 11 is a processing flow schematic diagram of a probe phase of a multi-STA interactive transmission.
FIG. 12 and FIG. 13 are schematic diagrams of a scenario of triggering a multi-STA simultaneous uplink transmission according to the present embodiment.
FIG. 14 and FIG. 15 are schematic diagrams of another scenario of triggering a multi-STA simultaneous uplink transmission according to the present embodiment.
FIG. 16 and FIG. 17 are schematic diagrams of yet another scenario of triggering a multi-STA simultaneous uplink transmission according to the present embodiment.
FIG. 18 is a schematic diagram of further another scenario of triggering a multi-STA simultaneous uplink transmission according to the present embodiment.
FIG. 19 and FIG. 20 are schematic diagrams of a scenario of triggering a multi-STA simultaneous downlink transmission according to the present embodiment.
FIG. 21 and FIG. 22 are schematic diagrams of another scenario of triggering a multi-STA simultaneous downlink transmission according to the present embodiment.
FIG. 23 and FIG. 24 are schematic diagrams of yet another scenario of triggering a multi-STA simultaneous downlink transmission according to the present embodiment.
FIG. 25 and FIG. 26 are schematic diagrams of a scenario of triggering a downlink transmission of a multi-STA in a joint transmission mode according to the present embodiment.
FIG. 27 and FIG. 28 are schematic diagrams of a scenario of triggering a simultaneous downlink and a simultaneous downlink transmission of a multi-STA according to the present embodiment.
FIG. 29 is another schematic flow chart of a communication method according to the embodiments of the present disclosure.
FIG. 30 is further another schematic flow chart of a communication method according to the embodiments of the present disclosure.
FIG. 31 is yet another schematic flow chart of a communication method according to the embodiments of the present disclosure.
FIG. 32 to FIG. 38 are various exemplary flow charts of multi-STA coordinated transmissions of the communication methods according to the embodiments of the present disclosure.
FIG. 39 is a schematic block diagram of a first STA according to the embodiments of the present disclosure.
FIG. 40 is a schematic block diagram of a second STA according to the embodiments of the present disclosure.
FIG. 41 is a schematic block diagram of a third STA according to the embodiments of the present disclosure.
FIG. 42 is a schematic block diagram of a fourth STA according to the embodiments of the present disclosure.
FIG. 43 is a schematic block diagram of a communication device according to the embodiments of the present disclosure.
FIG. 44 is a schematic block diagram of a chip according to the embodiments of the present disclosure.
FIG. 45 is a schematic block diagram of a communication system according to the embodiments of the present disclosure.

### DETTAILED DESCRIPTION

The technical solutions of the embodiments of the present disclosure will be described below, in conjunction with the drawings in the embodiments of the present disclosure.

The technical solutions of the embodiments of the present disclosure may be applied to various communication systems, such as wireless local area network (WLAN), wireless fidelity (Wireless Fidelity, Wi-Fi) or other communication systems, etc.

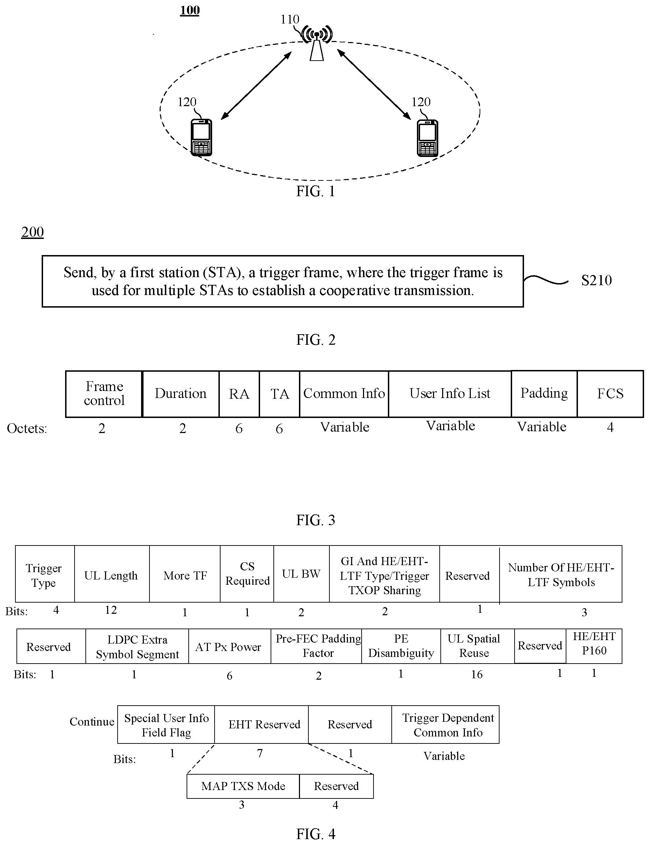

For example, a communication system 100 applied in the embodiments of the present disclosure is shown in FIG. 1. The communication system 100 may include an access point (Access Point, AP) 110 and stations (STATION, STA) 120 which access a network by the access point 110. In some scenarios, an AP may also be referred to as an AP STA. That is, in a sense, the AP is also a kind of STA. In some scenarios, a STA is also referred to as a non-AP STA.

A communication in the communication system 100 may be a communication between an AP and a non-AP STA, a communication between a non-AP STA and a non-AP STA, or a communication between a STA and a peer STA. The peer STA may refer to a device that has a peer communication with the STA. For example, the peer STA may be an AP or a non-AP STA. The AP is equivalent to a bridge connecting a wired network and a wireless network, and the main role of the AP is to connect various wireless network clients together and then access the wireless network to Ethernet. The AP device may be a terminal device (e.g., a mobile phone) or network device (e.g., a router). The terminal device or network device has a chip for achieving communication functions, such as a WLAN or WiFi chip.

It should be understood that a role of the STA in the communication system is not absolute. For example, in some scenarios, in a case where a mobile phone is connected to a router, the mobile phone is the non-AP STA, and in a case where the mobile phone serves as a hotspot for other mobile phones, the mobile phone acts as the AP. The AP and the non-AP STA may be devices applied in Vehicle to Everything, Internet of Things (IoT) nodes, sensors, etc., in IoT, smart cameras, smart remote controllers, smart watermeters, smart electricity meters, etc., in a smart home, and sensors in a smart city, etc. In some embodiments, the non-AP STA may support an 802.11be standard. The non-AP STA may also support various wireless local area network (WLAN) standards of the current and future 802.11 family, such as 802.11ax, 802.11ac, 802.11n, 802.11g, 802.11b and 802.11a, etc. In some embodiments, the AP may be a device supporting the 802.11be standard. The AP may also be a device supporting various WLAN standards of the current and future 802.11 family, such as 802.11ax, 802.11ac, 802.11n, 802.11g, 802.11b, and 802.11a, etc. In the embodiments of the present disclosure, the STA may be a mobile phone (Mobile Phone), a pad (Pad), a computer, a virtual reality (Virtual Reality, VR) device, an augmented reality (Augmented Reality, AR) device, a wireless device in industrial control (industrial control), a set-top box, a wireless device in self driving (self driving), a vehicle-mounted communication device, a wireless device in remote medical (remote medical), a wireless device in smart grid (smart grid), a wireless device in transportation safety (transportation safety), a wireless device in smart city (smart city), a wireless device in smart home (smart home), a wireless communication chip/application specific integrated circuit (ASIC)/system on chip (SoC), or the like, which support the WLAN/WiFi technology.

Frequency bands that the WLAN technology may support may include, but are not limited to: low frequency bands (e.g., 2.4 GHz, 5 GHz, 6 GHz), high frequency bands (e.g., 60 GHz). FIG. 1 exemplarily shows one AP STA and two non-AP STAs. Optionally, the communication system 100 may include multiple AP STAs and other numbers of non-AP STAs, which are not limited to the embodiments of the present disclosure.

It should be understood that the terms herein "system" and "network" are often used interchangeably herein. The term "and/or" herein is only an association relationship to describe associated objects, and represents that there may be three relationships, for example, "A and/or B" may represent three cases of: A exists alone, both A and B exist, and B exists alone. In addition, the character "/" herein generally represents that associated objects before and after this character are in an "or" relationship. It should be understood that the "indication" mentioned in the embodiments of the present disclosure may be a direct indication or an indirect indication, or may represent that there is an association relationship. For example, A representing B may mean that A directly indicates B, e.g., that B may be acquired by A; or may also mean that A indirectly indicates B, e.g., that A indicates C, and B may be acquired by C; or may further mean that there is an association relationship between A and B. In the description of the embodiments of the present disclosure, the term "corresponding" may mean a direct or indirect corresponding relationship between the two, or an association relationship between the two, or a relationship of indicating and being indicated, or configuring and being configured, etc.

To facilitate the understanding of the technical solutions of the embodiments of the present disclosure, the relevant technologies of the embodiments of the present disclosure are described below. The following related technologies as optional solutions, may be arbitrarily combined with the technical solutions of the embodiments of the present disclosure, and the combined solutions all belong to the protection scope of the embodiments of the present disclosure.

The WLAN is widely used in enterprises, homes and other scenarios due to its low cost, flexibility and easy expansion. As one of candidate technologies determined by the EHT (extremely high throughput) research group, a multi-AP operation mainly studies a coordinated transmission method between APs. In some implementations, only a data transmission between a single AP and a STA is supported, and spatial multiplexing between the AP and the STA is performed through power control, but the APs are independent of each other. Therefore, the flexibility of time, frequency and spatial resources of the system is greatly limited. To improve this point, a TXOP (transmission opportunity) sharing technology between multiple APs is further supported, that is, control information is interacted between APs through wireless links to achieve time domain, frequency domain, and spatial domain resource sharing, thereby increasing peak throughput and reducing latency. In a multi-AP scenario, if an AP obtains a period of TXOP and decides to share the TXOP with other APs for simultaneous usage, the AP sharing the TXOP is referred to as a sharing AP, and the APs being shared with the TXOP are referred to as shared AP(s). Herein, the TXOP sharing between multiple APs differs from the legacy TXOP sharing concept. A mechanism of a TXOP sharing between multiple APs (hereinafter referred to as multi-AP TXOP sharing) allows sharing TXOPs between APs and still may use this period of TXOP for their own transmission after sharing. According to different coordination complexities and actual application scenarios, coordination modes after multi-AP TXOP sharing may be divided into five transmission modes: a coordinated orthogonal frequency division multiple access (Coordinated Orthogonal Frequency Division Multiple Access, COFDMA/C-OFDMA), a coordinated spatial reuse (Coordinated Spatial Reuse, CSR/C-SR), a coordinated beamforming (Coordinated Beamforming, C-BF/CBF)/nulling, a coordinated uplink multiple user multiple input multiple output (Coordinated Uplink Multiple User Multiple Input Multiple Output, C-UL MU-MIMO), and a joint transmission (Joint Transmission, J-TX/JTX).

1. Coordinated beamforming/nulling: A C-BF/CBF/nulling scheme based on parameterized spatial reuse (parameterized spatial reuse, PSR) may be used. Specifically, in a preparation phase, an AP1 that obtains the TXOP actively broadcasts a coordination request (Crequest). During a CSI collecting phase, the AP1 indicates a node participating in a subsequent coordinated transmission through a null data PPDU announcement frame (Null Data PPDU Announcement frame, NDPA). After AP1 sends TF, STA11, STA12, AP2, and STA21 that receive the TF send Null Data PPDU (Null Data PPDU, NDP), and AP2 sends the TF to AP1, STA11, STA12, and STA21. In a coordinated transmission phase, AP1 and AP2 perform nulling operations, and AP1 and AP2 send an ACK after receiving data from their respective STAs. 2. C-UL MU-MIMO: the sharing AP, after obtaining the TXOP, sends an M-AP (multiple AP) TF. The shared AP1 and shared AP2 that receive the M-AP TF simultaneously send coordinated uplink trigger (coordinated UL trigger) frames. The STA1 associated with the shared AP1 and the STA2 associated with the shared AP2 send multiple user multiple input multiple output (Multiple User Multiple Input Multiple Output, MU-MIMO) high efficiency-long training fields (HE-LTF, HE Long Training fields) and data frames (Data Frame) respectively. Then shared AP1 and shared AP2 send block acknowledgments (B-ACK, Block ACK) to STA1 and STA2 respectively. 3. COFDMA: This is divided into three phases: (1) An AP collects a report from associated STAs to determine candidate STAs and identifies applicable frequency resources. (2) AP2 and AP1 exchange frequency domain resource information that is expected to obtain through AP-to-AP frames. (3) During COFDMA transmission, AP2 (i.e., sharing AP) sends a multi-AP trigger frame to AP1 (i.e., shared AP) to allocate a most appropriate time-frequency resource to AP1; AP1 and AP2 send basic trigger frames to associated STAs thereof, respectively, and then, the STA1 sends uplink data carried by the UL PPDU to the AP1 and receives an acknowledgment (ACK) frame fed back by AP1. Similarly, the STA2 sends the uplink data carried by the UL PPDU to the AP2 and receives the acknowledgment (ACK) frame fed back by AP2. 4. Coordinated spatial reuse: AP1 (i.e. Sharing AP) is associated with STA11, AP2 (i.e. Shared AP) is associated with STA21, AP1 first sends a C-SR/CSR announcement (Announcement) to AP2, and then AP1 and AP2 simultaneously send trigger frames to respective associated STAs thereof. STA11 sends a trigger-based (TB) PPDU to AP1, and AP1 sends a block acknowledgment (BA) to STA11; STA21 simultaneously sends the trigger-based (TB) PPDU to AP2, and AP2 sends the BA (block acknowledgment) to STA21. Additionally, in a related technology, a first wireless local area network (WLAN) device may win a contention-based procedure to become an owner of the TXOP, and the first WLAN device may share mTXOP allocation resources with other WLAN devices. During a first part of the mTXOP, the first WLAN device allocates slave transmission opportunities (or sub-TXOPs) for the usage of other WLAN devices during a second part of the mTXOP. The allocation of sub-TXOPs may be prepared based on a fairness consideration, a latency consideration, or both.

FIG. 2 is a schematic flow chart of a communication method 200 according to the embodiments of a first aspect of the present disclosure. The method may optionally be applied to a system shown in FIG. 1, but is not limited thereto. The method includes at least part of the following content:

S210, sending, by a first station (STA), a trigger frame, where the trigger frame is used to establish a coordinated transmission between multiple STAs.

In the embodiments of the present disclosure, the first STA may be an AP. Specifically, the first STA is a sharing AP. Before performing S210, the first STA may pre-obtain its own association identifier (Association Identifier, AID) and/or virtual association identifier (Virtual AID, VAID), AIDs and/or VAIDs of other STAs; the other STAs may include a second STA (Shared AP), a third STA associated with the first STA, and a fourth STA associated with the second STA. An AID and/or VAID of the first STA is configured by a target device. The specific configuration occasion is before performing the aforementioned S210, for example, may be in the preparation phase and before the preparation phase. That is, before performing S210, the method further includes: acquiring, by the first STA, the AID and/or VAID configured by the target device for itself. The first STA obtains the VAID configured (or allocated) by the target device for itself. The VAID of the first STA is mainly used for a STA of a multi-STA (or multi-AP) TXOP (transmission opportunity) sharing operation. Additionally, the VAID of the first STA may be valid only in a multi-AP coordinated set (hereinafter referred to as a coordinated set). In another example, the first STA may obtain the AID and VAID configured (or allocated) by the target device for itself, that is, the first STA may store its two IDs, i.e., AID and VAID, respectively. There may also be an example where the first STA acquires AID configured (or allocated) by the target device for itself.

Before performing S210, the method may further include: acquiring, by the first STA, an AID and/or a VAID of a second STA. Herein, the second STA may be a shared AP. The number of the second STA may be one or more, which is not limited in the present embodiment. Specifically, the acquiring, by the first STA, the AID and/or the VAID of the second STA may be: acquiring, by the first STA, the AID and/or VAID of the second STA from the target device. Processing occasion of the first STA for acquiring the AID and/or the VAID of the second STA may be before the preparation phase. The first STA acquires the VAID of the second STA from the target device. The VAID of the second STA is mainly used for a STA of the multi-STA (or multi-AP) TXOP sharing operation. Additionally, the VAID of the second STA may be valid only in a multi-AP coordinated set (hereinafter referred to as a coordinated set). In another example, the first STA may acquire the AID and the VAID of the second STA from the target device, that is, the first STA may save two IDs of the second STA, i.e., the AID and VAID of the second STA, respectively. There may also be an example where the first STA acquires the AID of the second STA from the target device.

Before performing S210, the method may further include: configuring (or allocating), by the first STA, an AID and/or a VAID for a third STA. The third STA is specifically a STA (i.e., a non-AP STA) associated with the first STA (i.e., Sharing AP). The number of the third STA may be one or more, which is not limited in the present embodiment. Specifically, the configuring (or allocating), by the first STA, the AID and/or the VAID for the third STA includes: configuring, by the first STA, the AID and/or the VAID for the third STA based on a first range of identification values; the first range of identification values is configured by the target device, and the third STA is associated with the first STA. The first range of identification values is within at least one of: 1-2007, 2008-2044, and 2047-4096. A process occasion of the first STA for allocating the AID and/or the VAID of the third STA may be before the preparation phase. Herein, the manner for the first STA for acquiring the first range of identification values from the target device may be as follows: the target device sends identification indication information for the first STA, the identification indication information is used to indicate the first STA to allocate the first range of identification values of the AID and/or the VAID for any one of third STAs when the first STA is associated with this third STA. That is, the first range of identification values may be carried by the identification indication information. The number of the third STAs that the first STA may be associated with may be one or more, and a first range of identification values corresponding to different third STAs may be different. Accordingly, the target device may send one or more pieces of identification indication information for the first STA, where each identification indication information contains a first range of identification values. For example, for example, the sharing AP (i.e. the first STA) is associated with two third STAs, i.e., STA11 and STA12, respectively. The first range of identification values of STA11 may be 1-20, and the first range of identification values of STA12 may be 21-30. The first STA allocates the VAID of the third STA based on the first range of identification values. The VAID of the third STA is mainly used for a STA of a multi-STA (or multi-AP) TXOP sharing operation. In another example, the first STA allocates the AID and VAID of the third STA based on the first range of identification values. There may also be an example where the first STA allocates the AID of the third STA based on the first range of identification values.

Before performing S210, the method may further include: acquiring, by the first STA, an AID and/or a VAID of a fourth STA from the second STA. Herein, the second STA may specifically be a shared (Shared) AP. The fourth STA is a STA (specifically, a non-AP STA) associated with the second STA (i.e., the shared AP). A number of the second STAs (i.e., Shared APs) may be one or more, and a number of the fourth STAs associated with any one of the second STAs may be one or more. Herein, the AID and/or the VAID of the fourth STAs associated with the second STA is configured (or allocated) by the second STA for the fourth STA based on a second range of identification values allocated by the target device. The process occasion for the first STA for acquiring the AID and/or the VAID of the fourth STA from the second STA may be before the preparation phase, in the preparation phase, before the completion of the probe phase, etc., which is not limited in the present embodiment. In an example, the first STA acquires the VAID of the fourth STA from the second STA. The VAID of the fourth STA is mainly used for a STA of the multi-STA (or multi-AP) TXOP sharing operation. In another example, the first STA acquires the AID and the VAID of the fourth STA from the second STA. There may also be an example where the first STA acquires the AID of the fourth STA from the second STA. The first STA acquires an AID and/or a VAID of STAs associated with other STAs that may receive the first STA's own signal from other STAs in the first STA's own coordination set and saves the AID and/or the VAID. For example, the first STA is a sharing AP, and the same coordination set also contains a second STA, that is a shared AP. The shared AP (the second STA) requests the fourth STA associated with itself for a list of other APs whose beacons are monitored; if the list of other APs contains other APs in a same coordination set as the shared AP (the second STA), such as the sharing AP (the first STA), the shared AP (the second STA) sends the AID and/or VAID of the fourth STA associated with itself to the sharing AP (the first STA); accordingly, the sharing AP (the first STA) receives and saves the AID and/or VAID of the fourth STA associated with the shared AP (the second STA). Herein, the first STA may store the AID and/or VAID of the fourth STA in the STA list. That is, each AP in the coordination set may obtain STA information that can receive its signal from other APs (or neighboring APs) and store the STA information in the STA list.

It can be seen from the above implementation that the first STA may obtain the AID and/or the VAID of respective STAs before performing S210. AIDs and/or VAIDs of respective STAs are directly or indirectly allocated by the target device.

Herein, the target device may specifically be a coordinating device. The coordinating device is an access point (AP); or, the coordinating device is a device other than an AP. That is to say, the coordinating device may be any one of APs in one or more coordination sets; or, the coordinating device may not be any one of APs, that is, the coordinating device may be a device other than all the APs in one or more coordination sets, such as a server or an electronic device, etc., and its possible types are not exhaustive herein. The coordinating device and APs in the one or more coordination set that the coordinating device manages or controls may be connected by wire or wireless manner, which mainly serves to allocate a globally unique identifier (i.e., AID and/or VAID) to all devices (APs and STAs) in the network composed of multiple APs to distinguish different devices to achieve the multi-AP TXOP sharing. It should be noted that the coordinating device is only an exemplary name, or may also be referred to as a coordinator, etc., and name thereof will not be exhaustive herein, as long as a device that is capable of directly or indirectly performing allocation of AIDs and/or VAIDs for one or more STAs is within the scope of protection of the present embodiment.

More specifically, the aforementioned target device may be used to allocate AIDs and/or VAIDs to respective APs in respective coordination set in the one or more coordination sets. It should be understood that each coordination set may contain one or more APs (i.e., may contain one sharing AP and one or more shared APs), and each of the one or more APs may be associated with one or more STAs (i.e., non-AP STAs); and different coordination sets contain different APs, and different APs are associated with different STAs. The aforementioned first STA (i.e., the sharing AP), and the second STA, (i.e., the shared AP), may be APs in a same coordination set. That is, the aforementioned target device may specifically allocate an AID to each AP in the respective coordination sets, or may allocate a VAID to each AP in the respective coordination sets, or may allocate an AID and a VAID to each AP in the respective coordination sets.

An exemplary description of directly allocating the AIDs and/or the VAIDs by the target device to respective APs in the respective coordination sets: the target device uniformly allocates AIDs and/or VAIDs to respective APs in the coordination set, where the value of the AID and/or VAID of each AP is one of the values within the following range: 2008-2044, 2047-4096. 2008-2044 and 2047-4096 may be reserved values in the system herein. In combination with the aforementioned implementations, the first STA (sharing AP) may obtain the AID and/or VAID allocated to the first STA by the target device. Similarly, the second STA (shared AP) may also obtain the AID and/or VAID allocated to the second STA by the target device. In addition, each AP may also acquire the AID or VAID values of other APs from the target device, save the AID or VAID values and dynamically update the AID or VAID values. For example, in combination with the aforementioned implementations, the first STA (sharing AP) may acquire the AID and/or VAID of the second STA (shared AP) from the target device and save the AID or VAID; similarly, the second STA (shared AP) may also acquire the AID and/or VAID of the first STA (sharing AP) from the target device and save the AID or VAID values. It should be understood that the above description that the target device directly allocates the AIDs and/or the VAIDs to respective APs in respective coordination sets is only an example, and there may be other allocation manners in actual processing, which are not exhaustive in the present embodiment. Thus, by uniformly allocating AIDs and/or VAIDs to APs by the target device, it may be ensured that each AP has a unique AID and/or VAID in a coordination set controlled by the target device. An exemplary illustration of indirectly allocating the AIDs and/or the VAIDs by the target device to STAs associated with respective APs in respective coordination sets: the target device indicates, to each AP in the coordination set, the range of AID or VAID values that the AP allocates to the STA when the STA is to be associated. For example, there are 10 APs in the coordination set managed or controlled by the target device, where one sharing AP (i.e., the first STA) and 9 shared APs (i.e., the second STA) are contained. In a case where the target device may indicate when the first STA (sharing AP) in the coordination set is associated with a third STA through the identification indication information, the target device allocates an AID or a VAID of 1-200 (i.e., the first range of identification values) to the third STA; in a case where a certain shared AP(a certain second STA) is associated with a fourth STA, the target device allocates an AID or a VAID of 201-400 (i.e., the second range of identification values) to the fourth STA and so on. In this way, 10 APs may be allocated corresponding globally unique AID or VAID upon associating with respective STAs thereof.

It should also be pointed out that the aforementioned target device allocates, to respective APs, the corresponding identification value ranges (such as the first range of identification values allocated to the first STA) allocated by the aforementioned target device to respective APs may preferably be selected from 1-2007. If a number of STAs is large (for example, the number of STAs exceeds the first number threshold value, which may be set according to an actual condition, such as 2000), the target device may allocate identification value ranges to respective APs, such as the first range of identification values allocated to the first STA, which may be further increased to ranges of 2008-2044 and 2047-4096. In this way, it may be ensured that each STA has a unique AID or VAID in a coordination set controlled by a target device.

It should be understood that indirect allocation of AIDs and/or VAIDs by the target device to STAs associated with respective APs in respective coordination sets is only an exemplary allocation manner. There may be other allocation manners in actual processing. For example, the target device may directly allocate AIDs and/or VAIDs to respective STAs, etc., which are not exhaustive herein.

It can be seen from the above description that in a multi-STA environment or a multi-AP environment, in order to support coordinated transmissions between multiple STAs or multiple APs, AID or VAID of each STA needs to be directly or indirectly allocated by the target device, rather than allocated by each STA respectively, thus ensuring that each STA has a unique AID and VAID in the coordination set controlled by a target device.

The aforementioned describes in detail how the first STA acquires AIDs and/or VAIDs of the second STA, the third STA, and the fourth STA, and processing of the target device. Next, a field and a subfield that may be contained in the trigger frame are described.

In an implementation, the trigger frame specifically may be referred to as a MAP TXS (Multi-AP TXOP sharing, Multi-AP TXOP sharing) trigger frame. The trigger frame may be used in all embodiments to establish coordinated transmissions between multiple STAs, and specifically may be used to trigger multi-STA TXOP sharing. Various multi-AP coordination modes may be implemented by using a multi-AP trigger frame. The trigger frame may include a common information (common info) field and/or a user information list (user info list) field; where the user information list field may include one or more user information (user info) subfields.

The common information field of the trigger frame includes at least one of: a trigger type subfield, where a value of the trigger type subfield is used to represent a type of the trigger frame; a transmission mode subfield, where a value of the transmission mode subfield is used to indicate a coordinated transmission mode used for transmission opportunity (TXOP) sharing of the multiple STAs, and/or whether the multiple STAs enable a TXOP sharing mode; an uplink and downlink indication subfield, where a value of the uplink and downlink indication subfield is used to indicate that TXOP is used for a simultaneous uplink transmission or a simultaneous downlink transmission; and a sharing transmission indication subfield, where a value of the sharing transmission indication subfield is used to indicate whether the multiple STAs enable the TXOP sharing mode.

The value of the trigger type subfield is a first specified value, where the first specified value represents that the trigger frame is used to establish a coordinated transmission between multiple STAs. Specifically, the trigger type subfield may be represented as a "Trigger Type" subfield (also referred to trigger type subfield), and the trigger type subfield is used to represent a variant of the trigger frame. In a case where the value of the trigger type subfield is the first specified value, it may be used to represent that the trigger frame is used to establish a coordinated transmission between multiple STAs. The first specified value may be any one of 8-15 (containing 8 and 15). This is because types of trigger frame variants corresponding to the values of the trigger type subfield from 0 to 7 have been defined in the relevant standards. Therefore, any one of the reserved values from 8 to 15 as the first specified value is used by the present embodiment. Exemplarily, the first specified value is 8, that is, in a case where the value of the trigger type subfield is 8, it is used to represent that the trigger frame is used to establish a coordinated transmission between multiple STAs, that is, it is used to identify a MAP TXS trigger frame (or a new MAP TXS trigger frame). It should be understood that it is only an exemplary description, and in actual processing, this first specified value may also be 9, 10, or other values, as long as the first specified value being within the aforementioned range of 8-15 is referred to within the scope of protection of the present embodiment, which is however not exhaustive herein.

The transmission mode subfield may be represented as a "MAP TXS Mode" subfield. The transmission mode subfield occupies at least part of bits (bit) of the first reserved subfield in the common information field. Herein, the at least part of the bits of the first reserved subfield occupied by the transmission mode subfield specifically may be one or more continuous bits, or may be one or more non-continuous bits. In a preferred example, a first number of the at least part of the bits occupied by the transmission mode subfield may be 3 bits. That is, the transmission mode subfield occupies 3 continuous bits (or 3 non-continuous bits) of the first reserved subfield in the common information field. It should be understood that it is only an exemplary description, and the first number of at least part of the bits actually occupied by the transmission mode subfield may be adjusted according to an actual condition, for example, the first number may be 4 bits, 5 bits, or more or less, and all possible conditions are not exhaustive herein. The first reserved subfield may be any one of reserved subfields of the common information field. It should be understood that a number of reserved bits (or remaining bits) contained in the first reserved subfield needs to be greater than or equal to the first number. For example, in a case where the first number of the aforementioned at least part bits is 3 bits, a number of reserved bits (or remaining bits) contained in the first reserved subfield is at least 3 bits (at least 3 continuous bits or at least 3 non-continuous bits). Exemplarily, the first reserved subfield may be an EHT reserved subfield. The EHT reserved subfield contains reserved bits with 7 bits, where 3 continuous bits (e.g., the first 3 bits) may be used as a transmission mode subfield.

The value of the transmission mode subfield is used to indicate the coordinated transmission mode used for TXOP sharing of the multiple STAs and/or whether the multiple STAs enable the TXOP sharing mode. That is, based on the value of the transmission mode subfield, it may be determined whether the multiple STAs enable the TXOP sharing mode; in a case where it is determined that multiple STAs do not enable the TXOP sharing mode, it can be determined to adopt a legacy transmission manner, which will not be repeated herein; otherwise, in a case where it is determined that multiple STAs enable the TXOP sharing mode, the coordinated transmission mode used for the transmission opportunity (TXOP) sharing of the multiple STAs may be determined based on the value of the transmission mode subfield. Specifically, the different values of the transmission mode subfield and the specific meanings that are represented by the different values are described as follows: the value of the transmission mode subfield is a first value, which represents that the multiple STAs do not enable the TXOP sharing mode; and/or the value of the transmission mode subfield is a second value, which represents that the coordinated transmission mode used for the TXOP sharing of the multiple STAs is a CBF mode and/or a C-UL MU-MIMO mode; and/or the value of the transmission mode subfield is a third value, which represents hat the coordinated transmission mode used for the TXOP sharing of the multiple STAs is COFDMA and/or CSR; and/or the value of the transmission mode subfield is a fourth value, which represents that the coordinated transmission mode used for the TXOP sharing of the multiple STAs is a joint transmission mode; and/or the value of the transmission mode subfield is a fifth value, which represents that the coordinated transmission mode used for the TXOP sharing of the multiple STAs is a legacy uplink TXOP sharing mode.

Any two values of the first value, the second value, the third value, the fourth value, and the fifth value are different. For example, the first value may be 1, the second value may be 2, the third value may be 3, the fourth value may be 4, and the fifth value may be 5. For example, the first value may be 0, the second value may be 1, the third value may be 2, the fourth value may be 3, and the fifth value may be 4. For example, the first value may be 3, the second value may be 1, the third value may be 2, the fourth value may be 4, the fifth value may be 5, and so on. It should be pointed out that as long as the aforementioned first value, second value, third value, fourth value, and fifth value being pairwise different can be within the protection scope of the present embodiment, but all possible values are not exhaustive herein.

It should also be pointed out that the aforementioned transmission mode subfield occupies at least part of the bits of the first reserved subfield in the common information field. In a case where the transmission mode subfield occupies multiple bits, only the first value to the fifth value are defined above, so there may be some remaining values that are not defined. These remaining values may be reserved for expansively defining new transmission modes in the future. For example, referring to Table 1 below, assuming that the transmission mode subfield occupies 3 bits, the value of the predefined transmission mode subfield is a first value of 0 (for example, binary representation is 000), which is used to represent that the multiple STAs do not enable the TXOP sharing mode, that is, the multi-AP TXOP sharing mode is not used; the value of the transmission mode subfield is a second value of 1 (for example, the binary representation is 001), which represents that the coordinated transmission mode used for the TXOP sharing of the multiple STAs is a CBF mode and/or a C-UL MU-MIMO mode; the value of the transmission mode subfield is a third value of 2 (for example, the binary representation is 010), which represents that the coordinated transmission mode used for the TXOP sharing of the multiple STAs is COFDMA and/or CSR; the value of the transmission mode subfield is a fourth value of 3 (for example, the binary representation is 011), which represents that the coordinated transmission mode used for the TXOP sharing of the multiple STAs is a joint transmission mode; the value of the transmission mode subfield is a fifth value of 4 (for example, the binary representation is 100), which represents that the coordinated transmission mode used for the TXOP sharing of the multiple STAs is a legacy uplink TXOP sharing mode (or referred to as a legacy uplink multi-AP TXOP sharing mode). In addition, there are remaining values of 5 (e.g., the binary representation is 101) to 7 (e.g., the binary representation is 101), and the remaining values 5 to 7 may be reserved (or referred to as a reserved value) for expansively defining new transmission modes in the future.

**Table 1**

| | |
|---|---|
| 0 | Multiple STAs do not enable TXOP sharing mode |
| 1 | CBF and/or C-UL MU-MIMO mode |
| 2 | COFDMA and/or CSR |
| 3 | Joint transmission mode |
| 4 | Legacy uplink TXOP sharing mode |
| 5-7 | Reserved |

The uplink/downlink indication subfield may be represented as a "UL/DL Indication" subfield. The uplink and downlink indication subfield occupies at least part of bits of the second reserved subfield in the common information field. Herein, the at least part of the bits occupied by the uplink and downlink indication subfield specifically may be one or more continuous bits, or one or more non-continuous bits. In a preferred example, a second number of the at least part of the bits occupied by the uplink and downlink indication subfield may be 1 bit (bit). That is, the uplink and downlink indication subfield occupies 1-bit of the second reserved subfield in the common information field. It should be understood that it is only an exemplary description, and the second number of at least part of the bits actually occupied by the uplink and downlink indication subfield may be adjusted according to an actual condition, for example, the second number may be 2 bits, 3 bits, or more or less, and all possible conditions are not exhaustive herein. The second reserved subfield may be any one of reserved subfields of the common information field. It should be pointed out that a number of reserved bits (or remaining bits) contained in the second reserved subfield needs to be greater than or equal to the second number. For example, in a case where the aforementioned second number is 1 bit, the number of reserved bits (or remaining bits) contained in the second reserved subfield is at least 1 bit. The second reserved subfield may be the same as or different from the aforementioned first reserved field. In an example, the second reserved subfield may be the same as the aforementioned first reserved field, that is, the second reserved subfield may be an EHT reserved subfield. The EHT reserved subfield contains a 7-bit reserved field. At this time, the uplink and downlink indication subfield may be located after the aforementioned transmission mode subfield, or the uplink and downlink indication subfield may be located before the transmission mode subfield, both of which are within the protection scope of the present embodiment. In another example, the second reserved subfield may be different from the aforementioned first reserved field, that is, the second reserved subfield may be other reserved subfields other than the EHT reserved subfield in the common information field. For example, there is a 1-bit reserved subfield before the HE/EHT P160 subfield of the common information field, then the reserved subfield may be used as the above-mentioned second reserved subfield. It should be understood that it is only an exemplary description, and possible locations of the second reserved subfield are not exhaustive herein. As long as the possible locations of the second reserved subfield is in any one of the reserved subfields in the common information field, and the number of reserved bits (or remaining bits) contained in the possible locations of the second reserved subfield is greater than or equal to the second number, it is within the protection scope of present embodiment.

The value of the uplink and downlink indication subfield is used to indicate that the TXOP is used for a simultaneous uplink transmission or a simultaneous downlink transmission. Specifically, the value of the uplink and downlink indication subfield is a sixth value, used to indicate the multiple STAs to perform a simultaneous uplink transmission; and/or the value of the uplink and downlink indication subfield is a seventh value, which is used to indicate the multiple STAs to perform a simultaneous downlink transmission. In actual processing, the value of the uplink and downlink indication subfield may be only configured or set to the sixth value, which is used to indicate the multiple STAs to perform a simultaneous uplink transmission. In other words, in a case where the value of the uplink and downlink indication subfield is other value, it is used to indicate the multiple STAs to perform a simultaneous downlink transmission. For another example, the value of the uplink and downlink indication subfield may be only configured or set to the seventh value, which is used to indicate the multiple STAs to perform a simultaneous downlink transmission. In other words, in a case where the value of the uplink and downlink indication subfield is other value, it is used to indicate the multiple STAs to perform a simultaneous uplink transmission. For yet another example, the value of the uplink and downlink indication subfield may be configured or set to the sixth value to indicate the multiple STAs to perform a simultaneous uplink transmission, and the value of the uplink and downlink indication subfield may be configured or set to the seventh value to indicate the multiple STAs to perform a simultaneous downlink transmission. Herein, the sixth value and the seventh value are different. Additionally, the sixth value may be the same as or different from any one of the first specified value and the first value to the fifth value. The seventh value may be the same as or different from any one of the first specified value and the first value to the fifth value. Exemplarily, the sixth value may be 0 and the seventh value may be 1; or, the sixth value may be 1 and the seventh value may be 0; or, the sixth value may be 1 and the seventh value may be 2. As long as the values of the sixth value and the seventh value being different are all within the protection scope of the present embodiment.

The sharing transmission indication subfield may be represented as a "MAP TXS Indication" subfield. The sharing transmission indication subfield occupies at least part of bits of a third reserved subfield in the common information field. Herein, the at least part of the bits occupied by the sharing transmission indication subfield specifically may be one or more continuous bits, or may be one or more non-continuous bits. In a preferred example, a third number of the at least part of the bits occupied by the sharing transmission indication subfield may be 1 bit (bit). That is, the sharing transmission indication subfield occupies 1-bit third reserved subfield in the common information field. It should be understood that it is only an exemplary description, and the third number of at least part of the bits actually occupied by the sharing transmission indication subfield may be adjusted according to an actual condition, for example, the third number may be 2 bits, 3 bits, or more or less, and all possible conditions are not exhaustive herein. The third reserved subfield may be any one of reserved subfields of the common information field. It should be ensured that a number of reserved bits (or remaining bits) contained in the third reserved subfield needs to be greater than or equal to the third number. For example, in a case where the third number of the at least part of bits is 1 bit, a number of reserved bits (or remaining bits) contained in the third reserved subfield is at least 1 bit. The third reserved subfield may be the same as or different from the aforementioned first reserved subfield, and/or the third reserved subfield may be the same as or different from the aforementioned second reserved subfield. In an example, the third reserved subfield is different from the aforementioned first reserved subfield and second reserved field. The third reserved field is a reserved subfield before the number of HE/EHT-LTF symbol subfield in the common information field. Furthermore, in the reserved subfield before the number of the HE/EHT-LTF symbol subfield, a number of bits of the reserved field is 1 bit, so the sharing transmission indication subfield occupies all bits of the reserved subfield before the number of the HE/EHT-LTF symbol subfield. In another example, the third reserved subfield may be the same as the aforementioned first reserved subfield, that is, the third reserved subfield and the first reserved subfield both are EHT reserved subfields; of course, in this example, in a case where the second reserved subfield is also an EHT reserved subfield, the third reserved subfield is also the same as the second reserved subfield. As long as the possible locations of the third reserved subfield is in any one of the reserved subfields in the common information field, and the number of reserved bits (or remaining bits) contained in the possible locations of the third reserved subfield is greater than or equal to the third number of bits required for the sharing transmission indication subfield, it is within the protection scope of present embodiment.

The value of the sharing transmission indication subfield is used to indicate whether the multiple STAs enable the TXOP sharing mode. Specifically, the value of the sharing transmission indication subfield is an eighth value, which is used to indicate the multiple STAs to enable the TXOP sharing mode; and/or, the value of the sharing transmission indication subfield is a ninth value, which is used to indicate the multiple STAs not to enable the TXOP sharing mode. In actual processing, the value of the sharing transmission indication subfield may be only configured or set to the eighth value to indicate the multiple STAs to enable the TXOP sharing mode. In other words, in a case where the value of the sharing transmission indication subfield is other value, it is used to indicate the multiple STAs not to enable the TXOP sharing mode. For another example, the value of the sharing transmission indication subfield may be only configured or set to the ninth value to indicate the multiple STAs not to enable the TXOP sharing mode. In other words, in a case where the value of the uplink and downlink indication subfield is other value, it is used to indicate the multiple STAs to enable the TXOP sharing mode. For yet another example, the value of the sharing transmission indication subfield may be configured or set to the eighth value to indicate the multiple STAs to enable the TXOP sharing mode, and the value of the sharing transmission indication subfield may be configured or set to the ninth value to indicate the multiple STAs not to enable the TXOP sharing mode. Herein, the eighth value and the ninth value are different. Additionally, the eighth value may be the same as or different from any one of the first specified value, the first value to the fifth value, the sixth value and the seventh value. The ninth value may be the same as or different from any one of the first specified value, the first value to the fifth value, the sixth value and the seventh value. Exemplarily, the eighth value may be 0 and the ninth value may be 1; or, the eighth value may be 1 and the ninth value may be 0. As long as values of the eighth value and the ninth value are different, they are all within the protection scope of the present embodiment.

The trigger frame includes one or more user information subfields; an i-th user information subfield of the one or more user information subfields is a user information subfield of an i-th STA; i is an integer greater than or equal to 1, and the i-th STA is one of the multiple STAs; the i-th user information subfield includes at least one of: an identification subfield of the i-th STA, where the identification subfield of the i-th STA is used to carry identification information of the i-th STA; a transmission mode subfield of the i-th STA, where a value of the transmission mode subfield of the i-th STA is used to represent the coordinated transmission mode used for the TXOP sharing of the i-th STA, and/or whether the i-th STA enables the TXOP sharing mode; a transmit power subfield of the i-th STA, where the transmit power subfield of the i-th STA is used to represent a maximum transmit power used by the i-th STA; and an uplink and downlink indication subfield of the i-th STA, where the uplink and downlink indication subfield of the i-th STA is used to represent the coordinated transmission of the i-th STA is a simultaneous uplink transmission or a simultaneous downlink transmission.

It should first be noted that the i-th user information subfield refers to any one of one or more user information subfields. In the one or more user information subfields, a content contained in the each user information subfield may be at least one of the content contained in the aforementioned i-th user information subfield, and each user information subfield is not repeated herein.

The identification information of the i-th STA is 12 least significant bits of the association identifier (AID) of the i-th STA and/or a 12-bit virtual association identifier (VAID). The i-th STA may be any one of STAs, and the manner that the first STA acquires AIDs and/or VAIDs of respective different STAs have been described in details in the aforementioned embodiments, which will not be repeated herein.

The transmission mode subfield of the i-th STA may be specifically referred to as a MAP TXS mode subfield of the i-th STA. The transmission mode subfield of the i-th STA occupies at least part of bits of a trigger dependent user information subfield in the i-th user information subfield. Herein, the trigger dependent user information subfield may be represented as a "Trigger dependent User Info" subfield. The at least part of bits occupied by the transmission mode subfield of the i-th STA may specifically be one or more continuous bits, or one or more non-continuous bits. In a preferred example, a fourth number of the at least part of bits occupied by the transmission mode subfield of the i-th STA may be 3 bits. That is, the transmission mode subfield of the i-th STA occupies 3 continuous or non-continuous bits of the trigger dependent user information subfield in the i-th user information subfield. It should be understood that it is only an exemplary description, and the fourth number of at least part of bits actually occupied by the transmission mode subfield of the i-th STA may be adjusted according to an actual condition, for example, the fourth number may be 4 bits, 5 bits, or more or less, and all possible conditions are not exhaustive herein.

The value of the transmission mode subfield of the i-th STA is used to indicate the coordinated transmission mode used for transmission opportunity (TXOP) sharing of a j-th STA, and/or whether the j-th STA enables the TXOP sharing mode. That is, based on the value of the transmission mode subfield of the i-th STA, whether the i-th STA enables the TXOP sharing mode can be determined; in a case where it is determined that the i-th STA does not enable the TXOP sharing mode, it may be determined to adopt a legacy transmission manner, which will not be repeated herein; otherwise, in a case where it is determined that the i-th STA enables the TXOP sharing mode, the coordinated transmission mode used for the transmission opportunity (TXOP) sharing of the i-th STA may be determined based on the value of the transmission mode subfield of the i-th STA.

Specifically, different values of the transmission mode subfield of the i-th STA and the specific meanings that are represented by the different values are described as follows: the value of the transmission mode subfield of the i-th STA is a first value, which represents that the i-th STA does not enable the TXOP sharing mode; and/or the value of the transmission mode subfield of the i-th STA is a second value, which represents that the coordinated transmission mode used for the transmission opportunity (TXOP) sharing of the i-th STA is a CBF mode and/or a C-UL MU-MIMO mode; and/or the value of the transmission mode subfield of the i-th STA is a third value, which represents that the coordinated transmission mode used for the transmission opportunity (TXOP) sharing of the i-th STA is a COFDMA mode and/or a CSR mode; and/or the value of the transmission mode subfield of the i-th STA is a fourth value, which represents that the coordinated transmission mode used for the transmission opportunity (TXOP) sharing of the i-th STA is a joint transmission mode; and/or the value of the transmission mode subfield of the i-th STA is a fifth value, which represents that the coordinated transmission mode used for the transmission opportunity (TXOP) sharing of the i-th STA is a legacy uplink TXOP sharing mode. Herein, the first value, the second value, the third value, the fourth value, and the fifth value may have the same meaning as the first value, the second value, the third value, the fourth value, and the fifth value in the aforementioned embodiments, which will not be repeatedly described herein.

The transmit power subfield of the i-th STA may be represented as a "Max TX power" subfield of the i-th STA. The transmit power subfield of the i-th STA occupies at least part of bits of a trigger dependent user information subfield in the i-th user information subfield. Herein, the at least part of bits occupied by the transmit power subfield of the i-th STA may specifically be one or more continuous bits. In a preferred example, a fifth number of the at least part of bits occupied by the transmit power subfield of the i-th STA may be 6 bits (bit). That is, the transmit power subfield of the i-th STA occupies 6 bits of the trigger dependent user information subfield in the i-th user information subfield. It should be understood that it is only an exemplary description, and the fifth number of at least part of bits actually occupied by the transmit power subfield of the i-th STA may be adjusted according to an actual condition, for example, the fifth number may be 6 bits, 7 bits, or more or less, and all possible conditions are not exhaustive herein.

The transmit power subfield of the i-th STA is specifically used by the sharing AP (i.e., the aforementioned first STA) to indicate a maximum transmit power (or also referred to as a maximum transmitting power) to be used by the i-th STA that receives the trigger frame in the subsequent transmission of data. Exemplarily, the determination manner of the maximum transmit power may be determined by the sharing AP (i.e., the aforementioned first STA) according to information collected in the preparation phase and the probe phase. Accordingly, the method for the i-th STA to determine the transmit power based on the transmit power subfield of the i-th STA by adopting the following formula: PTX = FVal - 20; where the PTX is a transmit power used by the i-th STA, and FVal is a maximum transmit power contained in the transmit power subfield of the i-th STA. It should be pointed out that if the maximum transmit power contained in the transmit power subfield of the i-th STA is equal to a preset value, it represents that the first STA does not limit the transmit power of the i-th STA. The preset value may be 63, that is, if the value of the Max TX power subfield of the i-th STA (or the i-th user information subfield) is 63, it represents that the sharing AP does not limit the maximum send power of the i-th STA. It should be understood that it is only an exemplary description and does not represent a limitation on the manner for determining the transmit power used by the i-th STA, nor does it serve as a limitation on the manner for determining the maximum transmit power. In actual processing, as long as any one of calculation manners of the transmit power used by the above-mentioned i-th STA and the maximum transmit power may be determined, they are all within the protection scope of the present embodiment.

The uplink/downlink indication subfield of the i-th STA may be the "UL/DL Indication subfield" of the user information subfield of the i-th STA. The uplink and downlink indication subfield of the i-th STA occupies at least part of bits of the trigger dependent user information subfield in the i-th user information subfield. Herein, the at least part of bits occupied by the uplink and downlink indication subfield of the i-th STA may specifically be one or more continuous bits. In a preferred example, a sixth number of the at least part of bits occupied by the uplink and downlink indication subfield of the i-th STA may be 1 bit (bit). That is, the uplink and downlink indication subfield of the i-th STA occupies 1 bit of the trigger dependent user information subfield in the i-th user information subfield. It should be understood that it is only an exemplary description, and the sixth number of at least part of bits actually occupied by the uplink and downlink indication subfield of the i-th STA may be adjusted according to an actual condition, for example, the sixth number may be 2 bits, 3 bits, or more or less, and all possible conditions are not exhaustive herein.

The value of the uplink and downlink indication subfield of the i-th STA is the sixth value, which is used to indicate the i-th STA to perform a simultaneous uplink transmission; and/or, the value of the uplink and downlink indication subfield of the i-th STA is the seventh value, which is used to indicate the i-th STA to perform a simultaneous downlink transmission. Herein, the sixth value and the seventh value are different. Additionally, the sixth value may be the same as or different from any one of the first specified value, and the first value to the fifth value. The seventh value may be the same as or different from any one of the first specified value, and the first value to the fifth value. Exemplarily, the sixth value may be 0 and the seventh value may be 1; or, the sixth value may be 1 and the seventh value may be 0. As long as values of the sixth value and the seventh value are different, they are all within the protection scope of the present embodiment.

The above embodiments describe respective subfields that may be contained in the respective user information subfields in the trigger frame and respective subfields that may be contained in the common information field in the trigger frame, respectively.

When the trigger frame is actually used, the common information field of the trigger frame may be designed to contain the aforementioned partial subfields, and any one of user information subfields may also be designed to contain the aforementioned partial subfields. For example, the common information field of the trigger frame contains a transmission mode subfield, while respective user information subfields may not contain the transmission mode subfields of corresponding STAs, or vice versa; for another example, the common information field of the trigger frame contains the uplink and downlink indication subfield, while respective user information subfields may not contain the uplink and downlink indication subfields of the corresponding STAs, or vice versa; for yet another example, the common information field of the trigger frame may not contain a sharing transmission indication subfield; for yet another example, the common information field of the trigger frame may contain the sharing transmission indication subfield but not a transmission mode subfield, and one or more user information subfields of the trigger frame contain the transmission mode subfield of the corresponding STA.

Specifically, a frame format of the trigger frame is shown in FIG. 3, and the frame format may include a frame control (Frame Control) field of 2 octets (Octets), a duration (Duration) field of 2 octets, an RA field of 6 octets, a TA field of 6 octets, a common information (Common info) field, a user information list (User info List) field, a padding field, and an FCS field of 4 octets. Herein, lengths of the common information field, the user information list field, and the padding field are all variable (Variable).

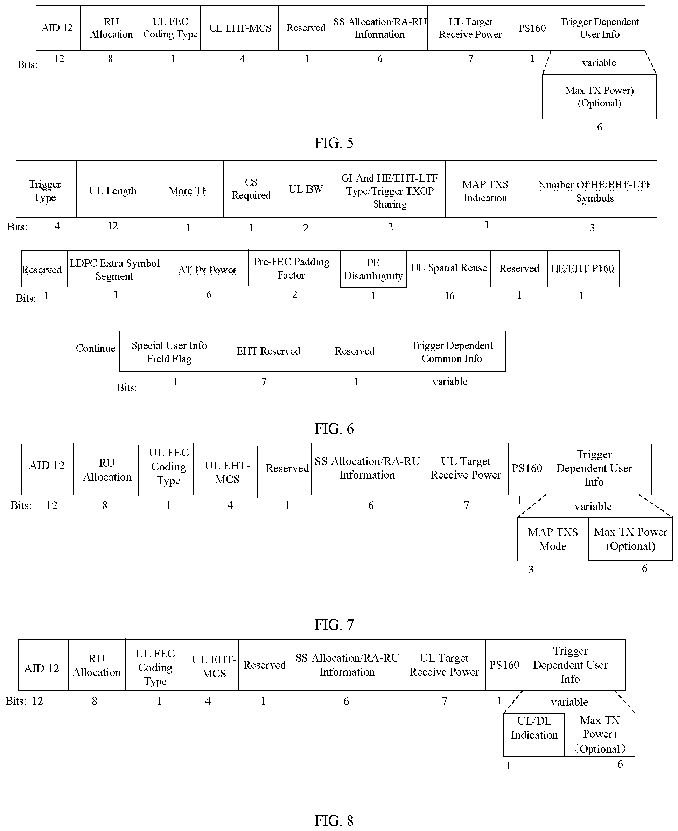

The common information field of the trigger frame includes a trigger type subfield, such as the Trigger Type subfields in FIG. 4, FIG. 6, and FIG. 9; any one of user information subfields of the trigger frame, such as the i-th user information subfield, may contain an identification subfield of the i-th STA, such as the AID12 subfields in FIG. 5, FIG. 7, and FIG. 8. Based on the above, the trigger frame may contain a transmission mode subfield; the transmission mode subfield may be in the common information field of the trigger frame, or may be in one or more user information subfields of the trigger frame. For example, the common information field of the trigger frame may contain the transmission mode subfield, and at this time, the user information subfield may not contain the transmission mode subfield of the STA. Alternatively, the common information field of the trigger frame does not contain the transmission mode subfield, and the one or more user information subfields may contain the transmission mode subfield of the STA, for example, the i-th user information subfield contains the transmission mode subfield of the i-th STA.

Optionally, the trigger frame may further contain an uplink and downlink indication subfield, and the uplink and downlink indication subfield may be contained in the common information field of the trigger frame, or may be contained in the one or more user information subfields of the trigger frame. For example, if the common information field of the trigger frame contains the uplink and downlink indication subfield, the user information subfield may not contain the uplink and downlink indication subfield of the STA. Alternatively, the common information field of the trigger frame does not contain the uplink and downlink indication subfield, and one or more user information subfields may contain the uplink and downlink indication subfield, for example, the i-th user information subfield contains the transmission mode subfield of the i-th STA. Optionally, the one or more user information subfields of the trigger frame may also contain a transmit power subfield of the STA, for example, the i-th user information subfield may also contain the transmit power subfield of the i-th STA. Optionally, the common information field of the trigger frame may also include a sharing transmission indication subfield.

Referring to FIG. 4 and FIG. 5, the Common info field (also referred to as common information field) of the trigger frame contains the trigger type subfield (i.e., the Trigger Type subfield in FIG. 4) with 4 bits, which is used to identify a variant of the trigger frame. Assuming that trigger frame variants 0-7 have been defined, values between 8-15 are reserved and may be used to define new trigger frame variants. For example, the value of the trigger type subfield (i.e., the Trigger Type subfield in FIG. 4) may be set to 8 to represent that the trigger frame is used to establish a coordinated transmission between multiple STAs, i.e., to identify a new MAP TXS trigger frame.

The Common info field of the trigger frame contains a transmission mode subfield, i.e., the MAP TXS Mode subfield in FIG. 4. In this example, the first reserved subfield is the EHT reserved subfield shown in FIG. 4, which has reserved bits with 7 bits; accordingly, the transmission mode subfield, i.e., the MAP TXS Mode subfield in FIG. 4, may occupy first 3 bits of the EHT reserved subfield. The value of the transmission mode subfield may indicate the coordinated transmission mode used for the transmission opportunity (TXOP) sharing of the multiple STAs, and/or whether the multiple STAs enable the TXOP sharing mode; different contents corresponding to different values of the transmission mode subfield are the same as those in the above Table 1, which will not be repeated herein. It should be understood that in actual processing, locations of the transmission mode subfield may not be limited to the first 3 bits of the EHT reserved subfield shown in FIG. 4, but may occupy any 3 reserved bits of the common info, and these 3 reserved bits may be 3 continuous reserved bits or 3 non-continuous reserved bits. For example, these 3 bits may occupy 1-bit reserved subfield before the HE/EHT P160 subfield in FIG. 4, and the 2 reserved bits in the EHT reserved subfield, etc., which are not exhaustive herein.

The trigger frame may contain one or more user info subfields (also referred to as user information subfield), and the one or more User info subfields may be contained in the User info List field of the trigger frame as shown in FIG. 3. In the aforementioned one or more User info subfields, each User info subfield may be used to indicate a target TXOP sharing device, i.e., a shared AP, or a third STA, or a fourth STA. Any one of user info subfields is represented as the i-th user info subfield which is described as follows:
the i-th User info subfield contains an identification subfield of the i-th STA, where the identification subfield (such as the AID12 subfield in FIG. 5 (which may occupy 12 bits)) carrys the 12 least significant bits of the AID or the 12-bit VAID of a device (i.e., the i-th STA) participating in the TXOP sharing. The acquisition or configuration manner of the AID and/or VAID of any one of STAs have been described in the aforementioned embodiments and will not be repeated herein.

Optionally, the i-th User info subfield may also include: a transmit power subfield of the i-th STA (such as a Max TX Power subfield shown in FIG. 5), where the transmit power subfield of the i-th STA is used to indicate a maximum transmit power used by the i-th STA. The User Info subfield of the trigger frame may contain, according to different trigger frame variant types, a Trigger dependent User Info subfield (also referred to as a trigger dependent user information subfield), which may be used to carry additional information. In the trigger frame of this example, the Trigger dependent User Info subfield contains a 6-bit transmit power subfield, i.e., the Max TX power subfield shown in FIG. 5, and the length of the transmit power subfield may be 6 bits. The transmit power subfield of the i-th STA, i.e., the Max TX power subfield in FIG. 7, is used by the sharing AP (i.e., the first STA) to indicate the maximum transmit power to be used by the device (i-th STA) that receives the trigger frame upon transmitting data subsequently. This value is determined by the sharing AP (the first STA) according to the information collected in the preparation phase and the probe phase. Herein, the manner for determining the maximum transmit power and the manner for the i-th STA to determine the transmit power used by itself are the same as those in the aforementioned embodiments and will not be repeated herein. That is, the common information field of the trigger frame contains the aforementioned trigger type subfield and transmission mode subfield, and any one of user information subfields contains the identification information subfield of the STA and the transmit power subfield of the STA.

Referring to FIG. 6 and FIG. 7, the Common info field of the trigger frame contains a 4-bit trigger type subfield (i.e., the Trigger Type subfield in FIG. 6), and the specific descriptions are the same as those in the aforementioned embodiments, which will not be repeated herein. The Common info field of the trigger frame also contains a sharing transmission indication subfield, which may be represented as a MAP TXS Indication (multiple access point transmission opportunity sharing indication) subfield, occupying at least part of bits of the third reserved subfield in the common information field. In this example, the third reserved field is specifically a 1-bit reserved subfield before the Number of HE/EHT-LTF symbols subfield of the Common info field as shown in FIG. 6, that is, the MAP TXS Indication subfield occupies the 1-bit reserved subfield before the Number of HE/EHT-LTF symbols subfield. The value of the sharing transmission indication subfield is used to indicate whether the multiple STAs enable the TXOP sharing mode, that is, used for the sharing AP to
indicate to a device participating in the multi-AP TXOP sharing whether to enable the multi-AP TXOP sharing mode. For example, the value of the sharing transmission indication subfield is 1, which represents that the multi-AP TXOP sharing mode is enabled; otherwise, it represents that the multiple STAs do not enable the TXOP sharing mode. Alternatively, the value of the sharing transmission indication subfield is 0, which represents that the multi-AP TXOP sharing mode is enabled; otherwise, it represents that the multiple STAs do not enable the TXOP sharing mode. Of course, there may be more possible values, which have been described in the aforementioned embodiments and will not be repeated herein. It should be understood that it is only an exemplary description herein. The third reserved field occupied by the MAP TXS Indication subfield may also be set for any 1-bit reserved bits of the common info, for example, the third reserved field may occupy a 1-bit reserved subfield before the HE/EHT P160 subfield, or may occupy 1 reserved bit of the EHT reserved subfield, etc., which is not exhaustive herein.

The i-th User info subfield contains an identification subfield of the i-th STA, and the identification subfield is the AID12 subfield in FIG. 7 (which may occupy 12 bits). The specific descriptions are the same as the aforementioned embodiments, which will not be repeated. The Trigger dependent User Info subfield of the i-th User info subfield also contains the transmission mode subfield of the i-th STA, which is represented as the MAP TXS Mode subfield in FIG. 7 and a length of the transmission mode subfield of the i-th STA is 3 bits. And, the transmission mode subfield of the i-th STA may be before the transmit power subfield of the i-th STA. As shown in FIG. 7, the Max TX power subfield (occupying 3 bits) is located before the Max TX power subfield (occupying 6 bits). The transmission mode subfield (i.e., the MAP TXS Mode subfield in FIG. 7) of the i-th STA of the i-th User info subfield is used to indicate that the i-th STA subsequently participates in the coordinated transmission mode used for multi-AP TXOP sharing after a trigger frame with a MAP TXS Indication subfield is received and value thereof equal to 1. The different contents corresponding to the different values of the transmission mode subfield of the i-th STA are the same as those in the aforementioned Table 1, which will not repeated herein. Optionally, the i-th User info subfield may contain a Trigger dependent User Info subfield according to different trigger frame variant types, and the Trigger dependent User Info subfield may be used to carry additional information. The Trigger dependent User Info subfield contains a 6-bit transmit power subfield, i.e., the Max TX power (maximum transmit power) subfield shown in FIG. 7, and the length of the 6-bit transmit power subfield may be 6 bits. The relevant descriptions of the transmit power subfield of the i-th STA are the same as those in the aforementioned embodiments, which will not be repeated herein. It should be pointed out that the transmission mode subfield of the i-th STA may also indicate whether the i-th STA enables the TXOP sharing mode. Therefore, in the solutions provided in this example, the sharing transmission indication subfield may not be contained in the common information field of the trigger frame. That is, this example may also indicate whether the i-th STA enables or not to enable the TXOP sharing mode, and the specific coordinated transmission mode to be used when enabled, only through the i-th user information subfield of the trigger frame, and indicate the maximum transmission power adopted by the i-th STA through the transmit power subfield of the i-th STA.

Referring to FIG. 4 and FIG. 8, the Common info field of the trigger frame contains a 4-bit trigger type subfield (i.e., the Trigger Type subfield in FIG. 4), and the specific descriptions are the same as those in the aforementioned embodiments, which will not be repeated herein. The Common info field of the trigger frame contains a transmission mode subfield, i.e., the MAP TXS Mode subfield in FIG. 4. The specific descriptions are the same as the aforementioned embodiments, which will not be repeated herein.

The i-th User info subfield contains an identification subfield of the i-th STA, where the identification subfield is shown such as the AID2 subfield in FIG. 8 (which may occupy 12 bits), carrying the 12 least significant bits of the AID or the 12-bit VAID a device (i.e., the i-th STA) participating in the TXOP sharing. The specific descriptions are the same as the aforementioned embodiments, which will not be repeated herein. The Trigger dependent User Info subfield of the i-th User info subfield also contains the uplink and downlink indication subfield of the i-th STA. The uplink and downlink indication subfield of the i-th STA is used to indicate the coordinated transmission of the i-th STA is a simultaneous uplink transmission or a simultaneous downlink transmission, that is, the i-th STA performs an uplink transmission or a downlink transmission in the allocated TXOP. If the value of the field is 0, it represents the uplink transmission, and if the value of this field is 1, it represents the downlink transmission. In FIG. 8, the uplink/downlink indication subfield of the i-th STA is represented as a UL/DL Indication (uplink/downlink indication) subfield, and the length of the uplink/downlink indication subfield of the i-th STA is 1 bit. And, the uplink and downlink indication subfield of the i-th STA may be before the transmit power subfield of the i-th STA. As shown in FIG. 8, the UL/DL Indication subfield (occupying 1 bit) is located before the Max TX power subfield (occupying 6 bits). It should be pointed out that a location of the uplink and downlink indication subfield of the i-th STA, i.e., the UL/DL Indication subfield, may not be limited to the description in the current example. For example, the 1-bit reserved subfield after the UL-EHT-MCS shown in FIG. 8 may also be occupied as the uplink and downlink indication subfield (i.e., the UL/DL Indication subfield) of the i-th STA and all possible locations are not exhaustive herein. It should also be understood that the setting of the value of the uplink and downlink indication subfield (i.e., the UL/DL Indication subfield), of the i-th STA is not limited to the setting manner in the current example. For example, if the value of the field is 1, it represents an uplink transmission, and if the value of this field is 0, it represents a downlink transmission, which is not exhaustive herein. Optionally, the i-th User Info subfield may contain, according to different trigger frame variant types, a Trigger dependent User Info subfield, which may be used to carry additional information. In the trigger frame of the this example, the Trigger dependent User Info subfield contains a 6-bit transmit power subfield, i.e., the Max TX power subfield shown in FIG. 8, and the length of the Trigger dependent User Info subfield may be 6 bits. The specific descriptions are the same as the aforementioned embodiments, which will not be repeated herein.

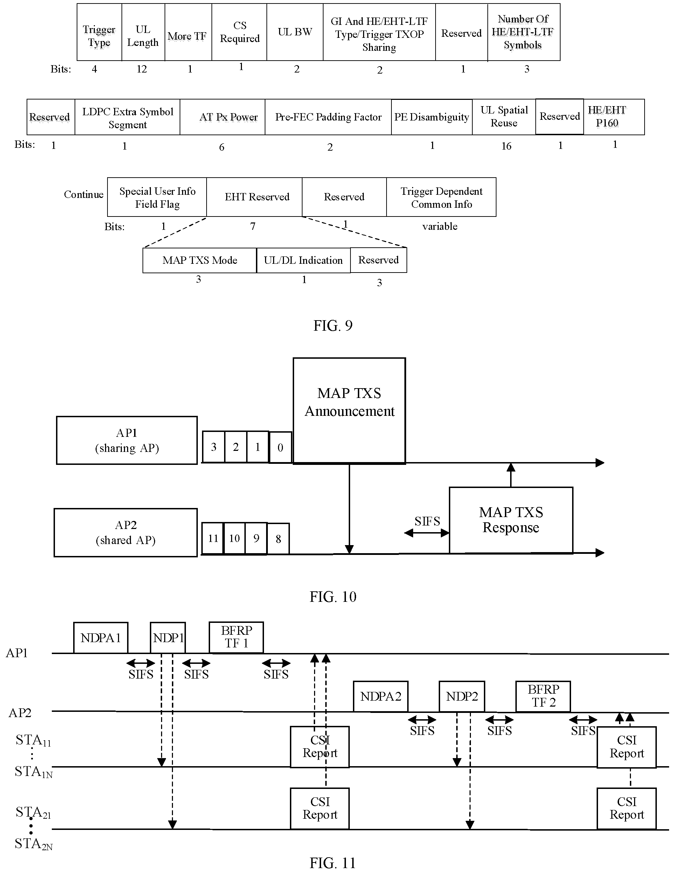

Referring to FIG. 9 and FIG. 5, the Common info field of the trigger frame contains a 4-bit trigger type subfield (i.e., the Trigger Type subfield in FIG. 9), which is used to identify a variant of the trigger frame. The specific descriptions are the same as the aforementioned embodiments, which will not be repeated herein. The Common info field of the trigger frame contains a transmission mode subfield, i.e., the MAP TXS Mode subfield in FIG. 9. The specific descriptions are the same as the aforementioned embodiments, which will not be repeated herein. The Common info field of the trigger frame also contains an uplink and downlink indication subfield, which is used to represent that the coordinated transmission of the multiple STAs is the simultaneous uplink transmission or the simultaneous downlink transmission, that is, indicate the allocated TXOP is used for an uplink transmission or a downlink transmission. If the value of the field is 0, it represents the uplink transmission, and if the value of this field is 1, it represents the downlink transmission. In FIG. 9, the uplink/downlink indication subfield is represented as an UL/DL Indication subfield, and the length of the uplink/downlink indication subfield is 1 bit. And, the uplink and downlink indication subfield may be located after the transmission mode subfield. As shown in FIG. 9, the UL/DL Indication subfield (occupying 1 bit) is located after the Max TX Mode subfield (occupying 3 bits). It should be pointed out that the location of the uplink and downlink indication subfield, i.e., the UL/DL Indication subfield, may not be limited to the description in the current example. For example, the 1-bit reserved subfield after the UL Spatial Reuse (UL Spatial Reuse) shown in FIG. 9 may also be occupied as the uplink and downlink indication subfield, i.e., the UL/DL Indication subfield and all possible locations are not exhaustive herein. It should also be understood that the setting of the value of the uplink and downlink indication subfield (i.e., the UL/DL Indication subfield) is not limited to the setting manner in the current example. For example, if the value of the field is 1, it represents the uplink transmission, and if the value of this field is 0, it represents the downlink transmission,, which is not exhaustive herein. It should be noted that if the uplink/downlink indication subfield (i.e., the UL/DL Indication subfield) is placed in the Common info field, the trigger frame is not applicable to the case where one BSS (i.e., one STA) triggers the uplink and another BSS (another STA) triggers the downlink. The i-th User info subfield containing an identification subfield of the i-th STA, where the identification subfield is shown such as the AID12 subfield in FIG. 5 (which may occupy 12 bits), carrying the 12 least significant bits of the AID or the 12-bit VAID a device (i.e., the i-th STA) participating in the TXOP sharing. The acquisition or configuration manner of the AID and/or VAID of any one of STAs have been described in the aforementioned embodiments and will not be repeated herein. The i-th User info subfield may also include: a transmit power subfield of the i-th STA (such as a Max TX Power subfield shown in FIG. 5), where the transmit power subfield of the i-th STA is used to indicate a maximum transmit power used by the i-th STA. The specific descriptions are the same as the aforementioned embodiments, which will not be repeated herein.

It should be understood that the common information field of the trigger frame also contains other subfields specified in the protocols, such as an UL Length (Length) subfield (12 bits), a More Trigger Frame (More TF, More Trigger Frame) subfield, a CS request (carrier sense required) subfield, a UL (uplink) BW (Bandwidth) subfield, GI and HE/EHT-LTF type/trigger TXOP sharing (Guard interval and High Efficiency/HE Long Training field type/ Trigger transmission opportunity sharing) subfield, a number of HE /EHT-LTF symbol (Number Of HE/EHT-LTF Symbols) subfield, a LDPC Extra Symbol Segment subfield (LDPC Extra Symbol Segment), an AT Px power (AT Px power) subfield, a Pre-FEC padding factor (Pre-FEC Padding Factor) subfield, a PE Disambiguity (PE Disambiguity) subfield, a UL spatial reuse (PE Disambiguity) subfield, an HE/EHTP160 subfield, a special user information field flag (Special User Info Field Flag) subfield, a trigger dependent common information (Trigger Dependent Common Info) subfield shown in FIG. 4, etc. The number of bits occupied by each subfield is the same as shown in FIG. 4, and functions or definitions of respective subfields are not repeated herein. Similarly, the user information subfield of the trigger frame also contains other subfields specified in the protocol, such as an RU allocation (RU Allocation) subfield, a UL FEC coding type (uplink forward error correction coding type) subfield, an SS allocation/RA-RU information (SS allocation/random access resource unit information) subfield, a UL target receive power subfield, a PS160 subfield, a UL EHT MCS subfield, etc. shown in FIG. 5. The number of bits occupied by respective subfields are the same as shown in FIG. 5, and functions or definitions of respective subfields are not repeated herein.

The aforementioned is only an exemplary description, which does not mean that the trigger frame may only have the above design manners, and there may be other design manners. For example, the trigger frame may not indicate the maximum transmit power for the STA, and only the trigger type subfield, the uplink and downlink indication subfield and the transmission mode subfield may be set in the common information field to inform the multiple STAs that have received the trigger frame to establish a coordinated transmission. For example, the trigger frame may only set the identification information of one or more STAs, the uplink and downlink indication subfields of one or more STAs, and the transmission mode subfields of one or more STAs in one or more user information subfields to inform one or more STAs that have received the trigger frame to establish a coordinated transmission; it should be understood that at this time, the STA that has received the trigger frame may default that the trigger type is a MAP TXS trigger frame, that is, it is used by default to establish the coordinated transmission between the multiple STAs. It should be pointed out that the aforementioned are all exemplary descriptions, and do not mean that the trigger frames provided in the present embodiment may only have the above-mentioned formats. In actual processing, there may be more formats. As long as the format can enable the STA that receives the trigger frame to establish a coordinated transmission, the format is within the protection scope of the present embodiment, which is however not exhaustive herein.

Based on the above descriptions of respective subfields that may be contained in the trigger frame, the manner for carrying the trigger frame is further described as follows.
the trigger frame is carried by a first physical layer protocol unit (physical layer protocol data unit, PPDU); where a value of a first indication bit in a preamble of the first PPDU is a second specified value. Specifically, the first PPDU may be an EHT PPDU. The first indication bit may be a MAP TXS indication bit. It should be understood that the first PPDU may also be other types of PPDUs, but in a preferred example, the first PPDU is the EHT PPDU; similarly, the first indication bit may also be other indicator bits in the preamble of the first PPDU, but in a preferred example, the first indication bit is a MAP TXS indication bit, which is however not exhaustive in the present embodiment.

Herein, a length and specific value of the second specified value may be set according to an actual condition. For example, the length of the second specified value may be 1 bit, and its specific value may be set to 1, or may be 0; or, the length of the second specified value may be 2 bits, and its specific value may be 01, or may be 10, etc., and all possible values are not exhaustive herein.

Exemplarily, the first PPDU is an EHT PPDU; where the specific location of the first indication bit (i.e., the MAP TXS indication bit) is the 25th bit of the preamble U-SIG-1 field of the EHT PPDU. Assuming that the second specified value is 1, if the MAP TXS indication bit of the preamble of the first PPDU is 1, it represents that the first PPDU contains the trigger frame (i.e., the trigger frame used to represent the multiple STAs to establish a coordinated transmission, or referred to as a MAP TXS trigger frame). Accordingly, a STA that has received the first PPDU will not discard the first PPDU, and further may parse the trigger frame carried by the first PPDU.

Alternatively, no modification is made to the existing PPDU. That is, no new indication bit is added to the preamble of the PPDU, but all STAs that have received the PPDU are set not to discard the PPDU. In this implementation, there is no need to modify the existing PPDU (specifically, the EHT PPDU), but the STA is configured to ignore the UL/DL identifier of the preamble U-SIG-1 of the PPDU and will not discard the PPDU.

Based on the above descriptions of the trigger frame and the first PPDU carrying the trigger frame, the following describes the transmission interaction procedure of the first STA. To realize the multi-AP TXOP sharing, three phases may be divided, i.e., a preparation phase, a probe phase and a trigger transmission phase, respectively. The aforementioned S210 is mainly the processing performed in the trigger transmission phase, that is, the sharing AP (the first STA) triggers the shared AP (the second STA) or the STA (the fourth STA) associated with the shared AP (the second STA) to perform a part of the coordinated transmission. The preparation phase and probe phase before the trigger transmission phase are also very important. Information interacted in these two phases is the basis for completing the multi-STA coordinated transmission. Therefore, firstly, processing of the preparation phase and probe phase will be described:
in the preparation phase, the first STA performs an EDCA (Enhanced Distributed Channel Acces, Enhanced Distributed Channel Access) mechanism, a backoff counter decreases to zero, and then obtains a transmission opportunity. At this time, the first STA is a Sharing AP. If the first STA has a willingness to share the TXOP, the first STA interacts information with the second STA, (i.e., the Shared AP), within the transmission range in the preparation phase. Herein, information interacted between the first STA and the second STA includes but is not limited to: a MAP TXS Announcement and a MAP TXS Response. In conjunction with FIG. 10, the first STA is the AP1 in FIG. 10, and the second STA is the AP2 in FIG. 10. The AP1 performs the EDCA mechanism and the backoff counter decreases to zero, so as to obtain the transmission opportunity, at this time the AP1 is a Sharing AP, if the AP1 has a willingness to share the TXOP sharing, the AP1 interacts with the AP2 (i.e., the Shared AP), within the transmission range in the preparation phase. Herein, information interacted between the AP1 and the AP2 includes but is not limited to: a MAP TXS Announcement and a MAP TXS Response. Herein, the MAP TXS Announcement (or referred to as a MAP TXA announcement frame) includes at least one of: a coordinated transmission mode that the first STA (i.e., the sharing AP) expects to perform, STA information (e.g., AID and/or VAID) participating in the transmission in the sharing BSS (basic service set, basic service set), and the RSSI of the second STA (i.e., the shared AP) measured by the STA participating in the transmission. Herein, the RSSI of the second STA (i.e., shared AP) measured by the STA participating in the transmission is an optional content. This is because the STA participating in transmission may decide whether to share the RSSI according to the RSSI measurement manner (i.e., the STA participating in the transmission may determine whether to upload the RSSI to the first STA according to the RSSI measurement manner). The RSSI is mainly used for power control in CSR, and the RSSI measurement manner is not limited in the present embodiment; if the STA participating in the transmission decides to share the RSSI, the STA participating in the transmission may complete the RSSI interaction in the preparation phase by default. The MAP TXS Response (or MAP TXS Response frame) includes at least one of: a willingness of the second STA (i.e., the Shared AP) to participate in the uplink and downlink coordinated transmission and the supported coordinated transmission mode, information in the shared BSS of the STA that can monitor the sharing AP (i.e., the first STA) and expecting to participate in the transmission (i.e., information of the STA associated with the second STA that expects to participate in the transmission), and the time and frequency resources that are expected to be obtained in the shared BSS, and the RSSI (optional) of the AP1 measured by a STA (i.e., a STA participating in the transmission associated with the second STA)participating in the transmission in the shared BSS.

It should be understood that in the above-mentioned preparation phase, the first STA (i.e., Sharing AP, the AP1 in FIG. 10) needs to send information of the STA (for example, called the third STA) associated with the first STA that will participate in the transmission to the second STA (i.e., Shared AP, such as the AP2 in FIG. 10); similarly, the second STA (i.e., Shared AP, such as the AP2 in FIG. 10) will also send the information of the STA (for example, referred to as the fourth STA) associated with the second STA that will participate in the transmission to the first STA. So that in the probe phase, the first STA and the second STA may send an NDPA frame, an NDP, and a beamforming report poll (BFRP, beamforming report poll) trigger frame to these associated or unassociated STAs. The STA that has received the BFRP trigger will feed back the CSI report to the AP that sends the BFRP trigger. In other words, the STA may feed back the CSI report to the associated or unassociated APs, so that each AP may calculate the steering matrix by itself. In the subsequent data transmission phase, the AP1 and the AP2 determine, based on the steering matrix, CSI report of which STAs have been received, then for which STAs the beam-nulling operation is to be performed.

In the probe phase, the first STA may perform probe based on the following probe sequence in the probe phase: NDPA + NDP + BFRP TF + CSI report. Specifically, the first STA may send the NDPA, the NDP and the BFRP TF to one or more third STAs associated with itself and one or more fourth STAs not associated with itself, and receive CSI reports fed back by one or more third STAs and one or more fourth STAs. The processing of the second STA is similar to that of the first STA, and will not be repeated herein. Furthermore, in a multi-AP sequential probe sequence, the NDPA frame and the BFRP TF may contain identification information (e.g., AID or VAID) of the OBSS STA. For example, the first STA may send the NDPA frame, the NDP, and the BFRP frame to one or more third STAs and one or more fourth STAs; the one or more third STAs and the one or more fourth STAs may process the received NDPA frame and the BFRP Trigger frame from the first STA, and the respective STAs that receive the BFRP trigger frame from the first STA may feed back the corresponding channel state information (CSI) report to the first STA and the second STA associated with itself. It should be understood that the order of the aforementioned probe sequence is certain, that is, no matter which STA performs the probe, the order in the aforementioned probe sequence is adopted, that is, it is necessary to send the NDPA first, then send the NDP, further send the BFRP trigger frame, and then receive the CSI report fed back by the STA. It should be noted that one of the first STA or the second STA may be a master AP, and the other STA may be a slave AP.

FIG. 11 is used as an example for description. In FIG. 11, STA11-STA1N are associated with the AP1 (it is assumed that the AP1 may be the first STA), and STA21-STA2N are associated with the AP2 (it is assumed that the AP1 may be the second STA). Any one of APs in the multi-AP scenario collects the CSI from the in-BSS and OBSS STAs in the probe process, and the probe sequence of any one of APs is NDPA + NDP + BFRP TF + CSI report; for example, in FIG. 11, the AP1 sends the NDPA1, the NDP1, and the BFPR TF1 to the STA11-STA1N and the STA21-STA2N according to the probe sequence, and then the AP1 receives the CSI report fed back by the STA11-STA1N and the STA21-STA2N; similarly, AP2 sends the NDPA2, the NDP2, and the BFPR TF2 to the STA11-STA1N and the STA21-STA2N according to the probe sequence, and then AP2 receives the CSI report fed back by the STA11-STA1N and the STA21-STA2N. Furthermore, in the multi-AP sequential probe sequence, the NDPA frame and the BFRP trigger frame will contain the identification information (e.g., AID or VAID) of the OBSS STA. For example, the AP1 may send the NDPA frame, the NDP and the BFRP frame to the STA11-STA1N and the STA21-STA2N; respective STAs may process the NDPA frames and BFRP Trigger frames received from the OBSS AP. Respective STAs that receive the BFRP trigger frames from the OBSS AP may feed back the corresponding channel state information (CSI) report to the OBSS AP1 and AP2 associated with itself. In addition, as shown in FIG. 11, there may be a certain time interval among NDPA, NDP, BFRP TF, and CSI report contained in the probe sequence, and the time interval is SIFS.

After completing the above processing, the first STA may perform the processing of the trigger transmission phase. The following is a description of subfields and values specifically contained in the trigger frame, and the processing of performing trigger transmission phase of the first STA in different procedures:
an uplink CBF mode and/or a C-UL MU-MIMO transmission mode: the trigger frame being a first trigger frame; sending, by the first STA, the trigger frame, including: sending, by the first STA, a first trigger frame, where the first trigger frame is used for the multiple STAs to perform a simultaneous uplink coordinated transmission. Herein, the multiple STAs include at least one of: a third STA and a fourth STA; where the third STA is associated with the first STA, the fourth STA is associated with the second STA, and the second STA is different from the first STA.

The sending, by the first STA, the first trigger frame may be: sending, by the first STA, the first trigger frame in broadcasting or multicasting. A receiver address of the first trigger frame is set as a broadcast address or a multicast address. Specifically, the first STA refers to a Sharing AP, the second STA refers to a Shared AP, the third STA refers to a STA (i.e., non-AP STA) associated with the Sharing AP, and the fourth STA refers to a STA (i.e., non-AP STA) associated with the Shared AP. It should be understood that a number of the aforementioned Shared AP (i.e., the second STA), may be one or more, a number of the aforementioned third STA may be one or more, a a number of the aforementioned fourth STA(s) may be one or more. It should also be noted that the first STA and one or more second STAs may be APs in a same coordination set; specifically, the one or more second STAs may be Shared APs located within the transmission range of the first STA.

The first STA (i.e., the sharing AP) enables the uplink CBF mode and/or the C-UL MU-MIMO transmission mode. In this transmission mode, the first STA (i.e., sharing AP) has information of the fourth STA of the OBSS reported by the second STA (i.e., shared AP) (for example, the information may be reported by the second STA in the preparation phase), and CSI report fed back by the fourth STA of the OBSS (for example, the CSI report may be reported to the first STA by the fourth STA in the probe phase). Therefore, the first STA (i.e., the sharing AP) may send the first trigger frame to the third STA associated with itself and the fourth STA associated with the second STA. That is, after completing the processing of the aforementioned preparation phase and probe phase, the first STA may complete interactions with the second STA (i.e., other Shared APs) in the same coordination set, as well as the third STA and the fourth STA. Therefore, the first STA may know that one or more third STAs and/or one or more fourth STAs have uplink to-be-transmitted data, and may know an AID and/or a VAID corresponding to one or more third STAs and/or one or more fourth STAs, respectively.

In the present implementation, the method further includes: receiving, by the first STA, uplink data sent from the third STA, after a first duration from a moment when the first trigger frame is sent; and sending, by the first STA, a block ACK (BA, Block ACK) to the third STA. More specifically, the receiving, by the first STA, the uplink data sent from the third STA, after the first duration of transmitting the first trigger includes: in a case where the first STA enables the uplink CBF mode and/or the C-UL MU-MIMO mode, performing a beam nulling operation on a fourth STA after the first duration from the moment when the first trigger frame is sent, and receiving the uplink data sent from the third STA. Herein, the after the first duration from the moment when the first trigger frame is sent refers to a delay of SIFS from the moment when the first trigger frame is sent. Herein, the sending, by the first STA, the Block ACK (BA, Block ACK) to the third STA may be: sending, by the first STA, the Block ACK (BA, Block ACK) to the third STA after the first duration of completing a reception of the uplink data sent from the third STA. Herein, the manner for judging whether the reception of the uplink data sent from the third STA is completed may be to detect indication information of the completion of the transmission in the uplink data received from the third STA, and determine that the reception of the uplink data sent from the third STA is completed. Of course, there may be other determination manners, which are not exhaustive in the present embodiment.

Herein, the first duration may refer to a SIFS (Short interframe space, Short interframe space). It should be pointed out that, as mentioned above, the multiple STAs include at least one of: the third STA and the fourth STA; accordingly, in the present implementation, the moment when the uplink data of the third STA is sent may be the same as the moment when the uplink data of the fourth STA is sent. That is, the third STA and the fourth STA perform a simultaneous uplink transmission.

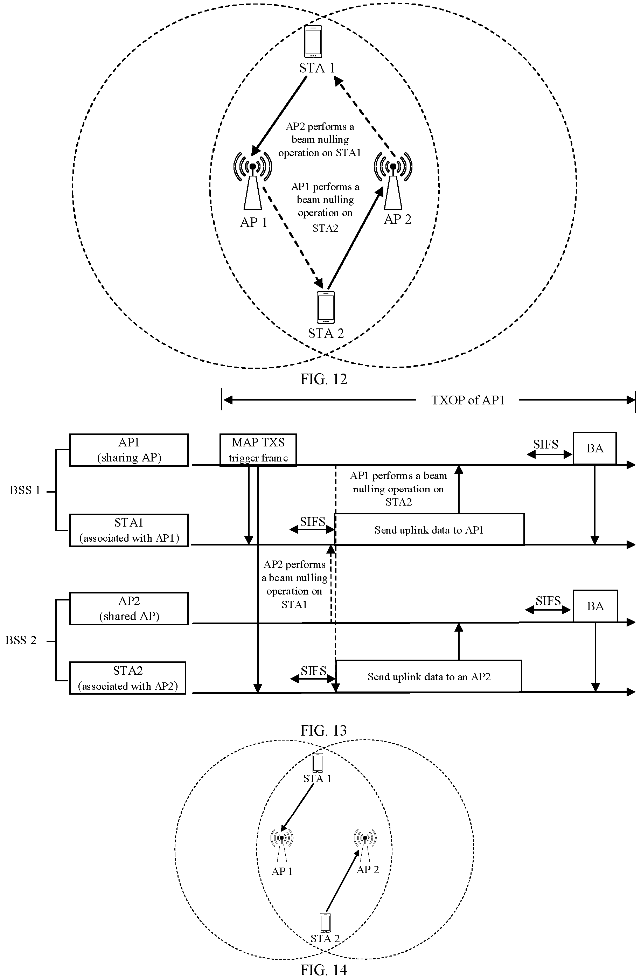

In conjunction with FIG. 12 and FIG. 13, in FIG. 12 and FIG. 13, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). After the AP1 completes interactions with other devices in the coordinated set in the preparation and probe phases to know that the STA2 in the BSS2 (STA2 associated with AP2 in BSS2 as shown in FIG. 13) has uplink to-be-transmitted data and obtains AID or VAID information of STA2. Then, the AP1 generates a MAP TXS trigger frame (i.e., the first trigger frame), to trigger a simultaneous uplink transmission of the STA1 (associated with the AP1) and the STA2 (associated with the AP2). The first trigger frame contains a User info subfield of the STA1 and a User info subfield of the STA2. With continuing reference to FIG. 13, within AP1's own TXOP, after SIFS time of the AP1 sending the MAP TXS trigger frame (i.e., the first trigger frame), the AP1 performs a beam nulling operation on a non-associated STA2, receives the uplink data sent from the STA1, and in a case where the uplink data sent from the STA1 is received, after the SIFS time, sends the BA to the STA1.

In an uplink COFDMA mode and/or a CSR mode: the first STA (i.e., sharing AP) enables the uplink COFDMA mode and/or the CSR mode, and the first STA (i.e., sharing AP) may actively acquire the OBSS STA information that may participate in the uplink coordinated transmission within the coverage of the first STA (i.e., sharing AP) from the second STA (shared AP) (that is, information of the fourth STA associated with the second STA, specifically the AID and/or VAID of the fourth STA). Afterwards, the first STA (i.e., the sharing AP) may send the MAP TXS trigger frame (i.e., a first trigger frame), to an OBSS STA within the coverage.

The method further includes: the receiving, by the first STA, the uplink data sent from the third STA, after the first duration from the moment when the first trigger frame is sent; and sending, by the first STA, the block ACK (BA, Block ACK) to the third STA. Herein, the sending, by the first STA, the BA to the third STA specifically may be: sending, by the first STA, the BA to the third STA after the first duration of completing the reception of the uplink data sent from the third STA.

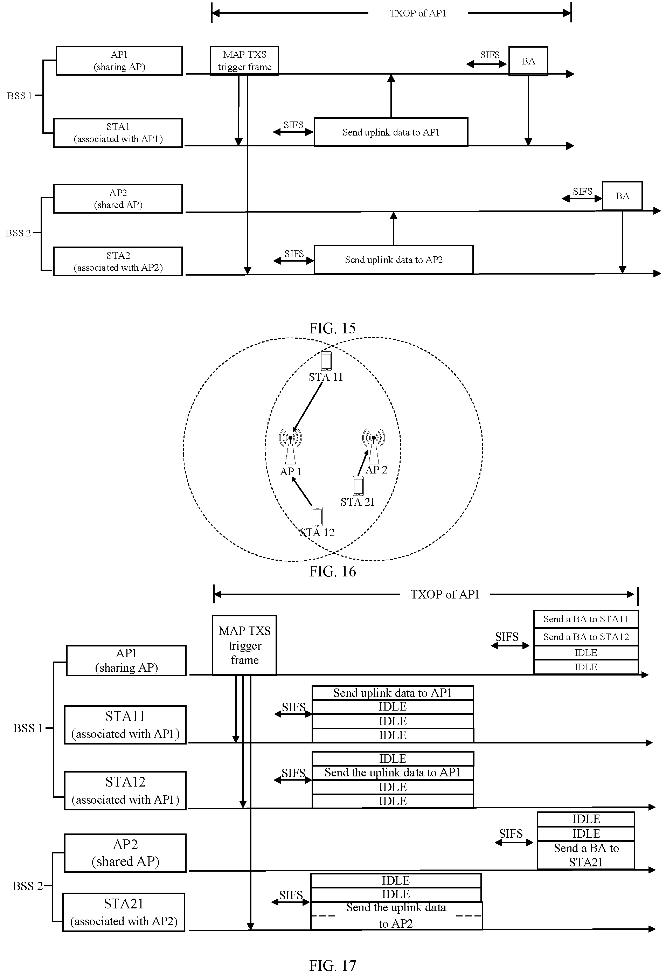

In conjunction with FIG. 14 and FIG. 15, FIG. 14 and FIG. 15 are schematic diagrams of the STA enabling the CSR mode. Herein, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). After the AP1 completes interactions with other devices in the multi-AP coordinated set in the preparation and probe phases (the CSR decides whether the probe phase is required based on different RSSI measurement manners), the AP1 knows that the STA2 in the BSS2 has uplink to-be-transmitted data and obtains the AID or VAID information of the STA2. Then, the AP1 generates a MAP TXS trigger frame (i.e., the first trigger frame), which is used to trigger a simultaneous uplink transmissions of the STA1 and the STA2. The first trigger frame contains the User info subfield of the STA1 and the User info subfield of the STA2. With continuing reference to FIG. 15, within AP1's own TXOP, after the SIFS time of the AP1 sending the MAP TXS trigger frame (i.e., the first trigger frame), the AP1 receives the uplink data sent from the STA1, and in a case where the uplink data sent from the STA1 is received by the AP1, after the SIFS time, sends the BA to the STA1.

Specifically, the receiving, by the first STA, the uplink data sent from the third STA after the first duration of transmitting the first trigger includes: in a case where the first STA enables an uplink COFDMA mode and/or a CSR mode, after the first duration from the moment when the first trigger frame is sent, receiving the uplink data of the third STA in a first resource unit (RU). Herein, the first RU is a resource corresponding to the third STA. The sending, by the first STA, the BA to the third STA includes: sending, by the first STA, the BA to the third STA in the first RU. Herein, the sending, by the first STA, the BA to the third STA in the first RU specifically may be: sending, by the first STA, the BA to the third STA in the first RU, after the first duration of completing the reception of the uplink data sent from the third STA. Herein, the manner for judging whether the reception of the uplink data sent from the third STA is completed may be to detect indication information of the completion of the transmission in the uplink data received from the third STA, and determine that the reception of the uplink data sent from the third STA is completed. Of course, there may be other determination manners, which are not exhaustive in the present embodiment.

In conjunction with FIG. 16 and FIG. 17, FIG. 16 and FIG. 17 are schematic diagrams of the first STA enabling the COFDMA mode. In FIG. 16 and FIG. 17, the AP1 is a Sharing AP (the first STA), the AP2 is a Shared AP (i.e., the second STA), the STA11 and the STA12 are two third STAs associated with the Sharing AP (the first STA), and the STA21 is the fourth STA associated with the Shared AP (the second STA). After the AP1 completes interactions with other devices in the multi-AP coordination set in the preparation phase and probe phase (COFDMA may not require a probe phase) to know that the STA21 in the BSS2 has the uplink to-be-transmitted data and obtains STA21's AID or VAID information. Then, the AP1 generates a MAP TXS trigger frame (i.e., the first trigger frame), which is used to trigger simultaneous uplink transmissions of the STA11, the STA12, and the STA21; and the first trigger frame contains the User info subfields corresponding to the STA11, the STA12, and the STA21, respectively. With continuing reference to FIG. 17, after the SIFS time of the AP1 sending the MAP TXS trigger frame, the AP1 prepares to receive the uplink data of the associated STA11 and STA12 in the first RU corresponding to the STA11 and the STA12 respectively, and in a case where the uplink data sent from the STA11 and the STA12 are received, the AP1 sends the BA to the STA11 and the STA12 in the first RU corresponding to the STA11 and the STA12, respectively. For example, the first RU corresponding to the STA11 is a first RU in FIG. 17, and the first RU corresponding to the STA12 is a second RU in FIG. 17.

Furthermore, respective fields that may be contained in the first trigger frame are described as follows: in a case of the uplink CBF and/or C-UL MU-MIMO transmission mode, the common information field of the first trigger frame includes a first transmission mode subfield; and the value of the first transmission mode subfield is a second value. The specific meaning of the second value is the same as those of the aforementioned embodiments, and the second value is used to represent that the coordinated transmission mode used for the transmission opportunity (TXOP) sharing of the multiple STAs is the CBF mode and/or C-UL MU-MIMO mode. Alternatively, the common information field of the first trigger frame does not include the first transmission mode subfield. User information subfield of the third STA of the first trigger frame includes: a transmission mode subfield of the third STA; a value of the transmission mode subfield of the third STA is a second value; and/or, User information subfield of the fourth STA of the first trigger frame includes: a transmission mode subfield of the fourth STA; a value of the transmission mode subfield of the fourth STA is the second value. The specific meaning of the second value is the same as those of the aforementioned embodiments, and the second value is used to represent that the coordinated transmission mode used for the transmission opportunity (TXOP) sharing of the multiple STAs is the CBF mode and/or C-UL MU-MIMO mode. In a preferred example, the user information subfield of the third STA of the first trigger frame includes: the transmission mode subfield of the third STA; and the user information subfield of the fourth STA of the first trigger frame includes: the transmission mode subfield of the fourth STA. This is because the first STA needs to indicate the STAs that perform an uplink transmission, respectively, so respective STAs need to be able to determine processing that needs to be performed based on respective user information subfields.

In the case of the uplink COFDMA mode and/or CSR mode, the common information field of the first trigger frame includes a first transmission mode subfield; and the value of the first transmission mode subfield is a third value. The specific meaning of the third value is the same as those of the aforementioned embodiments, and the third value is used to represent that the coordinated transmission mode used for the transmission opportunity (TXOP) sharing of the multiple STAs is the COFDMA mode and/or CSR mode, which will not be repeated below. Alternatively, the common information field of the first trigger frame does not include the first transmission mode subfield. Accordingly, User information subfield of the third STA of the first trigger frame includes: a transmission mode subfield of the third STA; a value of the transmission mode subfield of the third STA is a third value; and/or, User information subfield of the fourth STA of the first trigger frame includes: a transmission mode subfield of the fourth STA; a value of the transmission mode subfield of the fourth STA is the third value. In a preferred example, the user information subfield of the third STA of the first trigger frame includes: the transmission mode subfield of the third STA; and the user information subfield of the fourth STA of the first trigger frame includes: the transmission mode subfield of the fourth STA. This is because the first STA needs to indicate the STAs that perform an uplink transmission, respectively, so respective STAs need to be able to determine processing that needs to be performed themselves based on respective user information subfields.

In the case of the uplink CBF and/or C-UL MU-MIMO transmission mode, or in the case of the uplink COFDMA mode and/or CSR mode, the user information subfield of the third STA of the first trigger frame includes an identification subfield of the third STA, which is used to carry the identification information of the third STA; and/or, the user information subfield of the fourth STA of the first trigger frame includes an identification subfield of the fourth STA, which is used to carry the identification information of the fourth STA. In a preferred example, the user information subfield of the third STA of the first trigger frame includes an identification subfield of the third STA, which is used to carry the identification information of the third STA; and the user information subfield of the fourth STA of the first trigger frame includes an identification subfield of the fourth STA, which is used to carry the identification information of the fourth STA. This is because the first STA needs to indicate the STAs that perform an uplink transmission, respectively, so respective STAs need to be able to identify corresponding user information subfields thereof themselves based on respective identification subfields.

In the case of the uplink CBF and/or the C-UL MU-MIMO transmission mode, or the uplink COFDMA mode and/or CSR mode, based on the above, the common information field of the first trigger frame may further contain a first uplink and downlink indication subfield, where a value of the first uplink and downlink indication subfield is a sixth value. The specific meaning of the sixth value is the same as those of the aforementioned embodiments, and the sixth value is used to represent that the multiple STAs perform a simultaneous uplink transmission.

Optionally, in the case of uplink CBF and/or C-UL MU-MIMO transmission mode, or the uplink COFDMA and/or CSR mode, the common information field of the first trigger frame does not contain: the first uplink and downlink indication subfield. Accordingly, the user information subfield of the third STA of the first trigger frame further includes: an uplink and downlink indication subfield of the third STA; a value of the uplink and downlink indication subfield of the third STA is a sixth value; and/or, the user information subfield of the fourth STA of the first trigger frame further includes: an uplink and downlink indication subfield of the fourth STA; a value of the uplink and downlink indication subfield of the fourth STA is the sixth value. The specific meaning of the sixth value is the same as those of the aforementioned embodiments, and the sixth value is used to represent that the multiple STAs perform a simultaneous uplink transmission. In a preferred example, the user information subfield of the third STA of the first trigger frame includes: the uplink and downlink indication subfield of the third STA; and the user information subfield of the fourth STA of the first trigger frame includes the uplink and downlink indication subfield of the fourth STA. This is because the first STA needs to indicate the STAs that perform an uplink transmission, respectively, so respective STAs need to be able to determine the transmission that needs to be performed themselves is uplink or downlink based on respective information subfields.

Optionally, in the case of the uplink CBF and/or C-UL MU-MIMO transmission mode, or the uplink COFDMA and/or CSR mode, the user information subfield of the third STA of the first trigger frame further includes: a transmit power subfield of the third STA; and/or, the user information subfield of the fourth STA of the first trigger frame further includes: a transmit power subfield of the fourth STA. Optionally, the user information subfield of the third STA of the first trigger frame includes a transmit power subfield of the third STA, while the user information subfield of the fourth STA of the first trigger frame may not contain the transmit power subfield of the fourth STA, that is, the fourth STA may determine its own transmit power according to its own situation. Alternatively, the user information subfield of the third STA of the first trigger frame does not include the transmit power subfield of the third STA, while the user information subfield of the fourth STA of the first trigger frame may contain the transmit power subfield of the fourth STA, that is, the third STA may determine its own transmit power according to its own situation. Alternatively, the user information subfield of the third STA of the first trigger frame includes: the transmission power subfield of the third STA, and the user information subfield of the fourth STA of the first trigger frame includes the transmit power subfield of the fourth STA, that is, the third STA and the fourth STA both determine transmit powers that are adopted themselves based on their respective corresponding transmit power subfields. The manner in which the third STA and the fourth STA determine the transmit powers used by themselves according to the corresponding transmit power subfields, respectively, has been described in the aforementioned embodiments and will not be repeated herein.

Optionally, in the case of the uplink CBF and/or C-UL MU-MIMO transmission mode, or the uplink COFDMA and/or CSR mode, the common information field of the first trigger frame further includes: a first sharing transmission indication subfield; where a value of the first sharing transmission indication subfield is an eighth value. The specific meaning of the eighth value is the same as those of the aforementioned embodiments, and the eighth value is used to indicate the multiple STAs to enable the TXOP sharing mode, which will not be repeated below. It should be noted that if the common information field of the first trigger frame contains the first transmission mode subfield, the common information field of the first trigger frame may not contain the above-mentioned first sharing transmission indication subfield. That is, the first sharing transmission indication subfield may not be contained in this example. If the value of the first sharing transmission indication subfield in the common information field of the first trigger frame is the eighth value, it represents that the STA that receives the first trigger frame may identify the identification subfield (i.e., AID12 subfield) of its own user information subfield based on the VAID. If the common information field of the first trigger frame further includes: a value of the first sharing transmission indication subfield being a ninth value, it represents that the STA that receives the first trigger frame may identify the identification subfield (i.e., AID12 subfield) of its own user information subfield based on the AID.

Optionally, in the case of the uplink CBF and/or C-UL MU-MIMO transmission mode, or the uplink COFDMA mode and/or CSR mode, the user information subfield of the third STA of the first trigger frame includes an identification subfield of the third STA, which is used to carry the identification information of the third STA; and/or, the user information subfield of the fourth STA of the first trigger frame includes an identification subfield of the fourth STA, which is used to carry the identification information of the fourth STA. In a preferred example, the user information subfield of the third STA of the first trigger frame includes an identification subfield of the third STA, which is used to carry the identification information of the third STA; and the user information subfield of the fourth STA of the first trigger frame includes an identification subfield of the fourth STA, which is used to carry the identification information of the fourth STA. This is because the first STA needs to indicate the STAs that perform an uplink transmission, respectively, so respective STAs need to be able to identify corresponding user information subfields thereof themselves based on respective identification subfields.

That is, the first trigger frame may indicate a transmission mode through the common information field, that is, indicate the transmission mode through the first transmission mode subfield of the common information field; or, the first trigger frame may indicate the transmission mode through the transmission mode subfield of the third STA and the transmission mode subfield of the fourth STA contained in the user information subfield of the third STA and the user information subfield of the fourth STA, respectively. The first trigger frame may perform uplink and downlink indication through the common information field, that is, indicate the uplink transmission through the first uplink and downlink indication subfield of the common information field; or, the first trigger frame may indicate the uplink transmission through the uplink and downlink indication subfield of the third STA and the uplink and downlink indication subfield of the fourth STA contained in the user information subfield of the third STA and the user information subfield of the fourth STA, respectively. In addition, the first trigger frame may carry the identification information of the third STA and the identification information of the fourth STA, as well as the transmit power subfield of the third STA and the transmit power subfield of the fourth STA.

Optionally, in a case where the aforementioned first STA (i.e., sharing AP) enables the uplink CBF and/or C-UL MU-MIMO transmission mode, or enables the uplink COFDMA mode and/or CSR mode, the first trigger frame may further include the user information subfield of the second STA, which is used by the second STA to determine that the fourth STA associated with the second STA needs to perform an uplink transmission, thereby entering the corresponding mode and preparing to receive the uplink data. The user information subfield of the second STA of the first trigger frame further includes: the uplink and downlink indication subfield of the second STA, and the value of the uplink and downlink indication subfield of the second STA is the sixth value; and the specific definitions of the sixth value are the same as those of the aforementioned embodimentss and will not be repeated herein. The user information subfield of the second STA of the first trigger frame includes the identification subfield of the second STA, which is used to carry the identification information of the second STA. In addition, the user information subfield of the second STA may further include the transmission mode subfield of the second STA. Specifically, in a case where the first STA (i.e., the sharing AP) enables the uplink CBF and/or C-UL MU-MIMO transmission mode, the value of the transmission mode subfield of the second STA is a second value; in a case where the first STA enables the uplink COFDMA mode and/or CSR mode, the value of the transmission mode subfield of the second STA is a third value.

Furthermore, on the basis of the content contained in the first trigger frame described in the aforementioned examples, the common information field of the first trigger frame may further contain a trigger type subfield, and a value of the trigger type subfield is a first specified value (for example, the value of the trigger type subfield may be 8).

A legacy uplink multi-AP TXOP sharing mode: the trigger frame is a second trigger frame; and sending, by the first STA, the trigger frame, includes: sending, by the first STA, the second trigger frame, and the second trigger frame is used to trigger the multiple STAs to simultaneously send the first frame, and the first frame is used to trigger STAs associated with the multiple STAs to perform a simultaneous uplink coordinated transmission. The multiple STAs include: the first STA and the second STA. Specifically, the first STA refers to a Sharing AP, and the second STA refers to a Shared AP. It should be understood that the number of the aforementioned Shared AP (i.e., the second STA) may be one or more. In one case, with the different number of the second STAs, the specific processing of transmitting the second trigger frame by the first STA may be different. For example, in a case where the number of the second STAs is 2 or more, the first STA sends the second trigger frame by broadcasting or multicasting; the receiver address of the second trigger frame is set to a broadcast address or multicast address. For example, in a case where the number of the second STAs is 1, the first STA sends the second trigger frame by unicasting; the receiver address of the second trigger frame is set to an address of the second STA. In yet another case, with the different specific formats of the second trigger frame, the specific processing of the first STA transmitting the second trigger frame may be different. For example, in a case where the common information field of the second trigger frame contains the transmission mode subfield, the uplink and downlink indication subfield, and the trigger type subfield, the first STA sends the second trigger frame by broadcasting or multicasting; the receiver address of the second trigger frame is set to a broadcast address or the multicast address.

The method further includes: in a case where the first STA enables a legacy uplink TXOP sharing mode, transmitting the first frame to the third STA after a second duration from that the second trigger frame is sent; and the third STA is associated with the first STA. Specifically, the method further includes: receiving, by the first STA, the uplink data sent from the third STA after transmitting the first frame to the third STA; and sending, by the first STA, the BA to the third STA. Herein, the sending, by the first STA, the BA to the third STA may be: sending, by the first STA, the BA to the third STA after the second duration of completing the reception of the uplink data sent from the third STA. Herein, the manner for judging whether the reception of the uplink data sent from the third STA is completed may be to detect indication information of the completion of the transmission in the uplink data received from the third STA, and determine that the reception of the uplink data sent from the third STA is completed. Of course, there may be other determination manners, which are not exhaustive in the present embodiment. Herein, the second duration may be the same as or different from the aforementioned first duration. In an example, the second duration may refer to a SIFS. It should be pointed out that, as described above, the multiple STAs include at least one of: the first STA and the second STA; accordingly, in the present implementation, the times when the first STA and the second STA send the first frame should be the same. The moment when the uplink data of the third STA is sent may be the same as the moment when the uplink data of the fourth STA is sent. That is, the third STA and the fourth STA perform a simultaneous uplink transmission.

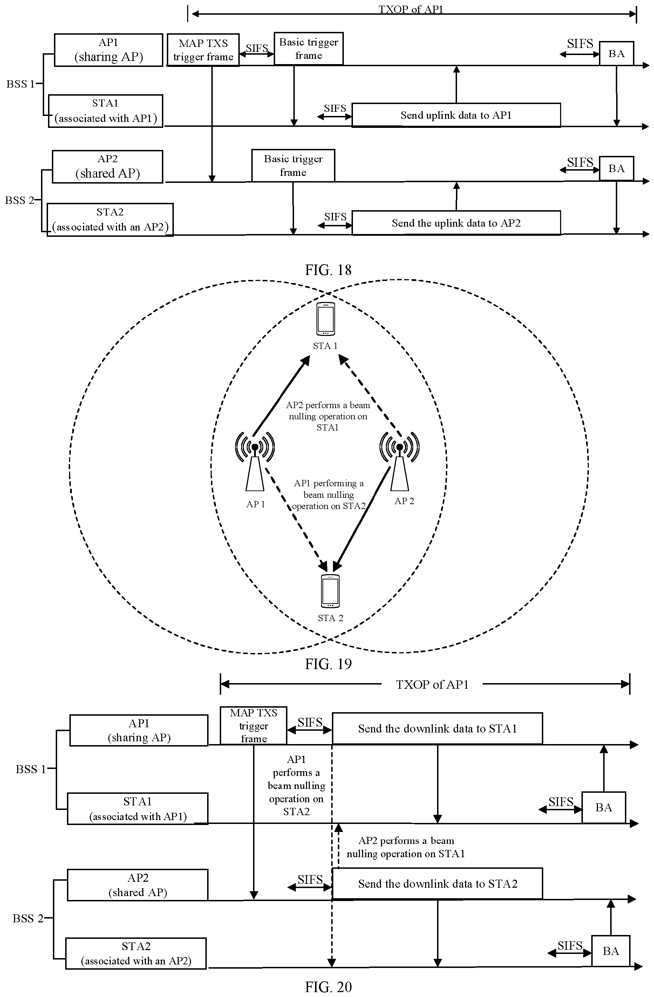

In conjunction with FIG. 14 and FIG. 18, in FIG. 14 and FIG. 18, the AP1 is a Sharing AP (the first STA), the AP2 is a Shared AP (i.e., the second STA), the STA1 is the third STA associated with the Sharing AP (i.e., the first STA), and the STA2 is the fourth STA associated with the Shared AP (i.e., the second STA). After completing interactions with other devices in the coordinated set in the preparation phase and the probe phase, the AP1 knows that the STA2 in the BSS2 has the uplink to-be-transmitted data and expects to adopt the legacy uplink TXOP sharing mode, so the AP1 generates the MAP TXS trigger frame (i.e., the second trigger frame). The second trigger frame contains the User info subfield of the AP2. With continuing reference to FIG. 18, within AP1's own TXOP, the AP1 sends a basic trigger frame to the STA1 after the SIFS time from that the MAP TXS trigger frame (i.e., the second trigger frame) is sent; the AP1 receives the uplink data sent from the STA1 after the SIFS time from that the basic trigger frame is sent, and in a case where the AP1 receives the uplink data sent from the STA1, sends the BA to the STA1 after the SIFS time.

Furthermore, respective fields that may be contained in the second trigger frame are described as follows: an identification subfield of the second STA included in the user information subfield of the second STA of the second trigger frame is used to carry the identification information of the second STA.

The common information field of the second trigger frame contains a second transmission mode subfield, and the value of the second transmission mode subfield is a fifth value. The specific meaning of the fifth value is the same as those of the aforementioned embodiments, and the fifth value is used to represent that the coordinated transmission mode used for the TXOP sharing of i-th STA is the legacy uplink TXOP sharing mode, which will not be repeated below. Alternatively, the common information field of the second trigger frame does not contain a second transmission mode subfield. The user information subfield of the second STA of the second trigger frame includes: the transmission mode subfield of the second STA, and the value of the transmission mode subfield of the second STA is the fifth value.

Optionally, the common information field of the second trigger frame contains a second uplink and downlink indication subfield, and the value of the second uplink and downlink indication subfield is a sixth value. The specific meaning of the sixth value is the same as those of the aforementioned embodiments, and the sixth value is used to represent that the multiple STAs to perform a simultaneous uplink transmission, which will not repeated below. Alternatively, the common information field of the second trigger frame does not contain the second uplink and downlink indication subfield, the user information subfield of the second STA of the second trigger frame further includes: the uplink and downlink indication subfield of the second STA, and the value of the uplink and downlink indication subfield of the second STA is the sixth value.

Optionally, the user information subfield of the second STA of the second trigger frame may further include: a transmit power subfield of the second STA.

Optionally, the common information field of the second trigger frame further includes: a second sharing transmission indication subfield; and the value of the second sharing transmission indication subfield is the eighth value.

Downlink CBF mode: the trigger frame is the third trigger frame; and sending, by the first STA, the trigger frame includes: sending, by the first STA, the third trigger frame, where the third trigger frame is used for the multiple STAs to perform a simultaneous downlink coordinated transmission. The multiple STAs include: a first STA and a second STA; and the second STA is different from the first STA.

In this implementation, the method further includes: sending, by the first STA, the downlink data to the third STA after a third duration of sending the third trigger frame; the third STA is associated with the first STA; and receiving, by the first STA, the block acknowledgement (BA) sent from the third STA. The sending, by the first STA, the downlink data to the third STA after the third duration from that the third trigger frame is sent includes: in a case where the first STA enables the downlink CBF mode, performing, by the first STA, a beam nulling operation on the fourth STA after the third duration from that the third trigger frame is sent and sending the downlink data to the third STA; and the fourth STA is associated with the second STA. The receiving, by the first STA, the block acknowledgement (BA) sent from the third STA may include: receiving, by the first STA, the block acknowledgement (BA) sent from the third STA after the third duration from that the transmission of the downlink data is completed.

In conjunction with FIG. 19 and FIG. 20, in FIG. 19 and FIG. 20, the AP1 is a Sharing AP (i.e., the first STA), the AP2 is a Shared AP (i.e., the second STA), the STA1 is the third STA associated with the Sharing AP (the first STA), and the STA2 is the fourth STA associated with the Shared AP (i.e., the second STA). After the AP1 completes interactions with other devices in the coordinated set in the preparation phase and the probe phase, the AP1 konws that the AP2 in the BSS2 has downlink to-be-transmitted data, so the AP1 generates the MAP TXS trigger frame (i.e., the third trigger frame), which is used to trigger a simultaneous downlink transmission together with the AP2. The third trigger frame contains the User info subfield of the AP2. With continuing reference to FIG. 20, within AP1's own TXOP, the AP1 performs a beam nulling operation on the non-associated STA2 after the SIFS time of the AP1 sending the MAP TXS trigger frame (i.e., the third trigger frame), sends the downlink data to the STA1, and receives the BA sent from the STA1 after a SIFS duration. It should be understood that the schematic dashed arrows in FIG. 20 are not completely overlapping for the sake of clarity, but FIG. 20 does not mean that the timings of the beam nulling operations of the AP1 and the AP2, respectively, must be different, and in actual processing, the timing of the beam nulling operations of the AP1 and the AP2, respectively, may be the same. In addition, if there is only one AP2, the MAP TXS trigger frame (i.e., the third trigger frame), is sent by unicasting, and receiver address thereof is set as the address of the AP2.

Downlink COFDMA and/or CSR mode: the trigger frame is the third trigger frame; and sending, by the first STA, the trigger frame includes: sending, by the first STA, the third trigger frame, where the third trigger frame is used for the multiple STAs to perform a simultaneous downlink coordinated transmission. The multiple STAs include: the first STA and the second STA; and the second STA is different from the first STA. The manner for sending the third trigger frame is the same as those of the aforementioned embodiments, which will not be repeated herein.

Optionally, the method further includes: in a case where the downlink COFDMA and/or CSR mode is enabled, sending, by the first STA, downlink data to the third STA after a third duration of sending the third trigger frame; the third STA is associated with the first STA; and receiving, by the first STA, a block acknowledgement (BA) sent from the third STA.

The sending, by the first STA, the downlink data to the third STA after the third duration from that the third trigger frame is sent includes: in a case where the downlink COFDMA and/or CSR mode is enabled, it transmitting, by the first STA, the downlink data in a first resource unit (RU) after the third duration from that the third trigger frame is sent, where the first RU is a resource corresponding to the third STA. The receiving, by the first STA, the block acknowledgement (BA) sent from the third STA may include: receiving, by the first STA, the block acknowledgement (BA) sent from the third STA in the first RU. Specifically, the first STA receives the block acknowledgement (BA) sent from the third STA in the first RU after the third duration from that the first STA completes the transmission of the downlink data.

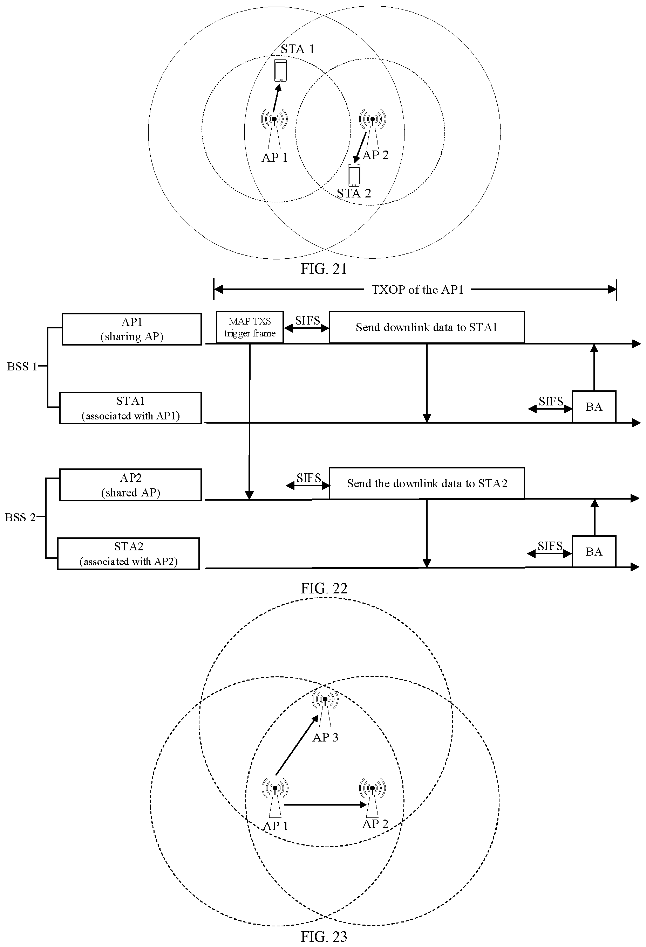

In conjunction with FIG. 21 and FIG. 22, FIG. 21 and FIG. 22 are schematic diagrams of the STA enabling the downlink CSR mode. Herein, the AP1 is a Sharing AP (i.e., the first STA), the AP2 is a Shared AP (i.e., the second STA), the STA1 is the third STA associated with the Sharing AP (i.e., the first STA), and the STA2 is the fourth STA associated with the Shared AP (i.e., the second STA). After the AP1 completes interactions with other devices in the multi-AP coordinated set in the preparation phase and the probe phase (CSR determines whether the probe phase is required according to different RSSI measurement manners), the AP1 knows that the AP2 in the BSS2 has downlink to-be-transmitted data, and then the AP1 generates the MAP TXS trigger frame (i.e., the third trigger frame), which is used to trigger the AP1 and the AP2 to perform a simultaneous downlink transmission, and the third trigger frame contains at least the User info subfield of the AP2. With continuing reference to FIG. 22, within AP1's own TXOP, the AP1 sends the downlink data to the STA1 after the SIFS time from that the MAP TXS trigger frame (i.e., the first trigger frame) is sent(i.e., the third trigger frame), the AP1 receives the BA sent from the STA1 after the SIFS time from that the transmission of the downlink data to the STA1 is completed.

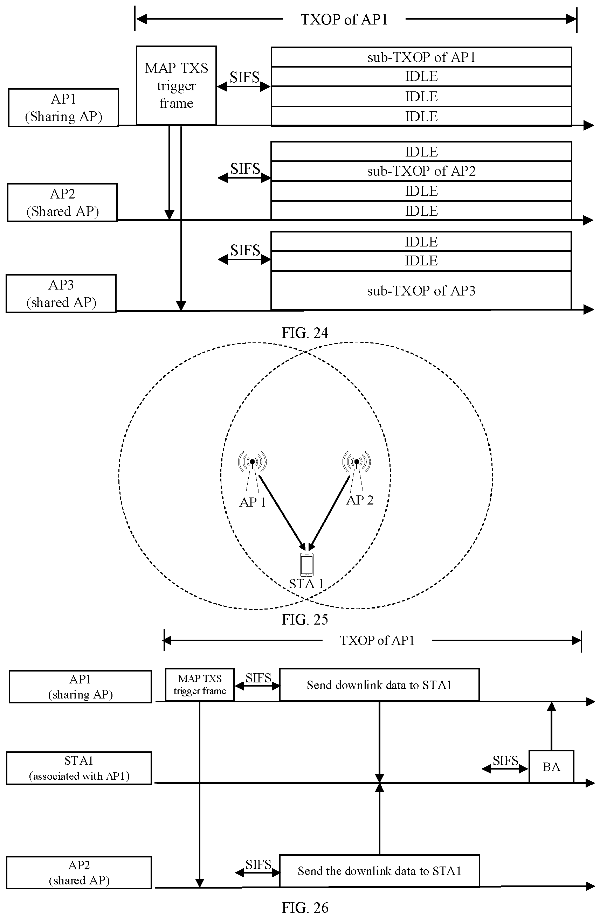

In conjunction with FIG. 23 and FIG. 24, FIG. 23 and FIG. 24 are schematic diagrams of the first STA enabling the COFDMA mode. In FIG. 23 and FIG. 24, the AP1 is a Sharing AP (i.e., the first STA), and the AP2 and the AP3 are both Shared APs (i.e., the second STA). After the AP1 completes interactions with other devices in the multi-AP coordinated set in the preparation phase and the probe phase, the AP1 konws that the AP2 in the BSS2 has the downlink to-be-transmitted data and the AP3 in the BSS3 has the downlink to-be-transmitted data, so the AP1 generates the MAP TXS trigger frame (i.e., the third trigger frame), which is used to trigger the simultaneous downlink transmission together with the AP2 and the AP3. The third trigger frame contains a User info subfield of the AP2 and a User info subfield of the AP3. With continuing reference to FIG. 24, within AP1's own TXOP, the AP1 sends the downlink data in the first RU (i.e., the sub-TXOP of the AP1 shown in FIG. 23 and FIG. 24) corresponding to its own STA after the SIFS time from that the MAP TXS trigger frame (i.e., the first trigger frame) is sent(i.e., a third trigger frame).

Joint transmission mode: the trigger frame is the third trigger frame; and sending, by the first STA, the trigger frame includes: sending, by the first STA, the third trigger frame, where the third trigger frame is used for the multiple STAs to perform a simultaneous downlink coordinated transmission. The multiple STAs include: the first STA and the second STA; and the second STA is different from the first STA. The manner for the first STA to determine one or more second STAs may be: the first STA completes interactions with other devices in the coordinated set in the preparation phase and the probe phase, and then selects the one or more shared APs as coordinated second STAs of the joint transmission.

In addition, the method may further include that the first STA can obtain CSI information feedback of the third STA (i.e., the third STA associated with the first STA) from the second STA, the first STA calculates a downlink transmission precoding matrix of the second STA according to the CSI information, and sends precoding information and data information to be transmitted to the third STA, to the second STA.

In this implementation, the method further includes: sending, by the first STA, the downlink data to the third STA after the third duration from that the third trigger frame is sent; the third STA is associated with the first STA; and receiving, by the first STA, the block acknowledgement (BA) sent from the third STA. The sending, by the first STA, the downlink data to the third STA after the third duration from that the third trigger frame is sent includes: in a case where the first STA enables the joint transmission mode is enabled, the first STA, sending downlink data to the third STA according to the downlink data obtained by processing the to-be-transmitted data according to precoding after the third duration from that the third trigger frame is sent. The receiving, by the first STA, the block acknowledgement (BA) sent from the third STA may include: receiving, by the first STA, the block acknowledgement (BA) sent from the third STA after the third duration from that the transmission of the downlink data is completed. In the present implementation, the moment when the downlink data of the first STA is sent may be the same as the moment when the downlink data of the second STA is sent. That is, the first STA and the second STA perform a simultaneous downlink transmission. In addition, it should be pointed out that, in the present implementation, the first STA and the second STA both send downlink data to the third STA, and the third STA only sends the BA to the first STA associated with itself.

In conjunction with FIG. 25 and FIG. 26, FIG. 25 and FIG. 26 are schematic diagrams of the STA enabling the downlink CSR mode. Herein, the AP1 is a Sharing AP (i.e., the first STA), the AP2 is a Shared AP (i.e., the second STA), the STA1 is the third STA associated with the Sharing AP (i.e., the first STA). After the AP1 completes interactions with other devices in the multi-AP coordinated set in the preparation phase and the probe phase, the AP1 selects one or more shared APs as the coordinated APs for joint transmission (i.e., the AP2 is one of them in FIG. 25 and FIG. 26), and the AP1 may also obtain the CSI feedback of the STA1 from the AP2, and the AP1 calculates the downlink transmission precoding matrix of the AP2 according to the CSI information, and sends the precoding information and the data information that needs to be sent to the STA1, to the AP2 that has downlink data that needs to be transmitted, then the AP1 generates the MAP TXS trigger frame (i.e., a third trigger frame), which is used to trigger a simultaneous downlink transmission of the AP1 and the AP2, and the third trigger frame contains at least the User info subfield of the AP2. With continuing reference to FIG. 26, within AP1's own TXOP, the AP1 sends the downlink data to the STA1 after the SIFS time from that the MAP TXS trigger frame (i.e., the third trigger frame) is sent, and the AP1 receives the BA sent from the STA1 after the SIFS time from that the transmission of the downlink data to the STA1 is completed.

Furthermore, respective fields that may be contained in the third trigger frame are described as follows.

In the downlink CBF mode, the common information field of the third trigger frame includes a third transmission mode subfield, and a value of the third transmission mode subfield is a second value. Alternatively, the common information field of the third trigger frame does not include the third transmission mode subfield; the user information subfield of the second STA of the third trigger frame includes the transmission mode subfield of the second STA; and the value of the transmission mode subfield of the second STA is the second value. The specific meaning of the second value is the same as those of the aforementioned embodiments, which will not be repeated below.

In the downlink COFDMA and/or CSR mode, the common information field of the third trigger frame includes a third transmission mode subfield, and a value of the third transmission mode subfield is a third value. Alternatively, the common information field of the third trigger frame does not include the third transmission mode subfield; the user information subfield of the second STA of the third trigger frame includes the transmission mode subfield of the second STA; and the value of the transmission mode subfield of the second STA is the third value. The specific meaning of the third value is the same as those of the aforementioned embodiments, which will not be repeated below.

In the joint transmission mode, the common information field of the third trigger frame includes a third transmission mode subfield, and a value of the third transmission mode subfield is a fourth value. Alternatively, the common information field of the third trigger frame does not include the third transmission mode subfield; the user information subfield of the second STA of the third trigger frame includes the transmission mode subfield of the second STA; and the value of the transmission mode subfield of the second STA is the fourth value. The specific meaning of the fourth value is the same as those of the aforementioned embodiments, which will not be repeated below.

Optionally, based on the above, regardless of the downlink CBF mode, downlink COFDMA and/or CSR mode, or joint transmission mode, the third trigger frame may further include the following fields:
the user information subfield of the second STA of the third trigger frame, including: an identification subfield of the second STA, which is used to carry the identification information of the second STA. Optionally, the user information subfield of the second STA of the third trigger frame further includes: a transmit power subfield of the second STA. Herein, the manner for the second STA to determine the transmit power used by itself according to the corresponding transmit power subfield, has been described in the aforementioned embodiments, which will not be repeated herein. Optionally, the common information field of the third trigger frame contains a third uplink and downlink indication subfield, and a value of the third uplink and downlink indication subfield is the seventh value. Alternatively, the common information field of the third trigger frame does not contain the third uplink and downlink indication subfield, the user information subfield of the third trigger frame includes: the uplink and downlink indication subfield of the second STA, and the value of the uplink and downlink indication subfield of the second STA is the seventh value. The specific meaning of the seventh value is the same as those of the aforementioned embodiments, and the seventh value is used to represent that the multiple STAs to perform a simultaneous downlink transmission. Optionally, the common information field of the third trigger frame may further include: a third sharing transmission indication subfield; and a value of the third sharing transmission indication subfield is an eighth value. The specific meaning of the eighth value is the same as those of the aforementioned embodiments, and the eighth value is used to indicate the multiple STAs to enable the TXOP sharing mode, which will not be repeated below. It should be ponited out that if the common information field of the third trigger frame contains the third transmission mode subfield, the common information field of the third trigger frame may not contain the above-mentioned third sharing transmission indication subfield. That is, the third sharing transmission indication subfield may not be contained in this example. Additionally, it should be pointed out that if the common information field of the third trigger frame contains the third sharing transmission indication subfield and the value of the third sharing transmission indication subfield is the eighth value, it represents that the STA (for example, the second STA) that receives the third trigger frame may identify the identification subfield (i.e., AID12 subfield) of its own user information subfield based on the VAID.

Based on the aforementioned, the third trigger frame may not include the user information subfield of the third STA and the user information subfield of the fourth STA. Alternatively, the third trigger frame may further include the user information subfield of the third STA and/or the user information subfield of the fourth STA. That is, although the third STA that receives the third trigger frame does not need to prepare to send the uplink data, if the third trigger frame contains the user information subfield for the third STA, it may also indicate the third STA to prepare to receive the downlink data. The fourth STA is similar to the third STA, which will not be repeated herein. The third STA is associated with the first STA, the fourth STA is associated with the second STA, and the second STA is different from the first STA. A number of the aforementioned third STA(s) may also be one or more, and a number of the aforementioned fourth STA(s) may be one or more.

Optionally, the user information subfield of the third STA of the third trigger frame includes at least one of: an identification subfield of the third STA, which is used to carry the identification information of the third STA; and an uplink and downlink indication subfield of the third STA, where the value of the uplink and downlink indication subfield of the third STA being the seventh value. With the reference to the description of the identification information of the third STA is the same as the description of the identification information of the aforementioned i-th STA, which will not repeated herein. The description of the uplink and downlink indication subfield of the third STA is similar to the uplink and downlink indication subfield of the aforementioned second STA, which will not be repeated herein. It should be understood that the user information subfield of the third STA may only contain the identification subfield of the third STA. At this time, if the third STA detects that the identification subfield of the user information subfield of the third STA is the same as its own identification, the third STA may wait to receive the downlink data by default. Alternatively, the user information subfield of the third STA may contain the identification subfield of the third STA and the uplink and downlink indication subfield of the third STA. At this time, if the third STA detects that the identification subfield of the user information subfield of the third STA is the same as its own identification, then in a case where the value of the uplink and downlink indication subfield of the third STA is the seventh value, the third STA waits for receiving the downlink data.

Optionally, the user information subfield of the fourth STA of the third trigger frame includes at least one of: an identification subfield of the fourth STA, which is used to carry the identification information of the fourth STA; and an uplink and downlink indication subfield of the fourth STA, and the value of the uplink and downlink indication subfield of the fourth STA is the seventh value. The description of the identification information of the fourth STA is the same as the description of the identification information of the aforementioned i-th STA, which will not repeated herein. The description of the uplink and downlink indication subfield of the fourth STA is also similar to the uplink and downlink indication subfield of the aforementioned second STA, which will not be repeated herein. It should be understood that the user information subfield of the fourth STA may only contain the identification subfield of the fourth STA. At this time, if the fourth STA detects that the identification subfield of the user information subfield of the fourth STA is the same as its own identification, the fourth STA may wait to receive the downlink data by default. Alternatively, the user information subfield of the fourth STA may contain the identification subfield of the fourth STA and the uplink and downlink indication subfield of the fourth STA. At this time, if the fourth STA detects that the identification subfield of the user information subfield of the fourth STA is the same as its own identification, then in a case where the value of the uplink and downlink indication subfield of the fourth STA is the seventh value, the fourth STA waits for receiving the downlink data.

Optionally, on the basis of the content contained in the third trigger frame described in the aforementioned examples, the common information field of the third trigger frame may further contain a trigger type subfield, and a value of the trigger type subfield is a first specified value (for example, the value may be 8).

The trigger frame is a fourth trigger frame; and sending, by the first STA, the trigger frame includes: sending, by the first STA, the fourth trigger frame, and the fourth trigger frame is used for the multiple STAs to perform a simultaneous coordinated transmission. The multiple STAs include: the third STA and the second STA; and the third STA is associated with the first STA. In the present implementation, the first STA may enable the CSR mode. The fourth trigger frame is used to trigger the third STA to perform a simultaneous uplink coordinated transmission, and trigger the second STA to perform a simultaneous downlink coordinated transmission. The first STA sends the fourth trigger frame by broadcasting or multicasting; and a receiver address of the fourth trigger frame is set to be a broadcast address or multicast address.

The method further includes: receiving, by the first STA, the uplink data sent from the third STA, after a fourth duration from that the fourth trigger frame is sent; and sending, by the first STA, the block acknowledgement (BA) to the third STA. In addition, the second STA may also be used to send the downlink data to the fourth STA after the fourth duration from that the fourth trigger frame is received and receive a BA sent from the fourth STA. Herein, sending, by the first STA, the block acknowledgment (BA) to the third STA may be: sending, by the first STA, the block acknowledgment (BA) to the third STA after the fourth duration from that the transmission of the downlink data is completed. Herein, the fourth duration may be the same as or different from any one of the first duration, the second duration, and the third duration. In an example, the fourth duration may refer to a SIFS.

Specifically, the first STA refers to a Sharing AP, the second STA refers to a Shared AP, the third STA refers to a STA (i.e., non-AP STA) associated with the Sharing AP, and the fourth STA refers to a STA (i.e., non-AP STA) associated with the Shared AP. It should be understood that a number of the aforementioned Shared APs (i.e., the second STAs), may be one or more, a number of the aforementioned third STAs may be one or more, and a number of the aforementioned fourth STAs may be one or more. It should also be noted that the first STA and one or more second STAs may be APs in a same coordination set; specifically, the one or more second STAs may be Shared APs located within the transmission range of the first STA.

In the present implementation, the moment when the third STA sends the uplink data to the first STA is the same as the moment when the second STA sends the downlink data to the fourth STA. That is, the third STA and the second STA perform a simultaneous coordinated transmission.

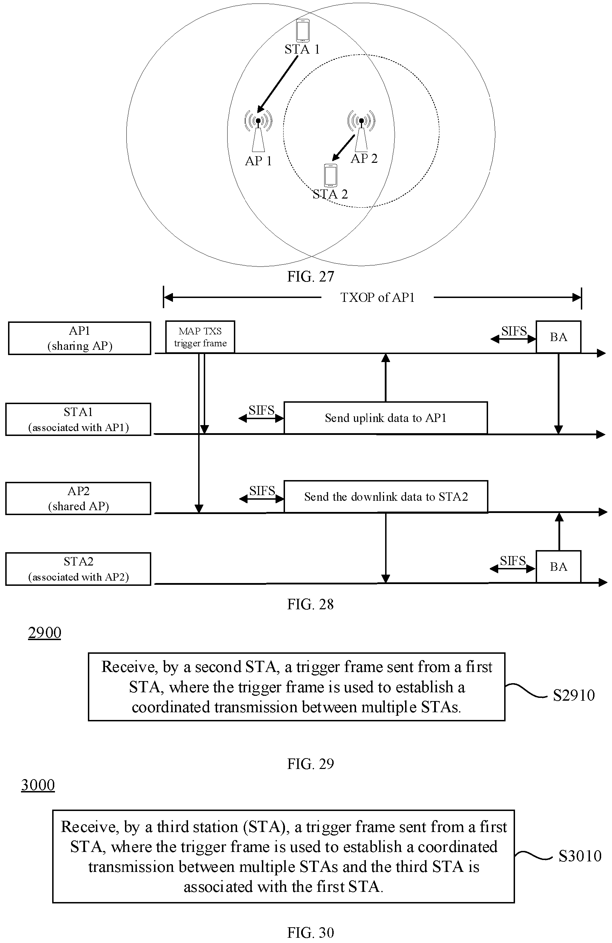

In conjunction with FIG. 27 and FIG. 28, FIG. 27 and FIG. 28 are schematic diagrams of the STA enabling the downlink CSR mode. Herein, the AP1 is a Sharing AP (i.e., the first STA), the AP2 is a Shared AP (i.e., the second STA), the STA1 is the third STA associated with the Sharing AP (i.e., the first STA), and the STA2 is the fourth STA associated with the Shared AP (i.e., the second STA). After the AP1 completes interactions with other devices in the multi-AP coordinated set in the preparation phase and the probe phase (whether the probe phase is required is determined according to different RSSI measurement manners), the AP1 knows that the AP2 in the BSS2 has downlink data to be transmitted and at this time, the AP1 knows that the STA1 has the uplink data to be transmitted, and then the AP1 generates the MAP TXS trigger frame (i.e., the fourth trigger frame), which is used to trigger the STA1 and the AP2 to perform a simultaneous transmission, and the fourth trigger frame contains at least the User info subfields of the AP2 and the STA1. With continuing reference to FIG. 28, within AP1's own TXOP, the AP1 receives the uplink data sent from the STA1 to the AP1, after the SIFS time from that the MAP TXS trigger frame (i.e., the first trigger frame) is sent(i.e., the fourth trigger frame) and sends the BA to the STA1 after the SIFS time from that the reception of the uplink data sent from the STA1 is completed; at the same time, within AP1's TXOP, the AP2 sends the downlink data to the STA2 after the SIFS time from that the AP2 receives the MAP TXS trigger frame (i.e., the fourth trigger frame) sent from the AP1, and receives the BA sent from the STA2 after the SIFS time from that the transmission of the downlink data is completed.

Furthermore, respective fields that may be contained in the fourth trigger frame are described as follows: the fourth trigger frame contains the user information subfield of the third STA with the identification information of the third STA. Optionally, the user information subfield of the third STA of the fourth trigger frame further includes: a transmit power subfield of the third STA. Optionally, the user information subfield of the third STA of the fourth trigger frame further includes: an uplink and downlink indication subfield of the third STA, and a value of the uplink and downlink indication subfield of the third STA is a sixth value; and the sixth value is used to indicate the third STA to perform a simultaneous uplink transmission. Optionally, the user information subfield of the second STA of the fourth trigger frame includes an identification subfield of the second STA, which is used to carry the identification information of the second STA. Optionally, the user information subfield of the second STA of the fourth trigger frame further includes: a transmit power subfield of the second STA. Optionally, the user information subfield of the second STA of the fourth trigger frame further includes: an uplink and downlink indication subfield of the second STA, and the value of the uplink and downlink indication subfield of the second STA is a seventh value. The seventh value is used to indicate the second STA to perform a simultaneous downlink transmission. Optionally, the user information subfield of the second STA of the fourth trigger frame further includes: the transmission mode subfield of the second STA, and a value of the transmission mode subfield of the second STA is a third value. The value of the transmission mode subfield of the second STA being the third value represents that the coordinated transmission mode used for the TXOP sharing of the second STA is the COFDMA and/or CSR mode. Optionally, the user information subfield of the third STA of the fourth trigger frame may further include the transmission mode subfield of the third STA, and a value of the transmission mode subfield of the third STA is the third value.

That is, the fourth trigger frame needs to carry the user information subfield of the third STA and the user information subfield of the second STA. The user information subfield of the third STA indicates the maximum transmission power that may be used by the third STA, and inform the third STA to perform an uplink transmission (or the transmission mode subfield of the third STA may also be used to inform the transmission mode used by the third STA); the user information subfield of the second STA indicates the maximum transmission power that may be used by the second STA, and informs the second STA to perform a simultaneous downlink transmission, as well as a transmission mode adopted by the second STA. On this basis, the user information subfield of the fourth STA associated with the second STA may also be contained. Through the user information subfield of the fourth STA, the fourth STA is informed that what is currently to be performed is the downlink transmission, and then the fourth STA may wait to receive the downlink data sent from the second STA associated with itself.

Finally, the effect of the present embodiment is explained by combining related technologies. Before performing multi-AP coordinated transmission, the multi-AP TXOP sharing technology needs to be used. In the process of formulating related standards, various multi-AP coordinated manners are provided and each of the multi-AP coordinated transmission technologies is discussed separately, and the multi-AP TXOP sharing technology of each coordinated transmission scheme is not uniform. The multi-AP TXOP sharing will be divided into two operations: downlink and uplink. When the downlink multi-AP TXOP sharing is to be carried out, the sharing AP sends a trigger frame to the shared AP to trigger the downlink simultaneous transmission of the multiple APs. When the uplink multi-AP TXOP sharing is to be carried out, the sharing AP sends the trigger frame to the shared AP(s), and then the shared AP(s) send(s) the trigger frame to associated STA thereof to trigger STAs in the multiple BSS to perform the uplink simultaneous transmission. Although the existing mechanism may achieve the multi-AP TXOP sharing, the trigger frame used to trigger the multi-AP TXOP sharing does not have a complete frame format design, and the uplink multi-AP TXOP sharing mechanism is relatively complicated. By adopting the solution provided in the present embodiment, a first STA sends a trigger frame for establishing a coordinated transmission between the multiple STAs, thereby providing a solution for efficiently establishing the multi-STA coordination. Specifically, the solution provided in the present embodiment may control the multiple STAs to cooperatively perform a simultaneous uplink transmission and/or a simultaneous downlink transmission by sending only one trigger frame, which may simplify the sharing procedure and reduce the signaling overhead used to establish the coordinated transmission, thereby achieving efficient establishment of the multi-STA coordination.

FIG. 29 is a schematic flow chart of a communication method 2900 according to the embodiments of a second aspect of the present disclosure. The method may optionally be applied to the system shown in FIG. 1, but is not limited thereto. The method includes at least part of the following contents:
S2910, receiving, by a second STA, a trigger frame sent from a first STA, where the trigger frame is used to establish a coordinated transmission between multiple STAs.

In the embodiments of the present disclosure, the first STA may be an AP. Specifically, the first STA is a sharing (Sharing) AP. The second STA may be an AP and specifically, the second STA is a shared (Shared) AP. It should be understood that one or more second STAs may be contained in an actual network composed of the STAs. The present embodiment provides a detailed description of any one of the second STAs, and the processing of other second STAs is the same as that of the present embodiment, which is not repeated herein.

In a possible implementation, before performing S2910, the method further includes: acquiring, by the second STA, its own AID and/or VAID.

Specifically, the acquiring, by the second STA, its own AID and/or VAID may be: acquiring, by the second STA, the AID and/or VAID configured by a target device for itself. Processing occasion for the second STA to acquire its own AID and/or VAID may be before a preparation phase. The second STA obtains the VAID configured (or allocated) by the target device for itself. The VAID of the second STA is mainly used for the STA of the multi-STA (or multi-AP) TXOP sharing operation. Additionally, the VAID of the second STA may be valid only in a multi-AP coordinated set (hereinafter referred to as a coordinated set). In another example, the second STA may obtain the AID and VAID configured (or allocated) by the target device for itself, that is, the second STA may store its two IDs, i.e., the AID and the VAID, respectively. There may also be an example where the second STA acquires the AID configured (or allocated) by the target device for itself.

Before performing S2910, the method may further include: acquiring, by the second STA, the AID and/or the VAID of a first STA. Herein, a number of the first STA(s) may be one. Specifically, acquiring, by the second STA, the AID and/or the VAID of the first STA may be: acquiring, by the second STA, the AID and/or VAID of the first STA from the target device, of which the processing occasion may be before the preparation phase. The second STA acquires the VAID of the first STA from the target device. The VAID of the first STA is mainly used for a STA of the multi-STA (or multi-AP) TXOP sharing operation. Additionally, the VAID of the first STA may be valid only in the multi-AP coordinated set (hereinafter referred to as a coordinated set). In another example, the second STA may acquire the AID and the VAID of the first STA from the target device, that is, the second STA may store two IDs of the first STA, i.e., the AID and VAID of the first STA, respectively. There may also be an example where the second STA acquires the AID of the first STA from the target device.

In addition, the second STA may also acquire AIDs and/or VAIDs of other Shared APs. Herein, a number of other Shared APs may be zero, or may be one or more, which is not limited thereto. Similar to the aforementioned, the second STA acquires AIDs and/or VAIDs of other Shared APs from the target device. The processing occasion may be before the preparation phase.

The method may further include: configuring (or allocating), by the second STA, an AID and/or a VAID for a fourth STA. The fourth STA specifically may be a STA (i.e., non-AP STA) associated with the second STA. A number of the fourth STA(s) may be one or more, which is not limited in the present embodiment. Specifically, the configuring (allocating), by the second STA, the AID and/or VAID for the fourth STA includes: allocating, by the second STA, the AID and/or VAID for the fourth STA based on a second range of identification values. Herein, the second range of identification values is configured by the target device for the second STA. The second range of identification values is within at least one of: 1-2007, 2008-2044, and 2047-4096. Processing occasion for the second STA to allocate the AID and/or the VAID to the fourth STA may be before the preparation phase. In the present embodiment, the second range of identification values may be different from the first range of identification values in the aforementioned embodiments.

Herein, the method for the second STA to acquire the second range of identification values from the target device may be as follows: the target device sends identification indication information for the second STA, the identification indication information is used to indicate the second STA to allocate the second range of identification values of the AID and/or the VAID to the fourth STA when the second STA is associated with any one of fourth STAs. That is, the identification indication information may carry the second range of identification values. A number of the fourth STAs that the second STA may be associated with may be one or more, and the second range of identification values corresponding to different fourth STAs may be different. Accordingly, the target device may send one or more pieces of identification indication information to the second STA(s), where each identification indication information contains a second range of identification values. For example, a second STA is associated with two fourth STAs, i.e., STA21 and STA22, respectively. The second range of identification values of the STA21 may be 100-150, and the second range of identification values of the STA22 may be 200-300.

The second STA allocates the VAID of the fourth STA based on the second range of identification values. The VAID of the fourth STA is mainly used for the STA of the multi-STA (or multi-AP) TXOP sharing operation. In another example, the second STA allocates the AID and VAID of the fourth STA based on the second range of identification values. There may also be an example where the second STA allocates the AID of the fourth STA based on the second range of identification values.

The method may further include: acquiring, by the second STA, an AID and/or a VAID of a third STA from the first STA. Herein, the third STA is a STA (specifically, a non-AP STA) associated with the first STA (i.e., the sharing AP). The AID and/or VAID of the third STA associated with the first STA is configured (or allocated) by the first STA for the third STA based on a first range of identification values allocated by the target device. A number of the third STA(s) associated with the first STA may be one or more. Processing occasion for the second STA to acquire the AID and/or the VAID of the third STA from the first STA may be before the preparation phase, in the preparation phase, before the completion of the probe phase, etc., which is not limited in the present embodiment. In an example, the second STA acquires the VAID of the third STA from the first STA. The VAID of the third STA is mainly used for the STA of the multi-STA (or multi-AP) TXOP sharing operation. In another example, the second STA acquires the AID and VAID of the third STA from the first STA. There may also be an example where the second STA acquires the AID of the third STA from the first STA.

In addition, the second STA may also acquire the AID and/or VAID of the STA associated with other STAs (i.e., other Shared APs). Herein, a number of other STAs (i.e., other Shared APs) may be zero, or may be one or more; a number of STAs associated with any one of the other STAs (i.e., other Shared APs) may also be one or more, and the number is not limited herein. The manner for the second STA to acquire the AID and/or VAID of the STA associated with other STAs (i.e., other Shared APs) is similar to the manner for the second STA to acquire the AID and/or VAID of the third STA from the first STA, which will not be repeated herein.

The second STA acquires the AID and/or VAID of other STAs associated with other STAs that may receive its own signal from other STAs in the second STA's own coordination set and stores the AID and/or VAID. For example, the same coordination set of the second STA also contains other STAs (i.e., other Shared APs), and the first STA (Sharing AP). The other Shared AP and first STA (Sharing AP) request the STA associated with itself for a list of other APs whose beacons are monitored; if the list of other APs contains the AP in the same coordination set, the other Shared and the first STA (Sharing AP) send the AID and/or VAID of the STA associated with itself to the second STA; accordingly, the second STA receives the AID and/or VAID of the STA associated with the other Shared AP and the first STA (Sharing AP) and stores the AID and/or VAID. That is, each AP in the coordination set may obtain STA information that may receive the each AP's own signal from other APs (or neighboring APs) and store the STA information.

It can be seen from the above implementation that the second STA may obtain AIDs and/or the VAIDs of respective STAs before performing S2910. The AIDs and/or VAIDs of respective STAs are directly or indirectly allocated by the target device. Herein, the target device specifically may be a coordinating device. The coordinating device is an access point (AP); or, the coordinating device is a device other than an AP. The relevant descriptions about the target device have been described in detail in the aforementioned first aspect embodiment and will not be repeated herein.

Next, fields and subfields that may be contained in the trigger frame are described.

In an implementation, the trigger frame specifically may be referred to as a MAP TXS trigger frame. The trigger frame may include a common info field and/or a user info list field; where the user information list field may include one or more user info subfields. The content that may be included in the common information field of the trigger frame is the same as those of the aforementioned embodiments, which will not be repeated herein.

The trigger frame includes one or more user information subfields; a j-th user information subfield of the one or more user information subfields is user information subfield of a j-th STA; j is an integer greater than or equal to 1, and the j-th STA is one of the multiple STAs; the j-th user information subfield includes at least one of: an identification subfield of the j-th STA, where the identification subfield of the j-th STA is used to carry identification information of the j-th STA; a transmission mode subfield of the j-th STA, where a value of the transmission mode subfield of the j-th STA is used to represent the coordinated transmission mode used for the TXOP sharing of the j-th STA, and/or whether the j-th STA enables the TXOP sharing mode; and a transmit power subfield of the j-th STA, where the transmit power subfield of the j-th STA is used to indicate a maximum transmit power used by the j-th STA; an uplink and downlink indication subfield of the j-th STA, where the uplink and downlink indication subfield of the j-th STA is used to indicate the coordinated transmission of the j-th STA is a simultaneous uplink transmission or a simultaneous downlink transmission.

The j-th user information subfield refers to any one of the one or more user information subfields. The content description of the j-th user information subfield in the present embodiment may be the same as that of the i-th user information subfield in the aforementioned embodiment, which will not be repeated herein.

When the trigger frame is actually used, the common information field of the trigger frame may be designed to contain the aforementioned partial subfields, and any one of user information subfields may also be designed to contain the aforementioned partial subfields. For example, the common information field of the trigger frame contains a transmission mode subfield, while respective user information subfields may not contain the transmission mode subfields of corresponding STAs, or vice versa; for another example, the common information field of the trigger frame contains the uplink and downlink indication subfield, while respective user information subfields may not contain the uplink and downlink indication subfields of the corresponding STAs, or vice versa; for yet another example, the common information field of the trigger frame may not contain a sharing transmission indication subfield; for yet another example, the common information field of the trigger frame may contain the sharing transmission indication subfield, but not contain a transmission mode subfield, and one or more user information subfields of the trigger frame contain the transmission mode subfield of the corresponding STA. The subfields that may be contained in the trigger frame are the same as those in the aforementioned embodiment, which will not be repeated herein.

Based on the above description of respective subfields that the trigger frame may contain, the manner for carrying the trigger frame is further described: in an implementation, the trigger frame is carried by a first physical layer protocol unit (PPDU, physical layer protocol data unit); where a value of the first indication bit of a preamble of the first PPDU is a second specified value. Specifically, the first PPDU may be an EHT PPDU. The first indication bit may be a MAP TXS indication bit. In another implementation, no modification is made to the existing PPDU. That is, no new indication bit is added to the preamble of the PPDU, but all STAs that receive the PPDU are set not to discard the PPDU.

Based on the above descriptions of the trigger frame and the first PPDU carrying the trigger frame, the following describes the transmission interaction flow of the second STA. To realize the multi-AP TXOP sharing, the multi-AP TXOP sharing may be divided into three phases, i.e., a preparation phase, a probe phase and a trigger transmission phase, respectively. The aforementioned S2910 is mainly the processing performed in the trigger transmission phase. The preparation phase and the probe phase before the trigger transmission phase are also very important. Information interacted in these two phases is the basis for completing the multi-STA coordinated transmission and the processing of the preparation phase and the probe phase is same as those of the aforementioned embodiments.

After completing the above processing, the second STA may perform the processing of the trigger transmission phase. The following describes subfields and values thereof specifically contained in the trigger frame in different procedures, and the processing of the performing trigger transmission phase for the second STA in different procedures.

In an implementation, the trigger frame is a first trigger frame; and receiving, by the second STA, the trigger frame sent from the first STA includes: receiving, by the second STA, the first trigger frame sent from the first STA, and the first trigger frame is used for the multiple STAs to perform a simultaneous uplink coordinated transmission. Herein, the multiple STAs include at least one of: a third STA and a fourth STA; where the third STA is associated with the first STA, the fourth STA is associated with the second STA, and the second STA is different from the first STA.

Specifically, the first STA refers to a Sharing AP, the second STA refers to a Shared AP, the third STA refers to a STA (i.e., non-AP STA) associated with the Sharing AP, and the fourth STA refers to a STA (i.e., non-AP STA) associated with the Shared AP. It should be understood that a number of the aforementioned Shared APs (i.e., the second STAs) may be one or more, a number of the aforementioned third STAs may be one or more, and a number of the aforementioned fourth STAs may be one or more. It should also be noted that the first STA and one or more second STAs may be APs in a same coordination set; specifically, the one or more second STAs may be Shared APs located within the transmission range of the first STA.

Optionally, the method further include: in a case where a value of a first indication bit in a preamble of a first PPDU carrying the first trigger frame being a second specified value is determined, parsing, by the second STA, the first trigger frame. For example, in a case where the second STA receives the first PPDU, the second STA first reads the first indication bit of the preamble of the first PPDU. If the first indication bit is the second specified value, the second STA determines to extract the first trigger frame from the first PPDU and parse the first trigger frame; otherwise, the first PPDU may be discarded. Herein, the first PPDU specifically may be an EHT PPDU. Of course, it is also possible that the indication bit contained in the PPDU is not modified in the protocol, so the second STA defaults to not discarding the first PPDU and directly parses the first trigger frame.

Optionally, the method further includes: in a case where the first trigger frame satisfies a first condition, receiving uplink data of the fourth STA; and sending, by the second STA, the block acknowledgement (BA) to the fourth STA. More specifically, the method may include: in a case where the first trigger frame satisfies the first condition, enabling, by the second STA, an uplink CBF mode and/or a C-UL MU-MIMO mode and receiving, by the second STA, the uplink data sent from the fourth STA. In addition, if the second STA determines that the aforementioned first trigger frame does not meet the first condition, the first trigger frame may be discarded without further processing. Herein, in a case where the first trigger frame satisfies the first condition, enabling, by the second STA, the uplink CBF mode and/or the C-UL MU-MIMO mode, and receiving, by the second STA, the uplink data sent from the fourth STA specifically may be in a case the first trigger frame satisfies the first condition, determining, by the second STA, the coordinated transmission mode as a coordinated beamforming (CBF) and/or coordinated uplink (C-UL) multiple user multiple input multiple output (MU-MIMO) mode based on the first trigger frame, enabling, by the second STA, the uplink CBF mode and/or C-UL MU-MIMO mode, performing a beam nulling operation on a STA other than the third STA, and receiving, by the second STA, the uplink data sent from the fourth STA after the first duration from the moment when the first trigger frame is received. Herein, the STA other than the third STA may refer to a non-AP STA other than the third STA associated with itself.

Specifically, after determining that the first trigger frame satisfies the first condition, in a case where the value of the first transmission mode subfield in the common information field of the first trigger frame being the second value is determined, the second STA determines to enable the coordinated beam forming (CBF) mode and/or coordinated uplink C-UL multi-user multiple input multiple output (MU-MIMO) mode; then, performs a beam nulling operation on a STA other than the third STA, and receives the uplink data sent from the fourth STA after the first duration from the moment when the first trigger frame is received. Alternatively, after determining that the first trigger frame satisfies the first condition, in a case where the value of the first transmission mode subfield in the common information field of the first trigger frame being the second value is determined, the second STA determines to enable the coordinated beam forming (CBF) mode and/or coordinated uplink (C-UL) multi-user multiple input multiple output (MU-MIMO) mode; and based on the value of the first uplink and downlink indication subfield in the common information field of the first trigger frame being the sixth value, or based on the value of the uplink and downlink indication subfield of the user information subfield of the fourth STA being the sixth value, determines that it is currently necessary to wait to receive the uplink data; then, performs a beam nulling operation on a STA other than the third STA, and receives the uplink data sent from the fourth STA after the first duration from the moment when the first trigger frame is received. Herein, The second STA sending a block acknowledgment (BA) to the fourth STA may be that after the first duration from a moment when the reception of uplink data sent from the fourth STA is completed, the second STA sends a block acknowledgment (BA, Block ACK) to the fourth STA. Herein, the manner for judging whether the reception of the uplink data sent from the fourth STA is completed may be to detect the indication information of the completion of transmission in the uplink data received from the fourth STA, and determine that the reception of the uplink data sent from the fourth STA is completed. Of course, there may be other determination manners, which are not exhaustive in the present embodiment. Herein, the first duration may refer to a SIFS.

It should be pointed out that, as mentioned above, the multiple STAs include at least one of the following: a third STA and a fourth STA; accordingly, in this embodiment, the moment when the uplink data of the third STA is sent can be the same as the moment when the uplink data of the fourth STA is sent. That is, the third STA and the fourth STA perform a simultaneous uplink transmission.

In conjunction with FIG. 12 and FIG. 13, in FIG. 12 and FIG. 13, the AP1 is a Sharing AP (i.e., the first STA), the AP2 is a Shared AP (i.e., the second STA), the STA1 is the third STA associated with the Sharing AP (the first STA), and the STA2 is the fourth STA associated with the Shared AP (i.e., the second STA). In conjunction with FIG. 13, within AP1's own TXOP, the AP1 performs a beam nulling operation on a non-associated STA2 after the SIFS time from that the MAP TXS trigger frame (i.e., the first trigger frame) is sent, receives the uplink data sent from the STA1, and in a case where the uplink data sent from the STA1 is received, after the SIFS time, sends the BA to the STA1. Within the TXOP of the AP1, in a case where the MAP TXS trigger frame (i.e., the first trigger frame) is received, and the first trigger frame satisfying the first condition is determined, the AP2 enables the uplink CBF mode and/or C-UL MU-MIMO mode, and after the SIFS time from that the first trigger frame is received, performs a beam nulling operation on a non-associated STA1, receives the uplink data sent from STA2, and in a case where the uplink data sent from the STA2 is received, after the SIFS time, sends the BA to the STA2. It should be understood that the schematic dashed arrows in FIG. 13 are not completely overlapping for the sake of clarity, but FIG. 13 does not mean that the timing of the beam nulling operations of the AP1 and the AP2, respectively, must be different, and in actual processing, the timing of the beam nulling operations of the AP1 and the AP2, respectively, may be the same.

It should be understood that the method may further include: in a case where it is determined that the first trigger frame does not satisfy the first condition, the first trigger frame may be discarded without performing other processing.

Optionally, the method further includes: in a case where the first trigger frame satisfies the first condition, receiving the uplink data of the fourth STA; and sending, by the second STA, the block acknowledgement (BA) to the fourth STA. In addition, if the second STA determines that the aforementioned first trigger frame does not satisfy the first condition, the first trigger frame may be discarded without further processing.

In a case where the first trigger frame satisfies the first condition, the receiving the uplink data of the fourth STA includes: in the case where the first trigger satisfies the first condition, enabling, by the second STA, an uplink COFDMA mode and/or a CSR mode, and receiving, by the second STA, the uplink data of the fourth STA in a second resource unit (RU) after a first duration from a moment when the first trigger frame is received; where the second RU is a resource corresponding to the fourth STA.

More specifically, after determining that the first trigger frame satisfies the first condition, in a case where the value of the first transmission mode subfield in the common information field of the first trigger frame being a third value is determined, the second STA determines to enable the uplink COFDMA and/or CSR mode; then, receives the uplink data of the fourth STA in the second resource unit (RU) after the first duration from the moment when the first trigger frame is received. Alternatively, after determining that the first trigger frame satisfies the first condition, in a case where the value of the first transmission mode subfield in the common information field of the first trigger frame being the third value is determined, the second STA determines to enable the uplink COFDMA and/or CSR mode; and based on the value of the first uplink and downlink indication subfield in the common information field of the first trigger frame being the sixth value, or based on the value of the uplink and downlink indication subfield of the user information subfield of the fourth STA being the sixth value, determines that it is currently necessary to wait to receive the uplink data; and then receives the uplink data of the fourth STA in the second resource unit (RU) after the first duration from the moment whenthe first trigger frame is received.

The sending, by the second STA, the block acknowledgement (BA) to the fourth STA includes: sending, by the second STA, the block acknowledgement (BA) to the fourth STA in the second RU. Herein, the sending, by the second STA, the block acknowledgement (BA) to the fourth STA in the second RU specifically may be: sending, by the second STA, the block acknowledgement (BA) to the fourth STA in the second RU, after the first duration from the moment when the reception of receiving the uplink data sent from the fourth STA is completed.

It should be pointed out that, as mentioned above, the multiple STAs include at least one of: the third STA and the fourth STA; accordingly, in the present implementation, the moment when the uplink data of the third STA is sent may be the same as the moment when the uplink data of the fourth STA is sent. That is, the third STA and the fourth STA perform a simultaneous uplink transmission.

In conjunction with FIG. 14 and FIG. 15, FIG. 14 and FIG. 15 are schematic diagrams of the STA enabling the CSR mode. Herein, the AP1 is a Sharing AP (i.e., the first STA), the AP2 is a Shared AP (i.e., the second STA), the STA1 is the third STA associated with the Sharing AP (i.e., the first STA), and the STA2 is the fourth STA associated with the Shared AP (i.e., the second STA). In conjunction with FIG. 15, within AP1's own TXOP, the AP1 receives the uplink data sent from the STA1 after the SIFS time from that the MAP TXS trigger frame (i.e., the first trigger frame) is sent, and in a case where the uplink data sent from the STA1 is received, after the SIFS time, sends the BA to the STA1. Within the TXOP of the AP1, in a case where the MAP TXS trigger frame (i.e., the first trigger frame) is received, and determines the first trigger frame satisfying the first condition is determined, the AP2 enables the uplink CSR mode, and receives the uplink data sent from the STA2 after the SIFS time from that the first trigger frame is received, and in a case where the uplink data sent from the STA2 is received, after the SIFS time, sends the BA to the STA2.

In conjunction with FIG. 16 and FIG. 17, FIG. 16 and FIG. 17 are schematic diagrams of the first STA enabling the COFDMA mode. In FIG. 16 and FIG. 17, the AP1 is a Sharing AP (i.e., the first STA), the AP2 is a Shared AP (i.e., the second STA), the STA11 and the STA12 are two third STAs associated with the Sharing AP (i.e., the first STA), and the STA21 is the fourth STA associated with the Shared AP (i.e., the second STA). In conjunction with FIG. 17, the AP1 prepares to receive the uplink data of the associated STA11 and STA12 in the first RUs corresponding to the STA11 and the STA12, respectively, after the SIFS time from that the AP1 sends the MAP TXS trigger frame, and in a case where the uplink data sent from the STA11 and the STA12 is received, the AP1 sends the BA to the STA11 and the STA12 in the first RUs corresponding to the STA11 and the STA12, respectively. For example, the first RU corresponding to the STA11 is a first RU in FIG. 17, and the first RU corresponding to the STA12 is a second RU in FIG. 17. Within the TXOP of the AP1, in a case where the MAP TXS trigger frame (i.e., the first trigger frame) is received, and the first trigger frame satisfying the first condition is determined, the AP2 enables the uplink COFDMA mode, and receives the uplink data of the associated STA21 in the second RU corresponding to the STA21, and in a case where the uplink data sent from the STA21 is received, the AP2 sends the BA to the STA21 in the second RU corresponding to the STA21. For example, the second RU corresponding to the STA21 is the third RU and the fourth RU in FIG. 17.

It should also be pointed out that the aforementioned first condition may have partially different conditions depending on different transmission modes. For example, in a case where the coordinated transmission mode is a CBF mode and/or a C-UL MU-MIMO mode, the first condition may contain the value of the transmission mode subfield being a second value; specifically, the first condition may include at least one of: a value of the first transmission mode subfield in the common information field of the first trigger frame being not a first value; a value of the first transmission mode subfield in the common information field of the first trigger frame being the second value; a value of a first sharing transmission indication subfield in the common information field of the first trigger frame being an eighth value; a value of a first uplink and downlink indication subfield in the common information field of the first trigger frame being a sixth value; a value of the transmission mode subfield of the fourth STA in the user information subfield of the fourth STA of the first trigger frame being not the first value; the value of the transmission mode subfield of the fourth STA in the user information subfield of the fourth STA of the first trigger frame being the second value; in the user information subfield of the fourth STA of the first trigger frame, a value of an uplink and downlink indication subfield of the fourth STA being the sixth value; the first trigger frame containing the user information subfield of the fourth STA with the identification information of the fourth STA; the user information subfield of the first trigger frame not containing the identification information of second STA; the first trigger frame containing the user information subfield of the second STA with the identification information of the second STA; and the value of the uplink and downlink indication subfield of the second STA in the user information subfield of the second STA of the first trigger frame being the sixth value.

In a case where the coordinated transmission mode is COFDMA and/or CSR, the first condition may contain the value of the transmission mode subfield being the third value. Specifically, the first condition may includes at least one of: the value of the first transmission mode subfield in the common information field of the first trigger frame being not the first value; the value of the first transmission mode subfield in the common information field of the first trigger frame being the third value; the value of the first sharing transmission indication subfield in the common information field of the first trigger frame being the eighth value; the value of the first uplink and downlink indication subfield in the common information field of the first trigger frame being the sixth value; the value of the transmission mode subfield of the fourth STA in the user information subfield of the fourth STA of the first trigger frame being not the first value; the value of the transmission mode subfield of the fourth STA in the user information subfield of the fourth STA of the first trigger frame being the third value; the value of the uplink and downlink indication subfield of the fourth STA in the user information subfield of the fourth STA of the first trigger frame being the sixth value; the first trigger frame containing the user information subfield of the fourth STA with the identification information of the fourth STA; the user information subfield of the first trigger frame not containing the identification information of the second STA; the first trigger frame containing the user information subfield of the second STA with the identification information of the second STA; and the value of the uplink and downlink indication subfield of the second STA in the user information subfield of the second STA of the first trigger frame being the sixth value.

It should be noted that the manner for judging whether the first trigger frame contains the identification information of the fourth STA may be: judging whether the identification information of the identification subfield of the user information field in the first trigger frame is the same as the 12 least significant bits of the AID of the fourth STA; if so, determining that the identification information of the fourth STA is contained; and/or judging whether the identification information of the identification subfield of the user information field in the first trigger frame is the same as the 12-bit VAID of the fourth STA; if so, determining that the identification information of the fourth STA is contained. Similarly, the manner for judging whether the first trigger frame contains the identification information of the second STA may be: judging whether the identification information of the identification subfield of the user information field in the first trigger frame is the same as the 12 least significant bits of the AID of the second STA; if so, determining that the identification information of the second STA is contained; and/or judging whether the identification information of the identification subfield of the user information field in the first trigger frame is the same as the 12-bit VAID of the second STA; if so, determining that the identification information of the second STA is contained.

It should be understood that the above-mentioned first condition at least needs to contain the user information subfield of the fourth STA with the identification information of the fourth STA of the first trigger frame. This is because although the first trigger frame is used to trigger a simultaneous uplink transmission, that is, the second STA only needs to receive the uplink data, the second STA at least needs to know relevant information of the first trigger frame used to trigger its own associated STA, so as to wait to receive the uplink data of its own associated STA (i.e., the fourth STA).

On this basis, the first condition may contain that the user information subfield of the first trigger frame does not contain the identification information of the second STA, or the first trigger frame contains the user information subfield of the second STA with the identification information of the second STA. That is, the first trigger frame may or may not contain the user information subfield of the second STA itself, because, regardless of whether the user information subfield of the second STA itself is contained, as long as the second STA may parse the user information of the fourth STA associated with itself in the first trigger frame, it may be judged that the second STA needs to receive the uplink data.

In a case where the format of the first trigger frame is different, the specific content of the first condition used by the second STA may also be different, as described below.

The first trigger frame containing the first transmission mode subfield, and the value of the first transmission mode subfield being the second value, represents that the coordinated transmission mode used for the TXOP sharing of the multiple STAs is a coordinated beamforming (CBF) mode and/or coordinated uplink (C-UL) multiple user multiple input multiple output (MU-MIMO) mode; or, the value of the first transmission mode subfield being the third value, represents that the coordinated transmission mode used for the TXOP sharing of the multiple STAs is the COFDMA and/or CSR. And, the first trigger frame contains the user information subfield of the fourth STA, that is, the first trigger frame contains the user information subfield of the fourth STA containing the identification information of the fourth STA. Optionally, the common information field and the user information subfield of the first trigger frame may not contain the uplink and downlink indication subfield. Optionally, the common information field of the first trigger frame does not contain the sharing transmission indication subfield. For example, the common information field of the first trigger frame may adopt the format of the aforementioned FIG. 4, and the user information subfield of the fourth STA may adopt the format of the aforementioned FIG. 5.

The first condition may include: the value of the first transmission mode subfield in the common information field of the first trigger frame being not the first value; the first trigger frame containing the user information subfield of the fourth STA with the identification information of the fourth STA. In the first condition, the condition that the value of the first transmission mode subfield in the common information field of the first trigger frame is not the first value may also be replaced as the value of the first transmission mode subfield in the common information field of the first trigger frame being the second value or the third value. For example, the second STA judges whether the value of the first transmission mode subfield of the first trigger frame is the first value, and detects whether there is identification information of the fourth STA associated with itself from respective user information subfields. If the value of the first transmission mode subfield is not the first value and there is the identification information of the fourth STA associated with itself in the user information subfield, it may be determined that the first trigger frame satisfies the first condition.

Optionally, the first trigger frame may not contain the user information subfield of the second STA. At this time, the first condition may include: the value of the first transmission mode subfield in the common information field of the first trigger frame being not the first value; the first trigger frame containing the user information subfield of the fourth STA with the identification information of the fourth STA; the user information subfield of the first trigger frame not containing the identification information of the second STA. Similarly, in the first condition, the value of the first transmission mode subfield in the common information field of the first trigger frame being not the first value may be replaced as the value of the first transmission mode subfield in the common information field of the first trigger frame being the second value.

Optionally, the common information field of the first trigger frame does not contain the transmission mode subfield; the common information field of the first trigger frame contains the first sharing transmission indication subfield, and the value of the first sharing transmission indication subfield is the eighth value. The first trigger frame contains the user information subfield of the fourth STA, and the user information subfield of the fourth STA contains the identification subfield of the fourth STA, which is used to carry the identification information of the fourth STA; the user information subfield of the fourth STA further includes: the transmission mode subfield of the fourth STA. For example, the common information field of the first trigger frame may adopt the format of the aforementioned FIG. 6, and the user information subfield of the fourth STA may adopt the format of the aforementioned FIG. 7. The meanings of respective subfields in FIG. 6 and FIG. 7 are the same as those of the aforementioned embodiments, which will not be repeatedly described herein.

The first condition includes: the value of the first sharing transmission indication subfield in the common information field of the first trigger frame being the eighth value; the first trigger frame containing the user information subfield of the fourth STA with the identification information of the fourth STA; the value of the transmission mode subfield of the fourth STA in the user information subfield of the fourth STA of the first trigger frame being not the first value. In the above-mentioned first condition, the condition that the value of the transmission mode subfield of the fourth STA in the user information subfield of the fourth STA of the first trigger frame is not the first value may also be replaced as the value of the transmission mode subfield of the fourth STA in the user information subfield of the fourth STA of the first trigger frame being the second value or the third value. For example, the second STA judges whether the value of the first sharing transmission indication subfield in the common information field of the first trigger frame is the eighth value, and detects whether there is identification information of the fourth STA associated with itself from respective user information subfields; if the value of the first sharing transmission indication subfield in the common information field of the first trigger frame is the eighth value, and there is the identification information of the fourth STA associated with itself in the user information subfield, the second STA further judges whether the value of the transmission mode subfield of the fourth STA of the first trigger frame is not the first value (or is the second value, or is the third value); if the value of the transmission mode subfield of the fourth STA is not the first value (or is the second value, or is the third value), the second STA may determine that the first trigger frame satisfies the first condition.

Optionally, the first trigger frame may not contain the user information subfield of the second STA. The first condition includes: the value of the first sharing transmission indication subfield in the common information field of the first trigger frame being the eighth value; the first trigger frame containing the user information subfield of the fourth STA with the identification information of the fourth STA; the value of the transmission mode subfield of the fourth STA in the user information subfield of the fourth STA of the first trigger frame being not the first value; the user information subfield of the first trigger frame not containing the identification information of the second STA. Similarly, in the first condition, the value of the transmission mode subfield of the fourth STA in the user information subfield of the fourth STA of the first trigger frame being not the first value may also be replaced as the value of the transmission mode subfield of the fourth STA in the user information subfield of the fourth STA of the first trigger frame being the second value or the third value.

Optionally, the first trigger frame contains the first transmission mode subfield, and the value of the first transmission mode subfield is the second value or the third value. And, the first trigger frame contains the user information subfield of the fourth STA, that is, the first trigger frame contains the user information subfield of the fourth STA containing the identification information of the fourth STA. Optionally, the common information field of the first trigger frame contains the user information subfield of the second STA. Optionally, the common information field of the first trigger frame contains the first uplink and downlink indication subfield, and the value of the first uplink and downlink indication subfield is the sixth value. And/or, the user information subfield of the fourth STA of the first trigger frame contains the uplink and downlink indication subfield of the fourth STA, and the value of the uplink and downlink indication subfield of the fourth STA is the sixth value. And/or, the user information subfield of the second STA of the first trigger frame contains the uplink and downlink indication subfield of the second STA, and the value of the uplink and downlink indication subfield of the second STA is the sixth value. Optionally, the common information field of the first trigger frame does not contain the sharing transmission indication subfield. For example, the common information field of the first trigger frame may adopt the format of the aforementioned FIG. 9, and the user information subfield of the fourth STA may adopt the format of the aforementioned FIG. 5. Alternatively, the common information field of the first trigger frame may adopt the format of the aforementioned FIG. 4, and the user information subfield of the fourth STA may adopt the format of the aforementioned FIG. 8. The meanings of respective subfields in FIG. 4, FIG. 5, FIG. 8 and FIG. 9 are the same as those of the aforementioned embodiments, which will not be repeatedly described herein.

The first condition includes: the value of the first transmission mode subfield in the common information field of the first trigger frame being not the first value; the first trigger frame containing the user information subfield of the second STA with the identification information of the second STA; the value of the uplink and downlink indication subfield of the second STA in the user information subfield of the second STA of the first trigger frame being the sixth value; the first trigger frame containing the user information subfield of the fourth STA with the identification information of the fourth STA. Herein, in the first condition, the condition that the value of the first transmission mode subfield of the first trigger frame is not the first value may also be replaced as the value of the first transmission mode subfield of the first trigger frame being the second value or the third value. The processing of the second STA after determining that the first trigger frame satisfies the first condition may be the same as that of the aforementioned, which will not be repeatedly described herein. For example, the second STA judges whether the value of the first transmission mode subfield in the common information field of the first trigger frame is the first value (or the second value, or the third value), and detects whether there is identification information of the fourth STA associated with itself from respective user information subfields, and detects whether there is its own identification information from respective user information subfields; if the value of the first transmission mode subfield in the common information field of the first trigger frame is not the first value (or the second value, or the third value), there is the identification information of the fourth STA associated with itself in the user information subfield, and there is its own identification information in the user information subfield, then it is determined that whether the value of the uplink and downlink indication subfield of the second STA in the user information subfield of the second STA of the second trigger frame of the first trigger frame is the sixth value; if the value of the uplink and downlink indication subfield of the second STA is the sixth value, the second STA may determine that the first trigger frame satisfies the first condition.

Alternatively, the first condition includes: the value of the first transmission mode subfield in the common information field of the first trigger frame being not the first value; the value of the first uplink and downlink indication subfield in the common information field of the first trigger frame being the sixth value; and the first trigger frame containing the user information subfield of the fourth STA with the identification information of the fourth STA. the value of the first uplink and downlink indication subfield in the common information field of the first trigger frame of the first condition being the sixth value may also be replaced as the value of the uplink and downlink indication subfield of the fourth STA of the user information subfield of the fourth STA being the sixth value. Alternatively, the first condition includes: the value of the first transmission mode subfield in the common information field of the first trigger frame being not the first value; the value of the first uplink and downlink indication subfield in the common information field of the first trigger frame being the sixth value; the first trigger frame containing the user information subfield of the fourth STA with the identification information of the fourth STA; and the first trigger frame containing the user information subfield of the second STA with the identification information of the second STA.

It should be pointed out that the aforementioned is only an illustrative description of the possible formats of the first trigger frame and the possible situations of the first condition. In actual processing, the content that may be contained in the first trigger frame has been described in the above embodiments. As long as at least one of the above contents is contaied, it is within the protection scope of this embodiment. Correspondingly, the content that may be contained in the first condition has also been described. As long as at least one of the first conditions is contaied, it is also within the protection scope of this embodiment. However, it is not exhaustive herein.

In an implementation, the trigger frame is a second trigger frame; receiving, by the second STA, the trigger frame sent from the first STA includes: receiving, by the second STA, the second trigger frame sent from the first STA, the second trigger frame is used to trigger the multiple STAs to simultaneously send the first frame, and the first frame is used to trigger STAs associated with the multiple STAs to perform a simultaneous uplink coordinated transmission. The multiple STAs include: the first STA and the second STA. Specifically, the first STA refers to a Sharing AP, and the second STA refers to a Shared AP. It should be understood that a number of the aforementioned Shared AP (i.e., the second STA) may be one or more. The aforementioned second trigger frame may at least include the common information field and the user information subfield of the second STA. The first frame may specifically be a basic trigger (Basic Trigger) frame.

In the present implementation, the method further includes: in a case where that a value of a first indication bit in a preamble of a first PPDU carries the first trigger frame being a second specified value is determined, parsing, by the second STA, the first trigger frame. For example, in a case where the first PPDU is received, the second STA first reads the first indication bit of the preamble of the first PPDU. If the first indication bit is the second specified value, the second STA determines to extract the first trigger frame from the first PPDU and parse the first trigger frame; otherwise, the first PPDU may be discarded. Herein, the first PPDU specifically may be an EHT PPDU. Of course, it is also possible that the indication bit contained in the PPDU is not modified in the protocol, then the second STA does not discard the first PPDU by default.

In the present implementation, the method further includes: in a case where the second trigger frame satisfies the second condition, enabling, by the second STA, the legacy uplink TXOP sharing mode, sending, by the second STA, the first frame to the fourth STA after the second duration from that the second trigger frame is received; the fourth STA being associated with the second STA; receiving, by the second STA, the uplink data of the fourth STA, and sending, by the second STA, the block acknowledgement (BA) to the fourth STA.

The sending, by the second STA, the block acknowledgement (BA) to the fourth STA may be: sending, by the second STA, the BA to the fourth STA after the second duration from that a reception of the uplink data sent from the fourth STA is completed. Herein, the manner for judging whether the reception of the uplink data sent from the fourth STA is completed may be to detect the indication information of the completion of transmission of the uplink data received from the fourth STA, and determines that the reception of the uplink data sent from the third STA is completed. Of course, there may be other determination manners, which are not exhaustive in the present embodiment. Herein, the second duration may be the same as or different from the aforementioned first duration. In an example, the second duration may refer to a SIFS. It should be pointed out that, as described above, the multiple STAs include at least one of: the first STA and the second STA; accordingly, in the present implementation, the moments when the first STA and the second STA send the first frame should be the same, respectively. the moment when the uplink data of the third STA is sent may be the same as the moment when the uplink data of the fourth STA is sent. That is, the third STA and the fourth STA perform a simultaneous uplink transmission.

In conjunction with FIG. 14 and FIG. 18, in FIG. 14 and FIG. 18, the AP1 is a Sharing AP (i.e., the first STA), the AP2 is a Shared AP (i.e., the second STA), the STA1 is the third STA associated with the Sharing AP (i.e., the first STA), and the STA2 is the fourth STA associated with the Shared AP (i.e., the second STA). In conjunction with FIG. 18, within AP1's own TXOP, the AP1 sends a basic trigger frame to the STA1 after the SIFS time from that the MAP TXS trigger frame (i.e., the second trigger frame) is sent; the AP1 receives the uplink data sent from the STA1 after the SIFS time from that the basic trigger frame is sent, and in a case where the AP1 receives the uplink data sent from the STA1, after the SIFS time, sends the BA to the STA1. Within the TXOP of the AP1, in a case where the MAP TXS trigger frame (i.e., the second trigger frame) is received, and the second trigger frame satisfying the second condition is determined, the AP2 enables the legacy uplink TXOP sharing mode, and sends the basic trigger frame to the STA2 after the SIFS time from that the second trigger frame is received, receives the uplink data sent from the STA2 after the SIFS time from that the basic trigger frame is sent (i.e., the first frame), and in a case where the uplink data sent from the STA2 is received, sends the BA to the STA2 after the SIFS time.

It should be understood that the method may further include that in a case where it is determined that the second trigger frame does not satisfy the second condition, the second trigger frame may be discarded without performing other processing.

Furthermore, the second condition is described in detail. The second condition includes at least one of: a value of the second transmission mode subfield in the common information field of the second trigger frame being not a first value; a value of the second transmission mode subfield in the common information field of the second trigger frame being a fifth value; a value of a second sharing transmission indication subfield in the common information field of the second trigger frame being an eighth value; a value of a second uplink and downlink indication subfield in the common information field of the second trigger frame being a sixth value; ,the value of the transmission mode subfield of the second STA in the user information subfield of the second STA of the second trigger frame being not the first value; the value of the transmission mode subfield of the second STA in the user information subfield of the second STA of the second trigger frame being the second value; and the second trigger frame containing the user information subfield of the second STA with identification information of the second STA; the value of the uplink and downlink indication subfield of the second STA in the user information subfield of the second STA of the second trigger frame being the sixth value.

The manner for determining whether the second trigger frame contains the identification information of the second STA is the same as that in the aforementioned implementation, which will not be repeatedly described herein. Similarly, in a case where the format of the second trigger frame is different, the specific content of the second condition used by the second STA may also be different, which will be described below, respectively:
The second trigger frame containing a second transmission mode subfield, and the value of the second transmission mode subfield being the fifth value, represents that the coordinated transmission mode used for the TXOP sharing of the multiple STAs is to enable the legacy uplink TXOP sharing mode. And, the second trigger frame contains the user information subfield of the second STA, that is, the second trigger frame contains the user information subfield of the second STA containing the identification information of the second STA. Optionally, the common information field and the user information subfield of the second trigger frame may not contain the uplink and downlink indication subfield. Because in the legacy uplink TXOP sharing mode, the second STA receives the uplink data sent from the fourth STA associated with itself by default, the uplink and downlink indication subfield may not be contained in the second trigger frame. Optionally, the common information field of the second trigger frame does not contain the sharing transmission indication subfield. For example, the common information field of the second trigger frame may adopt the format of the aforementioned FIG. 4, and the user information subfield of the fourth STA may adopt the format of the aforementioned FIG. 5.

The second condition includes: the value of the second transmission mode subfield in the common information field of the second trigger frame being not the first value; the user information subfield of the second STA of the second trigger frame containing the identification information of the second STA. The condition that the value of the second transmission mode subfield in the common information field of the second trigger frame is not the first value may also be replaced as the value of the second transmission mode subfield in the common information field of the second trigger frame being the fifth value.

That is, the second STA judges whether the value of the second transmission mode subfield of the second trigger frame is the first value, and detects whether there is its own identification information from respective user information subfields. If the value of the second transmission mode subfield is not the first value and the user information subfield contains the identification information of the second STA, it may be determined that the second trigger frame satisfies the second condition. After the second trigger frame satisfies the second condition is determined, the second STA determines that the value of the second transmission mode subfield in the common information field of the second trigger frame is the fifth value, and then determines to enable the legacy uplink TXOP sharing mode; and sends the first frame to the fourth STA after the second duration from that the second trigger frame is received; the second STA receives the uplink data of the fourth STA, and the second STA sends the block acknowledgement (BA) to the fourth STA.

Optionally, the common information field of the second trigger frame does not contain the transmission mode subfield; the common information field of the second trigger frame contains the second sharing transmission indication subfield, and the value of the second sharing transmission indication subfield is the eighth value. The second trigger frame contains the user information subfield of the second STA, and the user information subfield of the second STA contains the identification subfield of the second STA, which is used to carry the identification information of the second STA; the user information subfield of the second STA further includes: the transmission mode subfield of the second STA, and the value of the transmission mode subfield of the second STA is the fifth value. It should be understood that, based on the aforementioned, the common information field and user information subfield of the second trigger frame may not contain the uplink and downlink indication subfield. Alternatively, the common information field of the second trigger frame contains the second uplink and downlink indication subfield, and the value of the second uplink and downlink indication subfield is the sixth value. Alternatively, the user information subfield of the second STA of the second trigger frame contains the uplink and downlink indication subfield of the second STA, and the value of the uplink and downlink indication subfield of the second STA is the sixth value. For example, the common information field of the second trigger frame may adopt the format of the aforementioned FIG. 6, and user information subfields of the fourth STA and the second STA may adopt the format of the aforementioned FIG. 7. The meanings of respective subfields in FIG. 6 and FIG. 7 are the same as those of the aforementioned embodiments, which will not be repeatedly herein.

The second condition includes: the value of the second sharing transmission indication subfield of the common information field of the second trigger frame being the eighth value; the second trigger frame containing the user information subfield of the second STA with the identification information of the second STA; the value of the transmission mode subfield of the second STA in the user information subfield of the second STA of the second trigger frame being not the first value. The condition that the value of the transmission mode subfield of the second STA of the second trigger frame is not the first value may also be replaced as the value of the transmission mode subfield of the second STA of the second trigger frame being the fifth value. That is, the second STA judges whether the value of the second sharing transmission indication subfield of the second trigger frame is the eighth value, detects whether there is its own identification information from respective user information subfields and whether the value of the transmission mode subfield of the second STA is the first value. If the value of the transmission mode subfield of the second STA is not the first value, there is its own identification information in the user information subfield and the value of the second sharing transmission indication subfield is the eighth value, it may be determined that the second trigger frame satisfies the second condition. Further, the processing of the second STA after the second condition is satisfied is the same as that of the aforementioned example, which will not be repeated herein.

Optionally, the second trigger frame contains the second transmission mode subfield, and the value of the second transmission mode subfield is the fifth value. And, the second trigger frame contains the user information subfield of the second STA, that is, the second trigger frame contains the user information subfield of the second STA containing the identification information of the second STA. Optionally, the common information field of the second trigger frame contains the second uplink and downlink indication subfield, and the value of the second uplink and downlink indication subfield is the sixth value. And/or, the user information subfield of the second STA of the second trigger frame contains the uplink and downlink indication subfield of the second STA, and the value of the uplink and downlink indication subfield of the second STA is the sixth value. Optionally, the common information field of the second trigger frame does not contain the sharing transmission indication subfield. For example, the common information field of the second trigger frame may adopt the format of the aforementioned FIG. 9, and the user information subfield of the fourth STA may adopt the format of the aforementioned FIG. 5. Alternatively, the common information field of the second trigger frame may adopt the format of the aforementioned FIG. 4, and the user information subfield of the fourth STA may adopt the format of the aforementioned FIG. 8. The meanings of respective subfields in FIG. 4, FIG. 5, FIG. 8 and FIG. 9 are the same as those of the aforementioned embodiments, which will not be repeatedly herein.

The second condition includes: the value of the second transmission mode subfield in the common information field of the second trigger frame being not the first value; the second trigger frame containing the user information subfield of the second STA with the identification information of the second STA; the value of the uplink and downlink indication subfield of the second STA in the user information subfield of the second STA of the second trigger frame being the sixth value. The condition that the value of the transmission mode subfield of the second STA of the second trigger frame is not the first value may also be replaced as the value of the transmission mode subfield of the second STA of the second trigger frame being the fifth value. Subsequent processing will not be repeated herein. The condition that the value of the uplink and downlink indication subfield of the second STA in the user information subfield of the second STA of the second trigger frame is the sixth value may also be replaced as the value of the second uplink and downlink indication subfield in the common information field of the second trigger frame being the sixth value. That is, the second STA judges whether the value of the second transmission mode subfield of the second trigger frame is the first value, and detects whether there is its own identification information from respective user information subfields; if the value of the second transmission mode subfield is not the first value, and the user information subfield contains its own identification information, then the second STA further judges whether the value of the uplink and downlink indication subfield of the second STA in the user information subfield of the second STA of the second trigger frame is the sixth value; if the value of the uplink and downlink indication subfield of the second STA is the sixth value, it may be determined that the second trigger frame satisfies the second condition.

It should be pointed out that the aforementioned is only an exemplary description of the possible formats of the second trigger frame and the possible conditions of the second condition. In actual processing, the content that may be contained in the second trigger frame has been described in the aforementioned embodiments. As long as at least one of the aforementioned contents is contaied, it is within the protection scope of the present embodiment. Accordingly, the content that may be contained in the second condition has also been described. As long as at least one of the second conditions is contaied, it is also within the protection scope of the present embodiment. However, it is not exhaustive herein.

In an implementation, the trigger frame is a third trigger frame; and receiving, by the second STA, the trigger frame sent from the first STA includes: receiving, by the second STA, the first trigger frame sent from the third STA, where the third trigger frame is used for the multiple STAs to perform a simultaneous downlink coordinated transmission. The multiple STAs include the first STA and the second STA; and the second STA is different from the first STA.

Optionally, the method further includes: in a case where the value of the first indication bit of a first PPDU carrying the first trigger frame being a second specified value is determined, parsing, by the second STA, the third trigger frame. For example, in a case where the first PPDU is received, the second STA first reads the first indication bit of the preamble of the first PPDU, and if the first indication bit is the second specified value, determines to extract the third trigger frame from the first PPDU and parse the third trigger frame; otherwise, the first PPDU may be discarded. Herein, the first PPDU specifically may be an EHT PPDU. Of course, it is also possible that the indication bit contained in the PPDU is not modified in the protocol, then the second STA does not discard the first PPDU by default.

Optionally, the method further includes: in a case where the third trigger frame satisfies the third condition, sending the downlink data to the fourth STA; and receiving, by the second STA, the block acknowledgement (BA) sent from the fourth STA. In addition, if the second STA determines that the aforementioned third trigger frame does not satisfy the third condition, the third trigger frame may be discarded without further processing.

The sending the downlink data to the fourth STA specifically may be: enabling, by the second STA, a downlink CBF mode, performing a beam nulling operation on multiple other STAs, and sending the downlink data to the fourth STA after a third duration from that the third trigger frame is received; where the multiple other STAs are not associated with the second STA. The receiving, by the second STA, the block acknowledgement (BA) sent from the fourth STA may include: receiving, by the second STA, the block acknowledgement (BA) sent from the fourth STA after the third duration from that the transmission of the downlink data is completed.

Specifically, after determining that the third trigger frame satisfies the third condition, the second STA may determine that the CBF mode needs to be enabled currently based on the value of the third transmission mode subfield (or the transmission mode subfield of the second STA) being the second value; may further determine that downlink transmission is currently being performed based on the value of the third uplink and downlink indication subfield (or the uplink and downlink indication subfield of the second STA); performs a beam nulling operation on the multiple other STAs, and send the downlink data to the fourth STA after the third duration from that the third trigger frame is received. In addition, the second STA further determines the transmit power that is used currently based on the transmit power subfield of the second STA, and accordingly sending the downlink data to the fourth STA specifically refers to sending the downlink data to the fourth STA by adopting the aforementioned determined transmit power. Herein, the manner for determining the transmit power used currently has been described in the aforementioned embodiment, which will not be repeated herein.

Herein, the third duration may be the same as or different from any one of the first duration, the second duration. In an example, the third duration may refer to a SIFS.

The aforementioned first STA refers to a Sharing AP, the second STA refers to a Shared AP, the third STA refers to a STA associated with the Sharing AP (i.e., non-AP STA), and the fourth STA refers to a STA associated with the second STA (i.e., non-AP STA). It should be understood that a number of the aforementioned Shared AP(s) (i.e., the second STA(s)) may be one or more, a number of the aforementioned third STA(s) may be one or more, and a number of the aforementioned fourth STA(s) may be one or more. It should also be noted that the first STA and one or more second STAs may be APs in a same coordinated set; specifically, the one or more second STAs may be Shared APs located within the transmission range of the first STA.

In conjunction with FIG. 19 and FIG. 20, in FIG. 19 and FIG. 20, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 20, within the TXOP of the AP1, the AP1 performs a beam nulling operation on the non-associated STA2 after the SIFS time from that the MAP TXS trigger frame (i.e., the third trigger frame) is sent, the AP1 sends the downlink data to the STA1, and the AP1 receives the BA sent from the STA1 after a SIFS duration. Within the TXOP of the AP1, the AP2 performs a beam nulling operation on the non-associated STA1 after the SIFS time from that the MAP TXS trigger frame (i.e., the third trigger frame) is received, the AP2 sends the downlink data to the STA2, and receives the BA sent from STA2 after the SIFS duration.

It should be understood that the method may further include: in a case where it is determined that the third trigger frame does not satisfy the third condition, the third trigger frame may be discarded without performing other processing.

Optionally, the sending, the downlink data to the fourth STA described above specifically may be: enabling, by the second STA, the downlink COFDMA mode and/or CSR mode, and sending, by the second STA, the downlink data to the fourth STA in a second resource unit (RU) after a third duration from that the third trigger frame is sent; where the second RU is a resource corresponding to the fourth STA. The receiving, by the second STA, the block acknowledgement (BA) sent from the fourth STA may include: receiving, by the second STA, the block acknowledgement (BA) sent from the fourth STA in the second RU.

Specifically, after determining that the third trigger frame satisfies the third condition, the second STA may determine that the COFDMA and/or CSR mode needs to be enabled currently based on the value of the third transmission mode subfield (or the transmission mode subfield of the second STA) being the third value; may further determine that the downlink transmission is currently being performed based on the value of the third uplink and downlink indication subfield (or the uplink and downlink indication subfield of the second STA); determine the transmit power used currently based on the transmit power subfield of the second STA, and the second STA sends the downlink data to the fourth STA on the second resource unit (RU) by adopting the determined transmit power after the third duration from that the third trigger frame is received. Herein, the manner for determining the transmit power used currently has been described in the aforementioned embodiments, which will not be repeated herein.

The moment when the downlink data of the first STA is sent may be the same as the moment when the downlink data of the second STA is sent. That is, the first STA and the second STA perform a simultaneous downlink transmission.

In conjunction with FIG. 21 and FIG. 22, FIG. 21 and FIG. 22 are schematic diagrams of the STA enabling the downlink CSR mode. Herein, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 22, within the TXOP of the AP1, the AP1 sends the downlink data to the STA1 after the SIFS time from that the MAP TXS trigger frame (i.e., the third trigger frame) is sent, and the AP1 receives the BA sent from the STA1 after the SIFS time from that the transmission of the downlink data to the STA1 is completed. Within the TXOP of the AP1, the AP2 sends the downlink data to STA2 after the SIFS time from that the MAP TXS trigger frame (i.e., the third trigger frame) is received, and receives the BA sent from the STA2 after the SIFS time from that the transmission of the downlink data to the STA2 is completed.

In conjunction with FIG. 23 and FIG. 24, FIG. 23 and FIG. 24 are schematic diagrams of the first STA enabling the COFDMA mode. In FIG. 23 and FIG. 24, the AP1 is a Sharing AP (the first STA), and the AP2 and the AP3 are both Shared APs (i.e., second STA). In conjunction with FIG. 24, within the TXOP of the AP1, the AP1 sends the downlink data in the first RU (i.e., the TXOP of the AP1 shown in FIG. 23 and FIG. 24) corresponding to its own STA after the SIFS time from that the MAP TXS trigger frame (i.e., the first trigger frame) is sent(i.e., a third trigger frame). Within the TXOP of the AP1, the AP2 and AP3 send the downlink data in the second RU corresponding to their own STAs (i.e., the TXOP of the AP2 and the sub-TXOP of the AP3 shown in the FIG. 23 and FIG. 24) after the SIFS time from that the MAP TXS trigger frame (i.e., the third trigger frame) is received.

Optionally, the method further includes: in a case where the third trigger frame satisfying the third condition is determined, enabling, by the second STA, the joint transmission mode; processing, by the second STA, to-be-transmitted data to obtain downlink data according to the precoding after the third duration from that the third trigger frame is received, and sending the downlink data to the third STA; the third STA is associated with the first STA. Herein, the precoding may be sent from the first STA to the second STA. In addition, if the second STA determines that the aforementioned third trigger frame does not satisfy the third condition, the third trigger frame may be discarded without further processing.

Specifically, after determining that the third trigger frame satisfies the third condition, the second STA may determine that the joint transmission needs to be performed currently based on the value of the third transmission mode subfield being the fourth value; the second STA may further detect whether the third trigger frame contains the identification information of the third STA that is not associated with itself ; in a case where the identification information of the third STA is obtained, the second STA may determine to perform the joint downlink transmission together with the first STA to the third STA; and the second STA processes the to-be-transmitted data to obtain the downlink data according to the precoding after the third duration from that the third trigger frame is received, and sends the downlink data to the third STA; where the precoding can be sent by the first STA to the second STA.

It should also be understood that the third duration is mentioned in the multiple aforementioned implementations. In different implementations, the third duration may be the same or different, and may be related to the actually used transmission mode, which is not limited herein.

The moment when the downlink data of the first STA is sent may be the same as the moment when the downlink data of the second STA is sent. That is, the first STA and the second STA perform a simultaneous downlink transmission. In addition, it should be pointed out that, in the present implementation, the first STA and the second STA both send the downlink data to the third STA, and the third STA only sends the BA to the first STA associated with itself.

In conjunction with FIG. 25 and FIG. 26, FIG. 25 and FIG. 26 are schematic diagrams of the STA enabling the downlink CSR mode. Herein, the AP1 is a Sharing AP (the first STA), the AP2 is a Shared AP (i.e., the second STA), the STA1 is the third STA associated with the Sharing AP (the first STA). In conjunction with FIG. 26, within AP1's own TXOP, the AP1 sends the downlink data to the STA1 after the SIFS time from that the MAP TXS trigger frame (i.e., the third trigger frame) is sent, and receives the BA sent from the STA1 after the SIFS time from that the transmission of the downlink data to the STA1 is completed. Within the TXOP of the AP1, the AP2 sends the downlink data to the STA1 after the SIFS time from that the MAP TXS trigger frame (i.e., the third trigger frame) is sent.

It should also be pointed out that the aforementioned third condition may be partially different with different transmission modes. For example, in a case where the coordinated transmission mode is the downlink CBF mode, the third condition may contain the value of the transmission mode subfield being a second value; specifically, the third condition may include at least one of: a value of the third transmission mode subfield in the common information field of the third trigger frame being not a first value; a value of the third transmission mode subfield in the common information field of the third trigger frame being the second value; a value of a third sharing transmission indication subfield in the common information field of the third trigger frame being an eighth value; a value of a third uplink and downlink indication subfield in the common information field of the third trigger frame being a seventh value; a value of the transmission mode subfield of the second STA in the user information subfield of the second STA of the third trigger frame being not the first value; the value of the transmission mode subfield of the second STA in the user information subfield of the second STA of the third trigger frame being the second value; a value of an uplink and downlink indication subfield of the fourth STA in the user information subfield of the fourth STA of the third trigger frame being the seventh value; the third trigger frame containing the user information subfield of the fourth STA with the identification information of the fourth STA; the third trigger frame containing the user information subfield of the second STA with the identification information of the second STA; and a value of the uplink and downlink indication subfield of the second STA in the user information subfield of the second STA of the first trigger frame being the seventh value.

In a case of the downlink COFDMA and/or CSR mode, the third condition may contain the value of the transmission mode subfield being a third value; specifically, the third condition may include at least one of: a value of the third transmission mode subfield in the common information field of the third trigger frame being not a first value; a value of the third transmission mode subfield in the common information field of the third trigger frame being the third value; a value of a third sharing transmission indication subfield in the common information field of the third trigger frame being an eighth value; a value of a third uplink and downlink indication subfield in the common information field of the third trigger frame being a seventh value; a value of the transmission mode subfield of the second STA in the user information subfield of the second STA of the third trigger frame being not the first value; the value of the transmission mode subfield of the second STA in the user information subfield of the second STA of the third trigger frame being the third value; a value of an uplink and downlink indication subfield of a fourth STA in the user information subfield of the fourth STA of the third trigger frame being the seventh value; the third trigger frame containing the user information subfield of the fourth STA with the identification information of the fourth STA; the third trigger frame containing the user information subfield of the second STA with the identification information of the second STA; and a value of an uplink and downlink indication subfield of the second STA in user information subfield of the second STA of the third trigger frame being the seventh value.

In a case of the joint transmission mode, the third condition may contain the value of the transmission mode subfield being a fourth value; specifically, the third condition may include at least one of: a value of the third transmission mode subfield in the common information field of the third trigger frame being not a first value; a value of the third transmission mode subfield in the common information field of the third trigger frame being the fourth value; a value of a third sharing transmission indication subfield in the common information field of the third trigger frame being an eighth value; a value of a third uplink and downlink indication subfield in the common information field of the third trigger frame being a seventh value; a value of the transmission mode subfield of the second STA in the user information subfield of the second STA of the third trigger frame being not the first value; the value of the transmission mode subfield of the second STA in the user information subfield of the second STA of the third trigger frame being the fourth value; a value of an uplink and downlink indication subfield of a third STA in user information subfield of the third STA of the third trigger frame being the seventh value; the third trigger frame containing the user information subfield of the third STA with the identification information of the third STA; the third trigger frame containing the user information subfield of the second STA with the identification information of the second STA; and a value of an uplink and downlink indication subfield of the second STA in user information subfield of the second STA of the third trigger frame being the seventh value.

It should be noted that the manner for judging whether the third trigger frame contains the identification information of the third STA may be: judging whether the identification information of the identification subfield of the user information field of the third trigger frame being the same as the 12 least significant bits of the AID of the third STA; if so, determining that the identification information of the third STA is contained; and/or judging whether the identification information of the identification subfield of the user information field of the third trigger frame being the same as the 12-bit VAID of the third STA; if so, determining that the identification information of the third STA is contained. The manner where the second STA may obtain the AID and/or VAID of the STA associated with other STAs in advance has been described in the aforementioned embodiments, and thus herein, the second STA may obtain the AID and/or VAID of the third STA associated with the first STA in advance.

It should be understood that the third condition at least needs to contain: the third trigger frame containing the user information subfield of the second STA with the identification information of the second STA. This is because the third trigger frame is used to trigger a simultaneous downlink transmission, that is, the second STA needs to know that the first trigger frame is used to trigger itself to perform a simultaneous downlink transmission before performing subsequent processing. Therefore, the third trigger frame needs to at least contain the user information subfield of the second STA with the identification information of the second STA, so as to prepare to trigger itself to send the downlink data based on the third trigger frame.

It should also be pointed out that in the aforementioned examples of multiple third conditions, only some conditions are different with different transmission modes. For example, in a case where the coordinated transmission mode is the CBF mode and/or C-UL MU-MIMO mode, the first condition may contain the value of the transmission mode subfield being the second value; in a case where the coordinated transmission mode is COFDMA and/or CSR, the first condition may contain the value of the transmission mode subfield being the third value.

In a case where the format of the third trigger frame is different, the specific content of the third condition used by the second STA may also be different, which will be described below, respecrtively.

The third trigger frame contains the third transmission mode subfield. And, the third trigger frame contains the user information subfield of the second STA, that is, the third trigger frame contains the user information subfield of the second STA containing the identification information of the second STA. Optionally, the common information field of the third trigger frame does not contain the sharing transmission indication subfield. For example, the common information field of the third trigger frame may adopt the format of the aforementioned FIG. 4, and the user information subfield of the second STA may adopt the format of the aforementioned FIG. 5.

The third condition includes: the value of the third transmission mode subfield in the common information field of the third trigger frame being not the first value; the third trigger frame containing the user information subfield of the second STA with the identification information of the second STA. That is, the second STA judges whether the value of the third transmission mode subfield of the third trigger frame is the first value, and detects whether there is its own identification information from respective user information subfields. If the value of the third transmission mode subfield is not the first value and the user information subfield contains the identification information of the second STA, it may be determined that the third trigger frame satisfies the third condition. Alternatively, the third condition includes: the value of the third transmission mode subfield in the common information field of the third trigger frame being the second value (or the third value, or the fourth value); the user information subfield of the second STA of the third trigger frame containing the identification information of the second STA.

Optionally, the common information field of the third trigger frame does not contain the transmission mode subfield; the common information field of the third trigger frame contains the third sharing transmission indication subfield, and the value of the third sharing transmission indication subfield is the eighth value. The third trigger frame contains the user information subfield of the second STA, and the user information subfield of the second STA contains the identification subfield of the second STA, which is used to carry the identification information of the second STA; the user information subfield of the second STA further includes: the transmission mode subfield of the second STA. The third trigger frame contains the user information subfield of the third STA, and the user information subfield of the third STA contains the identification subfield of the third STA, which is used to carry the identification information of the third STA. Optionally, the user information subfield of the third STA further includes: the transmission mode subfield of the third STA. For example, the common information field of the third trigger frame may adopt the format of the aforementioned FIG. 6, and the user information subfields of the third STA and the second STA may adopt the format of the aforementioned FIG. 7. The meanings of respective subfields in FIG. 6 and FIG. 7 are the same as those of the aforementioned embodiments, which will not be repeated herein.

The third condition includes: the value of the third sharing transmission indication subfield in the common information field of the third trigger frame being the eighth value; the third trigger frame containing the user information subfield of the second STA with the identification information of the second STA; the value of the transmission mode subfield of the second STA in the user information subfield of the second STA of the third trigger frame being not the first value. In the above-mentioned third condition, the value of the transmission mode subfield of the second STA in the user information subfield of the second STA of the third trigger frame being not the first value may be replaced as the value of the transmission mode subfield of the second STA in the user information subfield of the second STA of the third trigger frame being the second value, or the third value, or the fourth value.

Optionally, the third trigger frame contains the third transmission mode subfield. And, the third trigger frame contains the user information subfield of the third STA, that is, the third trigger frame contains the user information subfield of the third STA containing the identification information of the third STA. Optionally, the common information field of the third trigger frame contains the user information subfield of the second STA. It should be understood that, based on the aforementioned, the common information field of the third trigger frame may contain a third uplink and downlink indication subfield, and the value of the third uplink and downlink indication field is the sixth value. And/or, the user information subfield of the second STA of the third trigger frame contains an uplink and downlink indication subfield of the second STA, and the value of the uplink and downlink indication subfield of the second STA is the seventh value. And/or, a value of an uplink and downlink indication subfield of a third STA in user information subfield of the third STA of the third trigger frame is the seventh value. Optionally, the common information field of the first trigger frame does not contain the sharing transmission indication subfield. For example, the common information field of the first trigger frame may adopt the format of the aforementioned FIG. 9, and the user information subfield of the fourth STA may adopt the format of the aforementioned FIG. 5. Alternatively, the common information field of the first trigger frame may adopt the format of the aforementioned FIG. 4, and the user information subfield of the fourth STA may adopt the format of the aforementioned FIG. 8. The meanings of respective subfields in FIG. 4, FIG. 5, FIG. 8 and FIG. 9 are the same as those of the aforementioned embodiments, which will not be repeated herein.

The third condition includes: the value of the third transmission mode subfield in the common information field of the third trigger frame being not the first value; the third trigger frame containing the user information subfield of the second STA with the identification information of the second STA; a value of an uplink and downlink indication subfield of the second STA in user information subfield of the second STA of the third trigger frame being the seventh value; a value of an uplink and downlink indication subfield of a third STA in user information subfield of the third STA of the third trigger frame being the seventh value; the third trigger frame containing the user information subfield of the third STA with the identification information of the third STA.

The value of the third transmission mode subfield in the common information field of the third trigger frame in the above-mentioned third condition being not the first value may be replaced as the value of the third transmission mode subfield in the common information field of the third trigger frame being the second value, or the third value, or the fourth value. Alternatively, the above-mentioned third condition does not contain the value of the uplink and downlink indication subfield of the second STA in the user information subfield of the second STA of the third trigger frame being the seventh value. And/or, the above-mentioned third condition does not contain the value of the uplink and downlink indication subfield of the third STA being the seventh value. And/or, in the above-mentioned third condition, the two conditions of "a value of an uplink and downlink indication subfield of the second STA in user information subfield of the second STA of the third trigger frame being the seventh value; a value of an uplink and downlink indication subfield of a third STA in user information subfield of the third STA of the third trigger frame being the seventh value" are replaced as: the value of the third uplink and downlink indication subfield in the common information subfield of the third trigger frame being the seventh value.

It should be pointed out that the aforementioned is only an exemplary description of the possible formats of the third trigger frame and the possible conditions of the third condition. In actual processing, the content that may be contained in the third trigger frame has been described in the aforementioned embodiments. As long as at least one of the aforementioned contents is contained, it is within the protection scope of the present embodiment. Accordingly, the content that may be contained in the third condition has also been described. As long as at least one of the third conditions is contained, it is also within the protection scope of the present embodiment. However, it is not exhaustive herein.

In an implementation, the trigger frame is a fourth trigger frame; and receiving, by the second STA, the trigger frame sent from the first STA includes: receiving, by the second STA, the fourth trigger frame sent from the the first STA, and the fourth trigger frame is used for the multiple STAs to perform a simultaneous coordinated transmission. The multiple STAs include: the third STA and the second STA; and the third STA is associated with the first STA.

In this implementation, the method further includes: in a case where a value of a first indication bit in a first PPDU carrying the fourth trigger frame being a second specified value is determined, parsing, by the second STA, the fourth trigger frame. For example, in a case where the first PPDU is received, the second STA first reads the first indication bit of the preamble of the first PPDU. If the first indication bit is the second specified value, the second STA determines to extract the fourth trigger frame from the first PPDU and parse the fourth trigger frame; otherwise, the first PPDU may be discarded. Herein, the first PPDU specifically may be an EHT PPDU. Of course, it is also possible that the indication bit contained in the PPDU is not modified in the protocol, so the second STA defaults to not discarding the first PPDU and directly parses the fourth trigger frame.

The method further includes: in a case where the fourth trigger frame satisfies the fourth condition, enabling, by the second STA, the downlink COFDMA and/or CSR, and sending, by the second STA, the downlink data to the fourth STA in the second RU; and receiving, by the second STA, the block ACK (BA) sent from the fourth STA in the second RU. Herein, the second RU is a resource corresponding to the fourth STA. In addition, if the second STA determines that the aforementioned fourth trigger frame does not satisfy the fourth condition, the fourth trigger frame may be discarded without further processing. Sending the downlink data to the fourth STA in the second RU specifically may be: sending the downlink data to the fourth STA in the second RU after the fourth duration from that the fourth trigger frame is received. Specifically, after determining that the fourth trigger frame satisfies the fourth condition, the second STA may determine that the downlink data is needed to be sent to the fourth STA based on the identification information of the fourth STA contained in the fourth trigger frame and based on the value of the uplink and downlink indication subfield of the second STA being the seventh value; and then determine to enable the downlink COFDMA and/or CSR based on the transmission mode subfield of the second STA, and send the downlink data to the fourth STA in the second RU; and the second STA receives the block ACK (BA) sent from the fourth STA after the fourth duration from that the transmission of the downlink data is completed. It should be understood that a transmission power of the downlink data sent by the second STA can be determined based on the transmission power subfield in the user information subfield of the second STA in the fourth trigger frame; for example, the transmission power subfield of the second STA contains the maximum transmission power, and the second STA can determine the transmission power used at this time based on the maximum transmission power. The specific determination manner is the same as those in the previous embodiments, which will not be repeated.

Receiving, by the second STA, the block ACK (BA) sent from the fourth STA in the second RU may be: receiving, by the second STA, the block ACK (BA) sent from the fourth STA after the fourth duration from that the transmission of the downlink data is completed. Herein, the fourth duration may be the same as or different from any one of the first duration, the second duration, and the third duration described above. In an example, the fourth duration may refer to a SIFS.

Specifically, the first STA refers to a Sharing AP, the second STA refers to a Shared AP, the third STA refers to a STA (i.e., non-AP STA) associated with the Sharing AP, and the fourth STA refers to a STA (i.e., non-AP STA) associated with the Shared AP. It should be understood that a number of the aforementioned Shared AP(s) (i.e., the second STA(s)) may be one or more, a number of the aforementioned third STA(s) may be one or more, and a number of the aforementioned fourth STA(s) may be one or more. It should also be noted that the first STA and one or more second STAs may be APs in a same coordinated set; specifically, the one or more second STAs may be Shared APs located within the transmission range of the first STA.

In the present implementation, the moment when the third STA sends the uplink data to the first STA is the same as the moment when the second STA sends the downlink data to the fourth STA. That is, the third STA and the second STA perform a simultaneous coordinated transmission.

In conjunction with FIG. 27 and FIG. 28, FIG. 27 and FIG. 28 are schematic diagrams of the STA enabling the downlink CSR mode. Herein, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 28, within AP1's own TXOP, the AP1 receives the uplink data sent from the STA1 to the AP1, after the SIFS time from that the MAP TXS trigger frame (i.e., the fourth trigger frame) is sent and sends the BA to the STA1 after the SIFS time from that the reception of the uplink data sent from the STA1 is completed; at the same time, within AP1's TXOP, the AP2 sends the downlink data to the STA2 after the SIFS time from that the AP2 receives the MAP TXS trigger frame (i.e., the fourth trigger frame) sent from the AP1, and receives the BA sent from the STA2 after the SIFS time from that the transmission of the downlink data is completed.

It should be understood that the method may further include: in a case where it is determined that the fourth trigger frame does not satisfy the fourth condition, the fourth trigger frame may be discarded without performing other processing.

Further, the fourth condition will be described in detail. The fourth condition may include at least one of: a value of a fourth sharing transmission indication subfield in the common information field of the fourth trigger frame being the eighth value; the fourth trigger frame containing the user information subfield of the second STA with the identification information of the second STA; a value of an uplink and downlink indication subfield of the second STA in the user information subfield of the second STA of the fourth trigger frame being the seventh value; a value of a transmission mode subfield of the second STA in the user information subfield of the second STA of the fourth trigger frame being not the first value; the value of the transmission mode subfield of the second STA in the user information subfield of the second STA of the fourth trigger frame being the third value; the value of the uplink and downlink indication subfield of the fourth STA in the user information subfield of the fourth STA of the fourth trigger frame being the seventh value; and the fourth trigger frame containing the user information subfield of the fourth STA with the identification information of the fourth STA.

It should be understood that the fourth condition at least needs to contain: the fourth trigger frame containing the user information subfield of the second STA with the identification information of the second STA. This is because the fourth trigger frame is used to trigger a simultaneous downlink and downlink transmission, that is, the second STA needs to know that the fourth trigger frame is used to trigger itself to perform a simultaneous downlink transmission before performing subsequent processing. Therefore, the fourth trigger frame needs to at least contain the user information subfield of the second STA with the identification information of the second STA, so as to prepare to trigger itself to send the downlink data based on the fourth trigger frame.

It should be noted that the manner for determining whether the fourth trigger frame contains the identification information of the second STA and the identification information of the fourth STA is the same as the above examples, which will not be repeated herein.

For example, the common information field of the fourth trigger frame does not contain the transmission mode subfield; the common information field of the fourth trigger frame contains the fourth sharing transmission indication subfield, and a value of the fourth sharing transmission indication subfield is the eighth value. The fourth trigger frame contains user information subfield of the second STA, and the user information subfield of the second STA contains identification subfield of the second STA, which is used to carry the identification information of the second STA; the user information subfield of the second STA further includes: a transmission mode subfield of the second STA, and the value of the transmission mode subfield of the second STA is the third value. Based on the aforementioned, the common information field of the fourth trigger frame may not contain the uplink and downlink indication subfield. The user information subfield of the second STA of the fourth trigger frame contains the uplink and downlink indication subfield of the second STA, and a value of the uplink and downlink indication subfield of the second STA is the seventh value. Based on the aforementioned, the user information subfield of the second STA of the fourth trigger frame may further contain a transmit power subfield of the second STA. For example, the common information field of the fourth trigger frame may adopt the format of the aforementioned FIG. 6, and the user information subfield of the second STA may adopt the format of the aforementioned FIG. 7. The meanings of respective subfields in FIG. 6 and FIG. 7 are the same as those of the aforementioned embodiments, which will not be repeatedly herein.

The fourth condition includes: a value of a fourth sharing transmission indication subfield in the common information field of the fourth trigger frame being the eighth value; the fourth trigger frame containing the user information subfield of the second STA with the identification information of the second STA; the value of the transmission mode subfield of the second STA in the user information subfield of the second STA of the fourth trigger frame being not the first value. Alternatively, the fourth condition includes: a value of a fourth sharing transmission indication subfield in the common information field of the fourth trigger frame being the eighth value; the fourth trigger frame containing the user information subfield of the second STA with the identification information of the second STA; the value of the transmission mode subfield of the second STA in the user information subfield of the second STA of the fourth trigger frame being the third value. That is, the second STA detects whether there is its own identification information from respective user information subfields of the fourth trigger frame, determines whether the value of the transmission mode subfield of the second STA in the fourth trigger frame is the first value, and whether the value of the third sharing transmission indication subfield in the fourth trigger frame is the eighth value. If there is identification information of the second STA in the user information subfield, the value of the transmission mode subfield of the second STA is not the first value (or the value is the third value), and the value of the third sharing transmission indication subfield is the eighth value, it may be determined that the fourth trigger frame satisfies the fourth condition.

It should be understood that the above is only an exemplary description, and the fourth condition may be set according to an actual condition. For example, the fourth condition includes: a value of a transmission mode subfield of the second STA in the user information subfield of the second STA of the fourth trigger frame being not the first value; the fourth trigger frame containing the user information subfield of the second STA with the identification information of the second STA; a value of an uplink and downlink indication subfield of the second STA in the user information subfield of the second STA of the fourth trigger frame being the seventh value; the value of the uplink and downlink indication subfield of the fourth STA in the user information subfield of the fourth STA of the fourth trigger frame being the seventh value; the fourth trigger frame containing the user information subfield of the fourth STA with the identification information of the fourth STA.

Alternatively, the fourth condition includes: a value of a transmission mode subfield of the second STA in the user information subfield of the second STA of the fourth trigger frame being the third value; the fourth trigger frame containing the user information subfield of the second STA with the identification information of the second STA; a value of an uplink and downlink indication subfield of the second STA in the user information subfield of the second STA of the fourth trigger frame being the seventh value; the value of the uplink and downlink indication subfield of the fourth STA in the user information subfield of the fourth STA of the fourth trigger frame being the seventh value; the fourth trigger frame containing the user information subfield of the fourth STA with the identification information of the fourth STA.

It should be pointed out that the descriptions of the first condition, the second condition, the third condition and the fourth condition provided above in the present embodiments are all exemplary descriptions, and do not mean that there are only the above-mentioned exemplary implementations, which is however not exhaustive in the the present embodiment.

It should be understood that the communication method provided in the present embodiment may be used in combination with the communication method provided in the aforementioned first aspect embodiments, which is within the scope of protection of the present disclosure.

By adopting the solutions provided in the present embodiment, the first STA sends the trigger frame for establishing a coordinated transmission between the multiple STAs, thereby providing a solution for efficiently establishing the multi-STA cooperation. Specifically, the solutions provided in the present embodiment may control the multiple STAs to cooperatively perform a simultaneous uplink transmission and/or a simultaneous downlink transmission by sending only one trigger frame, which may simplify the sharing procedure and reduce the signaling overhead used to establish the coordinated transmission, thereby achieving efficient establishment of the multi-STA cooperation.

FIG. 30 is a schematic flow chart of a communication method 3000 according to the embodiments of a third aspect of the present disclosure. The method may optionally be applied to a system shown in FIG. 1, but is not limited thereto. The method includes at least part of the following contents.

S3010. receiving, by a third station (STA), a trigger frame sent from a first STA, where the trigger frame is used to establish a coordinated transmission between multiple STAs; and the third STA is associated with the first STA.

In the embodiments of the present disclosure, the first STA may be an AP. Specifically, the first STA is a sharing (Sharing) AP. The third STA may be a STA (non-AP STA) associated with the first STA.

Before performing S3010, the method further include: acquiring, by the third STA, its own AID and/or VAID. The AID and/or VAID of the third STA is configured by a first STA for the third STA based on a first range of identification values, and the third STA is associated with the first STA. Specifically, acquiring, by the third STA, its own AID and/or VAID may be: acquiring, by the third STA, the AID and/or VAID configured for itself by the first STA. Regarding the manner in which the first STA allocates the AID and/or VAID to the third STA, it may be that the first STA configures for the third STA based on the first range of identification values. The first range of identification values is within at least one of: 1-2007, 2008-2044, and 2047-4096; and the first range of identification values is configured by the target device for the first STA. The target device is a coordinating device; the coordinating device is an access point (AP); or the coordinating device is a device other than an AP. The processing of the first STA and the related description of the target device have been described in the aforementioned embodiments, which will not be repeated herein.

The trigger frame specifically may be referred to as a MAP TXS trigger frame. The trigger frame may include a common info field and/or a user info list field; where the user information list field may include one or more user info subfields.

The common information field of the trigger frame includes at least one of: a trigger type subfield, where a value of the trigger type subfield is used to represent a type of the trigger frame; a transmission mode subfield, where a value of the transmission mode subfield is used to indicate a coordinated transmission mode used for sharing a transmission opportunity (TXOP) of the multiple STAs, and/or whether the multiple STAs enables a TXOP sharing mode; an uplink and downlink indication subfield, where a value of the uplink and downlink indication subfield is used to indicate that the TXOP is used for a simultaneous uplink transmission or a simultaneous downlink transmission; and a sharing transmission indication subfield, where a value of the sharing transmission indication subfield is used to indicate whether the multiple STAs enable the TXOP sharing mode.

The respective subfields that may be contained in the common information field of the trigger frame are the same as those of the aforementioned embodiments, which will not be repeated herein.

The trigger frame contains: one or more user information subfields; a k-th user information subfield of the one or more user information subfields is user information subfield of the k-th STA, and k is an integer greater than or equal to 1; and the k-th user information subfield includes at least one of: an identification subfield of the k-th STA, and the identification subfield of the k-th STA is used to carry the identification information of the k-th STA; k is an integer greater than or equal to 1, and the k-th STA is one of the multiple STAs; a transmission mode subfield of the k-th STA, where a value of the transmission mode subfield of the k-th STA is used to indicate a corporative transmission mode used for TXOP sharing of the k-th STA, and/or whether the k-th STA enables the TXOP sharing mode; a transmit power subfield of the k-th STA, where the transmit power subfield of the k-th STA is used to indicate a maximum transmit power used by the k-th STA; and an uplink and downlink indication subfield of the k-th STA, where the uplink and downlink indication subfield of the k-th STA is used to indicate that the corporative transmission of the k-th STA is a simultaneous uplink transmission or a simultaneous downlink transmission. Herein, the k-th user information subfield refers to any one of the one or more user information subfields. The specific descriptions of the k-th user information subfield in the present embodiment and the i-th user information subfield and/or the j-th user information subfield in the aforementioned embodiments may be the same as those of the aforementioned embodiments, which will not be repeated herein. Based on the above description of respective subfields that may be contained in the trigger frame, the manner for carrying the trigger frame is the same as those in the above embodiments, which will not be repeated.

Based on the above description of various subfields that may contained in the trigger frame, the manner for carrying the trigger frame is further described: In an implementation, the trigger frame is carried by a first physical layer protocol unit (PPDU, physical layer protocol data unit); where a value of a first indication bit in a preamble of the first PPDU is a second specified value. Specifically, the first PPDU may be an EHT PPDU. The first indication bit may be a MAP TXS indication bit. In another implementation, no modification is made to the existing PPDU. That is, no new indication bit is added to the preamble of the PPDU, but all STAs that have received the PPDU are set not to discard the PPDU.

Based on the above descriptions of the trigger frame and the first PPDU carrying the trigger frame, the following describes a transmission interaction flow of the third STA. To realize the multi-AP TXOP sharing, the multi-AP TXOP sharing may be divided into three phases, i.e., a preparation phase, a probe phase and a trigger transmission phase, respectively. Information interacted in the preparation phase and probe phase is the basis for completing the multi-STA coordinated transmission and the processing of the preparation phase and the probe phase is the same as those of the aforementioned embodiments, which will not repeated herein. After completing the above processing, the third STA may perform the processing of the trigger transmission phase, specifically, may perform S3010, the third station (STA) receives the trigger frame sent from the first STA, where the trigger frame is used to establish a coordinated transmission between multiple STAs; and the third STA is associated with the first STA. The following describes subfields and values specifically contained in the trigger frame, and the processing of the third STA:

In an implementation, the trigger frame is a first trigger frame; and receiving, by the third station (STA), the trigger frame sent from the first STA includes: receiving, by the third STA, the first trigger frame sent from the first STA, where the first trigger frame is used for the multiple STAs to perform a simultaneous uplink coordinated transmission. Herein, the multiple STAs include at least one of: a third STA and a fourth STA; where the third STA is associated with the first STA, the fourth STA is associated with the second STA, and the second STA is different from the first STA.

Specifically, the first STA refers to a Sharing AP, the second STA refers to a Shared AP, the third STA refers to a STA (i.e., non-AP STA) associated with the Sharing AP, and the fourth STA refers to a STA (i.e., non-AP STA) associated with the Shared AP. It should be understood that a number of the aforementioned Shared AP(s) (i.e., the second STA(s)) may be one or more, a number of the aforementioned third STA(s) may be one or more, and a number of the aforementioned fourth STA(s) may be one or more. It should also be noted that the first STA and one or more second STAs may be APs in a same coordinated set; specifically, the one or more second STAs may be Shared APs located within the transmission range of the first STA.

Optionally, the method further includes: in a case where it is determined that the fifth condition is satisfied based on the first trigger frame, sending, by the third STA, uplink data to the first STA after the first duration from the moment when the first trigger frame is received; and receiving, by the third STA, the block ACK (BA) sent from the first STA. The receiving, by the third STA, the block ACK (BA) sent from the first STA specifically may be: receiving, by the third STA, the block ACK (BA) sent from the first STA after the first duration from a moment when the transmission of the uplink data is completed.

Specifically, after determining that the first trigger frame satisfies the fifth condition, in a case where the value of the first transmission mode subfield in the common information field of the first trigger frame being the second value is determined, the third STA sends the uplink data to the first STA associated with itself after the first duration from a moment whenthe reception of the first trigger frame is determined; and receives the block ACK (BA) sent from the first STA.

It should be understood that the user information subfield of the third STA in the first trigger frame may contain the transmit power subfield of the third STA, or may not contain the transmit power subfield of the third STA. In a case where the user information subfield of the third STA of the first trigger frame contains the transmit power subfield of the third STA, the third STA may also determine the transmit power used by itself based on the transmit power subfield. Regarding the manner for determining the transmit power used by itself, it has been described in the aforementioned embodiments, which will not be repeated herein. Alternatively, in a case where the user information subfield of the third STA of the first trigger frame does not contain the transmit power subfield of the third STA, since the AP in this scenario has pre-performed a beam nulling operation on the STA that is not associated with itself, the transmit power of the third STA may be selected by itself based on an actual condition, which will not be repeated herein. Herein, the first duration may refer to a SIFS. It should be pointed out that, as mentioned above, the multiple STAs include at least one of: the third STA and the fourth STA; accordingly, in the present implementation, the moment when the uplink data of the third STA is sent may be the same as the moment when the uplink data of the fourth STA is sent. That is, the third STA and the fourth STA perform a simultaneous uplink transmission.

In conjunction with FIG. 12 and FIG. 13, in FIG. 12 and FIG. 13, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 13, within AP1's own TXOP, the AP1 performs a beam nulling operation on a non-associated STA2 after the SIFS time from that the MAP TXS trigger frame (i.e., the first trigger frame) is sent (i.e., the first trigger frame), and receives the uplink data sent from the STA1, and in a case where the uplink data sent from the STA1 is received, the AP1 sends the BA to the STA1 after the SIFS time. Within the TXOP of the AP1, in a case where the MAP TXS trigger frame (i.e., the first trigger frame) is received, and the first trigger frame satisfying the first condition is determined, the AP2 enables the uplink CBF mode and/or C-UL MU-MIMO mode, and after the SIFS time from that the first trigger frame is received, the AP2 performs a beam nulling operation on the non-associated STA1, receives the uplink data sent from STA2, and in a case where the uplink data sent from the STA2 is received, the AP2 sends the BA to the STA2 after the SIFS time.

Optionally, the method further includes: in a case where it is determined that the fifth condition is satisfied based on the first trigger frame, sending, by the third STA, the uplink data to the first STA after the first duration from the moment when the first trigger frame is received; and receiving, by the third STA, the block ACK (BA) sent from the first STA. Sending the uplink data to the first STA includes: sending, by the third STA, the uplink data to the first STA in the first RU by adopting a first transmit power; the first transmit power being determined based on the maximum transmit power indicated by the transmit power subfield of the third STA of the first trigger frame. The receiving, by the third STA, the block ACK (BA) sent from the first STA includes: receiving, by the third STA, the block ACK (BA) sent from the first STA in the first RU. Specifically, after determining that the first trigger frame satisfies the fifth condition, in a case where it is determined that the value of the first transmission mode subfield in the common information field of the first trigger frame is the third value, the third STA sends the uplink data to the first STA associated with itself in the first RU after the first duration from the moment when the reception of the first trigger frame is determined; and the third STA receives the block ACK (BA) sent from the first STA in the first RU after the first duration from the moment when the transmission of the uplink data is completed.

It should be understood that the user information subfield of the third STA of the first trigger frame may contain the transmit power subfield of the third STA. The manner for determining the first transmit power specifically may include that the first transmit power is calculated based on the maximum transmit power of the transmit power subfield of the third STA and a preset formula; or, based on the maximum transmit power in the transmit power subfield of the third STA, determining that there is no limit on the transmit power, the third STA uses any power value less than or equal to the maximum transmit power as the first transmit power.

The preset formula may include: PTX = FVal - 20; where PTX is a transmit power used by the third STA, and FVal is a maximum transmit power contained in the transmit power subfield of the third STA. It should be pointed out that if the maximum transmit power contained in the transmit power subfield of the third STA is equal to a preset value, it represents that the first STA does not limit the transmit power of the third STA. The preset value may be 63, that is, if the value of the Max TX power subfield of the user information subfield of the third STA is 63, it represents that the sharing AP does not limit the maximum transmit power of the third STA.

In conjunction with FIG. 14 and FIG. 15, FIG. 14 and FIG. 15 are schematic diagrams of the STA enabling the CSR mode. Herein, the AP1 is a Sharing AP (i.e., the first STA), the AP2 is a Shared AP (i.e., the second STA), the STA1 is the third STA associated with the Sharing AP (i.e., the first STA), and the STA2 is the fourth STA associated with the Shared AP (i.e., the second STA). In conjunction with FIG. 15, within AP1's own TXOP, the AP1 receives the uplink data sent from the STA1 after the SIFS time from that the MAP TXS trigger frame (i.e., the first trigger frame) is sent(i.e., the first trigger frame), and in a case where the AP1 receives the uplink data sent from the STA1, the AP1 sends the BA to the STA1 after the SIFS time. Within the TXOP of the AP1, in a case where the AP2 receives the MAP TXS trigger frame (i.e., the first trigger frame), and determines the first trigger frame satisfies the first condition, it enables the uplink CSR mode, and receives the uplink data sent from the STA2 after the SIFS time of the first trigger frame is received, and in a case where the AP2 receives the uplink data sent from the STA2, the AP2 sends the BA to the STA2 after the SIFS time.

In conjunction with FIG. 16 and FIG. 17, FIG. 16 and FIG. 17 are schematic diagrams of the first STA enabling the COFDMA mode. In FIG. 16 and FIG. 17, the AP1 is a Sharing AP (i.e., the first STA), the AP2 is a Shared AP (i.e., the second STA), the STA11 and the STA12 are two third STAs associated with the Sharing AP (i.e., the first STA), and the STA21 is the fourth STA associated with the Shared AP (i.e., the second STA). In conjunction with FIG. 17, the AP1 prepares to receive the uplink data of the associated STA11 and STA12 in the first RU corresponding to the STA11 and the STA12, respectively, after the SIFS time from that the MAP TXS trigger frame is sent, and in a case where the uplink data sent from the STA11 and the STA12 is received, the AP1 sends the BA to the STA11 and the STA12 in the first RU corresponding to the STA11 and the STA12, respectively. For example, the first RU corresponding to the STA11 is a first RU in FIG. 17, and the first RU corresponding to the STA12 is a second RU in FIG. 17. Within the TXOP of the AP1, in a case where the MAP TXS trigger frame (i.e., the first trigger frame) is received, and the first trigger frame satisfying the first condition is determined, the AP2 enables the uplink COFDMA mode, and prepares to receive the uplink data of the associated STA21 in the second RU corresponding to the STA21, and in a case where the uplink data sent from the STA21 is received, the AP2 sends the BA to the STA21 in the second RU corresponding to the STA21. For example, the second RU corresponding to the STA21 is the third RU and fourth RU in FIG. 17.

It should also be pointed out that the aforementioned fifth condition may be partially different with different transmission modes. For example, in a case where the coordinated transmission mode is a CBF mode and/or C-UL MU-MIMO mode, the fifth condition may contain the value of the transmission mode subfield being the second value; specifically, the fifth condition may includes at least one of: a value of a first transmission mode subfield in the common information field of the first trigger frame being not the first value; the value of the first transmission mode subfield in the common information field of the first trigger frame being the second value; a value of a first sharing transmission indication subfield in the common information field of the first trigger frame being the eighth value; a value of a first uplink and downlink indication subfield in the common information field of the first trigger frame being the sixth value; the first trigger frame containing the user information subfield of the third STA with the identification information of the third STA; the value of the uplink and downlink indic in the user information subfield of the third STA of the first trigger frame being the sixth value; the value of the transmission mode subfield of the third STA in the user information subfield of the third STA of the first trigger frame being the second value; and the value of the transmission mode subfield of the third STA in the user information subfield of the third STA of the first trigger frame being not the first value.

In a case where the coordinated transmission mode is COFDMA and/or CSR, the fifth condition may contain the value of the transmission mode subfield being the third value. Specifically, the fifth condition includes at least one of: the value of the first transmission mode subfield in the common information field of the first trigger frame being not the first value; the value of the first transmission mode subfield in the common information field of the first trigger frame being the third value; the value of the first sharing transmission indication subfield in the common information field of the first trigger frame being the eighth value; the value of the first uplink and downlink indication subfield in the common information field of the first trigger frame being the sixth value; the first trigger frame containing the user information subfield of the third STA with the identification information of the third STA; the value of the uplink and downlink indic in the user information subfield of the third STA of the first trigger frame being the sixth value; the value of the transmission mode subfield of the third STA in the user information subfield of the third STA of the first trigger frame being the third value; and the value of the transmission mode subfield of the third STA in the user information subfield of the third STA of the first trigger frame being not the first value.

It should be noted that the manner for judging whether the first trigger frame contains the identification information of the third STA may be: judging whether the identification information of the identification subfield of the user information field in the first trigger frame being the same as the 12 least significant bits of the AID of the third STA; if so, determining that the identification information of the third STA is contained; and/or judging whether the identification information of the identification subfield of the user information field in the first trigger frame being the same as the 12-bit VAID of the third STA; if so, determining that the identification information of the third STA is contained.

The aforementioned fifth condition may at least include that the first trigger frame contains a user information subfield of the third STA with the identification information of the third STA. That is, the third STA parses the first trigger frame. If the first trigger frame does not contain the user information field with the identification information of the third STA, the third STA may discard the trigger frame. That is, when the third STA receives the first trigger frame, if none of the User Info subfields of the first trigger frame contains an AID12 subfield (the identification subfield) that is equal to the 12 least significant bits of its own AID or VAID, the third STA cannot send the uplink data to the AP (the first STA) associated with the third STA, nor is it prepared to receive the downlink data, and may enter sleep mode in some scenarios.

It should also be pointed out that the format of the first trigger frame may be pre-defaulted for all STAs in the network, that is, STAs in the network use the same format of the first trigger frame. In a case where the format of the first trigger frame is different, the specific content of the fifth condition may also be different, which will be described below, respecively.

The first trigger frame contains the first transmission mode subfield. And, the first trigger frame contains the user information subfield of the third STA, that is, the first trigger frame contains the user information subfield of the fourth STA containing the identification information of the third STA. Optionally, the common information field and the user information subfield of the first trigger frame may not contain the uplink and downlink indication subfield. Optionally, the common information field of the first trigger frame does not contain the sharing transmission indication subfield. For example, the common information field of the first trigger frame may adopt the format of the aforementioned FIG. 4, and the user information subfield of the third STA may adopt the format of the aforementioned FIG. 5.

The fifth condition includes: the value of the first transmission mode subfield in the common information field of the first trigger frame being not the first value; and the first trigger frame containing the user information subfield of the third STA with the identification information of the third STA. That is, whether the value of the first transmission mode subfield of the first trigger frame is the first value is judged, and whether there is its own identification information from respective user information subfields is detected. If the value of the first transmission mode subfield is not the first value and the user information subfield contains its own identification information, it may be determined that the first trigger frame satisfies the fifth condition. Alternatively, the fifth condition includes: the value of the first transmission mode subfield in the common information field of the first trigger frame being the second value (or the third value); and the first trigger frame containing the user information subfield of the third STA with the identification information of the third STA.

Optionally, the common information field of the first trigger frame does not contain the transmission mode subfield; the common information field of the first trigger frame contains the first sharing transmission indication subfield, and the value of the first sharing transmission indication subfield is the eighth value. The first trigger frame contains the user information subfield of the third STA, and the user information subfield of the third STA contains the identification subfield of the third STA, which is used to carry the identification information of the third STA; the user information subfield of the third STA further includes: the transmission mode subfield of the third STA. For example, the common information field of the first trigger frame may adopt the format of the aforementioned FIG. 6, and the user information subfield of the third STA may adopt the format of the aforementioned FIG. 7. The meanings of respective subfields in FIG. 6 and FIG. 7 are the same as those of the aforementioned embodiments, which will not be repeated herein.

The fifth condition includes: the value of the first sharing transmission indication subfield in the common information field of the first trigger frame being the eighth value; and the first trigger frame containing the user information subfield of the third STA with the identification information of the third STA. That is, whether the value of the first sharing transmission indication subfield in the common information field of the first trigger frame is the eighth value is judged, and whether there is its own identification information from respective user information subfields is detected. If the value of the first sharing transmission indication subfield of the common information field is the eighth value and the user information subfield contains its own identification information, it may be determined that the first trigger frame satisfies the fifth condition.

Optionally, the first trigger frame contains the first transmission mode subfield. And, the first trigger frame contains the user information subfield of the third STA, that is, the first trigger frame contains the user information subfield of the third STA containing the identification information of the fourth STA. Optionally, the common information field of the first trigger frame contains the first uplink and downlink indication subfield, and the value of the first uplink and downlink indication subfield is the sixth value. And/or, the user information subfield of the third STA of the first trigger frame contains the uplink and downlink indication subfield of the third STA, and the value of the uplink and downlink indication subfield of the third STA is the sixth value. Optionally, the common information field of the first trigger frame does not contain the sharing transmission indication subfield. For example, the common information field of the first trigger frame may adopt the format of the aforementioned FIG. 9, and the user information subfield of the third STA may adopt the format of the aforementioned FIG. 5. Alternatively, the common information field of the first trigger frame may adopt the format of the aforementioned FIG. 4, and the user information subfield of the third STA may adopt the format of the aforementioned FIG. 8. The meanings of respective subfields in FIG. 4, FIG. 5, FIG. 8 and FIG. 9 are the same as those of the aforementioned embodiments, which will not be repeated herein.

The fifth condition includes: the value of the first transmission mode subfield in the common information field of the first trigger frame being not the first value; the first trigger frame containing the user information subfield of the third STA with the identification information of the third STA; the value of the uplink and downlink indic in the user information subfield of the third STA of the first trigger frame being the sixth value. Alternatively, the fifth condition includes: the value of the first transmission mode subfield in the common information field of the first trigger frame being the second value (or the third value); the first trigger frame containing the user information subfield of the third STA with the identification information of the third STA; the value of the uplink and downlink indic in the user information subfield of the third STA of the first trigger frame being the sixth value. Alternatively, the fifth condition includes: the value of the first transmission mode subfield in the common information field of the first trigger frame being not the first value (or the second value, or the third value); the value of the first uplink and downlink indication subfield in the common information field of the first trigger frame being the sixth value; and the first trigger frame containing the user information subfield of the third STA with the identification information of the third STA.

That is, it is judged whether the value of the first transmission mode subfield of the first trigger frame is the first value, and it is detected from whether there is its own identification information in respective user information subfields, and whether the value of the uplink and downlink indication subfield of the third STA in the user information subfield of the third STA is the sixth value; if the value of the first transmission mode subfield is not the first value (or is determined to be the second value, or determined to be the third value), and there is its own identification information in the user information subfield, and the value of the uplink and downlink indication subfield of the third STA in the user information field is the sixth value, then it may be determined that the first trigger frame satisfies the fifth condition. Alternatively, the fifth condition includes: the value of the transmission mode subfield of the third STA in the user information subfield of the third STA of the first trigger frame being the second value (or the third value); the value of the first uplink and downlink indication subfield in the common information field of the first trigger frame being the sixth value; and the first trigger frame containing the user information subfield of the third STA with the identification information of the third STA. Alternatively, the fifth condition includes: the value of the transmission mode subfield of the third STA in the user information subfield of the third STA of the first trigger frame being not the first value; the value of the first uplink and downlink indication subfield in the common information field of the first trigger frame being the sixth value; and the first trigger frame containing the user information subfield of the third STA with the identification information of the third STA.

That is, the third STA may detect whether there is its own identification information from respective user information subfields, and judge whether the value of the transmission mode subfield of the third STA in the user information subfield of the third STA of the first trigger frame is the first value, and whether the value of the first uplink and downlink indication subfield is the sixth value; if the value of the transmission mode subfield of the third STA in the user information subfield of the third STA is not the first value, and there is its own identification information in the user information subfield, and the value of the first uplink and downlink indication subfield is the sixth value, it may be determined that the first trigger frame satisfies the fifth condition.

It should be understood that the above is only an exemplary description of the fifth condition. There may be other combinations in actual processing, which are not exhaustive herein. As long as at least one of the aforementioned fifth conditions is contained, it is within the protection scope of the present embodiment.

In an implementation, the trigger frame is a second trigger frame; the method further includes: receiving, by the third STA, a first frame sent from the first STA, the first frame being sent from the first STA after sending the second trigger frame, and the first frame is used to trigger the third STA to perform a simultaneous uplink corporative transmission. The first STA refers to a Sharing AP, and the second STA refers to a Shared AP. It should be understood that a number of the aforementioned Shared AP(s) (i.e., the second STA(s)) may be one or more. The aforementioned second trigger frame may at least include the common information field and the user information subfield of the second STA. The first frame specifically may be a basic trigger (Basic Trigger) frame.

In this implementation, the method further includes: after receiving the first frame, sending, by the third STA, uplink data to the first STA; and receiving, by the third STA, a BA sent from the first STA. Specifically, it may be: after the second duration from that the first frame is received, sending, by the third STA, the uplink data to the first STA; receiving, by the third STA, the BA sent from the first STA after the second duration from that the transmission of the uplink data is completed. Herein, the second duration may be the same as or different from the aforementioned first duration. In an example, the second duration may refer to a SIFS.

In conjunction with FIG. 14 and FIG. 18, in FIG. 14 and FIG. 18, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 18, within AP1's own TXOP, the AP1 sends a basic trigger frame to the STA1 after the SIFS time from that the MAP TXS trigger frame (i.e., the second trigger frame) is sent; the AP1 receives the uplink data sent from the STA1 after the SIFS time from that the basic trigger frame is sent, and in a case where the uplink data sent from the STA1 is received, the AP1 sends the BA to the STA1 after the SIFS time. Within the TXOP of the AP1, in a case where the MAP TXS trigger frame (i.e., the second trigger frame) is received, and the second trigger frame satisfying the second condition is determined, the AP2 enables the legacy uplink TXOP sharing mode, and sends the basic trigger frame to the STA2 after the SIFS time from that the second trigger frame is received, receives the uplink data sent from the STA2 after the SIFS time from that the basic trigger frame is sent, and in a case where the uplink data sent from the STA2 is received, the AP2 sends the BA to the STA2 after the SIFS time.

In an implementation, the trigger frame is a third trigger frame; and receiving, by the third station (STA), the trigger frame sent from the first STA includes: receiving, by the third STA, the third trigger frame sent from the first STA, where the third trigger frame is used for the multiple STAs to perform a simultaneous downlink coordinated transmission. The multiple STAs include: a first STA and a second STA; and the second STA is different from the first STA.

In this implementation, the method further includes: in a case where the third trigger frame satisfies the sixth condition, receiving, by the third STA, the downlink data sent from the first STA; and sending, by the third STA, the block ACK (BA) to the first STA.

That is, the third STA judges whether the third trigger frame satisfies the sixth condition; if so, based on the specific content contained in the third trigger frame, it may be determined that the third trigger frame is used to indicate the third STA to wait to receive the downlink data for the simultaneous downlink transmission. Then, the downlink data sent from the first STA is received after the third duration from that the third trigger frame is received. The sending, by the third STA, the block ACK (BA) to the first STA may include: sending, by the third STA, the block ACK (BA) to the first STA after the third duration from that the reception of the downlink data is completed. The specific content contained in the third trigger frame may contain an uplink and downlink indication subfield (for example, in the user information subfield of the third STA, or in the common information subfield), etc. Herein, the third duration may be the same as or different from any one of the first duration and the second duration. In an example, the third duration may refer to a SIFS.

The aforementioned first STA refers to a Sharing AP, the second STA refers to a Shared AP, the third STA refers to a STA associated with the Sharing AP (i.e., non-AP STA), and the fourth STA refers to a STA associated with the second STA (i.e., non-AP STA). It should be understood that a number of the aforementioned Shared AP(s) (i.e., the second STA(s)) may be one or more, a number of the aforementioned third STA(s) may be one or more, and a number of the aforementioned fourth STA(s) may be one or more. It should also be noted that the first STA and one or more second STAs may be APs in a same coordinated set; specifically, the one or more second STAs may be Shared APs located within the transmission range of the first STA.

In conjunction with FIG. 19 and FIG. 20, in FIG. 19 and FIG. 20, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 20, within the TXOP of the AP1, the AP1 performs a beam nulling operation on the non-associated STA2 after the SIFS time from that the MAP TXS trigger frame (i.e., the third trigger frame) is sent, sends the downlink data to the STA1, and receives the BA sent from the STA1 after a SIFS duration. Within the TXOP of the AP1, the AP2 performs a beam nulling operation on the non-associated STA1 after the SIFS time from that the MAP TXS trigger frame (i.e., the third trigger frame) is received, the AP2 sends the downlink data to the STA2, and receives the BA sent from STA2 after the SIFS duration.

Optionally, the receiving the downlink data sent from the first STA specifically may be: receiving the downlink data sent from the first STA on a corresponding RU after the third duration from that the third trigger frame is received; where the corresponding first RU is a resource corresponding to the third STA. The sending the block ACK (BA) to the first STA may include: sending the BA to the first STA on the corresponding first RU. In the present implementation, the moment when the downlink data of the first STA is sent may be the same as the moment when the downlink data of the second STA is sent. That is, the first STA and the second STA perform a simultaneous downlink transmission.

In conjunction with FIG. 21 and FIG. 22, FIG. 21 and FIG. 22 are schematic diagrams of the STA enabling the downlink CSR mode. Herein, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 22, within the TXOP of the AP1, the AP1 sends the downlink data to the STA1 after the SIFS time from that the MAP TXS trigger frame (i.e., the third trigger frame) is sent, and the AP1 receives the BA sent from the STA1 after the SIFS time from that the transmission of the downlink data to the STA1 is completed. Within the TXOP of the AP1, the AP2 sends the downlink data to STA2 after the SIFS time from that the MAP TXS trigger frame (i.e., the third trigger frame) is received, and receives the BA sent from the STA2 after the SIFS time from that the transmission of the downlink data to the STA2 is completed.

In conjunction with FIG. 23 and FIG. 24, FIG. 23 and FIG. 24 are schematic diagrams of the first STA enabling the COFDMA mode. In FIG. 23 and FIG. 24, the AP1 is a Sharing AP (the first STA), and the AP2 and the AP3 are both Shared APs (i.e., the second STA). In conjunction with FIG. 24, within the TXOP of the AP1, the AP1 sends the downlink data in the first RU (i.e., the TXOP of the AP1 shown in FIG. 23 and FIG. 24) corresponding to its own STA after the SIFS time from that the MAP TXS trigger frame (i.e., the third trigger frame) is sent. Within the TXOP of the AP1, the AP2 and AP3 send the downlink data in the second RU corresponding to their own STAs (i.e., the TXOP of the AP2 and the sub-TXOP of the AP3 shown in FIG. 23 and FIG. 24) after the SIFS time from that the MAP TXS trigger frame (i.e., the third trigger frame) is received.

Optionally, in a case where the third trigger frame satisfies the sixth condition, the third STA receives the downlink data sent from the first STA; and the third STA sends the block acknowledgment (BA) to the first STA. Herein, in a case where the third trigger frame satisfies the sixth condition, receiving, by the third STA, the downlink data sent from the first STA further includes: in a case where the third trigger frame satisfies the sixth condition, receiving, by the third STA, the downlink data sent from the first STA, and receiving, the downlink data sent from the second STA.

In the present implementation, the moment when the downlink data of the first STA is sent may be the same as the moment when the downlink data of the second STA is sent. That is, the first STA and the second STA perform a simultaneous downlink transmission. In addition, it should be pointed out that, in the present implementation, the first STA and the second STA both send the downlink data to the third STA, and the third STA only sends the BA to the first STA associated with the third STA.

In conjunction with FIG. 25 and FIG. 26, FIG. 25 and FIG. 26 are schematic diagrams of the STA enabling the downlink CSR mode. Herein, the AP1 is a Sharing AP (the first STA), the AP2 is a Shared AP (i.e., the second STA), the STA1 is the third STA associated with the Sharing AP (the first STA). In conjunction with FIG. 26, within AP1's own TXOP, the AP1 sends the downlink data to the STA1 after the SIFS time from that the MAP TXS trigger frame (i.e., the third trigger frame) is sent, and receives the BA sent from the STA1 after the SIFS time from that the transmission of the downlink data to the STA1 is completed. Within the TXOP of the AP1, the AP2 sends the downlink data to the STA1 after the SIFS time from that the MAP TXS trigger frame (i.e., the third trigger frame) is sent. That is, the STA1 may receive the downlink data sen simultaneously by the AP1 and AP2, but the STA1 only sends the BA to the AP1.

It should also be pointed out that the aforementioned sixth condition may be partially different with different transmission modes. For example, in a case where the coordinated transmission mode is the downlink CBF mode, the sixth condition may contain the value of the transmission mode subfield being the second value; the sixth condition may include at least one of: the value of the third sharing transmission indication subfield in the common information field of the third trigger frame being the eighth value; the value of the third uplink and downlink indication subfield in the common information field of the third trigger frame being the seventh value; the value of the third transmission mode subfield in the common information field of the third trigger frame being not the first value; the value of the third transmission mode subfield in the common information field of the third trigger frame being the third value; the third trigger frame containing the user information subfield of the third STA with the identification information of the third STA; the value of the transmission mode subfield of the third STA in the user information subfield of the third STA of the third trigger frame being the third value; the value of the transmission mode subfield of the third STA in the user information subfield of the third STA of the third trigger frame being not the first value; and a value of an uplink and downlink indication subfield of a third STA in user information subfield of the third STA of the third trigger frame being the seventh value.

In a case of the downlink COFDMA and/or CSR mode, the sixth condition may contain the value of the transmission mode subfield being the third value; specifically, the sixth condition may include at least one of: the value of the third sharing transmission indication subfield in the common information field of the third trigger frame being the eighth value; the value of the third uplink and downlink indication subfield in the common information field of the third trigger frame being the seventh value; the value of the third transmission mode subfield in the common information field of the third trigger frame being not the first value; the value of the third transmission mode subfield in the common information field of the third trigger frame being the third value; the third trigger frame containing the user information subfield of the third STA with the identification information of the third STA; the value of the transmission mode subfield of the third STA in the user information subfield of the third STA of the third trigger frame being the third value; the value of the transmission mode subfield of the third STA in the user information subfield of the third STA of the third trigger frame being not the first value; and a value of an uplink and downlink indication subfield of a third STA in user information subfield of the third STA of the third trigger frame being the seventh value.

In a case of the joint transmission mode, the sixth condition may contain the value of the transmission mode subfield being the fourth value; specifically, the sixth condition include at least one of: the value of the third sharing transmission indication subfield in the common information field of the third trigger frame being the eighth value; the value of the third uplink and downlink indication subfield in the common information field of the third trigger frame being the seventh value; the value of the third transmission mode subfield in the common information field of the third trigger frame being not the first value; the third trigger frame containing the user information subfield of the third STA with the identification information of the third STA; the value of the transmission mode subfield of the third STA in the user information subfield of the third STA of the third trigger frame being not the first value; a value of an uplink and downlink indication subfield of a third STA in user information subfield of the third STA of the third trigger frame being seventh value; the value of the third transmission mode subfield in the common information field of the third trigger frame being the fourth value; and the value of the transmission mode subfield of the third STA in the user information subfield of the third STA of the third trigger frame being the fourth value.

It should be noted that the manner for judging whether the third trigger frame contains the identification information of the third STA may be: judging whether the identification information of the identification subfield of the user information field in the first trigger frame being the same as the 12 least significant bits of the AID of the third STA; if so, determining that the identification information of the third STA is contained; and/or judging whether the identification information of the identification subfield of the user information field being the same as the 12-bit VAID of the third STA; if so, determining that the identification information of the third STA is contained.

Although the third trigger frame is used to trigger the second STA to perform a simultaneous downlink transmission together with the first STA, it still needs to carry the user info subfield of the associated STA (i.e., the third STA), which is intended to ensure that the third STA remains awake and ready to receive downlink data sent from the associated AP. Therefore, the aforementioned sixth condition may at least include that the third trigger frame containing the user information subfield of the third STA with the identification information of the third STA. That is, the third STA parses the third trigger frame. In a case where the third trigger frame does not contain the user information field with the identification information of the third STA, the third STA may discard the third trigger frame. That is, when the third STA receives the third trigger frame, if none of the User Info subfields of the third trigger frame contains an AID12 subfield (the identification subfield) that is equal to the 12 least significant bits of its own AID or VAID, the third STA cannot send the uplink data to the AP (the first STA) associated with the third STA, nor is it prepared to receive the downlink data, and may enter sleep mode (or the hibernation mode) in some scenarios.

It should be understood that the third STA may judge whether the third trigger frame satisfies the sixth condition through one or more of the above-mentioned sixth conditions. The above-mentioned sixth condition may be combined in various ways. An exemplary description is provided below, but it does not represent that there are only the following manners. As long as at least one of the above-mentioned sixth conditions is contained, it is within the protection scope of the present embodiment.

The common information field of the third trigger frame does not contain the transmission mode subfield; the common information field of the third trigger frame contains the third sharing transmission indication subfield, and the value of the third sharing transmission indication subfield is the eighth value. The third trigger frame contains the user information subfield of the third STA, and the user information subfield of the third STA contains the identification subfield of the third STA, which is used to carry the identification information of the third STA; the user information subfield of the third STA further includes: the transmission mode subfield of the third STA. For example, the common information field of the third trigger frame may adopt the format of the aforementioned FIG. 6, and the user information subfield of the third STA may adopt the format of the aforementioned FIG. 7. The meanings of respective subfields in FIG. 6 and FIG. 7 are the same as those of the aforementioned embodiments, which will not be repeated herein.

The sixth condition includes: the third trigger frame containing the user information subfield with the identification information of the third STA; the value of the transmission mode subfield of the third STA in the user information subfield of the third STA of the third trigger frame being the second value (or the third value, or the fourth value).

Alternatively, the above-mentioned sixth condition includes: the third trigger frame containing the user information subfield with the identification information of the third STA; the value of the transmission mode subfield of the third STA in the user information subfield of the third STA of the third trigger frame being not the first value.

Alternatively, the above-mentioned sixth condition includes: the value of the third sharing transmission indication subfield in the common information field of the third trigger frame being the eighth value; the third trigger frame containing the user information subfield with the identification information of the third STA; the value of the transmission mode subfield of the third STA in the user information subfield of the third STA of the third trigger frame being not the first value.

Alternatively, the above-mentioned sixth condition includes: the value of the third sharing transmission indication subfield in the common information field of the third trigger frame being the eighth value; the third trigger frame containing the user information subfield with the identification information of the third STA; the value of the transmission mode subfield of the third STA in the user information subfield of the third STA of the third trigger frame being the second value (or the third value, or the fourth value).

Optionally, the third trigger frame contains the third transmission mode subfield. The common information field of the third trigger frame contains the third uplink and downlink indication subfield, and the value of the third uplink and downlink indication subfield is the seventh value. The common information field of the third trigger frame does not contain the sharing transmission indication subfield. For example, the common information field of the third trigger frame may adopt the format of the aforementioned FIG. 9, and the user information subfield of the third STA may adopt the format of the aforementioned FIG. 5. Alternatively, the common information field of the third trigger frame may adopt the format of the aforementioned FIG. 4, and the user information subfield of the third STA may adopt the format of the aforementioned FIG. 8. The meanings of respective subfields in FIG. 4, FIG. 5, FIG. 8 and FIG. 9 are the same as those of the aforementioned embodiments, which will not be repeated herein.

Based on the aforementioned third trigger frame, the third trigger frame contains the user information subfield of the third STA, and/or the user information subfield of the third STA of the third trigger frame contains the uplink and downlink indication subfield of the third STA, and the value of the uplink and downlink indication subfield of the third STA is the seventh value.

The sixth condition includes: the third trigger frame containing the user information subfield of the third STA with the identification information of the third STA; a value of an uplink and downlink indication subfield of a third STA in user information subfield of the third STA of the third trigger frame being the seventh value.

Alternatively, the sixth condition includes: the value of the third transmission mode subfield in the common information field of the third trigger frame being the second value (or not the first value, or the third value, or the fourth value); the third trigger frame containing the user information subfield of the third STA with the identification information of the third STA; a value of an uplink and downlink indication subfield of a third STA in user information subfield of the third STA of the third trigger frame being the seventh value.

In the sixth condition, a value of an uplink and downlink indication subfield of a third STA in user information subfield of the third STA of the third trigger frame being the seventh value may also be replaced as the value of the third uplink and downlink indication subfield in the common information field of the third trigger frame being the seventh value.

It should be pointed out that the aforementioned is only an exemplary description of the possible formats of the third trigger frame and the possible conditions of the sixth condition. In actual processing, the content that the third trigger frame may contain has been described in the aforementioned embodiments. As long as at least one of the aforementioned contents is contained, it is within the protection scope of the present embodiment. Accordingly, the content that the sixth condition may contain has also been described. As long as at least one of the sixth conditions is contained, it is also within the protection scope of the present embodiment. However, it is not exhaustive herein.

In an implementation, the trigger frame is a fourth trigger frame; and receiving, by the third station (STA), the trigger frame sent from the first STA includes: receiving, by the third STA, the fourth trigger frame sent from the first STA, and the fourth trigger frame is used for the multiple STAs to perform a simultaneous coordinated transmission. The fourth trigger frame is used to trigger the third STA to perform a simultaneous uplink coordinated transmission, and to trigger the second STA to perform a simultaneous downlink coordinated transmission. The multiple STAs include: the third STA and the second STA; and the third STA is associated with the first STA.

In this implementation, the method further includes: in a case where it is determined that a value of a first indication bit in a first PPDU carrying the fourth trigger frame is a second specified value, parsing, by the second STA, the fourth trigger frame. The method further includes: in a case where the fourth trigger frame satisfies the seventh condition, sending, by the third STA, uplink data to the first STA based on a second transmit power after a fourth duration from that the fourth trigger frame is received; the second transmit power is determined based on a transmit power subfield of the third STA in the user information subfield of the third STA of the fourth trigger frame; receiving, by the third STA, the BA sent from the first STA. Herein, the manner for determining the second transmit power is similar to the manner for determining the aforementioned first transmit power, which will not be repeated herein. The manner for determining the second transmit power and the manner for determining the aforementioned first transmit power are both determined based on the transmit power subfield of the third STA in the user information field of the third STA of the third trigger frame. The second transmit power may be the same as or different from the aforementioned first transmit power, which is not limited to the present embodiment. It should be pointed out that when the third STA determines that the seventh condition is satisfied, the third STA may determine the second transmit power based on the transmit power subfield of the third STA in the fourth trigger frame, determine the coordinated transmission mode to be adopted based on the transmission mode subfield of the fourth trigger frame (or the transmission mode subfield of the third STA), and so on, and will also send the uplink data to the AP1 based on requirements of other fields in the Common info and the User Info by using no more than the transmit power indicated by the Max TX power subfield within the allocated TXOP time.

Herein, the fourth duration may be the same as or different from any one of the first duration, the second duration and the third duration. In an example, the fourth duration may refer to a SIFS.

Specifically, the first STA refers to a Sharing AP, the second STA refers to a Shared AP, the third STA refers to a STA (i.e., non-AP STA) associated with the Sharing AP, and the fourth STA refers to a STA (i.e., non-AP STA) associated with the Shared AP. It should be understood that a number of the aforementioned Shared AP(s) (i.e., the second STA(s)) may be one or more, a number of the aforementioned third STA(s) may be one or more, and a number of the aforementioned fourth STA(s) may be one or more. It should also be noted that the first STA and one or more second STAs may be APs in a same coordinated set; specifically, the one or more second STAs may be Shared APs located within the transmission range of the first STA.

In the present implementation, the moment when the third STA sends the uplink data to the first STA is the same as the moment when the second STA sends the downlink data to the fourth STA. That is, the third STA and the second STA perform a simultaneous coordinated transmission.

In conjunction with FIG. 27 and FIG. 28, FIG. 27 and FIG. 28 are schematic diagrams of the STA enabling the downlink CSR mode. Herein, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 28, within AP1's own TXOP, the AP1 receives the uplink data sent from the STA1 to the AP1, after the SIFS time from that the AP1 sends the MAP TXS trigger frame (i.e., the fourth trigger frame) and sends the BA to the STA1 after the SIFS time from that the reception of the uplink data sent from the STA1 is completed; at the same time, within the TXOP of the AP1, the AP2 sends the downlink data to the STA2 after the SIFS time from that the AP2 receives the MAP TXS trigger frame (i.e., the fourth trigger frame) sent from the AP1, and receives the BA sent from the STA2 after the SIFS time from that the transmission of the downlink data is completed.

Furthermore, the seventh condition includes at least one of: the common information field of the fourth trigger frame containing the third sharing transmission indication subfield, and the value of the third sharing transmission indication subfield being the eighth value; the fourth trigger frame containing the user information subfield of the third STA with the identification information of the third STA; and the user information subfield of the third STA of the fourth trigger frame containing the uplink and downlink indication subfield of the third STA, and the value of the uplink and downlink indication subfield of the third STA being the sixth value.

The aforementioned seventh condition may at least include that the fourth trigger frame contains the user information subfield of the third STA with the identification information of the third STA. Reasons are the same as those of the aforementioned embodiments, which will not be repeated herein.

In the present implementation, the common information field of the fourth trigger frame does not contain the transmission mode subfield; the common information field of the fourth trigger frame may contain the fourth sharing transmission indication subfield, and the value of the fourth sharing transmission indication subfield is the eighth value.

The fourth trigger frame contains the user information subfield of the third STA, and the user information subfield of the third STA contains the identification subfield of the third STA, which is used to carry the identification information of the third STA; the user information subfield of the third STA further includes: the uplink and downlink indication subfield of the third STA, and the value of the uplink and downlink indication subfield of the third STA is the sixth value. Based on the aforementioned, the common information field of the fourth trigger frame may not contain the uplink and downlink indication subfield. Based on the aforementioned, the user information subfield of the third STA of the fourth trigger frame may further contain the transmit power subfield of the third STA. For example, the common information field of the fourth trigger frame may adopt the format of the aforementioned FIG. 6, and the user information subfield of the third STA may adopt the format of the aforementioned FIG. 7. The meanings of respective subfields in FIG. 6 and FIG. 7 are the same as those of the aforementioned embodiments, which will not be repeated herein.

The seventh condition include: the user information subfield of the third STA with the identification information of the third STA contained in the fourth trigger frame. That is, the third STA detects whether there is its own identification information from respective user information subfields of the fourth trigger frame, and if so, it is determined that the seventh condition is satisfied. Furthermore, the third STA may determine the uplink transmission to be performed this time based on the value of the uplink and downlink indication subfield of the third STA contained in the user information subfield of the third STA being the sixth value; and determine the second transmit power to be used this time based on the transmit power subfield of the third STA contained in the user information subfield of the third STA; and then, send the uplink data to the first STA adopting the second transmit power after the fourth duration from that the fourth trigger frame is received.

Alternatively, the seventh condition includes: the fourth trigger frame containing the user information subfield of the third STA with the identification information of the third STA; the user information subfield of the third STA of the fourth trigger frame including the uplink and downlink indication subfield of the third STA, and the value of the uplink and downlink indication subfield of the third STA being the sixth value.

That is, the third STA detects whether there is its own identification information from the respective user information subfields of the fourth trigger frame. If so, it is judged whether the value of the uplink and downlink indication subfield of the third STA includes in the user information subfield of the third STA of the fourth trigger frame is the sixth value; if the value of the uplink and downlink indication subfield is the sixth value, it is determined that the seventh condition is satisfied. Furthermore, the third STA may determine the second transmit power used this time based on the transmit power subfield of the third STA contained in the user information subfield of the third STA, and then send the uplink data to the first STA by adopting the second transmit power after the fourth duration from that the fourth trigger frame is received.

Alternatively, the seventh condition includes: the common information field of the fourth trigger frame containing the third sharing transmission indication subfield, and the value of the third sharing transmission indication subfield being the eighth value; the fourth trigger frame containing the user information subfield of the third STA with the identification information of the third STA; the user information subfield of the third STA of the fourth trigger frame including the uplink and downlink indication subfield of the third STA, and the value of the uplink and downlink indication subfield of the third STA being the sixth value.

That is, the third STA judges whether the value of the third sharing transmission indication subfield is the eighth value, and detects whether there is its own identification information from respective user information subfields of the fourth trigger frame. If the value of the third sharing transmission indication subfield is the eighth value and the fourth trigger frame contains its own identification information, then it is determined whether the value of the uplink and downlink indication subfield of the third STA included in the user information subfield of the third STA of the fourth trigger frame is the sixth value; if the value of the uplink and downlink indication subfield is the sixth value, it is determined that the seventh condition is satisfied. Furthermore, the third STA may determine the second transmit power used this time based on the transmit power subfield of the third STA contained in the user information subfield of the third STA, and then send the uplink data to the first STA by adopting the second transmit power after the fourth duration from that the fourth trigger frame is received.

It should be understood that the above is only an exemplary description, and the fourth condition may be set according to an actual condition. For example, the fourth condition includes: a value of a transmission mode subfield of the second STA in the user information subfield of the second STA of the fourth trigger frame being not the first value; the fourth trigger frame containing the user information subfield of the second STA with the identification information of the second STA; a value of an uplink and downlink indication subfield of the second STA in the user information subfield of the second STA of the fourth trigger frame being the seventh value; the value of the uplink and downlink indication subfield of the fourth STA in the user information subfield of the fourth STA of the fourth trigger frame being the seventh value; the fourth trigger frame containing the user information subfield of the fourth STA with the identification information of the fourth STA.

It should be pointed out that the communication method provided in the present embodiment may be used in combination with the communication method provided in the aforementioned first aspect embodiment and/or second aspect embodiment, which are all within the protection scope of the present embodiment.

By adopting the solution provided in the present embodiment, the first STA sends the trigger frame for establishing the coordinated transmission between the multiple STAs, thereby providing a solution for efficiently establishing the multi-STA cooperation. Specifically, the solution provided in the present embodiment may control the multiple STAs to cooperatively perform a simultaneous uplink transmission and/or the simultaneous downlink transmission by sending only one trigger frame, which may simplify the sharing procedure and reduce the signaling overhead used to establish the coordinated transmission, thereby achieving efficient establishment of the multi-STA cooperation.

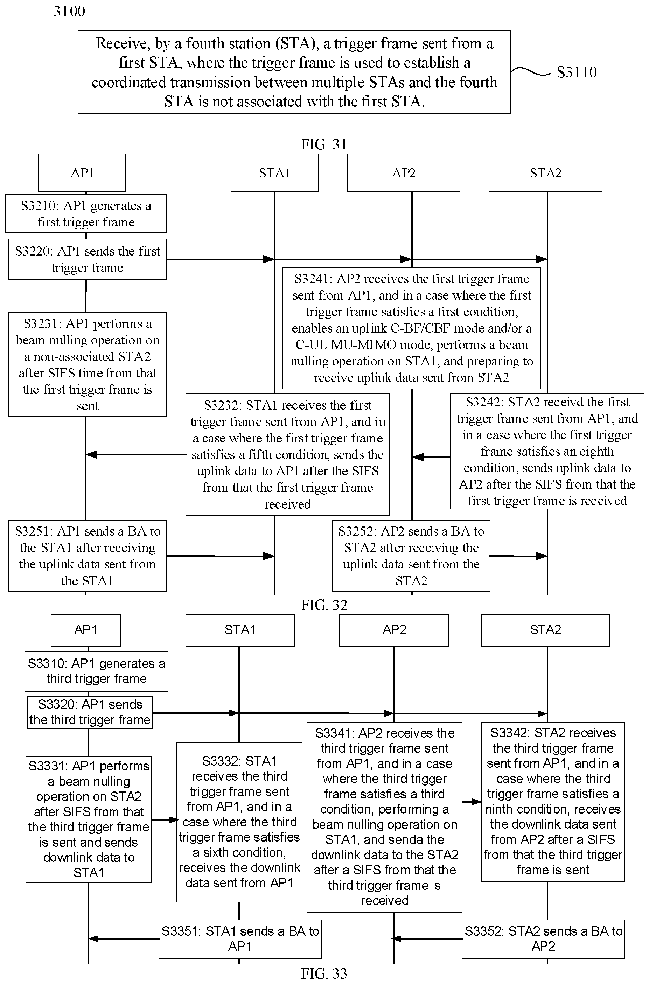

FIG. 31 is a schematic flow chart of a communication method 3100 according to the embodiments of a fourth aspect of the present disclosure. The method may optionally be applied to a system shown in FIG. 1, but is not limited thereto. The method includes at least part of the following contents.

S3110, receiving, by a fourth station (STA), a trigger frame sent from a first STA, where the trigger frame is used to establish a coordinated transmission between multiple STAs; and the fourth STA is not associated with the first STA.

In the embodiments of the present disclosure, the first STA may be an AP. Specifically, the first STA is a sharing (Sharing) AP. The fourth STA may be a STA (non-AP STA) associated with other STAs, for example, may be a STA associated with the second STA, where the second STA specifically may be a shared (Shared) AP.

In a possible implementation, an AID and/or a VAID of the fourth STA is configured by the second STA based on a second range of identification values, and the fourth STA is associated with the second STA. That is, before performing S3110, the method further includes: acquiring, by the fourth STA, the AID and/or VAID configured for the fourth STA by the second STA based on the second range of identification values.

Specifically, the acquiring, by the fourth STA, the AID and/or VAID for itself may be: acquiring, by the fourth STA, the AID and/or VAID configured by the second STA for itself. Regarding the manner in which the second STA allocates the AID and/or VAID to the fourth STA may be that the second STA is configured for the fourth STA based on the second range of identification values. The second range of identification values is within at least one of: 1-2007, 2008-2044, and 2047-4096; and the second range of identification values is configured by the target device for the second STA. The target device is a coordinating device; the coordinating device is an access point (AP); or the coordinating device is a device other than an AP. The processing of the second STA and the related description of the target device have been described in the aforementioned embodiments, which will not be repeated herein.

Next, fields and subfields that may be contained in the trigger frame are described.

In an implementation, the trigger frame specifically may be referred to as a MAP TXS trigger frame. The trigger frame may include a common info field and/or a user info list field; where the user information list field may include one or more User info subfields.

The common information field of the trigger frame includes at least one of: a trigger type subfield, where a value of the trigger type subfield is used to represent a type of the trigger frame; a transmission mode subfield, where a value of the transmission mode subfield is used to represent a coordinated transmission mode used for sharing a transmission opportunity (TXOP) of the multiple STAs, and/or whether the multiple STAs enables a TXOP sharing mode; an uplink and downlink indication subfield, where a value of the uplink and downlink indication subfield is used to represent that the TXOP is used for a simultaneous uplink transmission or a simultaneous downlink transmission; and a sharing transmission indication subfield, where a value of the sharing transmission indication subfield is used to represent whether the multiple STAs enable the TXOP sharing mode.

The respective subfields that may be contained in the common information field of the trigger frame are the same as those of the aforementioned embodiments, which will not be repeated herein.

The trigger frame contains one or more user information subfields; an m-th user information subfield of the one or more user information subfields is user information subfield of the m-th STA, and m is an integer greater than or equal to 1; and the m-th user information subfield includes at least one of: an identification subfield of the m-th STA, where the identification subfield of the m-th STA is used to carry the identification information of the m-th STA; a transmission mode subfield of the m-th STA, where a value of the transmission mode subfield of the m-th STA is used to indicate a corporative transmission mode used for TXOP sharing of the m-th STA, and/or whether the m-th STA enables the TXOP sharing mode; a transmit power subfield of the m-th STA, where the transmit power subfield of the m-th STA being used to indicate a maximum transmit power used by the m-th STA; and an uplink and downlink indication subfield of the m-th STA, where the uplink and downlink indication subfield of the m-th STA is used to indicate that the corporative transmission of the m-th STA is a simultaneous uplink transmission or a simultaneous downlink transmission. Herein, the m-th user information subfield refers to any one of the one or more user information subfields. The respective subfields that may be contained in the the m-th user information subfield are the same as those of the aforementioned embodiments, which will not be repeated herein.

Based on the above description of respective subfields that may be contained in the trigger frame, the manner for carrying the trigger frame is further described: In an implementation, the trigger frame is carried by a first PPDU; where a value of the first indication bit of a preamble of the first PPDU is a second specified value. Specifically, the first PPDU may be an EHT PPDU. The first indication bit may be a MAP TXS indication bit. In another implementation, no modification is made to the existing PPDU.

Based on the above descriptions of the aforementioned trigger frame and the first PPDU carrying the trigger frame, the following describes the transmission interaction flow of the fourth STA. To realize the multi-AP TXOP sharing, the multi-AP TXOP sharing may be divided into three phases, i.e., a preparation phase, a probe phase and a trigger transmission phase, respectively. The aforementioned S3110 is mainly processing performed in the trigger transmission phase. The description of processing of the preparation phase and the probe phase is the same as those of the aforementioned embodiments, which will not be repeated herein. The following describes subfields and values specifically contained in the trigger frame in different procedures, and the processing for performing trigger transmission phase for the fourth STA in different procedures:

In an implementation, the trigger frame being a first trigger frame; and receiving, by the fourth STA, the trigger frame sent from the first STA including: receiving, by the fourth STA, the first trigger frame sent from the first STA, where the first trigger frame is used for the multiple STAs to perform a simultaneous uplink coordinated transmission. Herein, the multiple STAs include at least one of: a third STA and a fourth STA; where the third STA is associated with the first STA, the fourth STA is associated with the second STA, and the second STA is different from the first STA.

Specifically, the first STA refers to a Sharing AP, the second STA refers to a Shared AP, the third STA refers to a STA (i.e., non-AP STA) associated with the Sharing AP, and the fourth STA refers to a STA (i.e., non-AP STA) associated with the Shared AP. It should be understood that a number of the aforementioned Shared AP(s) (i.e., the second STA(s)) may be one or more, a number of the aforementioned third STA(s) may be one or more, and a number of the aforementioned fourth STA(s) may be one or more. It should also be noted that the first STA and one or more second STAs may be APs in a same coordinated set; specifically, the one or more second STAs may be Shared APs located within the transmission range of the first STA.

In the present implementation, the method further includes: in a case where it is determined that the eighth condition is satisfied based on the first trigger frame, sending, by the fourth STA, uplink data to the second STA after a first duration from a moment when the first trigger frame is received; the second STA being associated with the fourth STA; and receiving, by the fourth STA, a block ACK (BA) sent from the second STA.

It should be understood that the user information subfield of the fourth STA of the first trigger frame may contain the transmit power subfield of the fourth STA, or may not contain the transmit power subfield of the fourth STA. In a case where the user information subfield of the fourth STA of the first trigger frame contains the transmit power subfield of the fourth STA, the fourth STA may also determine the transmit power used by itself based on the transmit power subfield. Regarding the manner for determining the transmit power used by itself, it has been described in the aforementioned embodiment, which will not be repeated herein. Alternatively, in a case where the user information subfield of the fourth STA of the first trigger frame does not contain the transmit power subfield of the fourth STA, since the AP in this scenario has pre-performed a beam nulling operation on the STA that is not associated with itself, the transmit power of the fourth STA may be selected by itself based on an actual condition, which will not be repeated herein. Herein, the first duration may refer to a SIFS.

In conjunction with FIG. 12 and FIG. 13, in FIG. 12 and FIG. 13, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 13, within AP1's own TXOP, the AP1 performs a beam nulling operation on a non-associated STA2 after the SIFS time from that the MAP TXS trigger frame (i.e., the first trigger frame) is sent, and receives the uplink data sent from the STA1, and in a case where the uplink data sent from the STA1 is received, the AP1 sends the BA to the STA1 after the SIFS time. Within the TXOP of the AP1, in a case where the MAP TXS trigger frame (i.e., the first trigger frame) is received, and the first trigger frame satisfying the first condition is determined, the AP1 enables the uplink CBF mode and/or C-UL MU-MIMO mode, and after the SIFS time of the first trigger frame is received, performs a beam nulling operation on the non-associated STA1, receives the uplink data sent from STA2, and in a case where the uplink data sent from the STA2 is received, the AP2 sends the BA to the STA2 after the SIFS time.

Optionally, the sending the uplink data to the second STA includes: sending, by the fourth STA, the uplink data to the second STA in a second RU by adopting a third transmit power; where the third transmit power is determined based on a maximum transmit power indicated by a transmit power subfield of the fourth STA of the first trigger frame. Herein, the manner for determining the third transmit power specifically may include that the third transmit power is obtained by calculating based on the maximum transmit power of the transmit power subfield of the fourth STA and a preset formula; or, in case where it is determined that no restriction is placed on the transmit power based on the maximum transmit power of the transmit power subfield of the fourth STA, the fourth STA adopts an arbitrary power value that is less than or equal to the maximum transmit power as the third transmit power. The manner for determining the third transmit power is the same as the manner for determining the second transmit power and/or the first transmit power, which will not repeated herein.

The receiving, by the fourth STA, the block ACK (BA) sent from the second STA includes: receiving, by the fourth STA, the block ACK (BA) sent from the second STA in a second RU. Herein, the first duration may refer to a SIFS.

It should be pointed out that, as mentioned above, the multiple STAs include at least one of: the third STA and the fourth STA; accordingly, in the present implementation, the moment when the uplink data of the third STA is sent may be the same as the moment when the uplink data of the fourth STA is sent. That is, the third STA and the fourth STA perform a simultaneous uplink transmission.

In conjunction with FIG. 14 and FIG. 15, FIG. 14 and FIG. 15 are schematic diagrams of the STA enabling the CSR mode. Herein, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 15, within AP1's own TXOP, the AP1 receives the uplink data sent from the STA1 after the SIFS time from that the MAP TXS trigger frame (i.e., the first trigger frame) is sent, and in a case where the uplink data sent from the STA1 is received, the AP1 sends the BA to the STA1 after the SIFS time, Within the TXOP of the AP1, in a case where the MAP TXS trigger frame (i.e., the first trigger frame) is received, and the first trigger frame satisfying the first condition is determined, the AP2 enables the uplink CSR mode, and receives the uplink data sent from the STA2 after the SIFS time of the first trigger frame is received, and in a case where the uplink data sent from the STA2 is received, the AP2 sends the BA to the STA2 after the SIFS time.

In conjunction with FIG. 16 and FIG. 17, FIG. 16 and FIG. 17 are schematic diagrams of the first STA enabling the COFDMA mode. In FIG. 16 and FIG. 17, the AP1 is a Sharing AP (the first STA), the AP2 is a Shared AP (i.e., the second STA), the STA11 and the STA12 are two third STAs associated with the Sharing AP (the first STA), and the STA21 is the fourth STA associated with the Shared AP (the second STA). In conjunction with FIG. 17, the AP1 prepares to receive the uplink data of the associated STA11 and STA12 in the first RU corresponding to the STA11 and the STA12, respectively, after the SIFS time from that the MAP TXS trigger frame is sent, and in a case where the uplink data sent from the STA11 and the STA12 is received, the AP1 sends the BA to the STA11 and the STA12 in the first RUs corresponding to the STA11 and the STA12, respectively (or referred to as corresponding RUs, respectively). For example, the first RU corresponding to the STA11 is a first RU in FIG. 17, and the first RU corresponding to the STA12 is a second RU in FIG. 17. Within the TXOP of the AP1, in a case where the MAP TXS trigger frame (i.e., the first trigger frame) is received, and the first trigger frame satisfying the first condition is determined, the AP2 enables the uplink COFDMA mode, and receives the uplink data of the associated STA21 in the second RU corresponding to the STA21, and in a case where the uplink data sent from the STA21 is received, the AP2 sends the BA to the STA21 in the second RU corresponding to the STA21. For example, the second RU corresponding to the STA21 is the third RU and fourth RU in FIG. 17.

It should also be pointed out that the aforementioned eighth condition may be partially different with different transmission modes. For example, in a case where the coordinated transmission mode is a CBF mode and/or C-UL MU-MIMO mode, the eighth condition may contain the value of the transmission mode subfield being the second value; specifically, the eighth condition includes at least one of: a value of a first transmission mode subfield in a common information field of a first trigger frame being not a first value; a value of the first transmission mode subfield in the common information field of the first trigger frame being a second value; a value of a first sharing transmission indication subfield in the common information field of the first trigger frame being an eighth value; a value of a first uplink and downlink indication subfield in the common information field of the first trigger frame being a sixth value; the first trigger frame containing the user information subfield of the fourth STA with the identification information of the fourth STA; the value of the uplink and downlink indication subfield of the fourth STA in the user information subfield of the fourth STA of the first trigger frame being the sixth value; the value of the transmission mode subfield of the fourth STA in the user information subfield of the fourth STA of the first trigger frame being the second value; and the value of the transmission mode subfield of the fourth STA in the user information subfield of the fourth STA of the first trigger frame being not the first value.

In a case where the coordinated transmission mode is COFDMA and/or CSR, the eighth condition may contain the value of the transmission mode subfield being the third value. The eighth condition includes at least one of: the value of the first transmission mode subfield in the common information field of the first trigger frame being not the first value; the value of the first transmission mode subfield in the common information field of the first trigger frame being a third value; the value of the first sharing transmission indication subfield in the common information field of the first trigger frame being the eighth value; the value of the first uplink and downlink indication subfield in the common information field of the first trigger frame being the sixth value; the first trigger frame containing the user information subfield of the fourth STA with the identification information of the fourth STA; the value of the uplink and downlink indication subfield of the fourth STA in the user information subfield of the fourth STA of the first trigger frame being the sixth value; the value of the transmission mode subfield of the fourth STA in the user information subfield of the fourth STA of the first trigger frame being the third value; and the value of the transmission mode subfield of the fourth STA in the user information subfield of the fourth STA of the first trigger frame being not the first value.

It should be noted that the manner for judging whether the first trigger frame contains the user information subfield of the fourth STA with the identification information of the fourth STA may be: judging whether the identification information of the identification subfield of the user information field in the first trigger frame is the same as the 12 least significant bits of the AID of the fourth STA; if so, determining that the first trigger frame contains the user information subfield of the fourth STA with the identification information of the fourth STA; or judging whether the identification information of the identification subfield of the user information field in the first trigger frame is the same as the 12-bit VAID of the fourth STA; if so, determining that the first trigger frame contains the user information subfield of the fourth STA with the identification information of the fourth STA.

The aforementioned eighth condition at least include the user information subfield of the fourth STA with the identification information of the fourth STA contained in the first trigger frame. That is, the fourth STA parses the first trigger frame. in a case where the first trigger frame does not contain the user information field with the identification information of the fourth STA, the fourth STA may discard the first trigger frame. That is, the fourth STA receives the first trigger frame. If none of the User Info subfields of the first trigger frame has an AID12 subfield (identification subfield) that is equal to the 12 least significant bits of its own AID or VAID, the fourth STA may not send the uplink data to the AP (the second STA) associated with the fourth STA, nor is it prepared to receive the downlink data, and may enter sleep mode in some scenarios.

It should also be pointed out that the format of the first trigger frame may be pre-defaulted for all STAs in the network, that is, the STAs in the network use the same format of the first trigger frame. In a case where the format of the first trigger frame is different, the specific content of the eighth condition may also be different, which is described below, respectivley.

The first trigger frame containing the first transmission mode subfield. And, the first trigger frame contains the user information subfield of the fourth STA, that is, the first trigger frame contains the user information subfield of the fourth STA containing the identification information of the fourth STA. Optionally, the common information field and the user information subfield of the first trigger frame may not contain the uplink and downlink indication subfield. Optionally, the common information field of the first trigger frame does not contain the sharing transmission indication subfield. For example, the common information field of the first trigger frame may adopt the format of the aforementioned FIG. 4, and the user information subfield of the fourth STA may adopt the format of the aforementioned FIG. 5.

The eighth condition includes: the value of the first transmission mode subfield in the common information field of the first trigger frame being not the first value; and the first trigger frame containing the user information subfield of the fourth STA with the identification information of the fourth STA.

Alternatively, the eighth condition includes: the value of the first transmission mode subfield in the common information field of the first trigger frame being the second value (or the third value); and the first trigger frame containing the user information subfield of the fourth STA with the identification information of the fourth STA.

Optionally, the common information field of the first trigger frame does not contain the transmission mode subfield; the common information field of the first trigger frame contains the first sharing transmission indication subfield, and the value of the first sharing transmission indication subfield is the eighth value. The first trigger frame contains the user information subfield of the fourth STA, and the user information subfield of the fourth STA contains the identification subfield of the fourth STA, which is used to carry the identification information of the fourth STA; the user information subfield of the fourth STA further includes: the transmission mode subfield of the third STA. For example, the common information field of the first trigger frame may adopt the format of the aforementioned FIG. 6, and the user information subfield of the fourth STA may adopt the format of the aforementioned FIG. 7. The meanings of respective subfields in FIG. 6 and FIG. 7 are the same as those of the aforementioned embodiments, which will not be repeated herein.

The eighth condition includes: the value of the first sharing transmission indication subfield in the common information field of the first trigger frame being the eighth value; and the first trigger frame containing the user information subfield of the fourth STA with the identification information of the fourth STA.

It should be understood that the user information subfield of the fourth STA of the first trigger frame may contain a transmit power subfield of the fourth STA, or may not contain the transmit power subfield of the fourth STA. In a case where the user information subfield of the fourth STA of the first trigger frame contains the transmit power subfield of the fourth STA, the fourth STA may also determine the transmit power used by itself based on the transmit power subfield. Regarding the manner for determining the transmit power used by itself, it has been described in the aforementioned embodiments, which will not be repeated herein. Alternatively, in a case where the user information subfield of the fourth STA of the first trigger frame does not contain the transmit power subfield of the fourth STA, since the AP in this scenario has pre-performed a beam nulling operation on the STA that is not associated with itself, the transmit power of the fourth STA may be selected by itself based on an actual condition, which will not be repeated herein.

Optionally, the first trigger frame contains the first transmission mode subfield. And, the first trigger frame contains the user information subfield of the fourth STA, that is, the first trigger frame contains the user information subfield of the fourth STA containing the identification information of the fourth STA. Optionally, the common information field of the first trigger frame contains the first uplink and downlink indication subfield, and the value of the first uplink and downlink indication subfield is the sixth value. And/or, the user information subfield of the fourth STA of the first trigger frame contains the uplink and downlink indication subfield of the fourth STA, and the value of the uplink and downlink indication subfield of the fourth STA is the sixth value. Optionally, the common information field of the first trigger frame does not contain the sharing transmission indication subfield. For example, the common information field of the first trigger frame may adopt the format of the aforementioned FIG. 9, and the user information subfield of the fourth STA may adopt the format of the aforementioned FIG. 5. Alternatively, the common information field of the first trigger frame may adopt the format of the aforementioned FIG. 4, and the user information subfield of the fourth STA may adopt the format of the aforementioned FIG. 8. The meanings of respective subfields in FIG. 4, FIG. 5, FIG. 8 and FIG. 9 are the same as those of the aforementioned embodiments, which will not be repeated herein.

The eighth condition includes: the value of the first transmission mode subfield in the common information field of the first trigger frame being not the first value; the first trigger frame containing the user information subfield of the fourth STA with the identification information of the fourth STA; the value of the uplink and downlink indication subfield of the fourth STA in the user information subfield of the fourth STA of the first trigger frame being the sixth value.

Alternatively, the eighth condition includes: the value of the first transmission mode subfield in the common information field of the first trigger frame being the second value (or the third value); the first trigger frame containing the user information subfield of the fourth STA with the identification information of the fourth STA; the value of the uplink and downlink indication subfield of the fourth STA in the user information subfield of the fourth STA of the first trigger frame being the sixth value.

Alternatively still, the eighth condition includes: the value of the first transmission mode subfield in the common information field of the first trigger frame being not the first value (or the second value, or the third value); the value of the first uplink and downlink indication subfield in the common information field of the first trigger frame being the sixth value; and the first trigger frame containing the user information subfield of the fourth STA with the identification information of the fourth STA.

Alternatively, the eighth condition includes: the value of the transmission mode subfield of the fourth STA in the user information subfield of the fourth STA of the first trigger frame being the second value; the value of the first uplink and downlink indication subfield in the common information field of the first trigger frame being the sixth value; and the first trigger frame containing the user information subfield of the fourth STA with the identification information of the fourth STA.

Alternatively, the eighth condition includes: the value of the transmission mode subfield of the fourth STA in the user information subfield of the fourth STA of the first trigger frame being not the first value; the value of the first uplink and downlink indication subfield in the common information field of the first trigger frame being the sixth value; and the first trigger frame containing the user information subfield of the fourth STA with the identification information of the fourth STA.

That is, it is detected from respective user information subfields whether there is its own identification information, and it is determined whether the value of the transmission mode subfield of the fourth STA in the user information subfield of the fourth STA of the first trigger frame is the first value, and whether the value of the first uplink and downlink indication subfield is the sixth value; if the value of the transmission mode subfield of the fourth STA in the user information subfield of the fourth STA of the first trigger frame is not the first value, and there is its own identification information of the user information subfield, and the value of the first uplink and downlink indication subfield is the sixth value, it may be determined that the first trigger frame satisfies the eighth condition.

It should be understood that the above is only an exemplary description of the eighth condition. There may be other combinations in actual processing, which are not exhaustive herein. As long as at least one of the aforementioned eighth conditions is contained, it is within the protection scope of the present embodiment.

In an implementation, the trigger frame is a second trigger frame; receiving, by the fourth STA, a trigger frame sent from the first STA includes: receiving, by the fourth STA, the first frame sent from the second STA, the first frame being sent from the second STA after sending the second trigger frame, and the first frame being used to trigger the STA associated with the multiple STAs to perform a simultaneous uplink coordinated transmission. The multiple STAs include: a first STA and a second STA. Specifically, the first STA refers to a Sharing AP, and the second STA refers to a Shared AP. It should be understood that a number of the aforementioned Shared AP(s) (i.e., the second STA(s)) may be one or more.

The aforementioned second trigger frame may include at least the common information field and the user information subfield of the second STA. The first frame specifically may be a basic trigger (Basic Trigger) frame.

In this implementation, the method further includes: after receiving the first frame, sending, by the fourth STA, uplink data to the second STA; and receiving, by the fourth STA, a BA sent from the second STA, which may be pecifically: after the second duration from that the first frame is received, sending, by the fourth STA, the uplink data to the second STA; receiving, by the fourth STA, the BA sent from the second STA after the second duration from that the transmission of the uplink data is completed. Herein, the second duration may be the same as or different from the aforementioned first duration. In an example, the second duration may refer to a SIFS.

In conjunction with FIG. 14 and FIG. 18, in FIG. 14 and FIG. 18, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 18, within AP1's own TXOP, the AP1 sends the basic trigger frame to the STA1 after the SIFS time from that the MAP TXS trigger frame (i.e., the second trigger frame) is sent; the AP1 receives the uplink data sent from the STA1 after the SIFS time from that the basic trigger frame is sent, and in a case where the uplink data sent from the STA1 is received, the AP1 sends the BA to the STA1 after the SIFS time. Within the TXOP of the AP1, in a case where the MAP TXS trigger frame (i.e., the second trigger frame) is received, and the second trigger frame satisfying the second condition is determined, the AP2 enables the legacy uplink TXOP sharing mode, and sends the basic trigger frame to the STA2 after the SIFS time from that the second trigger frame is received, receives the uplink data sent from the STA2 after the SIFS time from that the basic trigger frame is sent, and in a case where the uplink data sent from the STA2 is received, the AP2 sends the BA to the STA2 after the SIFS time.

In an implementation, the trigger frame is a third trigger frame; and the receiving, by the fourth STA, the trigger frame sent from the first STA includes: receiving, by the fourth STA, the third trigger frame sent from the first STA, where the third trigger frame is used for the multiple STAs to perform a simultaneous downlink coordinated transmission. The multiple STAs include: a first STA and a second STA; and the second STA is different from the first STA.

In this implementation, the method further includes: in a case where the third trigger frame satisfies the ninth condition, receiving, by the fourth STA, the downlink data sent from the second STA; and sending, by the fourth STA, a block acknowledgment (BA) to the second STA.

Receiving the downlink data sent from the second STA may be receiving the downlink data sent from the second STA after a third duration from that the third trigger frame is received. The sending, by the fourth STA, the block ACK (BA) to the second STA may include: sending, by the fourth STA, the block ACK (BA) to the second STA after the third duration from that the reception of the downlink data is completed. Herein, the third duration may be the same as or different from any one of the first duration, and the second duration. In an example, the third duration may refer to a SIFS.

In conjunction with FIG. 19 and FIG. 20, in FIG. 19 and FIG. 20, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 20, within the TXOP of the AP1, the AP1 performs a beam nulling operation on the non-associated STA2 after the SIFS time from that the MAP TXS trigger frame (i.e., the third trigger frame) is sent, sends the downlink data to the STA1, and receives the BA sent from the STA1 after a SIFS duration. Within the TXOP of the AP1, the AP2 performs a beam nulling operation on the non-associated STA1 after the SIFS time from that the MAP TXS trigger frame (i.e., the third trigger frame) is received, sends the downlink data to the STA2, and receives the BA sent from STA2 after the SIFS duration.

Optionally, the receiving, the downlink data sent from the second STA specifically may be: receiving the downlink data sent from the second STA on a corresponding second RU after the third duration from that the third trigger frame is received; where the corresponding second RU is a resource corresponding to the fourth STA. The sending the block ACK (BA) to the second STA may include: sending the BA to the second STA on the corresponding second RU.

In the present implementation, the moment when the downlink data of the first STA is sent may be the same as the moment when the downlink data of the second STA is sent. That is, the first STA and the second STA perform a simultaneous downlink transmission.

In conjunction with FIG. 21 and FIG. 22, FIG. 21 and FIG. 22 are schematic diagrams of the STA enabling the downlink CSR mode. Herein, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 22, within the TXOP of the AP1, the AP1 sends the downlink data to the STA1 after the SIFS time from that the MAP TXS trigger frame (i.e., the third trigger frame) is sent, and receives the BA sent from the STA1 after the SIFS time from that the transmission of the downlink data to the STA1 is completed. Within the TXOP of the AP1, the AP2 sends the downlink data to STA2 after the SIFS time from that the MAP TXS trigger frame (i.e., the third trigger frame) is received, and receives the BA sent from the STA2 after the SIFS time from that the transmission of the downlink data to the STA2 is completed.

In conjunction with FIG. 23 and FIG. 24, FIG. 23 and FIG. 24 are schematic diagrams of the first STA enabling the COFDMA mode. In FIG. 23 and FIG. 24, the AP1 is a Sharing AP (the first STA), and the AP2 and the AP3 are both Shared APs (i.e., the second STA). In conjunction with FIG. 24, within the TXOP of the AP1, the AP1 sends the downlink data in the first RU (i.e., the TXOP of the AP1 shown in FIG. 23 and FIG. 24) corresponding to its own STA after the SIFS time from that the MAP TXS trigger frame (i.e., a third trigger frame) is sent. Within the TXOP of the AP1, the AP2 and AP3 send the downlink data in the second RU corresponding to their own STAs (i.e., the TXOP of the AP2 and the sub-TXOP of the AP3 shown in FIG. 23 and FIG. 24) after the SIFS time from that the MAP TXS trigger frame (i.e., the third trigger frame) is received.

It should also be pointed out that the aforementioned ninth condition may be partially different with different transmission modes. For example, in a case where the coordinated transmission mode is the downlink CBF mode, the sixth condition may contain the value of the transmission mode subfield being the second value; the ninth condition, being described in detail, may include at least one of: a value of a third sharing transmission indication subfield in a common information field of the third trigger frame being an eighth value; a value of a third uplink and downlink indication subfield in the common information field of the third trigger frame being a seventh value; a value of a third transmission mode subfield in the common information field of the third trigger frame being not a first value; a value of the third transmission mode subfield in the common information field of the third trigger frame being a second value; the third trigger frame containing the user information subfield of the fourth STA with the identification information of the fourth STA; the value of the transmission mode subfield of the fourth STA in the user information subfield of the fourth STA of the third trigger frame being the second value; the value of the transmission mode subfield of the fourth STA in the user information subfield of the fourth STA of the third trigger frame being not the first value; and a value of an uplink and downlink indication subfield of a fourth STA in the user information subfield of the fourth STA of the third trigger frame being the seventh value.

In a case of the downlink COFDMA and/or CSR mode, the ninth condition may contain the value of the transmission mode subfield being the third value; specifically, the ninth condition may include at least one of: the value of the third sharing transmission indication subfield in the common information field of the third trigger frame being the eighth value; the value of the third uplink and downlink indication subfield in the common information field of the third trigger frame being the seventh value; the value of the third transmission mode subfield in the common information field of the third trigger frame being not the first value; the value of the third transmission mode subfield in the common information field of the third trigger frame being the third value; the third trigger frame containing the user information subfield of the fourth STA with the identification information of the fourth STA; the value of the transmission mode subfield of the fourth STA in the user information subfield of the fourth STA of the third trigger frame being the third value; the value of the transmission mode subfield of the fourth STA in the user information subfield of the fourth STA of the third trigger frame being not the first value; and a value of an uplink and downlink indication subfield of a fourth STA in the user information subfield of the fourth STA of the third trigger frame being the seventh value.

It should be noted that the manner for judging whether the third trigger frame contains the identification information of the fourth STA may be: judging whether the identification information of the identification subfield of the user information field in the first trigger frame being the same as the 12 least significant bits of the AID of the fourth STA; if so, determining that the identification information of the fourth STA is contained; and/or judging whether the identification information of the identification subfield of the user information field being the same as the 12-bit VAID of the fourth STA; if so, determining that the identification information of the fourth STA is contained.

Although the third trigger frame is used to trigger the second STA to perform a simultaneous downlink transmission, together with the first STA, it still needs to carry the user info subfield of the STA (i.e., the fourth STA) associated with the shared AP, which is intended to ensure that the STA (i.e., the fourth STA) associated with the shared AP remain awake and ready to receive downlink data sent from the associated AP. Therefore, the aforementioned ninth condition at least include the third trigger frame containing the user information subfield of the fourth STA with the identification information of the fourth STA. That is, the fourth STA parses the third trigger frame. In a case where the third trigger frame does not contain the user information field with the identification information of the fourth STA, the fourth STA may discard the third trigger frame. That is, the fourth STA receives the third trigger frame. If none of the User Info subfields of the third trigger frame has an AID12 subfield (identification subfield) that is equal to the 12 least significant bits of its own AID or VAID, the fourth STA may not send the uplink data to the AP (the second STA) associated with the fourth STA, nor is it prepared to receive the downlink data, and may enter sleep mode in some scenarios.

Specifically, the common information field of the third trigger frame does not contain the transmission mode subfield; the common information field of the third trigger frame contains the third sharing transmission indication subfield, and the value of the third sharing transmission indication subfield is the eighth value. The third trigger frame contains the user information subfield of the fourth STA, and the user information subfield of the fourth STA contains the identification subfield of the fourth STA, which is used to carry the identification information of the fourth STA; the user information subfield of the fourth STA further includes: the transmission mode subfield of the fourth STA. For example, the common information field of the third trigger frame may adopt the format of the aforementioned FIG. 6, and the user information subfield of the fourth STA may adopt the format of the aforementioned FIG. 7. The meanings of respective subfields in FIG. 6 and FIG. 7 are the same as those of the aforementioned embodiments, which will not be repeated herein.

The ninth condition includes: the third trigger frame containing the user information subfield with the identification information of the fourth STA; the value of the transmission mode subfield of the fourth STA in the user information subfield of the fourth STA of the third trigger frame being the second value (or the third value).

Alternatively, the above-mentioned ninth condition includes: the third trigger frame containing the user information subfield with the identification information of the fourth STA; the value of the transmission mode subfield of the fourth STA in the user information subfield of the fourth STA of the third trigger frame being not the first value. The specific processing manner is similar to the above condition, which will not be repeated.

Optionally, the above-mentioned ninth condition includes: the value of the third sharing transmission indication subfield in the common information field of the third trigger frame being the eighth value; the third trigger frame containing the user information subfield with the identification information of the fourth STA; the value of the transmission mode subfield of the fourth STA in the user information subfield of the fourth STA of the third trigger frame being not the first value.

Alternatively, the above-mentioned ninth condition includes: the value of the third sharing transmission indication subfield in the common information field of the third trigger frame being the eighth value; the third trigger frame containing the user information subfield with the identification information of the fourth STA; the value of the transmission mode subfield of the fourth STA in the user information subfield of the fourth STA of the third trigger frame being the second value (or the third value).

Optionally, the third trigger frame contains the third transmission mode subfield. The common information field of the third trigger frame contains the third uplink and downlink indication subfield, and the value of the third uplink and downlink indication subfield is the seventh value. The common information field of the third trigger frame does not contain the sharing transmission indication subfield. For example, the common information field of the first trigger frame may adopt the format of the aforementioned FIG. 9, and the user information subfield of the fourth STA may adopt the format of the aforementioned FIG. 5. Alternatively, the common information field of the first trigger frame may adopt the format of the aforementioned FIG. 4, and the user information subfield of the fourth STA may adopt the format of the aforementioned FIG. 8. The meanings of respective subfields in FIG. 4, FIG. 5, FIG. 8 and FIG. 9 are the same as those of the aforementioned embodiments, which will not be repeated herein.

Based on the aforementioned third trigger frame, the third trigger frame contains the user information subfield of the fourth STA, and/or the user information subfield of the fourth STA of the third trigger frame contains the uplink and downlink indication subfield of the fourth STA, and the value of the uplink and downlink indication subfield of the fourth STA is the seventh value.

The ninth condition includes: the third trigger frame containing the user information subfield of the fourth STA with the identification information of the fourth STA; a value of an uplink and downlink indication subfield of a fourth STA in the user information subfield of the fourth STA of the third trigger frame being the seventh value.

Alternatively, the ninth condition includes: the value of the third transmission mode subfield in the common information field of the third trigger frame being not the first value; the third trigger frame containing the user information subfield of the fourth STA with the identification information of the fourth STA; a value of an uplink and downlink indication subfield of a fourth STA in the user information subfield of the fourth STA of the third trigger frame being the seventh value.

Alternatively, the ninth condition includes: the value of the third transmission mode subfield in the common information field of the third trigger frame being the second value (or the third value); the third trigger frame containing the user information subfield of the fourth STA with the identification information of the fourth STA; a value of an uplink and downlink indication subfield of a fourth STA in the user information subfield of the fourth STA of the third trigger frame being the seventh value.

In the above-mentioned ninth condition, a value of an uplink and downlink indication subfield of a fourth STA in the user information subfield of the fourth STA of the third trigger frame being the seventh value may also be replaced as the value of the third uplink and downlink indication subfield in the common information field of the third trigger frame being the seventh value.

It should be pointed out that the aforementioned is only an exemplary description of the possible formats of the third trigger frame and the possible conditions of the ninth condition. In actual processing, the content that can be contained in the third trigger frame has been described in the aforementioned embodiments. As long as at least one of the aforementioned contents is contained, it is within the protection scope of the present embodiment. Accordingly, the content that may be contained in the ninth condition has also been described. As long as at least one of the ninth conditions is contained, it is also within the protection scope of the present embodiment. However, it is not exhaustive herein.

In an implementation, the trigger frame is a fourth trigger frame; the fourth STA receives the fourth trigger frame sent from the first STA, the fourth trigger frame is used for the multiple STAs to perform a simultaneous corporative transmission, and the fourth trigger frame is used for the multiple STAs to perform the simultaneous corporative transmission. The fourth trigger frame is used to trigger the third STA to perform a simultaneous uplink coordinated transmission, and to trigger the second STA to perform a simultaneous downlink coordinated transmission. The multiple STAs include: the third STA and the second STA; and the third STA is associated with the first STA.

The method further includes: in a case where the fourth trigger frame satisfies the tenth condition, receiving, by the fourth STA, the downlink data sent from the second STA after the fourth duration from that the fourth trigger frame is received; and sending, by the fourth STA, the BA to the second STA. Herein, the fourth duration may be the same as or different from any one of the first duration, the second duration and the third duration described above. In an example, the fourth duration may refer to a SIFS.

Specifically, the first STA refers to a Sharing AP, the second STA refers to a Shared AP, the third STA refers to a STA (i.e., non-AP STA) associated with the Sharing AP, and the fourth STA refers to a STA (i.e., non-AP STA) associated with the Shared AP. It should be understood that a number of the aforementioned Shared AP(s) (i.e., the second STA(s)) may be one or more, a number of the aforementioned third STA(s) may be one or more, and a number of the aforementioned fourth STA(s) may be one or more. It should also be noted that the first STA and one or more second STAs may be APs in a same coordinated set; specifically, the one or more second STAs may be Shared APs located within the transmission range of the first STA.

In the present implementation, the moment when the third STA sends the uplink data to the first STA is the same as the moment when the second STA sends the downlink data to the fourth STA. That is, the third STA and the second STA perform a simultaneous coordinated transmission.

In conjunction with FIG. 27 and FIG. 28, FIG. 27 and FIG. 28 are schematic diagrams of the STA enabling the downlink CSR mode. Herein, the AP1 is a Sharing AP (the first STA), the AP2 is a Shared AP (i.e., the second STA), the STA1 is the third STA associated with the Sharing AP (the first STA), and the STA2 is the fourth STA associated with the Shared AP (the second STA). In conjunction with FIG. 28, within AP1's own TXOP, the AP1 receives the uplink data sent from the STA1 to the AP1 after the SIFS time from that the AP1 sends the MAP TXS trigger frame (i.e., the fourth trigger frame) and sends the BA to the STA1 after the SIFS time from that the reception of the uplink data sent from the STA1 is completed; at the same time, within the TXOP of the AP1, the AP2 sends the downlink data to the STA2 after the SIFS time from that the AP2 receives the MAP TXS trigger frame (i.e., the fourth trigger frame) sent from the AP1, and receives the BA sent from the STA2 after the SIFS time from that the transmission of the downlink data is completed.

Furthermore, the tenth condition includes at least one of: the fourth trigger frame containing the user information subfield of the fourth STA with the identification information of the fourth STA; and the value of the uplink and downlink indication subfield of the fourth STA in the user information subfield of the fourth STA of the fourth trigger frame being the seventh value.

The tenth condition may at least include the fourth trigger frame containing the user information subfield of the fourth STA with the identification information of the fourth STA. That is, the fourth STA parses the fourth trigger frame. In a case where the fourth trigger frame does not contain the user information field with the identification information of the fourth STA, the fourth STA may discard the fourth trigger frame. That is, the fourth STA receives the fourth trigger frame. If none of the User Info subfields of the fourth trigger frame has an AID12 subfield (identification subfield) that is equal to the 12 least significant bits of its own AID or VAID, the fourth STA may not send the uplink data to the AP (the second STA) associated with the fourth STA, nor is it prepared to receive the downlink data, and may enter sleep mode in some scenarios.

In the present implementation, the common information field of the fourth trigger frame does not contain the transmission mode subfield; the common information field of the fourth trigger frame may contain the fourth sharing transmission indication subfield, and the value of the fourth sharing transmission indication subfield is the eighth value.

The fourth trigger frame may contain the user information subfield of the fourth STA, and the user information subfield of the fourth STA contains the identification subfield of the fourth STA, which is used to carry the identification information of the fourth STA; the user information subfield of the fourth STA further includes: the uplink and downlink indication subfield of the fourth STA, and the value of the uplink and downlink indication subfield of the fourth STA is the seventh value. Based on the aforementioned, the common information field of the fourth trigger frame may not contain the uplink and downlink indication subfield. For example, the common information field of the fourth trigger frame may adopt the format of the aforementioned FIG. 6, and the user information subfield of the fourth STA may adopt the format of the aforementioned FIG. 7. The meanings of respective subfields in FIG. 6 and FIG. 7 are the same as those of the aforementioned embodiments, which will not be repeated herein.

For example, the tenth condition may include: the fourth trigger frame containing the user information subfield of the fourth STA with the identification information of the fourth STA; the value of the uplink and downlink indication subfield of the fourth STA in the user information subfield of the fourth STA of the fourth trigger frame being the seventh value. That is, the fourth STA detects whether there is its own identification information from respective user information subfields of the fourth trigger frame. If so, it is further judged whether the value of the uplink and downlink indication subfield of the fourth STA in the user information subfield of the fourth STA being the seventh value; if the value of the uplink and downlink indication subfield of the fourth STA is the seventh value, it is determined that the tenth condition is satisfied. Furthermore, the fourth STA may wait to receive the downlink data sent from the STA (i.e., the second STA) associated with the fourth STA.

For example, the tenth condition may only include: the fourth trigger frame containing the user information subfield of the fourth STA with the identification information of the fourth STA. That is, the fourth STA detects whether there is its own identification information from respective user information subfields of the fourth trigger frame, and if so, it is determined that the tenth condition is satisfied. Furthermore, the fourth STA may wait to receive the downlink data sent by the STA (i.e., the second STA) associated with the fourth STA.

It should be pointed out that any two or any three aspects of the communication methods in the embodiments of the first aspect to the fourth aspect provided in the aforementioned of the present embodiment may be used in combination, or the communication methods of the embodiments of the first aspect to the fourth aspect may be used in combination, which are within the scope of protection of the present embodiment.

The solutions provided in the present embodiment, the first STA sends the trigger frame for establishing the coordinated transmission between the multiple STAs, thereby providing a solution for efficiently establishing the multi-STA cooperation. Specifically, the solutions provided in the present embodiment may control the multiple STAs to cooperatively perform a simultaneous uplink transmission and/or a simultaneous downlink transmission by sending only one trigger frame, which may simplify the sharing procedure and reduce the signaling overhead used to establish the coordinated transmission, thereby achieving efficient establishment of the multi-STA cooperation.

The following is an exemplary process description in conjunction with the communication methods provided by the four aspect embodiments of the aforementioned first to fourth aspects.

In the scenarios shown in FIG. 12 and FIG. 13, the AP1 (Sharing AP, i.e., the first STA) is associated with the STA1 (i.e., the third STA), and the AP2 (Shared AP, i.e., the second STA) is associated with the STA2 (i.e., the fourth STA). In the CBF mode and/or C-UL MU-MIMO mode, the process of AP1 (sharing AP) triggering the simultaneous uplink transmission of STA1 and STA2 is shown in FIG. 32, which specifically includes the following contents.

S3210: generating, by an AP1, a first trigger frame. The first trigger frame in this step is a MAP TXS trigger frame in FIG. 13.

Specifically, after completing interactions with other devices in the multi-AP coordinated set in the preparation phase and the probe phase, the AP1 knows that the STA2 in BSS2 has uplink data to be sent, and obtains the AID or VAID information of the STA2. The AP1 generates the first trigger frame (i.e., the MAP TXS trigger frame in FIG. 13) for triggering the simultaneous uplink transmission of the STA1 (associated with the AP1) and the STA2 (associated with the AP2).

The first trigger frame may contain a User info subfield of the STA1 (a user information subfield of the STA1) and a User info subfield of the STA2 (a user information subfield of the STA2). Respective possible formats of the first trigger frame may be the same as those described in the aforementioned embodiments, which will not be repeated herein.

S3220: sending, by the AP1, the first trigger frame. Similarly, the first trigger frame in this step is a MAP TXS trigger frame in FIG. 13.

Herein, the AP1 may send the first trigger frame in broadcasting or multicasting; and the the receiver address of the first trigger frame is set as the broadcast address or multicast address.

S3231: performing, by the AP1, a beam nulling operation on a non-associated STA2 after SIFS time from that the first trigger frame is sent.

S3232: receiving, by a STA1, the first trigger frame sent from the AP1, and in a case where the first trigger frame satisfies a fifth condition, sending, by the STA1, uplink data to the AP1 after the SIFS from that the first trigger frame is received.

For example, the common information field of the first trigger frame uses the format of the aforementioned FIG. 6, and the format of the user information field of the STA1 adopts the format shown in FIG. 7, that is, the common information field of the first trigger frame contains: a first sharing transmission indication subfield; the user information field of the STA1 contains: an identification subfield of the STA1, which is used to carry 12 least significant bits of the AID of the STA1, or a 12-bit VAID; the user information field of the STA1 may further include: a transmission mode subfield of the STA1. Correspondingly, the fifth condition may include: the first trigger frame containing the user information subfield of the STA1 with the identification information of the STA1; and the value of the first sharing transmission indication subfield of the common info field of the first trigger frame being the eighth value. It should be understood that this is only an exemplary description. In a case where the first trigger frame is in other formats, the content that may be contained in the fifth condition has been described in detail in the aforementioned embodiments, which will not be repeated herein.

For example, this step specifically may be: when the STA1 receives a first trigger frame in which the AID12 subfield (i.e., identification subfield) in a piece of User Info is equal to the 12 least significant bits of its own AID or VAID, and the MAP TXS Indication subfield (first sharing transmission indication subfield) in the Common info (common information field) of the first trigger frame is equal to 1 (i.e., the eighth value), the STA1 will send uplink data to AP1 within the allocated TXOP time after receiving the SIFS of the first trigger frame, according to the requirements of other subfields in the Common info of the first trigger frame and the User Info of STA1.

S3241: receiving, by an AP2, the first trigger frame sent from the AP1, and in a case where the first trigger frame satisfies the first condition, enabling an uplink CBF mode and/or C-UL MU-MIMO mode, performing a beam nulling operation on the STA1, and preparing to receive uplink data sent from a STA 2.

For example, the common information field of the first trigger frame uses the format of the aforementioned FIG. 6, and the format of the user information field adopts the format shown in FIG. 7, that is, the common information field of the first trigger frame contains: a first sharing transmission indication subfield; the user information field contains: an identification subfield of the STA, which is used to carry 12 least significant bits of the AID of the STA, or a 12-bit VAID; the user information field of the STA may further include: a transmission mode subfield of the STA. Correspondingly, the first condition includes: the value of the first sharing transmission indication subfield in the common information field of the first trigger frame being the eighth value (for example, 1); the first trigger frame containing the user information subfield of the STA2 with the identification information of the STA2 (i.e., the STA associated with the AP2); the value of the transmission mode subfield of the STA2 in the user information subfield of the STA2 of the first trigger frame being the second value (for example, 1); the user information subfield of the first trigger frame not containing the identification information of the AP2. It should be understood that this is only an exemplary description. In a case where the first trigger frame is in other formats, the content that may be contained in the first condition has been described in detail in the aforementioned embodiments, which will not be repeated herein.

This step may be specifically described as follows: when AP2 receives the first PPDU (i.e., an EHT PPDU) containing the first trigger frame, if the MAP TXS indication bit (i.e., the first indication bit) of a preamble of the first PPDU is 1, the AP2 will not discard the first trigger frame and parse the first trigger frame (the MAP TXS trigger frame in FIG. 13); or after the AP2 receives the first PPDU (i.e., an EHT PPDU) containing the first trigger frame, the AP2 ignores the UL/DL indication information of the preamble and directly parses the first trigger frame. If the AP2 parses the first trigger frame and determines that the first trigger frame satisfies the first condition, that is, a) the MAP TXS Indication subfield (first sharing transmission indication subfield) of the Common info of the first trigger frame is equal to 1, b) there is no AID12 subfield of all User Info of the first trigger frame that is equal to the 12 least significant bits of its own AID or VAID, c) there is an AID12 subfield of the User Info of the first trigger frame that is equal to the 12 least significant bits of the AID or VAID of the STA2 associated with itself, d) the value of the MAP TXS mode subfield (transmission mode subfield) in the User Info of STA2 is equal to 1, then AP2 enables the uplink coordinated beamforming/coordinated MU-MIMO, performs a beam nulling operation on other non-associated STAs (STA1) obtained in the preparation phase (the behavior is consistent with the downlink CBF), and prepares to receive the uplink data sent from the associated STA 2.

S3242: receiving, by the STA2, the first trigger frame sent from the AP1, and in a case where the first trigger frame satisfies an eighth condition, sending, by the STA1, the uplink data to the AP2 after the SIFS from that the first trigger frame is received.

For example, the common information field of the first trigger frame uses the format of the aforementioned FIG. 6, and the format of the user information field adopts the format shown in FIG. 7, that is, the common information field of the first trigger frame contains: a first sharing transmission indication subfield; the user information field contains: an identification subfield of the STA, which is used to carry 12 least significant bits of the AID of the STA, or a 12-bit VAID; the user information field of the STA may further include: a transmission mode subfield of the STA. Correspondingly, the eighth condition includes: the value of the first sharing transmission indication subfield in the common information field of the first trigger frame being the eighth value (for example, 1); the first trigger frame containing the user information subfield with the identification information of the STA2. It should be understood that this is only an exemplary description. In a case where the first trigger frame is in other formats, the content that may be contained in the eighth condition has been described in detail in the aforementioned fourth aspect embodiments, which will not be repeated herein.

This step may be specifically described as follows: the STA2 receiving the first trigger frame, and after parsing, a value of the MAP TXS Indication subfield (first sharing transmission indication subfield) of the Common info (common information field) of the first trigger frame being equal to 1, and there being an AID12 subfield of the User Info of the first trigger frame that is equal to the 12 least significant bits of its own AID or VAID. Then, the STA2 will send the uplink data to the AP2 associated with the STA2 according to the requirements of other fields in the Common info and User Info of the first trigger frame after SIFS within the allocated TXOP time. Herein, the requirements for other fields are not repeated herein. As long as it may be determined that the uplink data is sent within the allocated TXOP time, it is within the protection scope of the present embodiment.

S3251: sending, by the AP1, a BA to the STA1 after receiving the uplink data sent from the STA1.

S3252: sending, by the AP2, the BA to the STA2 after receiving the uplink data sent from the STA2.

In the scenarios shown in FIG. 19 and FIG. 20, the AP1 (Sharing AP, i.e., the first STA) is associated with the STA1 (i.e., the third STA), the AP2 (Shared AP, i.e., the second STA) is associated with the STA2 (i.e., the fourth STA), and the AP1 (sharing AP) triggers the procedures of the AP2 and the AP1 to perform a simultaneous downlink transmission, specifically, as shown in FIG. 33, including at least the following contents.

S3310: generating, by an AP1, a third trigger frame. The third trigger frame in this step is a MAP TXS trigger frame in FIG. 20.

Specifically, after the AP1 completes interactions with other devices in the multi-AP coordinated set in the preparation phase and the probe phase, the AP1 knows that the AP2 in the BSS2 has downlink data to be sent, so the AP1 generates the third trigger frame (i.e., a MAP TXS trigger frame), which is used to trigger the simultaneous downlink transmission with the AP2, and contains the User info field of the AP2. Respective possible formats of the third trigger frame may be the same as those described in the aforementioned embodiments, which will not be repeated herein.

S3320: sending, by the AP1, the third trigger frame. Herein, AP1 may send the third trigger frame in unicasting, and its receiver address is set as the address of the AP2. Alternatively, the third trigger frame may be sent in multicasting or broadcasting, and the specific descriptions are the same as those of the aforementioned embodiments, which will not be repeated herein.

S3331: performing, by the AP1, a beam nulling operation on the STA2 after SIFS from that the third trigger frame is sent and sending downlink data to the STA1. That is, the AP1 performs a beam nulling operation on the non-associated STA2, after the SIFS time from that the third trigger frame is sent, and sends the downlink data to the STA1 associated with itself at the same time.

S3332: receiving, by the STA1, the third trigger frame sent from the AP1, and in a case where the third trigger frame satisfies the sixth condition, receiving the downlink data sent from the AP1.

For example, the sixth condition includes: the third trigger frame containing a user information subfield with the identification information of the STA1. That is, after receiving the third trigger frame, the STA1 determines that there is no AID12 subfield in all User Info that is equal to the 12 least significant bits of its own AID or VAID, and then discards the frame. As another example, the common information field of the third trigger frame may adopt the format of FIG. 9, and the user information subfield of the STA1 may adopt the format of FIG. 5. Alternatively, the common information field of the third trigger frame may adopt the format of the aforementioned FIG. 4, and the user information subfield of the STA1 may adopt the format of the aforementioned FIG. 8. The sixth condition includes: the third trigger frame containing the user information subfield of the STA1 with the identification information of the STA1; the value of the uplink and downlink indication subfield of the STA1 in the user information subfield of the STA1 of the third trigger frame being the seventh value (for example, 1). That is, if the User Info of the third trigger frame contains an AID12 subfield that is equal to the 12 least significant bits of its own AID or VAID, and the UL/DL Indication field of the user info or common info is equal to 1, the STA1 prepares to receive the downlink data from the associated AP. It should be understood that this is only an exemplary description. When the third trigger frame is in other formats, the contents that may be contained in the sixth condition have been described in detail in the aforementioned embodiments, which will not be repeated herein.

S3341: receiving, by the AP2, the third trigger frame sent from the AP1, and in a case where the third trigger frame satisfies the third condition, performing the beam nulling operation on the STA1, and sending the downlink data to the STA2 after the SIFS from that the third trigger frame is received.

For example, the common information field of the third trigger frame uses the format of the aforementioned FIG. 6, and the format of the user information field adopts the format shown in FIG. 7, and the third condition includes: the value of the third sharing transmission indication subfield in the common information field of the first trigger frame being the eighth value (for example, 1); the third trigger frame containing the user information subfield with identification information of the AP2; the value of the transmission mode subfield of the AP2 in the user information subfield of the AP2 of the third trigger frame being the second value (for example, 1). It should be understood that this is only an exemplary description. When the third trigger frame is in other formats, the contents that may be contained in the third condition have been described in detail in the aforementioned embodiments, which will not be repeated herein.

This step may be specifically described as follows: after the AP2 receives the first PPDU (i.e., an EHT PPDU) containing the third trigger frame, if the MAP TXS indication bit (i.e., the first indication bit) of the preamble of the first PPDU is 1, the AP2 does not discard the third trigger frame and parses the third trigger frame; or after the AP2 receives the first PPDU (i.e., an EHT PPDU) containing the third trigger frame, the AP2 ignores the UL/DL indication information of the preamble and directly parses the third trigger frame. If the AP2 parses the third trigger frame and determines that the third trigger frame satisfies the third condition, that is, a) the MAP TXS Indication subfield of the Common info is equal to 1, b) there is an AID12 subfield of the User Info that is equal to the 12 least significant bits of its own AID or VAID, and c) the MAP TXS mode subfield of its own User Info is equal to 1, then AP2 enables the downlink coordinated beamforming, and the AP2 performs a beam nulling operation on other non-associated STAs (STA1) obtained in the preparation phase. The AP2 prepares to send the downlink data to associated STA2 within the allocated TXOP time after the SIFS.

S3342: receiving, by the STA2, the third trigger frame sent from the AP1, and in a case where the third trigger frame satisfies the ninth condition, receiving the downlink data sent from the AP2 after the SIFS from that the third trigger frame is received.

For example, the ninth condition includes: the third trigger frame containing a user information subfield with the identification information of the STA2. That is, after receiving the third trigger frame, the STA2 determines that there is no AID12 subfield in all User Infos that is equal to the 12 least significant bits of its own AID or VAID, and then discards the frame. As another example, the common information field of the third trigger frame may adopt the format of FIG. 9, and the user information subfield of the STA2 may adopt the format of FIG. 5. Alternatively, the common information field of the third trigger frame may adopt the format of the aforementioned FIG. 4, and the user information subfield of the STA2 may adopt the format of the aforementioned FIG. 8. The ninth condition includes: the third trigger frame containing the user information subfield of the STA2 with the identification information of the STA2; the value of the uplink and downlink indication subfield of the STA2 in the user information subfield of the STA2 of the third trigger frame being the seventh value (for example, 1). That is, if the User Info of the third trigger frame contains an AID12 subfield that is equal to the 12 least significant bits of its own AID or VAID, and the UL/DL Indication field of the user info or common info is equal to 1, the STA2 prepares to receive the downlink data from the associated AP. It should be understood that this is only an exemplary description. When the third trigger frame is in other formats, the contents that may be contained in the ninth condition have been described in detail in the aforementioned embodiments, which will not be repeated herein.

S3351: sending, by the STA1, a BA to the AP1.

S3352: sending, by the STA2, a BA to the AP2.

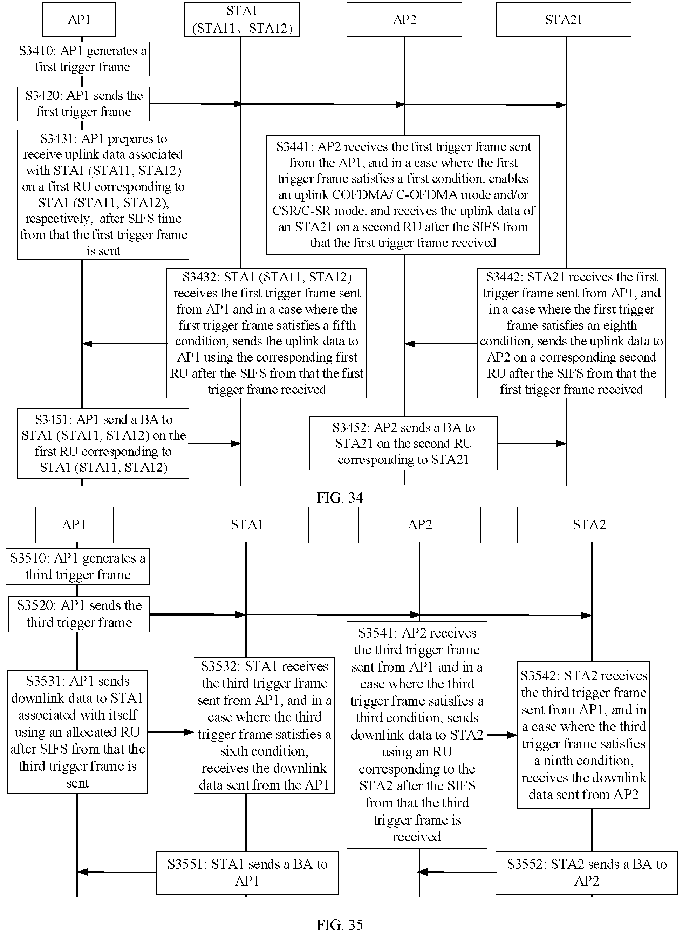

In the uplink CSR scenario shown in FIG. 14, the AP1 (Sharing AP, i.e., the first STA) is associated with the STA1 (i.e., the third STA), and the AP2 (Shared AP, i.e., the second STA) is associated with the STA2 (i.e., the fourth STA). The procedures of the AP1 (sharing AP) triggering STA1 and STA2 to perform a simultaneous uplink transmission are shown in FIG. 15, and with respect to the processing flow of FIG. 14 and FIG. 15, which have been described in the aforementioned embodiments of the first aspect to the fourth aspect, respectively, which will not be repeated in this example. In the uplink COFDMA scenario shown in FIG. 16, the AP1 (Sharing AP, i.e., the first STA) is associated with the STA11 and STA12 (i.e., two third STAs), and the AP2 (Shared AP, i.e., the second STA) is associated with the STA21 (i.e., the fourth STA). The procedures of the AP1 (the sharing AP) triggering the STA11, the STA12, and the STA21 to perform a simultaneous uplink transmission are shown in FIG. 17. With reference to FIG. 34, the processing flows of respective devices in the uplink COFDMA scenario will be described below.

S3410: generating, by an AP1, a first trigger frame. The first trigger frame in this step is a MAP TXS trigger frame in FIG. 17. Specifically, after the AP1 completes interactions with other devices in the multi-AP coordinated set in the preparation phase and the probe phase (COFDMA may not require a probe phase, and whether a probe phase is required according to different RSSI measurement manners), the AP1 knows that the STA21 in the BSS2 has uplink data to be sent and obtains the AID or VAID information of the STA21. Then, the AP1 generates a MAP TXS trigger frame (i.e., the first trigger frame) used to trigger the STA1 (STA11, STA12) and the STA21 to perform a simultaneous uplink transmission, and the MAP TXS trigger frame contains User info fields of the STA11, STA12, and STA21. Respective possible formats of the first trigger frame may be the same as those described in the aforementioned embodiments of the first aspect, which will not be repeated herein.

S3420: sending, by the AP1, the first trigger frame. Similarly, the first trigger frame in this step is a MAP TXS trigger frame in FIG. 17.

Specifically, the AP1 may send the first trigger frame in broadcasting or multicasting; and the receiver address of the first trigger frame is set as the broadcast address or multicast address.

S3431: preparing, by the AP1, to receive uplink data associated with the STA1 (STA11, STA12) in a first RU corresponding to a STA1 (STA11, STA12) after SIFS time from that the first trigger frame is sent. Herein, the first RU of the STA11 is different from the first RU of the STA12.

S3432: receiving, by the STA1 (STA11, STA12), the first trigger frame sent from the AP1 and in a case where the first trigger frame satisfies the fifth condition, sending, by the STA1 (STA11, STA12), the uplink data to the AP1 using a corresponding first RU after the SIFS from that the first trigger frame is received.

For example, the common information field of the first trigger frame uses the format of aforementioned FIG. 6, and the format of the user information field of the STA1 adopts the format shown in FIG. 7; the fifth condition may include: the first trigger frame containing the user information subfield with the identification information of the STA1 (STA11, STA12). It should be understood that this is only an exemplary description. In a case where the first trigger frame is in other formats, the content that may be contained in the fifth condition has been described in detail in the aforementioned embodiments, which will not be repeated herein.

For example, this step specifically may be: the STA1 (STA11, STA12) receives a first trigger frame where the AID12 subfield (i.e., identification subfield) of User Info is equal to the 12 least significant bits of its own AID or VAID, then it is determined that the first trigger frame satisfies the fifth condition, and the STA1 (STA11, STA12) will use the corresponding RU to send the uplink data to the AP1 within the allocated TXOP time after the SIFS, according to the requirements of the Common info of the first trigger frame and other subfields of the User Info of the STA1 (STA11, STA12). Herein, other subfields of the STA1 (STA11, STA12) User Info may include at least: a maximum transmit power indicated by a Max TX power subfield (the transmit power subfield). That is, the STA1 (STA11, STA12) may determine the current transmit power (i.e., the first transmit power) according to the maximum transmit power of the Max TX power subfield. For example, the maximum transmit power may be directly used as the first transmit power, or the first transmit power may be calculated based on a formula and with reference to the calculation manner, it has been described in the aforementioned embodiments and will not be repeated herein.

S3441: receiving, by an AP2, the first trigger frame sent from the AP1, and in a case where the first trigger frame satisfies the first condition, enabling an uplink COFDMA and/or CSR mode, and receiving the uplink data of the STA21 in a second RU after the SIFS from that the first trigger frame is received.

For example, the common information field of the first trigger frame uses the format of aforementioned FIG. 6, and the format of the user information field adopts the format shown in FIG. 7. Accordingly, the first condition includes: the value of the first sharing transmission indication subfield in the common information field of the first trigger frame being the eighth value (for example, 1); the first trigger frame containing the user information subfield of the STA2 with the identification information of the STA21 (i.e., the STA associated with the AP2); the value of the transmission mode subfield of the STA21 in the user information subfield of the STA21 of the first trigger frame being the third value (for example, 2); the user information subfield of the first trigger frame not containing the identification information of the AP2. It should be understood that this is only an exemplary description. In a case where the first trigger frame is in other formats, the content that may be contained in the first condition has been described in detail in the aforementioned embodiments, which will not be repeated herein.

This step may be specifically described as follows: after AP2 receives the first PPDU (i.e., an EHT PPDU) containing the first trigger frame, if the MAP TXS indication bit in a preamble of the first PPDU is 1, the AP2 will not discard the first trigger frame and parse the first trigger frame (the MAP TXS trigger frame in FIG. 13); or after the AP2 receives the first PPDU (i.e., an EHT PPDU) containing the first trigger frame, the AP2 ignores the UL/DL indication information of the preamble and directly parses the first trigger frame. If the AP2 parses the first trigger frame and determines that the first trigger frame satisfies the first condition, that is, a) the MAP TXS Indication subfield (first sharing transmission indication subfield) of the Common info of the first trigger frame is equal to 1, b) there is no AID12 subfield in all User Info of the first trigger frame that is equal to the 12 least significant bits of its own AID or VAID, c) there is an AID12 subfield in the User Info of the first trigger frame that is equal to the 12 least significant bits of the AID or VAID of the STA21 associated with itself, d) the value of the MAP TXS mode subfield (the transmission mode subfield) of the User Info of the STA2 (STA21) is equal to 2, then AP2 stores the other field information of the User Info of the associated STA, enables the uplink COFDMA and/or CSR, and prepares to receive the uplink data sent from the associated STA21 on the allocated RU (i.e., the second RU).

S3442: receiving, by a STA21, the first trigger frame sent by the AP1, and in a case where the first trigger frame satisfies the eighth condition, sending, by the STA21, the uplink data to the AP2 on a corresponding second RU after the SIFS from that the first trigger frame is received.

For example, the common information field of the first trigger frame uses the format of the aforementioned FIG. 6, and the format of the user information field adopts the format shown in FIG. 7, and the eighth condition includes: the value of the first sharing transmission indication subfield in the common information field of the first trigger frame being the eighth value (for example, 1); the first trigger frame containing the user information subfield with the identification information of the STA21. It should be understood that this is only an exemplary description. In a case where the first trigger frame is in other formats, the content that may be contained in the eighth condition has been described in detail in the aforementioned embodiments, which will not be repeated herein.

This step specifically may be described as follows: the STA21 receiving the MAP TXS trigger frame, and after parsing, a value of the MAP TXS Indication subfield (first sharing transmission indication subfield) of the Common info (common information field) of the first trigger frame is equal to 1, and there is an AID12 subfield of the User Info of the first trigger frame that is equal to the 12 least significant bits of its own AID or VAID. Then the STA21 will send the uplink data to the AP2 associated with the STA21 after the SIFS using the allocated RU and not exceeding the transmit power indicated by the Max TX power subfield within the allocated TXOP time according to the requirements of other fields of the Common info and User Info. Regarding the STA21 determining the transmit power used this time (that is, the method of the third transmit power in the fourth aspect embodiment) is the same as the aforementioned embodiment, which will not be repeated.

S3451: sending, by the AP1, a BA to the STA1 (STA11, STA12) in the first RU corresponding to the STA1 (STA11, STA12).

S3452: sending, by the AP2, the BA to the STA21 in the second RU corresponding to the STA21.

In the downlink CSR scenarios shown in FIG. 21 and FIG. 22, the AP1 (Sharing AP, i.e., the first STA) is associated with the STA1 (i.e., the third STA), the AP2 (Shared AP, i.e., the second STA) is associated with the STA2 (i.e., the fourth STA), and the AP1 (sharing AP) triggers the procedures of the AP2 and the AP1 to perform a simultaneous downlink transmission. The processing flows of FIG. 21 and FIG. 22 have been described in the aforementioned first aspect to fourth aspect of the embodiments, respectively, which will not be repeated in this example.

In the downlink COFDMA scenario shown in FIG. 23 and FIG. 24, the AP1 (Sharing AP, i.e., the first STA), AP2 and AP3 are both Shared APs, and the AP2 and AP3 (two second STAs) are associated with the STA21 (i.e., the fourth STA), and the procedures of the AP1 (sharing AP) triggering the AP2 and AP3 to perform a simultaneous downlink transmission are shown in FIG. 24. In the scenarios shown in FIG. 23 and FIG. 24, the AP1, AP2, and AP3 are in a multi-AP coordinated group, and the AP1 triggers the AP2 and AP3 to perform a simultaneous downlink transmission with itself. In conjunction with FIG. 35, the AP1 and AP2 are taken as an example to describe in detail as follows.

S3510: generating, by an AP1, a third trigger frame. The third trigger frame in this step is a MAP TXS trigger frame in FIG. 24. Specifically, after the AP1 completes interactions with other devices in the multi-AP coordinated set in the preparation phase and the probe phase (COFDMA may not require a probe phase, and whether a probe phase is required according to different RSSI measurement manners), the AP1 knows that the AP2 in the BSS2 has downlink data to be sent (the AP3 in the BSS3 has downlink data to be sent), then AP1 generates a MAP TXS trigger frame used to trigger to perform a simultaneous downlink transmission with the AP2 (AP2, AP3) together, which contains the User info field of the AP2 (AP2, AP3). Respective possible formats of the third trigger frame may be the same as those described in the aforementioned embodiments, which will not be repeated herein.

S3520: sending, by the AP1, the third trigger frame. Herein, the AP1 may send the third trigger frame in unicasting, and its receiver address is set as the address of the AP2. Alternatively, the third trigger frame may be sent in multicasting or broadcasting, and the specific descriptions are the same as those of the aforementioned embodiments, which will not be repeated herein.

S3531: sending, by the AP1, downlink data to the STA1 associated with itself using an allocated RU after SIFS from that the third trigger frame is sent.

Specifically, the AP1 sends the uplink data to the STA associated with itself after the SIFI time from that the third trigger frame is sent, by using the allocated RU and the transmit power that does not affect the reception of STAs in other BSSs (obtained from information interacted in the preparation phase and the probe phase) according to the information obtained in the preparation phase and the probe phase. Herein, the allocated RU (that is, the first RU in the aforementioned embodiments) specifically may refer to an RU allocated to the STA1.

S3532: receiving, by the STA1, the third trigger frame sent from the AP1, and in a case where the third trigger frame satisfies the sixth condition, receiving the downlink data sent from the AP1.

For example, the sixth condition includes: the third trigger frame containing a user information subfield with the identification information of the STA1. That is, after receiving the third trigger frame, the STA1 determines that there is no AID12 subfield in all User Infos that is equal to the 12 least significant bits of its own AID or VAID, and then discards the frame. As another example, the common information field of the third trigger frame may adopt the format of FIG. 9, and the user information subfield of the STA1 may adopt the format of FIG. 5. Alternatively, the common information field of the third trigger frame may adopt the format of the aforementioned FIG. 4, and the user information subfield of the STA1 may adopt the format of the aforementioned FIG. 8. The sixth condition includes: the third trigger frame containing the user information subfield of the STA1 with the identification information of the STA1; the value of the uplink and downlink indication subfield of the STA1 in the user information subfield of the STA1 of the third trigger frame being the seventh value (for example, 1). That is, if the User Info of the third trigger frame contains an AID12 subfield that is equal to the 12 least significant bits of its own AID or VAID, and the UL/DL Indication field of the user info or common info is equal to 1, the STA1 prepares to receive the downlink data from the associated AP.

S3541: receiving, by an AP2, the third trigger frame sent from the AP1 and in a case where the third trigger frame satisfies the third condition, sending, by the AP2, downlink data to the STA2 using an RU corresponding to the STA2 after the SIFS from that the third trigger frame is received.

Herein, the RU corresponding to the STA2 may be the second RU in the aforementioned embodiments. The transmit power used by the AP2 to send the downlink data may be determined based on the transmit power subfield of the user information subfield of the AP2. The specific determination manner has been described in the above embodiments, which will not be repeated herein. For example, the common information field of the third trigger frame uses the format of aforementioned FIG. 6, and the format of the user information field adopts the format shown in FIG. 7. Accordingly, the third condition includes: the value of the third sharing transmission indication subfield in the common information field of the first trigger frame being the eighth value (for example, 1); the third trigger frame containing the user information subfield with the identification information of the AP2; the value of the transmission mode subfield of the AP2 in the user information subfield of the AP2 of the third trigger frame being the third value (for example, 2). It should be understood that this is only an exemplary description. When the third trigger frame is in other formats, the contents that may be contained in the third condition have been described in detail in the aforementioned embodiments, which will not be repeated herein.

This step may be specifically described as follows: after the AP2 receives the first PPDU (i.e., an EHT PPDU) containing the third trigger frame, if the MAP TXS indication bit of the preamble of the first PPDU is 1, the AP2 does not discard the third trigger frame and parses the third trigger frame; or after the AP2 receives the first PPDU (i.e., an EHT PPDU) containing the third trigger frame, the AP2 ignores the UL/DL indication information of the preamble and directly parses the third trigger frame. If AP2 parses the third trigger frame and determines that the third trigger frame satisfies the third condition, that is, a) the MAP TXS Indication subfield of the Common info is equal to 1, b) there is an AID12 subfield in User Info that is equal to the 12 least significant bits of its own AID or VAID, and c) the MAP TXS mode subfield of its own User Info is equal to 2, then AP2 enables the downlink COFDMA and/or CSR, and sends the downlink data to the associated STA using the allocated RU and not exceeding the transmit power indicated by the Max TX power subfield within the allocated TXOP time after the SIFS.

S3542: receiving, by the STA2, the third trigger frame sent from the AP1, and in a case where the third trigger frame satisfies the ninth condition, receiving the downlink data sent from the AP2.

For example, the ninth condition includes: the third trigger frame containing the user information subfield with the identification information of the STA2. That is, after receiving the third trigger frame, the STA2 determines that there is no AID12 subfield in all User Infos that is equal to the 12 least significant bits of its own AID or VAID, and then discards the frame. As another example, the common information field of the third trigger frame may adopt the format of FIG. 9, and the user information subfield of the STA2 may adopt the format of FIG. 5. Alternatively, the common information field of the third trigger frame may adopt the format of the aforementioned FIG. 4, and the user information subfield of the STA2 may adopt the format of the aforementioned FIG. 8. That is, the ninth condition includes: the third trigger frame containing the user information subfield of the STA2 with the identification information of the STA2; the value of the uplink and downlink indication subfield of the STA2 in the user information subfield of the STA2 of the third trigger frame being the seventh value (for example, 1). That is, if the User Info of the third trigger frame contains an AID12 subfield that is equal to the 12 least significant bits of its own AID or VAID, and the UL/DL Indication field of the user info or common info is equal to 1, the STA2 prepares to receive the downlink data from the associated AP. It should be understood that this is only an exemplary description. When the third trigger frame is in other formats, the contents that may be contained in the ninth condition have been described in detail in the aforementioned embodiments, which will not be repeated herein.

S3551: sending, by the STA1, a BA to the AP1.

S3552: sending, by the STA2, a BA to the AP2.

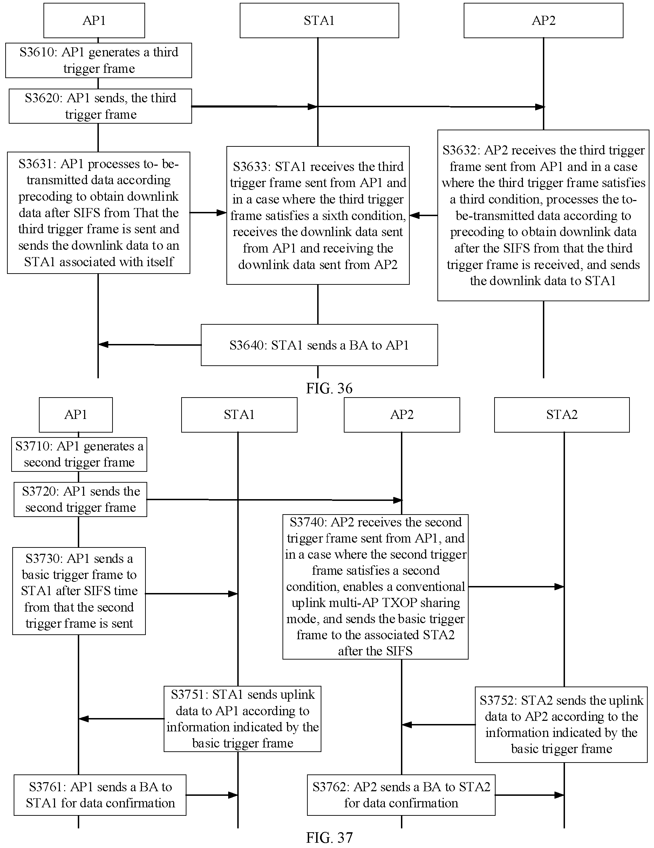

In the scenario shown in FIG. 25, the AP1 (Sharing AP, i.e., the first STA) is associated with the STA1 (i.e., the third STA), the AP2 (Shared AP, i.e., the second STA) is associated with the STA2 (i.e., the fourth STA), and the AP1 and AP2 are in a multi-AP coordinated group. The procedures of the AP1 (the sharing AP) to trigger the AP2 and the AP1 to perform the simultaneous downlink joint transmission to the STA1 are shown in FIG. 26. The procedures of joint transmission are described below in conjunction with FIG. 36.

S3610: generating, by an AP1, a third trigger frame. The third trigger frame in this step is a MAP TXS trigger frame in FIG. 26.

Specifically, after the AP1 completes interactions with other devices in the multi-AP coordinated set in the preparation phase and the probe phase, the AP2 is selected (for example, it may be determined based on the coverage of the AP1, the CSI feedback of each STA acquired by the AP1, etc., which are not exhaustive) as the coordinated AP for the joint transmission, and obtains the CSI feedback of the STA1 from the AP2. The AP1 calculates the downlink transmission precoding matrix of the AP2 according to all the CSI information, and informs the AP2 of the precoding information and the data information to be sent to the STA1. The AP1 generates the MAP TXS trigger frame used to trigger to perform a simultaneous downlink transmission with the AP2, which contains the User info field of the AP2.

Respective possible formats of the third trigger frame may be the same as those described in the aforementioned embodiments, which will not be repeated herein.

S3620: sending, by the AP1, the third trigger frame. Herein, AP1 may send the third trigger frame in unicasting, and its receiver address is set as the address of the AP2. Alternatively, the third trigger frame may be sent in multicasting or broadcasting, and the specific descriptions are the same as that of the aforementioned embodiments, which will not be repeated herein.

S3631: processing, by the AP1, to-be-transmitted data according to precoding to obtain downlink data after SIFS from that the third trigger frame is sent and sending the downlink data to a STA1 associated with itself.

Specifically, the AP1 processes the to-be-transmitted data using the calculated precoding according to information obtained in the preparation phase and the probe phase after the SIFS time from that the MAP TXS trigger frame is sent, and then sends the downlink data to STA1 associated with itself.

S3632: receiving, by the AP2, the third trigger frame sent from the AP1 and in a case where the third trigger frame satisfies the third condition, processing, by the AP2, the to-be-transmitted data according to precoding to obtain downlink data after the SIFS from that the third trigger frame is received, and sending the downlink data to the STA1.

For example, the common information field of the third trigger frame uses the format of the aforementioned FIG. 6, and the format of the user information field adopts the format shown in FIG. 7, and the third condition includes: the value of the third sharing transmission indication subfield in the common information field of the first trigger frame being the eighth value (for example, 1); the third trigger frame containing the user information subfield with identification information of the AP2; the value of the transmission mode subfield of the AP2 in the user information subfield of the AP2 of the third trigger frame being the fourth value (for example, 3). It should be understood that this is only an exemplary description. When the third trigger frame is in other formats, the contents that may be contained in the third condition have been described in detail in the aforementioned embodiments, which will not be repeated herein.

This step may be specifically described as follows: after the AP2 receives the first PPDU (i.e., an EHT PPDU) containing the third trigger frame, if the MAP TXS indication bit of the preamble of the first PPDU is 1, the AP2 does not discard the third trigger frame and parse the third trigger frame; or after the AP2 receives the first PPDU (i.e., an EHT PPDU) containing the third trigger frame, the AP2 ignores the UL/DL indication information of the preamble and directly parses the third trigger frame. If the AP2 parses the third trigger frame and determines that the third trigger frame satisfies the third condition, that is, a) the MAP TXS Indication subfield of the Common info is equal to 1, b) there is an AID12 subfield in the User Info that is equal to the 12 least significant bits of its own AID or VAID, and c) the MAP TXS mode subfield of its own User Info is equal to 3, joint transmission is enabled. The obtained precoding is used to process the to-be-transmitted data within the allocated TXOP time after the SIFS, and then the downlink data is sent to the non-associated STA1.

S3633: receiving, by the STA1, the third trigger frame sent from the AP1 and in a case where the third trigger frame satisfies the sixth condition, receiving, by the STA1, the downlink data sent from the AP1 and receiving the downlink data sent from the AP2.

For example, the sixth condition includes: the third trigger frame containing a user information subfield with the identification information of the STA1. That is, after receiving the third trigger frame, the STA1 determines that there is no AID12 subfield in all User Infos that is equal to the 12 least significant bits of its own AID or VAID, and then discards the frame. At this time, the STA1 may not perform any processing or enter a sleep state. As another example, the common information field of the third trigger frame may adopt the format of FIG. 9, and the user information subfield of the STA1 may adopt the format of FIG. 5. Alternatively, the common information field of the third trigger frame may adopt the format of the aforementioned FIG. 4, and the user information subfield of the STA1 may adopt the format of the aforementioned FIG. 8. The sixth condition includes: the third trigger frame containing the user information subfield of the STA1 with the identification information of the STA1; the value of the uplink and downlink indication subfield of the STA1 in the user information subfield of the STA1 of the third trigger frame being the seventh value (for example, 1). That is, if the User Info of the third trigger frame contains an AID12 subfield that is equal to the 12 least significant bits of its own AID or VAID, and the UL/DL Indication field of the user info or common info is equal to 1, the STA1 prepares to receive the downlink data.

S3640: sending, by the STA1, a BA to the AP1.

In the scenarios shown in FIG. 14 and FIG. 18, the AP1 (Sharing AP, i.e., the first STA) is associated with the STA1 (i.e., the third STA), the AP2 (Shared AP, i.e., the second STA) is associated with the STA2 (i.e., the fourth STA), and the AP1 (sharing AP) triggers the STA1 and STA2 to perform a simultaneous uplink transmission. Specifically as shown in FIG. 37, it includes at least one of following operations.

S3710: generating, by an AP1, a second trigger frame. The second trigger frame in this step is a MAP TXS trigger frame in FIG. 18.

Specifically, after the AP1 completes interactions with other devices in the multi-AP coordinated set in the preparation phase and the probe phase, the AP1 knows that BSS2 has uplink data to be sent and hopes to adopt the legacy uplink multi-AP TXOP sharing mode. Then, the AP1 generates a second trigger frame used to trigger the simultaneous transmission of the Basic trigger (basic trigger frame)( that is, the first frame in the aforementioned embodiment) with the AP2. The second trigger frame contains the User info field of the AP2. Respective possible formats of the second trigger frame may be the same as those described in the aforementioned embodiments of the first aspect, which will not be repeated herein.

S3720: sending, by the AP1, the second trigger frame. For example, the second trigger frame is sent in unicasting, and its receiver address is set as the address of the AP2. It should be understood that the second trigger frame may also be sent in broadcasting or multicasting. The specific descriptions have been detailed in the aforementioned embodiments of the first aspect, which will not be repeated herein.

S3730: sending, by the AP1, a basic trigger frame to a STA1 after SIFS time from that the second trigger frame is sent. The basic trigger frame is the first frame in the aforementioned embodiments of four aspects.

S3740: receiving, by an AP2, the second trigger frame sent from the AP1, and in a case where the second trigger frame satisfies the second condition, enabling, by the AP2, a legacy uplink multi-AP TXOP sharing mode, and sending the basic trigger frame to the associated STA2 after the SIFS.

For example, the common information field of the first trigger frame uses the format of the aforementioned FIG. 6, and the format of the user information field adopts the format shown in FIG. 7, and the second condition includes: the value of the second sharing transmission indication subfield (i.e., the MAP TXS Indication subfield) in the common information field of the second trigger frame being the eighth value (for example, 1); the second trigger frame containing the user information subfield of the AP2 with the identification information of the AP2; the value of the transmission mode subfield of the AP2 in the user information subfield of the AP2 of the second trigger frame being the fifth value (for example, 4). It should be understood that this is only an exemplary description. In a case where the second trigger frame is in other formats, the content that may be contained in the second condition has been described in detail in the aforementioned second aspect embodiments, which will not be repeated herein.

This step may be specifically described as follows: after AP2 receives the first PPDU (i.e., an EHT PPDU) containing the second trigger frame, if the MAP TXS indication bit (i.e., the first indication bit) in the preamble of the first PPDU is 1, the AP2 will not discard the second trigger frame and parse the second trigger frame (MAP TXS trigger frame in FIG. 13); or after the AP2 receives the first PPDU (i.e., an EHT PPDU) containing the second trigger frame, the AP2 ignores the UL/DL indication information of the preamble and directly parses the second trigger frame. If the AP2 parses the second trigger frame and determines that the second trigger frame satisfies the second condition, that is, a) the MAP TXS Indication subfield of the Common info of the second trigger frame is equal to 1, b) the User Info of the second trigger frame contains an AID12 subfield that is equal to the 12 least significant bits of its own AID or VAID, and c) the MAP TXS mode subfield of its own User Info is equal to 4, then AP2 enables the legacy uplink multi-AP TXOP sharing mode and sends the Basic trigger to the associated STA2 after the SIFS.

S3751: sending, by the STA1, uplink data to the AP1 according to information indicated by the basic trigger frame.

S3752: sending, by the STA2, the uplink data to the AP2 according to the information indicated by the basic trigger frame.

S3761: sending, by the AP1, a BA to the STA1 for data confirmation.

S3762: sending, by the AP2, a BA to the STA2 for the data confirmation.

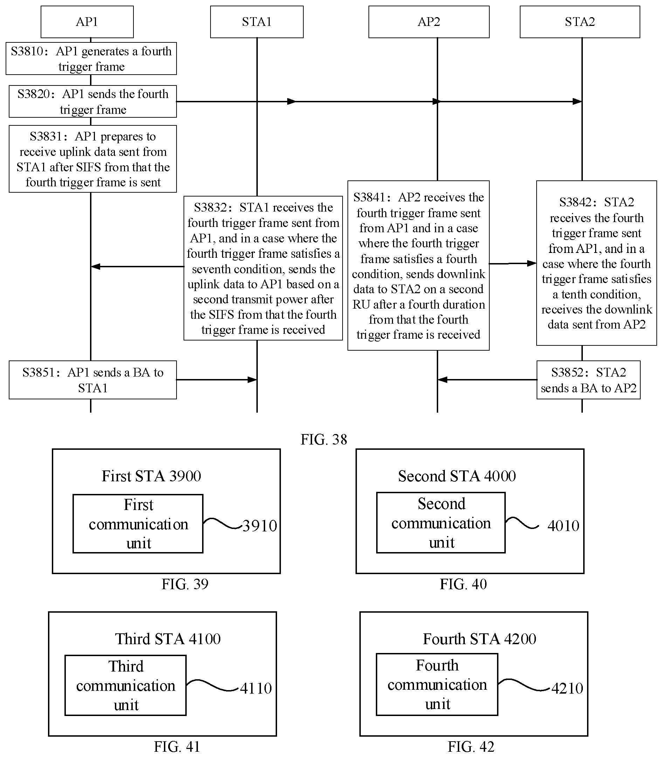

In addition to the above two conditions, the CSR also supporting that a sharing AP performs the uplink transmission with the associated STA and a shared AP performing the downlink transmission with the associated STA are for description. In the scenarios shown in FIG. 27 and FIG. 28, the AP1 (Sharing AP, i.e., the first STA) is associated with the STA1 (i.e., the third STA), the AP2 (Shared AP, i.e., the second STA) is associated with the STA2 (i.e., the fourth STA), and the AP1 (sharing AP) receives the uplink data of STA1 by itself and triggers the downlink transmission of the AP2. The specific processing flow as shown in FIG. 38, includes at least one of following operations.

S3810: generating, by an AP1, a fourth trigger frame. The fourth trigger frame in this step is a MAP TXS trigger frame in FIG. 28. Specifically, after the AP1 completes interactions with other devices in the multi-AP coordinated set in the preparation phase and the probe phase (determine whether the probe phase is required based on different RSSI measurement manners), the AP1 knows that the AP2 in the BSS2 has downlink data to be sent. Then, the AP1 generates a fourth trigger frame used to trigger the STA1 and AP2 to perform the simultaneous transmission, which contains User info fields of the STA1 and AP2. Respective possible formats of the fourth trigger frame may be the same as those described in the aforementioned embodiments, which will not be repeated herein.

S3820: sending, by the AP1, the fourth trigger frame. The third trigger frame may be sent in multicasting or broadcasting, and the specific descriptions are the same as those of the aforementioned embodiments, which will not be repeated herein.

S3831: preparing, by the AP1, to receive uplink data sent from a STA1 after SIFS from that the fourth trigger frame is sent.

S3832: receiving, by the STA1, the fourth trigger frame sent from the AP1, and in a case where the fourth trigger frame satisfies the seventh condition, sending, by the STA1, the uplink data to the AP1 based on second transmit power after the SIFS from that the fourth trigger frame is received.

For example, the common information field of the fourth trigger frame may adopt the format of the aforementioned FIG. 6, and the user information subfield of the third STA may adopt the format of the aforementioned FIG. 7. The seventh condition include: the fourth trigger frame containing the user information subfield of the STA1 with the identification information of the STA1. For example, when the STA1 receives a MAP TXS trigger frame where the AID12 subfield (identification subfield) of the User Info is equal to the 12 least significant bits of its own AID or VAID, the STA1 sends the uplink data to the AP1 according to the requirements of other fields of the Common info and User Info, by using not exceeding the maximum transmit power indicated by the Max TX power subfield (transmit power subfield) within the allocated TXOP time after the SIFS. It should be understood that this is only an exemplary description. When the fourth trigger frame is in other formats, the contents that may be contained in the seventh condition have been described in detail in the aforementioned embodiments, which will not be repeated herein.

S3841: receiving, by an AP2, the fourth trigger frame sent from the AP1 and in a case where the fourth trigger frame satisfies the fourth condition, sending, by the AP2, downlink data to the STA2 in a second RU after a fourth duration from that the fourth trigger frame is received. Herein, the second RU is an RU corresponding to the STA2.

The common information field of the fourth trigger frame may adopt the format of the aforementioned FIG. 6, and the user information subfield of the second STA may adopt the format of the aforementioned FIG. 7. The fourth condition includes: a value of a fourth sharing transmission indication subfield in the common information field of the fourth trigger frame being gthe eihth value; the fourth trigger frame containing the user information subfield of the AP2 with the identification information of the AP2; the value of the transmission mode subfield of the AP2 in the user information subfield of the AP2 of the fourth trigger frame being the third value (for example, 2). It should be understood that this is only an exemplary description. When the fourth trigger frame is in other formats, the contents that may be contained in the fourth condition have been described in detail in the aforementioned embodiments, which will not be repeated herein.

This step may be specifically described as follows: after the AP2 receives the first PPDU (i.e., an EHT PPDU) containing the fourth trigger frame, if the MAP TXS indication bit in the preamble of the first PPDU is 1, the AP2 does not discard the fourth trigger frame and parses the fourth trigger frame; or after the AP2 receives the first PPDU (i.e., an EHT PPDU) containing the fourth trigger frame, the AP2 ignores the UL/DL indication information of the preamble and directly parses the fourth trigger frame. If the AP2 parses the fourth trigger frame and satisfies a) the MAP TXS Indication subfield of the Common info is equal to 1, b) there is an AID12 subfield in User Info that is equal to the 12 least significant bits of its own AID or VAID, and c) the MAP TXS mode subfield of its own User Info is equal to 2, then AP2 enables the downlink COFDMA and/or CSR, and sends the downlink data to the associated STA by using the allocated RU and not exceeding the transmit power indicated by the Max TX power subfield within the time not exceeding the allocated TXOP after the SIFS.

S3842: receiving, by the STA2, the fourth trigger frame sent from the AP1, and in a case where the fourth trigger frame satisfies the tenth condition, receiving the downlink data sent from the AP2.

For example, the tenth condition includes: the fourth trigger frame containing a user information subfield with the identification information of the STA2. That is, after receiving the fourth trigger frame, the STA2 determines that there is no AID12 subfield in all User Infos that is equal to the 12 least significant bits of its own AID or VAID, and then discards the frame. The common information field of the fourth trigger frame may adopt the format of the aforementioned FIG. 9, and the user information subfield of the STA2 may adopt the format of the aforementioned FIG. 5. Alternatively, the common information field of the fourth trigger frame may adopt the format of the aforementioned FIG. 4, and the user information subfield of the STA2 may adopt the format of the aforementioned FIG. 8. The tenth condition includes: the fourth trigger frame containing the user information subfield of the STA2 with the identification information of the STA2; the value of the uplink and downlink indication subfield of the STA2 in the user information subfield of the STA2 of the fourth trigger frame being the seventh value (for example, 1). For example, if the User Info of the MAP TXS trigger frame contains an AID12 subfield that is equal to the 12 least significant bits of its own AID or VAID, and the UL/DL Indication field of the user info or common info is equal to 1, the STA2 prepares to receive the downlink data from the associated AP. It should be understood that this is only an exemplary description. When the fourth trigger frame is in other formats, the contents that may be contained in the tenth condition have been described in detail in the aforementioned embodiments, which will not be repeated herein.

S3851: sending, by the AP1,a BA to the STA1.

S3852: sending, by the STA2, a BA to the AP2.

FIG. 39 is a schematic structural diagram of a first STA 3900 according to the embodiments of the present disclosure, which may include: a first communication unit 3910, configured to send a trigger frame, where the trigger frame is used to establish a coordinated transmission between multiple STAs.

Common information field of the trigger frame includes at least one of: a trigger type subfield, where a value of the trigger type subfield is used to represent a type of the trigger frame; a transmission mode subfield, where a value of the transmission mode subfield is used to indicate a coordinated transmission mode used for sharing a transmission opportunity (TXOP) of the multiple STAs, and/or whether the multiple STAs enables a TXOP sharing mode; an uplink and downlink indication subfield, where a value of the uplink and downlink indication subfield is used to indicate that the TXOP is used for a simultaneous uplink transmission or a simultaneous downlink transmission; and a sharing transmission indication subfield, where a value of the sharing transmission indication subfield is used to indicate whether the multiple STAs enable the TXOP sharing mode.

The value of the trigger type subfield is a first specified value, where the first specified value represents that the trigger frame is used to establish the coordinated transmission between the multiple STAs.

The transmission mode subfield occupies at least part of bits of a first reserved subfield in the common information field.

The first reserved subfield is an extremely high throughput (EHT) reserved subfield in the common information field.

The uplink and downlink indication subfield occupies at least part of bits of a second reserved subfield in the common information field.

The second reserved subfield is an extremely high throughput (EHT) reserved subfield in the common information field.

The sharing transmission indication subfield occupies at least part of bits of a third reserved subfield in the common information field.

The third reserved field is a reserved subfield before the number of HE/EHT-LTF symbol subfield in the common information field.

The trigger frame contains one or more user information subfields; an i-th user information subfield of the one or more user information subfields is user information subfield of an i-th STA; i is an integer greater than or equal to 1, and the i-th STA is one of the multiple STAs; the i-th user information subfield includes at least one of: an identification subfield of the i-th STA, where the identification subfield of the i-th STA is used to carry identification information of the i-th STA; a transmission mode subfield of the i-th STA, where a value of the transmission mode subfield of the i-th STA is used to represent the coordinated transmission mode used for the TXOP sharing of the i-th STA, and/or whether the i-th STA enables the TXOP sharing mode; a transmit power subfield of the i-th STA, where the transmit power subfield of the i-th STA is used to indicate a maximum transmit power used by the i-th STA; and an uplink and downlink indication subfield of the i-th STA, where the uplink and downlink indication subfield of the i-th STA is used to indicate the coordinated transmission of the i-th STA being a simultaneous uplink transmission or a simultaneous downlink transmission.

The identification information of the i-th STA is a 12-bit virtual association identifier (VAID) and/or 12 least significant bits of the association identifier (AID) of the i-th STA.

The transmit power subfield of the i-th STA occupies at least part of bits of a trigger dependent user information subfield in the i-th user information subfield.

The uplink and downlink indication subfield of the i-th STA occupies at least part of bits of the trigger dependent user information subfield in the i-th user information subfield.

An AID and/or VAID of the first STA is configured by a target device.

The first communication unit 3910 is configured to perform at least one of:
acquiring an AID and/or VAID of the second STA from the target device;
configuring an AID and/or VAID for the third STA based on a first range of identification values; where the first range of identification values is configured by the target device, and the third STA is associated with the first STA; and
acquiring an AID and/or VAID of the fourth STA from the second STA, where the fourth STA is associated with the second STA.

The first range of identification values is within at least one of: 1-2007, 2008-2044, and 2047-4096.

The target device is a coordinating device; the coordinating device is an access point (AP); or the coordinating device is a device other than an AP.

The trigger frame is carried by a first physical layer protocol unit (PPDU); where a value of a first indication bit in a preamble of the first PPDU is a second specified value. The first PPDU is an enhanced extremely high throughput (EHT) PPDU; the first indication bit is a multiple access point transmission opportunity sharing (MAP TXS) indication bit.

The trigger frame is a first trigger frame; the first communication unit 3910 is configured to send the first trigger frame, where the first trigger frame is used for the multiple STAs to perform a simultaneous uplink coordinated transmission; the multiple STAs include at least one of: a third STA and a fourth STA; where the third STA is associated with the first STA, the fourth STA is associated with the second STA, and the second STA is different from the first STA.

The first communication unit 3910 is configured to receive uplink data sent from the third STA after a first duration from a moment when the first trigger frame is sent; and send a block acknowledgment (BA) to the third STA.

The first communication unit 3910 is configured to perform a beam nulling operation on the fourth STA after the first duration from the moment whenthe first trigger frame is sent and receive uplink data sent from the third STA in case where an uplink CBF mode and/or a C-UL MU-MIMO mode is enabled.

The common information field of the first trigger frame includes a first transmission mode subfield; and the value of the first transmission mode subfield is a second value.

User information subfield of the third STA of the first trigger frame includes: a transmission mode subfield of the third STA; where a value of the transmission mode subfield of the third STA is a second value; and/or, User information subfield of the fourth STA of the first trigger frame includes: a transmission mode subfield of the fourth STA; and a value of the transmission mode subfield of the fourth STA is the second value.

The first communication unit 3910 is configured to receive uplink data of the third STA in a first resource unit (RU) after the first duration from the moment when the first trigger frame is sent in a case where an uplink COFDMA and/or CSR mode is enabled; where the first RU is a resource corresponding to the third STA.

The first communication unit 3910 is configured to send the BA to the third STA in the first RU.

The common information field of the first trigger frame contains a first transmission mode subfield; where a value of the transmission mode subfield is a third value.

The user information subfield of the third STA of the first trigger frame further includes: a transmission mode subfield of the third STA; where a value of the transmission mode subfield of the third STA is a third value; and/or, the user information subfield of the fourth STA of the first trigger frame further includes: a transmission mode subfield of the fourth STA; where a value of the transmission mode subfield of the fourth STA is the third value.

The common information field of the first trigger frame contains a first uplink and downlink indication subfield, where a value of the first uplink and downlink indication subfield is a sixth value.

User information subfield of the second STA of the first trigger frame further includes: an uplink and downlink indication subfield of the second STA, where a value of the uplink and downlink indication subfield of the fourth STA is the sixth value; and/or, the user information subfield of the third STA of the first trigger frame further includes: an uplink and downlink indication subfield of the third STA, where a value of the uplink and downlink indication subfield of the third STA is the sixth value; and/or, the user information subfield of the fourth STA of the first trigger frame further includes: an uplink and downlink indication subfield of the fourth STA, where a value of the uplink and downlink indication subfield of the fourth STA is the sixth value.

The user information subfield of the third STA of the first trigger frame further includes: a transmit power subfield of the third STA; and/or, the user information subfield of the fourth STA of the first trigger frame further includes: a transmit power subfield of the fourth STA.

The common information field of the first trigger frame further includes: a first sharing transmission indication subfield; where a value of the first sharing transmission indication subfield is an eighth value.

The user information subfield of the second STA of the first trigger frame includes an identification subfield of the second STA, which is used to carry identification information of the second STA; and/or, the user information subfield of the third STA of the first trigger frame includes an identification subfield of the third STA, which is used to carry identification information of the third STA; and/or, the user information subfield of the fourth STA of the first trigger frame includes an identification subfield of the fourth STA, which is used to carry identification information of the fourth STA.

The trigger frame is a second trigger frame; the first communication unit 3910 is configured to send the second trigger frame, where the second trigger frame is used to trigger the multiple STAs to simultaneously send the first frame, and the first frame is used to trigger STAs associated with the multiple STAs to perform a simultaneous uplink coordinated transmission; and the multiple STAs include the first STA and a second STA.

The first communication unit 3910 is configured to: send the first frame to the third STA after a second duration from that the second trigger frame is sent in a case where a legacy uplink TXOP sharing mode is enabled, where the third STA is associated with the first STA; receive the uplink data sent from the third STA after sending the first frame to the third STA; and send a block ACK (BA) to the third STA.

The common information field of the second trigger frame contains a second transmission mode subfield, where a value of the second transmission mode subfield is a fifth value.

User information subfield of the second STA of the second trigger frame includes: a transmission mode subfield of the second STA, where a value of the transmission mode subfield of the second STA is the fifth value.

The user information subfield of the second STA of the second trigger frame includes an identification subfield of the second STA, which is used to carry identification information of the second STA.

The common information field of the second trigger frame contains a second uplink and downlink indication subfield, where a value of the second uplink and downlink indication subfield is a sixth value.

The user information subfield of the second STA of the second trigger frame further includes: an uplink and downlink indication subfield of the second STA, where a value of the uplink and downlink indication subfield of the second STA is the sixth value.

The common information field of the second trigger frame further includes: a second sharing transmission indication subfield; where a value of the second sharing transmission indication subfield is an eighth value.

The trigger frame is a third trigger frame; the first communication unit 3910 is configured to send a third trigger frame, where the third trigger frame is used for the multiple STAs to perform a simultaneous downlink coordinated transmission; the multiple STAs include: a first STA and a second STA; and the second STA is different from the first STA.

The first communication unit 3910 is configured to send downlink data to the third STA after a third duration from that the third trigger frame is sent, where the third STA is associated with the first STA; and the first STA receives a block ACK (BA) sent from the third STA.

The first communication unit 3910 is configured to perform a beam nulling operation on the fourth STA after the third duration from that the third trigger frame is sent and send downlink data to the third STA in case where a downlink CBF mode is enabled; where the fourth STA is associated with the second STA.

Common information field of the third trigger frame contains a third transmission mode subfield, and a value of the third transmission mode subfield is a second value.

User information subfield of the second STA of the third trigger frame includes: a transmission mode subfield of the second STA, where a value of the transmission mode subfield of the second STA is the second value.

The first communication unit 3910 is configured to send downlink data to the third STA in a first resource unit (RU) after the third duration from that the third trigger frame is sent in a case where a downlink COFDMA downlink and/or CSR mode is enabled; where the first RU is a resource corresponding to the third STA.

The first communication unit 3910 is configured to receive a block ACK (BA) sent from the third STA in the first RU.

The common information field of the third trigger frame contains a third transmission mode subfield, and a value of the third transmission mode subfield is a third value.

The user information subfield of the second STA of the third trigger frame further includes: a transmission mode subfield of the second STA, and a value of the transmission mode subfield of the second STA is the third value.

The first communication unit 3910 is configured to process to-be-transmitted data according to precoding to obtain downlink data after the third duration from that the third trigger frame is sent, and send the downlink data to the third STA in a case where the joint transmission mode is enabled.

The common information field of the third trigger frame further includes a third transmission mode subfield, and a value of the third transmission mode subfield is a fourth value.

The user information subfield of the second STA of the third trigger frame further includes: a transmission mode subfield of the second STA, and a value of the transmission mode subfield of the second STA is the fourth value.

The common information field of the third trigger frame contains a third uplink and downlink indication subfield, and a value of the third uplink and downlink indication subfield is a seventh value.

The user information subfield of the second STA of the third trigger frame further includes: an uplink and downlink indication subfield of the second STA, and a value of the uplink and downlink indication subfield of the second STA is the seventh value.

The user information subfield of the second STA of the third trigger frame further includes: a transmit power subfield of the second STA.

The user information subfield of the second STA of the third trigger frame further includes: an identification subfield of the second STA, which is used to carry identification information of the second STA.

The common information field of the third trigger frame further includes: a third sharing transmission indication subfield; and a value of the third sharing transmission indication subfield is an eighth value.

The user information subfield of the third STA of the third trigger frame includes at least one of: an identification subfield of the third STA, which is used to carry identification information of the third STA; and an uplink and downlink indication subfield of the third STA, and a value of the uplink and downlink indication subfield of the third STA being the seventh value.

The user information subfield of the fourth STA of the third trigger frame includes at least one of: an identification subfield of the fourth STA, which is used to carry identification information of the fourth STA; and an uplink and downlink indication subfield of the fourth STA, and a value of the uplink and downlink indication subfield of the fourth STA being the seventh value.

The trigger frame is a fourth trigger frame; the first communication unit 3910 is configured to send the fourth trigger frame, where the fourth trigger frame is used for the multiple STAs to perform a simultaneous coordinated transmission; the multiple STAs include: a third STA and a second STA; and the third STA is associated with the first STA.

The fourth trigger frame is used to trigger the third STA to perform a simultaneous uplink coordinated transmission, and to trigger the second STA to perform a simultaneous downlink coordinated transmission.

The first communication unit 3910 is configured to receive uplink data sent from the third STA after a fourth duration from that the fourth trigger frame is sent; and send a block acknowledgment (BA) to the third STA.

User information subfield of the third STA of the fourth trigger frame includes at least one of: an identification subfield of the third STA, which is used to carry identification information of the third STA; a transmit power subfield of the third STA, which is used to indicate a maximum transmit power used by the third STA; and an uplink and downlink indication subfield of the third STA, where a value of the uplink and downlink indication subfield of the third STA is the sixth value.

User information subfield of the second STA of the fourth trigger frame includes at least one of: an identification subfield of the second STA, which is used to carry identification information of the second STA; a transmit power subfield of the second STA; an uplink and downlink indication subfield of the second STA, where a value of the uplink and downlink indication subfield of the second STA is the seventh value; and a transmission mode subfield of the second STA, where a value of the transmission mode subfield of the second STA being the third value.

User information subfield of the fourth STA of the fourth trigger frame includes: an identification subfield of the fourth STA, which is used to carry identification information of the fourth STA; the fourth STA is associated with the second STA; an uplink and downlink indication subfield of the fourth STA, where a value of the uplink and downlink indication subfield of the fourth STA being the seventh value.

The second STA is a shared AP. The first STA is a sharing access point (AP).

The above-mentioned first STA may further contain a first processing unit, which may be configured to generate a trigger frame, and determine a transmission mode adopted currently, etc., which are not exhaustive herein.

FIG. 40 is a schematic structural diagram of a second STA 4000 according to the embodiments of the present disclosure, the second STA 4000 may include:
a second communication unit 4010, configured to receive a trigger frame sent from a first STA, where the trigger frame is used to establish a coordinated transmission between multiple STAs.

The common information field of the trigger frame includes at least one of: a trigger type subfield, where a value of the trigger type subfield is used to represent a type of the trigger frame; a transmission mode subfield, where a value of the transmission mode subfield is used to indicate a coordinated transmission mode used for sharing a transmission opportunity (TXOP) of the multiple STAs, and/or whether the multiple STAs enable a TXOP sharing mode; an uplink and downlink indication subfield, where a value of the uplink and downlink indication subfield is used to indicate that the TXOP is used for a simultaneous uplink transmission or a simultaneous downlink transmission; and a sharing transmission indication subfield, where a value of the sharing transmission indication subfield is used to indicate whether the multiple STAs enable the TXOP sharing mode.

A value of the trigger type subfield is a first specified value, where the first specified value represents that the trigger frame is used to establish the coordinated transmission between the multiple STAs.

The transmission mode subfield occupies at least part of bits of a first reserved subfield in the common information field.

The first reserved subfield is an extremely high throughput (EHT) reserved subfield in the common information field.

The uplink and downlink indication subfield occupies at least part of bits of the second reserved subfield in the common information field.

The second reserved subfield is an extremely high throughput (EHT) reserved subfield in the common information field.

The sharing transmission indication subfield occupies at least part of bits of a third reserved subfield in the common information field. The third reserved field is a reserved subfield before the number of HE/EHT-LTF symbol subfield in the common information field.

The trigger frame contains one or more user information subfields; a j-th user information subfield of the one or more user information subfields is a user information subfield of a j-th STA; j is an integer greater than or equal to 1, and the j-th STA is one of the multiple STAs; the j-th user information subfield includes at least one of: an identification subfield of the j-th STA, where the identification subfield of the j-th STA is used to carry identification information of the j-th STA; a transmission mode subfield of the j-th STA, where a value of the transmission mode subfield of the j-th STA is used to represent the coordinated transmission mode used for the TXOP sharing of the j-th STA, and/or whether the j-th STA enables the TXOP sharing mode; a transmit power subfield of the j-th STA, where the transmit power subfield of the j-th STA is used to indicate a maximum transmit power used by the j-th STA; and an uplink and downlink indication subfield of the j-th STA, where the uplink and downlink indication subfield of the j-th STA is used to indicate that the coordinated transmission of the j-th STA is a simultaneous uplink transmission or a simultaneous downlink transmission.

The identification information of the j-th STA is a 12-bit virtual association identifier (VAID) and/or 12 least significant bits of an association identifier (AID) of the j-th STA.

The transmission mode subfield of the j-th STA occupies at least part of bits of a trigger dependent user information subfield in the j-th user information subfield.

The transmit power subfield of the j-th STA occupies at least part of bits of a trigger dependent user information subfield in the j-th user information subfield.

The uplink and downlink indication subfield of the j-th STA occupies at least part of bits of the trigger dependent user information subfield in the j-th user information subfield.

An AID and/or VAID of the second STA is configured by the target device.

The second communication unit 4010 is configured to perform at least one of: acquiring, an AID and/or VAID of the first STA from the target device; allocating the AID and/or VAID to the fourth STA based on the second range of identification values, where the second range of identification values is configured by the target device; and acquiring an AID and/or VAID of the third STA from the first STA; and the third STA is associated with the first STA.

The second range of identification values is within at least one of: 1-2007, 2008-2044, and 2047-4096.

The target device is a coordinating device; the coordinating device is an access point (AP); or the coordinating device is a device other than an AP.

The trigger frame is carried by a first physical layer protocol unit (PPDU); where a value of a first indication bit in a preamble of the first PPDU is a second specified value.

The first PPDU is an enhanced extremely high throughput (EHT) PPDU; and/or, the first indication bit is a multiple access point transmission opportunity sharing (MAP TXS) indication bit.

The trigger frame is a first trigger; the second communication unit 4010 is configured to receive a first trigger frame sent from the first STA, and the first trigger frame is used for the multiple STAs to perform a simultaneous uplink coordinated transmission; where the multiple STAs include at least one of: a third STA and a fourth STA; the third STA is associated with the first STA, and the fourth STA is associated with the second STA.

The second communication unit 4010 is configured to parse the first trigger frame in a case where it is determined that a value of a first indication bit in a preamble of the first PPDU carrying the first trigger frame is a second specified value.

The second communication unit 4010 is configured to receive uplink data of the fourth STA in a case where the first trigger frame satisfies a first condition; and the second STA sends a block acknowledgment (BA) to the fourth STA.

The second communication unit 4010 is configured to enable an uplink CBF mode and/or a C-UL MU-MIMO mode in a case where the first trigger frame satisfies the first condition, and receive the uplink data sent from the fourth STA.

The first condition includes at least one of: a value of a first transmission mode subfield in a common information field of the first trigger frame being not a first value; a value of the first transmission mode subfield in the common information field of the first trigger frame being a second value; a value of a first sharing transmission indication subfield in the common information field of the first trigger frame being an eighth value; a value of a first uplink and downlink indication subfield in the common information field of the first trigger frame being a sixth value; a value of the transmission mode subfield of the fourth STA in the user information subfield of the fourth STA of the first trigger frame being not the first value; a value of the transmission mode subfield of the fourth STA in the user information subfield of the fourth STA of the first trigger frame is the second value; a value of the uplink and downlink indication subfield of the fourth STA in the user information subfield of the fourth STA of the first trigger frame being the sixth value; the first trigger frame containing the user information subfield of the fourth STA with the identification information of the fourth STA; the user information subfield of the first trigger frame not containing the identification information of the second STA; the first trigger frame containing the user information subfield of the second STA with the identification information of the second STA; and the value of the uplink and downlink indication subfield of the second STA in the user information subfield of the second STA of the first trigger frame being the sixth value.

The second communication unit 4010 is configured to enable an uplink COFDMA mode and/or CSR mode in a case where the first trigger frame satisfies the first condition, and receive the uplink data of the fourth STA in a second resource unit (RU) after a first duration from a moment when the first trigger frame is received; where the second RU is a resource corresponding to the fourth STA.

The second communication unit 4010 is configured to send a block ACK (BA) to the fourth STA in the second RU.

The first condition includes at least one of: the value of the first transmission mode subfield in the common information field of the first trigger frame being not the first value; the value of the first transmission mode subfield in the common information field of the first trigger frame being the third value; the value of the first sharing transmission indication subfield in the common information field of the first trigger frame being the eighth value; the value of the first uplink and downlink indication subfield in the common information field of the first trigger frame being the sixth value; the value of the transmission mode subfield of the fourth STA in the user information subfield of the fourth STA of the first trigger frame being not the first value; the value of the transmission mode subfield of the fourth STA in the user information subfield of the fourth STA of the first trigger frame being the third value; the value of the uplink and downlink indication subfield of the fourth STA in the user information subfield of the fourth STA of the first trigger frame being the sixth value; the first trigger frame containing the user information subfield of the fourth STA with the identification information of the fourth STA; the user information subfield of the first trigger frame not containing the identification information of the second STA; the first trigger frame containing the user information subfield of the second STA with the identification information of the second STA; and the value of the uplink and downlink indication subfield of the second STA in the user information subfield of the second STA of the first trigger frame being the sixth value. The trigger frame is a second trigger frame; the second communication unit 4010 is configured to receive the second trigger frame sent from the first STA, the second trigger frame is used to trigger the multiple STAs to simultaneously send the first frame, and the first frame is used to trigger STAs associated with the multiple STAs to perform a simultaneous uplink coordinated transmission; and the multiple STAs include a first STA and a second STA.

The second communication unit 4010 is configured to parse the second trigger frame in a case where it is determined that the value of the first indication bit of a preamble of the first PPDU carrying the second trigger frame is a second specified value.

The second communication unit 4010 is configured to enable a legacy uplink TXOP sharing mode in a case where the second trigger frame satisfies the second condition, and send the first frame to the fourth STA after the second duration from that the second trigger frame is received; the fourth STA is associated with the second STA; receive the uplink data of the fourth STA, and the second STA sends the block ACK (BA) to the fourth STA.

The second condition includes at least one of: a value of a second transmission mode subfield in a common information field of the second trigger frame being not a first value; a value of the second transmission mode subfield in the common information field of the second trigger frame being a fifth value; a value of a second sharing transmission indication subfield in the common information field of the second trigger frame being an eighth value; a value of a second uplink and downlink indication subfield in the common information field of the second trigger frame being a sixth value; the value of the transmission mode subfield of the second STA in the user information subfield of the second STA of the second trigger frame being not the first value; the value of the transmission mode subfield of the second STA in the user information subfield of the second STA of the second trigger frame being the second value; the second trigger frame containing the user information subfield of the second STA with identification information of the second STA; and the value of the uplink and downlink indication subfield of the second STA in the user information subfield of the second STA of the second trigger frame being the sixth value.

The trigger frame is a third trigger frame; the second communication unit 4010 is configured to receive the third trigger frame sent from the the first STA, where the third trigger frame is used for the multiple STAs to perform a simultaneous downlink coordinated transmission; the multiple STAs include: a first STA and a second STA.

The second communication unit 4010 is configured to parse the third trigger frame in a case where it is determined that the value of the first indication bit of the first PPDU carrying the third trigger frame is the second specified value.

The second communication unit 4010 is configured to send downlink data to the fourth STA in a case where the third trigger frame satisfies a third condition; and the second STA receives the block ACK (BA) sent from the fourth STA.

The second communication unit 4010 is configured to enable a downlink CBF mode, perform a beam nulling operation on multiple other STAs, and send the downlink data to the fourth STA after the third duration from that the third trigger frame is received; where the multiple other STAs are not associated with the second STA.

The third condition includes at least one of: a value of a third transmission mode subfield in a common information field of a third trigger frame being not a first value; a value of a third transmission mode subfield in the common information field of the third trigger frame being a second value; a value of a third sharing transmission indication subfield in the common information field of the third trigger frame being an eighth value; a value of a third uplink and downlink indication subfield in the common information field of the third trigger frame being a seventh value; the value of the transmission mode subfield of the second STA in the user information subfield of the second STA of the third trigger frame being not the first value; the value of the transmission mode subfield of the second STA in the user information subfield of the second STA of the third trigger frame being the second value; a value of an uplink and downlink indication subfield of a fourth STA in the user information subfield of the fourth STA of the third trigger frame being the seventh value; the user information subfield of the fourth STA containing the identification information of the fourth STA of the third trigger frame; the user information subfield of the second STA containing the identification information of the second STA of the third trigger frame; and a value of an uplink and downlink indication subfield of the second STA in user information subfield of the second STA of the third trigger frame being the seventh value.

The second communication unit 4010 is configured to enable a downlink COFDMA mode and/or CSR mode, and send downlink data to the fourth STA on the second resource unit (RU) after the third duration from that the third trigger frame is sent; where the second RU is a resource corresponding to the fourth STA.

The second communication unit 4010 is configured to receive a block ACK (BA) sent from the fourth STA in the second RU.

The third condition includes at least one of: a value of a third transmission mode subfield in a common information field of a third trigger frame being not a first value; a value of a third transmission mode subfield in the common information field of the third trigger frame being a third value; a value of a third sharing transmission indication subfield in the common information field of the third trigger frame being an eighth value; a value of a third uplink and downlink indication subfield in the common information field of the third trigger frame being a seventh value; the value of the transmission mode subfield of the second STA in the user information subfield of the second STA of the third trigger frame being not the first value; the value of the transmission mode subfield of the second STA in the user information subfield of the second STA of the third trigger frame being the third value; a value of an uplink and downlink indication subfield of a fourth STA in the user information subfield of the fourth STA of the third trigger frame being the seventh value; the user information subfield of the fourth STA containing the identification information of the fourth STA of the third trigger frame; the user information subfield of the second STA containing the identification information of the second STA of the third trigger frame; and a value of an uplink and downlink indication subfield of the second STA in user information subfield of the second STA of the third trigger frame being the seventh value.

The second communication unit 4010 is configured to enable a joint transmission mode in a case where the third trigger frame satisfies the third condition; the second STA processes the to-be-transmitted data according to precoding to obtain downlink data after the third duration from that the third trigger frame is received, and sends the downlink data to the third STA; the third STA is associated with the first STA.

The third condition includes at least one of: the value of the third transmission mode subfield in the common information field of the third trigger frame being not the first value; the value of the third transmission mode subfield in the common information field of the third trigger frame being a fourth value; the value of the third sharing transmission indication subfield in the common information field of the third trigger frame is the eighth value; the value of the third uplink and downlink indication subfield in the common information field of the third trigger frame is the seventh value; the value of the transmission mode subfield of the second STA in the user information subfield of the second STA of the third trigger frame is not the first value; the value of the transmission mode subfield of the second STA in the user information subfield of the second STA of the third trigger frame is the fourth value; a value of an uplink and downlink indication subfield of a third STA in user information subfield of the third STA of the third trigger frame is the seventh value; the third trigger frame contains the user information subfield of the third STA with the identification information of the third STA; the third trigger frame contains the user information subfield of the second STA with the identification information of the second STA; and a value of an uplink and downlink indication subfield of the second STA in user information subfield of the second STA of the third trigger frame is the seventh value.

The second communication unit 4010 is configured to receive the fourth trigger frame sent from the first STA, where the fourth trigger frame is used for the multiple STAs to perform a simultaneous coordinated transmission; the multiple STAs include: a third STA and a second STA; and the third STA is associated with the first STA.

The fourth trigger frame is used to trigger the third STA to perform a simultaneous uplink coordinated transmission, and to trigger the second STA to perform a simultaneous downlink coordinated transmission.

The second communication unit 4010 is configured to parse the fourth trigger frame in a case where it is determined that the value of the first indication bit of the first PPDU carrying the fourth trigger frame is the second specified value.

The second communication unit 4010 is configured to enable a downlink COFDMA and/or CSR in a case where the fourth trigger frame satisfies the fourth condition, and send the downlink data to the fourth STA in the second RU; where the second RU is a resource corresponding to the fourth STA; and receive the block ACK (BA) sent from the fourth STA in the second RU.

The fourth condition includes at least one of: a value of a fourth sharing transmission indication subfield in the common information field of the fourth trigger frame being the eighth value; the fourth trigger frame containing the user information subfield of the second STA with the identification information of the second STA; a value of an uplink and downlink indication subfield of the second STA in the user information subfield of the second STA of the fourth trigger frame being the seventh value; a value of a transmission mode subfield of the second STA in the user information subfield of the second STA of the fourth trigger frame being not the first value; a value of a transmission mode subfield of the second STA in the user information subfield of the second STA of the fourth trigger frame being the third value; the value of the uplink and downlink indication subfield of the fourth STA in the user information subfield of the fourth STA of the fourth trigger frame being the seventh value; and the fourth trigger frame containing the user information subfield of the fourth STA with the identification information of the fourth STA.

The first STA is a sharing access point (AP), and the second STA is a shared AP.

It should be understood that in addition to the second communication unit, the second STA may further include a second processing unit. The second processing unit may be used to parse the trigger frame and determine whether the corresponding conditions are satisfied. The specific processing mannerss have been described in detail in the previous embodiments, which not be repeated herein.

FIG. 41 is a schematic structural diagram of a third STA 4100 according to the embodiments of the present disclosure, the third STA 4100 may include: a third communication unit 4110, configured to receive a trigger frame sent from a first STA, where the trigger frame is used to establish a coordinated transmission between multiple STAs; and the third STA is associated with the first STA.

Common information field of the trigger frame includes at least one of: a trigger type subfield, where a value of the trigger type subfield is used to represent a type of the trigger frame; a transmission mode subfield, where a value of the transmission mode subfield is used to indicate a coordinated transmission mode used for sharing a transmission opportunity (TXOP) of the multiple STAs, and/or whether the multiple STAs enable a TXOP sharing mode; an uplink and downlink indication subfield, where a value of the uplink and downlink indication subfield is used to indicate that the TXOP is used for a simultaneous uplink transmission or a simultaneous downlink transmission; and a sharing transmission indication subfield, where the sharing transmission indication subfield being used to represent whether the multiple STAs enable the TXOP sharing mode.

The value of the trigger type subfield is a first specified value, where the first specified value represents that the trigger frame is used to establish the coordinated transmission between the multiple STAs.

The transmission mode subfield occupies at least part of bits of a first reserved subfield in the common information field.

A first reserved subfield is an extremely high throughput (EHT) reserved subfield in the common information field.

An uplink and downlink indication subfield occupies at least part of bits of a second reserved subfield in the common information field.

The second reserved subfield is an extremely high throughput (EHT) reserved subfield in the common information field.

The sharing transmission indication subfield occupies at least part of bits of a third reserved subfield in the common information field.

The third reserved field is a reserved subfield before the number of HE/EHT-LTF symbol subfield in the common information field.

The trigger frame contains one or more user information subfields; a k-th user information subfield of the one or more user information subfields is user information subfield of the k-th STA, and k is an integer greater than or equal to 1; and the k-th user information subfield includes at least one of: an identification subfield of the k-th STA, where the identification subfield of the k-th STA is used to carry the identification information of the k-th STA; a transmission mode subfield of the k-th STA, where a value of the transmission mode subfield of the k-th STA is used to indicate a corporative transmission mode used for TXOP sharing of the k-th STA, and/or whether the k-th STA enables the TXOP sharing mode; a transmit power subfield of the k-th STA, where the transmit power subfield of the k-th STA is used to indicate a maximum transmit power used by the k-th STA; and an uplink and downlink indication subfield of the k-th STA, where the uplink and downlink indication subfield of the k-th STA being used to indicate that the corporative transmission of the k-th STA is a simultaneous uplink transmission or a simultaneous downlink transmission.

The identification information of the k-th STA is a 12-bit virtual association identifier (VAID) and/or 12 least significant bits of an association identifier (AID) of the k-th STA.

The transmission mode subfield of the k-th STA occupies at least part of bits of a trigger dependent user information subfield in the k-th user information subfield.

The transmit power subfield of the k-th STA occupies at least part of bits of a trigger dependent user information subfield in the k-th user information subfield.

The uplink and downlink indication subfield of the k-th STA occupies at least part of bits of the trigger dependent user information subfield of k-th user information subfield.

An AID and/or VAID of the third STA is configured for the third STA by the first STA based on the first range of identification values, and the third STA is associated with the first STA. The first range of identification values is within at least one of: 1-2007, 2008-2044, and 2047-4096.

The trigger frame is carried by a first physical layer protocol unit (PPDU); where a value of a first indication bit in a preamble of the first PPDU is a second specified value. The first PPDU is an EHT PPDU; the first indication bit may be a MAP TXS indication bit.

The trigger frame is a first trigger frame; the third communication unit 4110 is configured to receive a first trigger frame sent from a first STA, where the first trigger frame is used for the multiple STAs to perform a simultaneous uplink coordinated transmission; the multiple STAs include at least one of: a third STA and a fourth STA; where the fourth STA is associated with the second STA, and the second STA is different from the first STA.

The third communication unit 4110 is configured to send uplink data to the first STA after the first duration from the moment when the first trigger frame is received in a case where it is determined that the fifth condition is satisfied based on the first trigger frame; the third STA receives the block ACK (BA) sent from the first STA.

The fifth condition includes at least one of: the value of the first transmission mode subfield in the common information field of the first trigger frame being not the first value; the value of the first transmission mode subfield in the common information field of the first trigger frame being the second value; the value of the first sharing transmission indication subfield in the common information field of the first trigger frame being the eighth value; the value of the first uplink and downlink indication subfield in the common information field of the first trigger frame being the sixth value; the first trigger frame containing the user information subfield of the third STA with the identification information of the third STA; the value of the uplink and downlink indic in the user information subfield of the third STA of the first trigger frame being the sixth value; the value of the transmission mode subfield of the third STA in the user information subfield of the third STA of the first trigger frame being the second value; and the value of the transmission mode subfield of the third STA in the user information subfield of the third STA of the first trigger frame being not the first value.

The third communication unit 4110 is configured to send the uplink data to the first STA in the first RU by a first transmit power; the first transmit power is determined based on a maximum transmit power indicated by a transmit power subfield of the third STA of the first trigger frame.

The third communication unit 4110 is configured to receive the block ACK (BA) sent from the first STA in the first RU.

The fifth condition includes at least one of: the value of the first transmission mode subfield in the common information field of the first trigger frame being not the first value; the value of the first transmission mode subfield in the common information field of the first trigger frame being the third value; the value of the first sharing transmission indication subfield in the common information field of the first trigger frame being the eighth value; the value of the first uplink and downlink indication subfield in the common information field of the first trigger frame being the sixth value; the first trigger frame containing the user information subfield of the third STA with the identification information of the third STA; the value of the uplink and downlink indic in the user information subfield of the third STA of the first trigger frame being the sixth value; the value of the transmission mode subfield of the third STA in the user information subfield of the third STA of the first trigger frame being the third value; and the value of the transmission mode subfield of the third STA in the user information subfield of the third STA of the first trigger frame being not the first value.

The third communication unit 4110 is configured to receive the first frame sent from the first STA, where the first frame is sent from the first STA after sending a second trigger frame.

The third communication unit 4110 is configured to send the uplink data to the first STA after receiving the first frame; and the third STA receives the BA sent from the first STA.

The trigger frame is a third trigger frame; the third communication unit 4110 is configured to receive a third trigger frame sent from the first STA, where the third trigger frame is used for the multiple STAs to perform a simultaneous downlink coordinated transmission; the multiple STAs include: a first STA and a second STA; and the second STA is different from the first STA.

The third communication unit 4110 is configured to receive downlink data sent by the first STA in a case where the third trigger frame satisfies the sixth condition; and send a block acknowledgment (BA) to the first STA.

The sixth condition includes at least one of: the value of the third sharing transmission indication subfield in the common information field of the third trigger frame being the eighth value; the value of the third uplink and downlink indication subfield in the common information field of the third trigger frame being the seventh value; the value of the third transmission mode subfield in the common information field of the third trigger frame being not the first value; the third trigger frame containing the user information subfield of the third STA with the identification information of the third STA; the value of the transmission mode subfield of the third STA in the user information subfield of the third STA of the third trigger frame being not the first value; and a value of an uplink and downlink indication subfield of a third STA in user information subfield of the third STA of the third trigger frame being the seventh value.

The sixth condition further includes at least one of: the value of the third transmission mode subfield in the common information field of the third trigger frame being the second value; and the value of the transmission mode subfield of the third STA in the user information subfield of the third STA of the third trigger frame being the second value.

The sixth condition further includes at least one of: the value of the third transmission mode subfield in the common information field of the third trigger frame being the third value; and the value of the transmission mode subfield of the third STA in the user information subfield of the third STA of the third trigger frame being the third value.

The third communication unit 4110 is configured to receive the downlink data sent from the first STA and the downlink data sent from the second STA in a case where the third trigger frame satisfies the sixth condition.

The sixth condition further includes at least one of: the value of the third transmission mode subfield in the common information field of the third trigger frame being the fourth value; and the value of the transmission mode subfield of the third STA in the user information subfield of the third STA of the third trigger frame being the fourth value.

The trigger frame is a fourth trigger frame; the third communication unit 4110 is configured to receive the fourth trigger frame sent from the first STA, and the fourth trigger frame is used for the multiple STAs to perform a simultaneous coordinated transmission; and the multiple STAs include: a third STA and a second STA.

The fourth trigger frame is used to trigger the third STA to perform a simultaneous uplink coordinated transmission, and to trigger the second STA to perform a simultaneous downlink coordinated transmission.

The third communication unit 4110 is configured to send the uplink data to the first STA based on the second transmit power after a fourth duration from that the fourth trigger frame is received in a case where the fourth trigger frame satisfies the seventh condition; and the second transmit power is determined based on the transmit power subfield of the third STA in the user information subfield of the third STA of the fourth trigger frame; and receiving the BA sent from the first STA.

The seventh condition includes at least one of: the common information field of the fourth trigger frame containing a third sharing transmission indication subfield, where the value of the third sharing transmission indication subfield is the eighth value; the fourth trigger frame containing the user information subfield of the third STA with the identification information of the third STA; and the value of the uplink and downlink indication subfield of the third STA in the user information subfield of the third STA of the fourth trigger frame being the sixth value.

The second STA is a shared access point (AP). The first STA is a sharing access point (AP).

It should be understood that in addition to the above-mentioned third communication unit, the third STA may further include a third processing unit. The third processing unit may be used to parse the trigger frame and judge whether the trigger frame satisfies the corresponding conditions, and then control subsequent processing. The specific processing has been described in detail in the aforementioned embodiments, which will not be repeated herein.

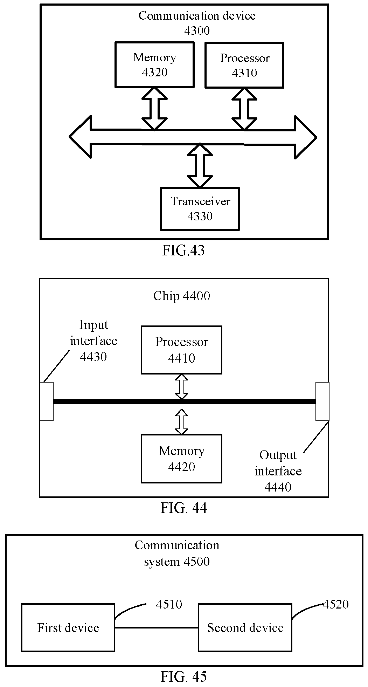

FIG. 42 is a schematic structural diagram of a fourth STA 4200 according to the embodiments of the present disclosure, where the fourth STA 4200 may include: a fourth communication unit 4210, configured to receive a trigger frame sent from a first STA, where the trigger frame is used to establish a coordinated transmission between multiple STAs; and the fourth STA is not associated with the first STA.

Common information field of the trigger frame includes at least one of: a trigger type subfield, where a value of the trigger type subfield is used to represent a type of the trigger frame; a transmission mode subfield, where a value of the transmission mode subfield is used to indicate a coordinated transmission mode used for sharing a transmission opportunity (TXOP) of the multiple STAs, and/or whether the multiple STAs enable a TXOP sharing mode; an uplink and downlink indication subfield, where a value of the uplink and downlink indication subfield is used to indicate that the TXOP is used for a simultaneous uplink transmission or a simultaneous downlink transmission; and a sharing transmission indication subfield, the sharing transmission indication subfield being used to represent whether the multiple STAs enable the TXOP sharing mode.

The value of the trigger type subfield is a first specified value, where the first specified value represents that the trigger frame is used to establish the coordinated transmission between the multiple STAs.

The transmission mode subfield occupies at least part of bits of a first reserved subfield in the common information field.

A first reserved subfield is an extremely high throughput (EHT) reserved subfield in the common information field.

An uplink and downlink indication subfield occupies at least part of bits of a second reserved subfield in the common information field.

The second reserved subfield is an extremely high throughput (EHT) reserved subfield in the common information field.

The sharing transmission indication subfield occupies a third reserved subfield in the common information field.

The third reserved field is a reserved subfield before the number of HE/EHT-LTF symbol subfield in the common information field.

The trigger frame contains one or more user information subfields; an m-th user information subfield of the one or more user information subfields is user information subfield of an m-th STA, and m is an integer greater than or equal to 1; and the m-th user information subfield includes at least one of: an identification subfield of the m-th STA, and the identification subfield of the m-th STA is used to carry the identification information of the m-th STA; m is an integer greater than or equal to 1 and the m-th STA is one of the multiple STAs; a transmission mode subfield of the m-th STA, where a value of the transmission mode subfield of the m-th STA is used to indicate a corporative transmission mode used for TXOP sharing of the m-th STA, and/or whether the m-th STA enables the TXOP sharing mode; a transmit power subfield of the m-th STA, where the transmit power subfield of the m-th STA is used to indicate a maximum transmit power used by the m-th STA; and an uplink and downlink indication subfield of the m-th STA, where the uplink and downlink indication subfield of the m-th STA is used to indicate that the corporative transmission of the m-th STA is a simultaneous uplink transmission or a simultaneous downlink transmission.

The identification information of the m-th STA is a 12-bit virtual association identifier (VAID) and/or 12 least significant bits of an association identifier (AID) of the m-th STA.

The transmission mode subfield of the m-th STA occupies at least part of bits of a trigger dependent user information subfield in the m-th user information subfield.

The transmit power subfield of the m-th STA occupies at least part of bits of the trigger dependent user information subfield in the m-th user information subfield.

The uplink and downlink indication subfield of the m-th STA occupies at least part of bits of the trigger dependent user information subfield in the m-th user information subfield.

An AID and/or VAID of the fourth STA is configured by the second STA based on a second range of identification values, and the fourth STA is associated with the second STA.

The second range of identification values is within at least one of: 1-2007, 2008-2044, and 2047-4096.

The trigger frame is carried by a first physical layer protocol unit (PPDU); where a value of a first indication bit in a preamble of the first PPDU is a second specified value. The first PPDU is an EHT PPDU; and the first indication bit may be a MAP TXS indication bit.

The trigger frame is a first trigger frame; the fourth communication unit 4210 is configured to receive a first trigger frame sent by a first STA, and the first trigger frame is used for the multiple STAs to perform the simultaneous uplink corporative transmission; the multiple STAs include at least one of: a third STA and a fourth STA; where the third STA is associated with the first STA, the fourth STA is associated with the second STA, and the second STA is different from the first STA.

The fourth communication unit 4210 is configured to send the uplink data to the second STA after a first duration from a moment when the first trigger frame is received in a case where it is determined that an eighth condition is satisfied based on the first trigger frame; and the second STA is associated with the fourth STA;
The fourth STA receives the block ACK (BA) sent by the second STA.

The eighth condition includes at least one of: the value of the first transmission mode subfield in the common information field of the first trigger frame being not the first value; the value of the first transmission mode subfield in the common information field of the first trigger frame being a second value; the value of the first sharing transmission indication subfield in the common information field of the first trigger frame being the eighth value; the value of the first uplink and downlink indication subfield in the common information field of the first trigger frame being the sixth value; the first trigger frame containing the user information subfield of the fourth STA with the identification information of the fourth STA; the value of the uplink and downlink indication subfield of the fourth STA in the user information subfield of the fourth STA of the first trigger frame being the sixth value; the value of the transmission mode subfield of the fourth STA in the user information subfield of the fourth STA of the first trigger frame being the second value; and the value of the transmission mode subfield of the fourth STA in the user information subfield of the fourth STA of the first trigger frame being not the first value.

The fourth communication unit 4210 is configured to send the uplink data to the second STA in the second RU by adopting a third transmit power; where the third transmit power is determined based on the maximum transmit power indicated by the transmit power subfield of the fourth STA of the first trigger frame.

The fourth communication unit 4210 is configured to receive the block ACK (BA) sent from the second STA in the second RU.

The eighth condition includes at least one of: the value of the first transmission mode subfield in the common information field of the first trigger frame being not the first value; the value of the first transmission mode subfield in the common information field of the first trigger frame being the third value; the value of the first sharing transmission indication subfield in the common information field of the first trigger frame being the eighth value; the value of the first uplink and downlink indication subfield in the common information field of the first trigger frame being the sixth value; the first trigger frame containing the user information subfield of the fourth STA with the identification information of the fourth STA; the value of the uplink and downlink indication subfield of the fourth STA in the user information subfield of the fourth STA of the first trigger frame being the sixth value; the value of the transmission mode subfield of the fourth STA in the user information subfield of the fourth STA of the first trigger frame being the third value; and the value of the transmission mode subfield of the fourth STA in the user information subfield of the fourth STA of the first trigger frame being not the first value.

The fourth communication unit 4210 is configured to receive the first frame sent from the second STA, where the first frame is sent from the second STA after receiving the second trigger frame sent from the first STA.

The fourth communication unit 4210 is configured to send the uplink data to the second STA after receiving the first frame; and receive the BA sent from the second STA.

The fourth communication unit 4210 is configured to receive the third trigger frame sent from the first STA, where the third trigger frame is used for the multiple STAs to perform a simultaneous downlink coordinated transmission; the multiple STAs include: a first STA and a second STA; and the second STA is different from the first STA.

The fourth communication unit 4210 is configured to receive the downlink data sent from the second STA in a case where the third trigger frame satisfies the ninth condition; and send the block ACK (BA) to the second STA.

The ninth condition includes at least one of: the value of the third sharing transmission indication subfield in the common information field of the third trigger frame being the eighth value; the value of the third uplink and downlink indication subfield in the common information field of the third trigger frame being the seventh value; the value of the third transmission mode subfield in the common information field of the third trigger frame being not the first value; the third trigger frame containing the user information subfield of the fourth STA with the identification information of the fourth STA; the value of the transmission mode subfield of the fourth STA in the user information subfield of the fourth STA of the third trigger frame being not the first value; and a value of an uplink and downlink indication subfield of a fourth STA in the user information subfield of the fourth STA of the third trigger frame being the seventh value.

The ninth condition further includes at least one of: the value of the third transmission mode subfield in the common information field of the third trigger frame being the second value; and the value of the transmission mode subfield of the fourth STA in the user information subfield of the fourth STA of the third trigger frame being the second value.

The ninth condition further includes at least one of: the value of the third transmission mode subfield in the common information field of the third trigger frame being the third value; and the value of the transmission mode subfield of the fourth STA in the user information subfield of the fourth STA of the third trigger frame being the third value.

The trigger frame is a fourth trigger frame; the fourth communication unit 4210 is configured to receive the fourth trigger frame sent from the first STA, and the fourth trigger frame is used for the multiple STAs to perform a simultaneous coordinated transmission; the multiple STAs include: a third STA and a second STA; and the third STA is associated with the first STA.

The fourth trigger frame is used to trigger the third STA to perform a simultaneous uplink coordinated transmission, and to trigger the second STA to perform a simultaneous downlink coordinated transmission.

The fourth communication unit 4210 is configured to receive the downlink data sent from the second STA in a case where the fourth trigger frame satisfies the tenth condition; and the fourth STA sends the BA to the second STA.

The tenth condition includes at least one of: the fourth trigger frame containing the user information subfield of the fourth STA with the identification information of the fourth STA; and the value of the uplink and downlink indication subfield of the fourth STA in the user information subfield of the fourth STA of the fourth trigger frame being the seventh value.

The second STA is a shared access point (AP). The first STA is a sharing access point (AP).

It should be understood that in addition to the above-mentioned fourth communication unit, the fourth STA may further include a fourth processing unit. The third processing unit may be used to parse the trigger frame and judge whether the trigger frame satisfies the corresponding conditions, and then control subsequent processing. The specific processing has been described in detail in the aforementioned embodiments, which will not be repeated herein.

FIG. 43 is a schematic structural diagram of a communication device 4300 according to the embodiments of the present disclosure. The communication device 4300 includes a processor 4310, and the processor 4310 may call a computer program from a memory and run the computer program, so as to enable the communication device 4300 to implement the methods in the embodiments of the present disclosure.

In an implementation, the communication device 4300 may further include a memory 4320. Herein, the processor 4310 may call the computer program from a memory 4320 and run the computer program, so as to enable the communication device 4300 to implement the methods in the embodiments of the present disclosure.

Herein, the memory 4320 may be a separate device independent from the processor 4310, or may also be integrated into the processor 4310.

In an implementation, the communication device 4300 may further include a transceiver 4352, and the processor 4310 may control the transceiver 4352 to communicate with other devices, specifically, may send information or data to other devices, or receive information or data sent from other devices.

Herein, the transceiver 4352 may include a transmitter and a receiver. The transceiver 4352 may further include an antenna(s), and the number of antenna(s) may be one or more.

In an implementation, the communication device 4300 may be the second STA of the embodiments of the present disclosure, and the communication device 4300 may implement corresponding procedures implemented by the second STA in the respective methods of the embodiments of the present disclosure, which will not be repeated herein for the sake of brevity.

In an implementation, the communication device 4300 may be the first STA of the embodiments of the present disclosure, and the communication device 4300 may implement corresponding procedures implemented by the first STA in the respective methods of the embodiments of the present disclosure, which will not be repeated herein for the sake of brevity.

In an implementation, the communication device 4300 may be the third STA of the embodiments of the present disclosure, and the communication device 4300 may implement corresponding procedures implemented by the third STA in the respective methods of the embodiments of the present disclosure, which will not be repeated herein for the sake of brevity.

In an implementation, the communication device 4300 may be the fourth STA of the embodiments of the present disclosure, and the communication device 4300 may implement corresponding procedures implemented by the fourth STA in the respective methods of the embodiments of the present disclosure, which will not be repeated herein for the sake of brevity.

FIG. 44 is a schematic structural diagram of a chip 4400 according to the embodiments of the present disclosure. The chip 4400 includes a processor 4410, which may call a computer program from a memory and run the computer program, so as to implement the methods in the embodiments of the present disclosure.

In an implementation, the chip 4400 may further include a memory 4420. Herein, the processor 4410 may call a computer program from the memory 4420 and run the computer program, so as to implement the methods performed by the first STA, the second STA, the third STA, or the fourth STA in the embodiments of the present disclosure.

Herein, the memory 4420 may be a separate device independent from the processor 4410, or may also be integrated into the processor 4410.

In an implementation, the chip 4400 may further include an input interface 4452. Herein, the processor 4410 may control the input interface 4452 to communicate with other devices or chips, and specifically, may acquire information or data sent from other devices or chips.

In an implementation, the chip 4400 may further include an output interface 4440. Herein, the processor 4410 may control the output interface 4440 to communicate with other devices or chips, and specifically, may output information or data to other devices or chips.

In an implementation, the chip may be the second STA of the embodiments of the present disclosure, and the chip may implement corresponding procedures implemented by the second STA in the respective methods of the embodiments of the present disclosure, which will not be repeated herein for the sake of brevity.

In an implementation, the chip may be the first STA of the embodiments of the present disclosure, and the chip may implement corresponding procedures implemented by the first STA in the respective methods of the embodiments of the present disclosure, which will not be repeated herein for the sake of brevity.

In an implementation, the chip may be the third STA of the embodiments of the present disclosure, and the chip may implement corresponding procedures implemented by the third STA in the respective methods of the embodiments of the present disclosure, which will not be repeated herein for the sake of brevity.

In an implementation, the chip may be the fourth STA of the embodiments of the present disclosure, and the chip may implement corresponding procedures implemented by the fourth STA in the respective methods of the embodiments of the present disclosure, which will not be repeated herein for the sake of brevity.

The chips applied to the second STA, the first STA, the third STA, and the fourth STA may be the same chip or different chips.

It should be understood that the chip mentioned in the embodiments of the present application may also be referred to as a system on chip, a system chip, a chip system or a system-on-chip chip, etc.

The processor mentioned above may be a general-purpose processor, a digital signal processor (digital signal processor, DSP), a field programmable gate array (field programmable gate array, FPGA), an application specific integrated circuit (application specific integrated circuit, ASIC) or other programmable logic devices, transistor logic devices, discrete hardware components, etc. Herein, the general purpose processor mentioned above may be a microprocessor or any legacy processor.

The above-mentioned memory may be a volatile memory or a nonvolatile memory, or may include both volatile and nonvolatile memories. Herein, the non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM).

It is understood that the memory mentioned is as an example, but not as a limitation. For example, the memory in the embodiments of the present disclosure may also be static random access memory (static RAM, SRAM), dynlamic random access memory (dynamic RAM, DRAM), simultaneous dynamic random access memory (simultaneous DRAM, SDRAM), double data rate simultaneous dynamic random access memory (double data rate SDRAM, DDR SDRAM), enhanced simultaneous dynamic random access memory (enhanced SDRAM, ESDRAM), simultaneous link dynamic random access memory (synch link DRAM, SLDRAM) and direct memory bus random access memory (Direct Rambus RAM, DR RAM), etc. That is, the memory in the embodiments of the present disclosure is intended to include but is not limited to these and any other suitable types of memory.

FIG. 45 is a schematic block diagram of a communication system 4500 according to the embodiments of the present disclosure. The communication system 4500 includes a first device 4510 and a second device 4520.

Herein, the first device 4510 may be used to implement the corresponding functions implemented by the first STA in the above method, and the second device 4520 may be used to implement the corresponding functions implemented by the second STA in the above method. It will not be repeated herein for the sake of brevity. Alternatively, the first device 4510 may be used to implement the corresponding functions implemented by the second STA in the above method, and the second device 4520 may be used to implement the corresponding functions implemented by the fourth STA in the above method. It will not be repeated herein for the sake of brevity. Alternatively, the first device 4510 may be used to implement the corresponding functions implemented by the first STA in the above method, and the second device 4520 may be used to implement the corresponding functions implemented by the third STA in the above method. It will not be repeated herein for the sake of brevity. Alternatively, the first device 4510 may be used to implement the corresponding functions implemented by the second STA in the above method, and the second device 4520 may be used to implement the corresponding functions implemented by the third STA in the above method. It will not be repeated herein for the sake of brevity. Alternatively, the first device 4510 may be used to implement the corresponding functions implemented by the first STA in the above method, and the second device 4520 may be used to implement the corresponding functions implemented by the fourth STA in the above method..It will not be repeated herein for the sake of brevity.

In the above embodiments, all or part of them may be implemented by software, hardware, firmware or any combination thereof. When implemented using software, it may be implemented in whole or in part as a computer program product. The computer program product includes one or more computer instructions. When the computer program instructions are loaded and executed on a computer, the processes or functions in the embodiments of the present disclosure are generated in whole or in part. The computer may be a general purpose computer, a special purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via wired (e.g., coaxial cable, optical fiber, digital subscriber line (Digital Subscriber Line, DSL)) or wireless (e.g., infrared, wireless, microwave, etc.) means. The computer-readable storage medium may be any available medium that may be accessed by a computer or a data storage device such as a server or a data center that contains one or more available media. The available medium may be a magnetic medium (eg, a floppy disk, a hard disk, a magnetic tape), an optical medium (eg, a DVD), or a semiconductor medium (eg, a solid state disk (Solid State Disk, SSD)).

It should be understood that in the various embodiments of the present disclosure, the size of the serial numbers of the above-mentioned procedures does not mean the order of execution. The execution order of each process should be determined by its function and internal logic, and should not constitute any limitation on the implementation process of the embodiments of the present disclosure.

Those skilled in the art may clearly understand that, for the convenience and brevity of description, the specific working processes of the systems, devices and units described above may refer to the corresponding processes in the aforementioned method embodiments and will not be repeated herein. The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A communication method, comprising:
sending, by a first station (STA), a trigger frame, wherein the trigger frame is used to establish a coordinated transmission between multiple STAs.

2. The method according to claim 1, wherein a common information field of the trigger frame comprises at least one of:
a trigger type subfield, wherein a value of the trigger type subfield is used to represent a type of the trigger frame;
a transmission mode subfield, wherein a value of the transmission mode subfield is used to indicate a coordinated transmission mode used by transmission opportunity (TXOP) sharing of the multiple STAs, and/or whether the multiple STAs enable a TXOP sharing mode;
an uplink and downlink indication subfield, wherein a value of the uplink and downlink indication subfield is used to indicate whether a TXOP is used for a simultaneous uplink transmission or a simultaneous downlink transmission; and
a sharing transmission indication subfield, wherein a value of the sharing transmission indication subfield is used to indicate whether the multiple STAs enable the TXOP sharing mode.

3. The method according to claim 2, wherein the value of the trigger type subfield is a first specified value, where the first specified value represents that the trigger frame is used to establish a coordinated transmission between the multiple STAs.

4. The method according to claim 2 or 3, wherein the transmission mode subfield occupies at least part of bits of a first reserved subfield in the common information field.

5. The method according to claim 4, wherein the first reserved subfield is an extremely high throughput (EHT) reserved subfield in the common information field.

6. The method according to any one of claims 2 to 5, wherein the uplink and downlink indication subfield occupies at least part of bits of a second reserved subfield in the common information field.

7. The method according to claim 6, wherein the second reserved subfield is an extremely high throughput (EHT) reserved subfield in the common information field.

8. The method according to any one of claims 2 to 7, wherein the sharing transmission indication subfield occupies at least part of bits of a third reserved subfield in the common information field.

9. The method according to claim 8, wherein a third reserved field is a reserved subfield before a number of high efficiency (HE)/extremely high throughput long training field (EHT-LTF) symbol subfield in the common information field.

10. The method according to any one of claims 1 to 9, wherein the trigger frame comprises one or more user information subfields; an i-th user information subfield of the one or more user information subfields is a user information subfield of an i-th STA; i is an integer greater than or equal to 1, and the i-th STA is one of the multiple STAs;
the i-th user information subfield comprises at least one of:
an identification subfield of the i-th STA, wherein the identification subfield of the i-th STA is used to carry identification information of the i-th STA;
a transmission mode subfield of the i-th STA, wherein a value of the transmission mode subfield of the i-th STA is used to represent a coordinated transmission mode used by TXOP sharing of the i-th STA, and/or whether the i-th STA enables a TXOP sharing mode;
a transmit power subfield of the i-th STA, wherein the transmit power subfield of the i-th STA is used to indicate a maximum transmit power used by the i-th STA; and
an uplink and downlink indication subfield of the i-th STA, wherein the uplink and downlink indication subfield of the i-th STA is used to indicate that the coordinated transmission of the i-th STA is a simultaneous uplink transmission or a simultaneous downlink transmission.

11. The method according to claim 10, wherein the identification information of the i-th STA is a 12-bits virtual association identifier (VAID) and/or 12 least significant bits of an association identifier (AID) of the i-th STA.

12. The method according to claim 10 or 11, wherein the transmission mode subfield of the i-th STA occupies at least part of bits of a trigger dependent user information subfield in the i-th user information subfield.

13. The method according to any one of claims 10 to 12, wherein the transmit power subfield of the i-th STA occupies at least part of bits of a trigger dependent user information subfield in the i-th user information subfield.

14. The method according to any one of claims 10 to 13, wherein
the uplink and downlink indication subfield of the i-th STA occupies at least part of bits of a trigger dependent user information subfield in the i-th user information subfield.

15. The method according to any one of claims 1 to 14, wherein an AID and/or a VAID of the first STA is configured by a target device.

16. The method according to any one of claims 1 to 15, wherein the method further comprises at least one of:
acquiring, by the first STA, an AID and/or a VAID of a second STA from a target device;
configuring, by the first STA, an AID and/or a VAID for a third STA based on a first range of identification values; wherein the first range of identification values is configured by the target device, and the third STA is associated with the first STA; and
acquiring, by the first STA, an AID and/or a VAID of a fourth STA from the second STA; wherein the fourth STA is associated with the second STA.

17. The method according to claim 16, wherein the first range of identification values is within at least one of: 1-2007, 2008-2044, and 2047-4096.

18. The method according to any one of claims 15 to 17, wherein the target device is a coordinating device; the coordinating device is an access point (AP); or the coordinating device is a device other than an AP.

19. The method according to any one of claims 1 to 18, wherein
the trigger frame is carried by a first physical layer protocol unit (PPDU); wherein a value of a first indication bit in a preamble of the first PPDU is a second specified value.

20. The method according to claim 19, wherein the first PPDU is an enhanced extremely high throughput (EHT) PPDU; and the first indication bit is a multiple access point transmission opportunity sharing (MAP TXS) indication bit.

21. The method according to any one of claims 2 to 20, wherein the trigger frame is a first trigger frame;
the sending, by the first STA, the trigger frame comprises: sending, by the first STA, the first trigger frame, wherein the first trigger frame is used for the multiple STAs to perform a simultaneous uplink coordinated transmission;
the multiple STAs comprises at least one of: a third STA and a fourth STA; wherein the third STA is associated with the first STA, the fourth STA is associated with a second STA, and the second STA is different from the first STA.

22. The method according to claim 21, wherein the method further comprises:
receiving, by the first STA, uplink data sent from the third STA, after a first duration from a moment when the first trigger frame is sent;
sending, by the first STA, a block acknowledgement (BA) to the third STA.

23. The method according to claim 22, wherein the receiving, by the first STA, the uplink data sent from the third STA, after the first duration from the moment when the first trigger frame is sent comprises:
in a case where an uplink CBF mode and/or a C-UL MU-MIMO mode is enabled, performing, by the first STA, a beam nulling operation on the fourth STA after the first duration from the moment when the first trigger frame is sent, and receiving, by the first STA, the uplink data sent from the third STA.

24. The method according to claim 23, wherein
the common information field of the first trigger frame comprises a first transmission mode subfield; and/or,
a user information subfield of the third STA of the first trigger frame comprises a transmission mode subfield of the third STA; and/or,
a user information subfield of the fourth STA of the first trigger frame comprises a transmission mode subfield of the fourth STA.

25. The method according to claim 22, wherein the receiving, by the first STA, the uplink data sent from the third STA after the first duration from the moment when the first trigger frame is sent comprises: in a case where an uplink COFDMA mode and/or a CSR mode is enabled, receiving, by the first STA, uplink data of the third STA in a first resource unit (RU) after the first duration from the moment when the first trigger frame is sent; wherein the first RU is a resource corresponding to the third STA.

26. The method according to claim 25, wherein the sending, by the first STA, the BA to the third STA comprises:
sending, by the first STA, the BA to the third STA on the first RU.

27. The method according to claim 25 or 26, wherein
the common information field of the first trigger frame comprises a first transmission mode subfield; and/or,
user information subfield of the third STA of the first trigger frame further comprises: a transmission mode subfield of the third STA; and/or,
user information subfield of the fourth STA of the first trigger frame further comprises: a transmission mode subfield of the fourth STA.

28. The method according to any one of claims 25 to 27, wherein
the common information field of the first trigger frame comprises a first uplink and downlink indication subfield; and/or,
user information subfield of the second STA of the first trigger frame further comprises: an uplink and downlink indication subfield of the second STA; and/or,
user information subfield of the third STA of the first trigger frame further comprises: an uplink and downlink indication subfield of the third STA; and/or,
user information subfield of the fourth STA of the first trigger frame further comprises: an uplink and downlink indication subfield of the fourth STA.

29. The method according to any one of claims 25 to 38, wherein
user information subfield of the third STA of the first trigger frame further comprises: a transmit power subfield of the third STA; and/or,
user information subfield of the fourth STA of the first trigger frame further comprises: a transmit power subfield of the fourth STA.

30. The method according to any one of claims 21 to 29, wherein the common information field of the first trigger frame further comprises: a first sharing transmission indication subfield.

31. The method according to any one of claims 21 to 30, wherein
user information subfield of the second STA of the first trigger frame comprises an identification subfield of the second STA, wherein the identification subfield of the second STA is used to carry identification information of the second STA; and/or,
user information subfield of the third STA of the first trigger frame comprises an identification subfield of the third STA, wherein the identification subfield of the third STA is used to carry identification information of the third STA; and/or,
user information subfield of the fourth STA of the first trigger frame comprises an identification subfield of the fourth STA, wherein the identification subfield of the fourth STA is used to carry identification information of the fourth STA.

32. The method according to any one of claims 2 to 20, wherein the trigger frame is a second trigger frame; the sending, by the first STA, the trigger frame comprises: sending, by the first STA, the second trigger frame, the second trigger frame is used to trigger the multiple STAs to simultaneous send a first frame, and the first frame is used to trigger STAs associated with the multiple STAs to perform a simultaneous uplink coordinated transmission; the multiple STAs comprise the first STA and a second STA.

33. The method according to claim 32, wherein the method further comprises:
in a case where a legacy uplink TXOP sharing mode is enabled, sending, by the first STA, the first frame to a third STA after a second duration from that the second trigger frame is sent; the third STA is associated with the first STA;
receiving, by the first STA, uplink data sent from the third STA, after sending the first frame to the third STA;
sending, by the first STA, a block acknowledgement (BA) to the third STA.

34. The method according to claim 32 or 33, wherein
common information field of the second trigger frame comprises a second transmission mode subfield; and/or,
user information subfield of the second STA of the second trigger frame comprises a transmission mode subfield of the second STA.

35. The method according to any one of claims 32 to 34, wherein user information subfield of the second STA of the second trigger frame comprises an identification subfield of the second STA, where the identification subfield of the second STA is used to carry the identification information of the second STA.

36. The method according to any one of claims 32 to 35, wherein
common information field of the second trigger frame comprises a second uplink and downlink indication subfield; or,
user information subfield of the second STA of the second trigger frame further comprises: an uplink and downlink indication subfield of the second STA.

37. The method according to any one of claims 32 to 36, wherein common information field of the second trigger frame further comprises: a second sharing transmission indication subfield; wherein a value of the second sharing transmission indication subfield is an eighth value.

38. The method according to any one of claims 2 to 20, wherein the trigger frame is a third trigger frame; the sending, by the first STA, the trigger frame, comprises: sending, by the first STA, the third trigger frame, wherein the third trigger frame is used for the multiple STAs to perform a simultaneous downlink coordinated transmission; the multiple STAs comprise the first STA and a second STA; the second STA is different from the first STA.

39. The method according to claim 38, wherein the method further comprises:
sending, by the first STA, downlink data to a third STA after a third duration from that the third trigger frame is sent, the third STA is associated with the first STA;
receiving, by the first STA, a block acknowledgement (BA) sent from the third STA.

40. The method according to claim 39, wherein the sending, by the first STA, the downlink data to the third STA after the third duration from that the third trigger frame is sent comprises:
in a case where a downlink CBF mode is enabled, performing, by the first STA, a beam nulling operation on a fourth STA after the third duration from that the third trigger frame is sent, and sending, by the first STA, the downlink data to the third STA; wherein the fourth STA is associated with the second STA.

41. The method according to claim 40, wherein
common information field of the third trigger frame comprises a third transmission mode subfield; and/or,
user information subfield of the second STA of the third trigger frame comprises a transmission mode subfield of the second STA.

42. The method according to claim 49, wherein the sending, by the first STA, the downlink data to the third STA after the third duration from that the third trigger frame is sent comprises:
in a case where a downlink COFDMA mode and/or a CSR mode is enabled, sending, by the first STA, the downlink data to the third STA in a first resource unit (RU) after the third duration from that the third trigger frame is sent; wherein the first RU is a resource corresponding to the third STA.

43. The method according to claim 42, wherein the receiving, by the first STA, the block acknowledgement (BA) sent from the third STA comprises: receiving, by the first STA on the first RU, the block acknowledgement (BA) sent from the third STA.

44. The method according to claim 42 or 43, wherein
common information field of the third trigger frame comprises a third transmission mode subfield; and/or,
user information subfield of the second STA of the third trigger frame further comprises a transmission mode subfield of the second STA.

45. The method according to claim 40, wherein the sending, by the first STA, the downlink data to the third STA after the third duration from that the third trigger frame is sent, and the method comprises:
in a case where a joint transmission mode is enabled, possessing, by the first STA, to-be-transmitted data according to precoding to obtain the downlink data after the third duration from that the third trigger frame is sent, and sending, by the first STA, the downlink data to the third STA.

46. The method according to claim 45, wherein
common information field of the third trigger frame further comprises: a third transmission mode subfield; and/or,
user information subfield of the second STA of the third trigger frame further comprises a transmission mode subfield of the second STA.

47. The method according to any one of claims 38 to 46, wherein
common information field of the third trigger frame comprises a third uplink and downlink indication subfield; and/or,
user information subfield of the second STA of the third trigger frame further comprises: an uplink and downlink indication subfield of the second STA.

48. The method according to any one of claims 38 to 47, wherein
user information subfield of the second STA of the third trigger frame further comprises: a transmit power subfield of the second STA; and/or an identification subfield of the second STA, where the identification subfield of the second STA is used to carry identification information of the second STA.

49. The method according to any one of claims 38 to 48, wherein common information field of the third trigger frame further comprises: a third sharing transmission indication subfield.

50. The method according to any one of claims 38 to 49, wherein user information subfield of the third STA of the third trigger frame comprises at least one of:
an identification subfield of the third STA, where the identification subfield of the third STA is used to carry identification information of the third STA; and
an uplink and downlink indication subfield of the third STA.

51. The method according to any one of claims 38 to 50, wherein a user information subfield of a fourth STA of the third trigger frame comprises at least one of:
an identification subfield of the fourth STA, where the identification subfield of the fourth STA is used to carry identification information of the fourth STA; and
an uplink and downlink indication subfield of the fourth STA.

52. The method according to any one of claims 2 to 20, wherein the trigger frame is a fourth trigger frame;
the sending, by the first STA, the trigger frame, comprises: sending, by the first STA, the fourth trigger frame, wherein the fourth trigger frame is used for the multiple STAs to perform a simultaneous coordinated transmission; the multiple STAs comprise: a third STA and a second STA; and the third STA is associated with the first STA.

53. The method according to claim 52, wherein the fourth trigger frame is used to trigger the third STA to perform a simultaneous uplink coordinated transmission, and trigger the second STA to perform a simultaneous downlink coordinated transmission.

54. The method according to claim 52 or 53, wherein the method further comprises:
receiving, by the first STA, uplink data sent from the third STA, after a fourth duration from that the fourth trigger frame is sent;
sending, by the first STA, a block acknowledgement (BA) to the third STA.

55. The method according to any one of claims 52 to 54, wherein a user information subfield of a third STA of the fourth trigger frame comprises at least one of:
an identification subfield of the third STA, where the identification subfield of the third STA is used to carry identification information of the third STA;
a transmit power subfield of the third STA, where the transmit power subfield of the third STA is used to indicate a maximum transmit power used by the third STA; and
an uplink and downlink indication subfield of the third STA.

56. The method according to any one of claims 52 to 55, wherein a user information subfield of the second STA of the fourth trigger frame comprises at least one of:
an identification subfield of the second STA, where the identification subfield of the second STA is used to carry identification information of the second STA;
a transmit power subfield of the second STA;
an uplink and downlink indication subfield of the second STA; and
a transmission mode subfield of the second STA.

57. The method according to any one of claims 52 to 56, wherein a user information subfield of a fourth STA of the fourth trigger frame comprises:
an identification subfield of the fourth STA, where the identification subfield of the fourth STA is used to carry identification information of the fourth STA; wherein the fourth STA is associated with the second STA;
an uplink and downlink indication subfield of the fourth STA.

58. The method according to any one of claims 16, 21 to 57, wherein the second STA is a shared AP.

59. The method according to any one of claims 1 to 58, wherein the first STA is a sharing access point (AP).

60. A communication method, comprising:
receiving, by a second station (STA), a trigger frame sent from a first STA, wherein the trigger frame is used to establish a coordinated transmission between multiple STAs.

61. The method according to claim 60, wherein a common information field of the trigger frame comprises at least one of:
a trigger type subfield, wherein a value of the trigger type subfield is used to represent a type of the trigger frame;
a transmission mode subfield, wherein a value of the transmission mode subfield is used to indicate a coordinated transmission mode used by transmission opportunity (TXOP) sharing of the multiple STAs, and/or whether the multiple STAs enable a TXOP sharing mode;
an uplink and downlink indication subfield, wherein a value of the uplink and downlink indication subfield is used to indicate that a TXOP is used for a simultaneous uplink transmission or a simultaneous downlink transmission; and
a sharing transmission indication subfield, wherein a value of the sharing transmission indication subfield is used to indicate whether the multiple STAs enable the TXOP sharing mode.

62. The method according to claim 61, wherein the value of the trigger type subfield is a first specified value, where the first specified value represents that the trigger frame is used to establish a coordinatedtransmission between the multiple STAs.

63. The method according to claim 61 or 62, wherein the transmission mode subfield occupies at least part of bits of a first reserved subfield in the common information field.

64. The method according to claim 63, wherein the first reserved subfield is an extremely high throughput (EHT) reserved subfield in the common information field.

65. The method according to any one of claims 61 to 64, wherein the uplink and downlink indication subfield occupies at least part of bits of a second reserved subfield in the common information field.

66. The method according to claim 65, wherein the second reserved subfield is an extremely high throughput (EHT) reserved subfield in the common information field.

67. The method according to any one of claims 61 to 66, wherein the sharing transmission indication subfield occupies at least part of bits of a third reserved subfield in the common information field.

68. The method according to claim 67, wherein a third reserved field is a reserved subfield before a number of high efficiency (HE)/extremely high throughput long training field (EHT-LTF) symbol subfield in the common information field.

69. The method according to any one of claims 61 to 68, wherein the trigger frame comprises one or more user information subfields; a j-th user information subfield of the one or more user information subfields is a user information subfield of a j-th STA; j is an integer greater than or equal to 1, and the j-th STA is one of the multiple STAs;
the j-th user information subfield comprises at least one of:
an identification subfield of the j-th STA, wherein the identification subfield of the j-th STA is used to carry identification information of the j-th STA;
a transmission mode subfield of the j-th STA, wherein a value of the transmission mode subfield of the j-th STA is used to indicate a coordinated transmission mode used by TXOP sharing of the j-th STA, and/or whether the j-th STA enables a TXOP sharing mode;
a transmit power subfield of the j-th STA, wherein the transmit power subfield of the j-th STA is used to indicate a maximum transmit power used by the j-th STA; and
an uplink and downlink indication subfield of the j-th STA, wherein the uplink and downlink indication subfield of the j-th STA is used to indicate that the coordinated transmission of the j-th STA is a simultaneous uplink transmission or a simultaneous downlink transmission.

70. The method according to claim 69, wherein the identification information of the j-th STA is a 12-bit virtual association identifier (VAID) and/or 12 least significant bits of an association identifier (AID) of the j-th STA.

71. The method according to any one of claim 69 or 70, wherein the transmission mode subfield of the j-th STA occupies at least part of bits of a trigger dependent user information subfield in the j-th user information subfield.

72. The method according to any one of claims 69 to 71, wherein the transmit power subfield of the j-th STA occupies at least part of bits of a trigger dependent user information subfield in the j-th user information subfield.

73. The method according to any one of claims 69 to 72, wherein
the uplink and downlink indication subfield of the j-th STA occupies at least part of bits of a trigger dependent user information subfield in the j-th user information subfield.

74. The method according to any one of claims 60 to 73, wherein an AID and/or a VAID of the second STA is configured by a target device.

75. The method according to any one of claims 60 to 74, wherein the method further comprises at least one of:
acquiring, by the second STA, an AID and/or a VAID of a first STA from a target device;
allocating, by the second STA, an AID and/or a VAID for a fourth STA based on a second range of identification values; wherein the second range of identification values is configured by the target device; and
acquiring, by the second STA, an AID and/or a VAID of a third STA from the first STA; wherein the third STA is associated with the first STA.

76. The method according to claim 75, wherein the second range of identification values is within at least one of: 1-2007, 2008-2044, and 2047-4096.

77. The method according to any one of claims 74 to 76, wherein the target device is a coordinating device; the coordinating device is an access point (AP); or the coordinating device is a device other than an AP.

78. The method according to any one of claims 60 to 77, wherein
the trigger frame is carried by a first physical layer protocol unit (PPDU); wherein a value of a first indication bit in a preamble of the first PPDU is a second specified value.

79. The method according to claim 78, wherein the first PPDU is an enhanced extremely high throughput (EHT) PPDU; and/or the first indication bit is a multiple access point transmission opportunity sharing (MAP TXS) indication bit.

80. The method according to any one of claims 61 to 79, wherein the trigger frame is a first trigger; and the receiving, by the second STA, the trigger frame sent from the first STA comprises:
receiving, by the second STA, the first trigger frame sent from the first STA, wherein the first trigger frame is used for the multiple STAs to perform a simultaneous uplink coordinated transmission; wherein the multiple STAs comprise at least one of: a third STA and a fourth STA; the third STA is associated with the first STA, and the fourth STA is associated with the second STA.

81. The method according to claim 80, wherein the method further comprises:
in a case where a value of a first indication bit in a preamble of a first PPDU carrying the first trigger frame being a second specified value is determined, parsing, by the second STA, the first trigger frame.

82. The method according to claim 80 or 81, wherein the method further comprises:
in a case where the first trigger frame satisfies a first condition, receiving, by the second STA, uplink data of the fourth STA; and sending, by the second STA, a block acknowledgement (BA) to the fourth STA.

83. The method according to claim 82, wherein in a case where the first trigger frame satisfies the first condition, receiving the uplink data of the fourth STA comprises:
in a case where the first trigger frame satisfies the first condition, enabling, by the second STA, an uplink CBF mode and/or a C-UL MU-MIMO mode and receiving, by the second STA, the uplink data sent from the fourth STA.

84. The method according to claim 83, wherein the first condition comprises at least one of:
a value of a first transmission mode subfield in a common information field of the first trigger frame being not a first value;
a value of the first transmission mode subfield in the common information field of the first trigger frame being a second value;
a value of a first sharing transmission indication subfield in the common information field of the first trigger frame being an eighth value;
a value of a first uplink and downlink indication subfield in a common information field of the first trigger frame being a sixth value;
a value of a transmission mode subfield of a fourth STA in a user information subfield of the fourth STA of the first trigger frame being not the first value;
the value of the transmission mode subfield of the fourth STA in the user information subfield of the fourth STA of the first trigger frame being the second value;
a value of an uplink and downlink indication subfield of the fourth STA in the user information subfield of the fourth STA of the first trigger frame being the sixth value;
the first trigger frame comprising a user information subfield of the fourth STA with identification information of the fourth STA;
user information subfield of the first trigger frame not comprising identification information of the second STA;
the first trigger frame comprising a user information subfield of the second STA with the identification information of the second STA; and
a value of an uplink and downlink indication subfield of the second STA in the user information subfield of the second STA of the first trigger frame being the sixth value.

85. The method according to claim 82, wherein in a case where the first trigger frame satisfies the first condition, receiving the uplink data of the fourth STA comprises:
in a case where the first trigger frame satisfies the first condition, enabling, by the second STA, an uplink COFDMA mode and/or a CSR mode, and receiving, by the second STA, the uplink data of the fourth STA on a second resource unit (RU) after a first duration from a moment when the first trigger frame is received; wherein the second RU is a resource corresponding to the fourth STA.

86. The method according to claim 85, wherein the sending, by the second STA, the block acknowledgement (BA) to the fourth STA comprises: sending, by the second STA on the second RU, the block acknowledgement (BA) to the fourth STA.

87. The method according to claim 85 or 86, wherein the first condition comprises at least one of:
a value of a first transmission mode subfield in a common information field of the first trigger frame being not a first value;
the value of the first transmission mode subfield in the common information field of the first trigger frame being a third value;
a value of a first sharing transmission indication subfield in the common information field of the first trigger frame being an eighth value;
a value of a first uplink and downlink indication subfield in the common information field of the first trigger frame being a sixth value;
a value of a transmission mode subfield of a fourth STA in a user information subfield of the fourth STA of the first trigger frame being not the first value;
the value of the transmission mode subfield of the fourth STA in the user information subfield of the fourth STA of the first trigger frame being the third value;
a value of an uplink and downlink indication subfield of the fourth STA in the user information subfield of the fourth STA of the first trigger frame being the sixth value;
the first trigger frame comprising a user information subfield of the fourth STA with identification information of the fourth STA;
user information subfield of the first trigger frame not comprising identification information of a second STA;
the first trigger frame comprising a user information subfield of the second STA with the identification information of the second STA; and
a value of an uplink and downlink indication subfield of the second STA in the user information subfield of the second STA of the first trigger frame being the sixth value.

88. The method according to any one of claims 61 to 79, wherein the trigger frame is a second trigger frame; and the receiving, by the second STA, the trigger frame sent from the first STA comprises:
receiving, by the second STA, the second trigger frame sent from the first STA, wherein the second trigger frame is used to trigger the multiple STAs to simultaneously send a first frame, and the first frame is used to trigger STAs associated with the multiple STAs to perform a simultaneous uplinkcoordinated transmission; the multiple STAs comprise a first STA and the second STA.

89. The method according to claim 88, wherein the method further comprises:
in a case where a value of a first indication bit in a preamble of a first PPDU carrying the second trigger frame being a second specified value is determined, parsing, by the second STA, the second trigger frame.

90. The method according to claim 88 or 89, wherein the method further comprises:
in a case where the second trigger frame satisfies a second condition, enabling, by the second STA, a legacy uplink TXOP sharing mode, and sending, by the second STA, the first frame to a fourth STA after a second duration from that the second trigger frame is received; the fourth STA is associated with the second STA;
receiving, by the second STA, uplink data of the fourth STA, and sending, by the second STA, a block acknowledgement (BA) to the fourth STA.

91. The method according to claim 90, wherein the second condition comprises at least one of:
a value of a second transmission mode subfield in a common information field of the second trigger frame being not a first value;
the value of the second transmission mode subfield in the common information field of the second trigger frame being not a fifth value;
a value of a second sharing transmission indication subfield in the common information field of the second trigger frame being an eighth value;
a value of a second uplink and downlink indication subfield in the common information field of the second trigger frame being a sixth value;
a value of a transmission mode subfield of the second STA in a user information subfield of the second STA of the second trigger frame being not the first value;
the value of the transmission mode subfield of the second STA in the user information subfield of the second STA of the second trigger frame being the second value;
the second trigger frame comprising the user information subfield of the second STA with identification information of the second STA; and
a value of an uplink and downlink indication subfield of the second STA in the user information subfield of the second STA of the second trigger frame being the sixth value.

92. The method according to any one of claims 61 to 79, wherein the trigger frame is a third trigger frame; and receiving, by the second STA, the trigger frame sent from the first STA comprises:
receiving, by the second STA, the third trigger frame sent from the first STA, wherein the third trigger frame is used for the multiple STAs to perform a simultaneous downlink coordinated ransmission; and the multiple STAs comprise the first STA and the second STA.

93. The method according to claim 92, wherein the method further comprises:
in a case where a value of a first indication bit of a first PPDU carrying the third trigger frame being a second specified value is determined, parsing, by the second STA, the third trigger frame.

94. The method according to claim 92 or 93, wherein the method further comprises:
in a case where the third trigger frame satisfies a third condition, sending downlink data to the fourth STA; and receiving, by the second STA, a block acknowledgement (BA) sent from the fourth STA.

95. The method according to claim 94, wherein the sending the downlink data to the fourth STA comprises:
enabling, by the second STA, a downlink CBF mode, performing a beam nulling operation on multiple other STAs, and sending the downlink data to the fourth STA after a third duration from that the third trigger frame is received; wherein the multiple other STAs are not associated with the second STA.

96. The method according to claim 95, wherein the third condition comprises at least one of:
a value of a third transmission mode subfield in a common information field of the third trigger frame being not a first value;
the value of the third transmission mode subfield in the common information field of the third trigger frame being a second value;
a value of a third sharing transmission indication subfield in the common information field of the third trigger frame being an eighth value;
a value of a third uplink and downlink indication subfield in the common information field of the third trigger frame being a seventh value;
a value of a transmission mode subfield of the second STA in a user information subfield of the second STA of the third trigger frame being not the first value;
the value of the transmission mode subfield of the second STA in the user information subfield of the second STA of the third trigger frame being the second value;
a value of an uplink and downlink indication subfield of the fourth STA in a user information subfield of a fourth STA of the third trigger frame being the seventh value;
the third trigger frame comprising a user information subfield of the fourth STA with identification information of the fourth STA;
the third trigger frame comprising a user information subfield of the second STA with identification information of the second STA; and
a value of an uplink and downlink indication subfield of the second STA in the user information subfield of the second STA of the third trigger frame being the seventh value.

97. The method according to claim 94, wherein the sending the downlink data to the fourth STA comprises:
enabling, by the second STA, a downlink COFDMA mode and/or a CSR mode, and sending, by the second STA, the downlink data to the fourth STA on a second resource unit (RU) after a third duration from that the third trigger frame is sent; wherein the second RU is a resource corresponding to the fourth STA.

98. The method according to claim 97, wherein the receiving, by the second STA, the BA sent from the fourth STA comprises: receiving, by the second STA, the block acknowledgement (BA) sent from the fourth STA on the second RU.

99. The method according to claim 97 or 98, wherein the third condition comprises at least one of:
a value of a third transmission mode subfield in a common information field of the third trigger frame being not a first value;
the value of the third transmission mode subfield in the common information field of the third trigger frame being a third value;
a value of a third sharing transmission indication subfield in the common information field of the third trigger frame being an eighth value;
a value of a third uplink and downlink indication subfield in the common information field of the third trigger frame being a seventh value;
a value of a transmission mode subfield of a second STA in a user information subfield of the second STA of the third trigger frame being not the first value;
the value of the transmission mode subfield of the second STA in the user information subfield of the second STA of the third trigger frame being the third value;
a value of an uplink and downlink indication subfield of a fourth STA in a user information subfield of the fourth STA of the third trigger frame being the seventh value;
the third trigger frame comprising a user information subfield of the fourth STA with identification information of the fourth STA;
the third trigger frame comprising a user information subfield of the second STA with identification information of the second STA; and
a value of an uplink and downlink indication subfield of the second STA in the user information subfield of the second STA of the third trigger frame being the seventh value.

100. The method according to claim 92 or 93, wherein the method further comprises:
in a case where the third trigger frame satisfies a third condition, enabling, by the second STA, a joint transmission mode;
possessing, by the second STA, to-be-transmitted data according to precoding to obtain downlink data, after a third duration from that the third trigger frame is received, and sending the downlink data to a third STA, wherein the third STA is associated with the first STA.

101. The method according to claim 100, wherein the third condition comprises at least one of:
a value of a third transmission mode subfield in a common information field of the third trigger frame being not a first value;
the value of the third transmission mode subfield in the common information field of the third trigger frame being a fourth value;
a value of a third sharing transmission indication subfield in the common information field of the third trigger frame being an eighth value;
a value of a third uplink and downlink indication subfield in the common information field of the third trigger frame being a seventh value;
a value of a transmission mode subfield of a second STA in a user information subfield of the second STA of the third trigger frame being not the first value;
the value of the transmission mode subfield of the second STA in the user information subfield of the second STA of the third trigger frame being the fourth value;
a value of an uplink and downlink indication subfield of a third STA in a user information subfield of the third STA of the third trigger frame being the seventh value;
the third trigger frame comprising a user information subfield of the third STA with identification information of the third STA;
the third trigger frame comprising a user information subfield of the second STA with identification information of the second STA; and
a value of an uplink and downlink indication subfield of the second STA in the user information subfield of the second STA of the third trigger frame being the seventh value.

102. The method according to any one of claims 74 to 98, wherein the trigger frame is a fourth trigger frame; and receiving, by the second STA, the trigger frame sent from the first STA comprises:
receiving, by the second STA, the fourth trigger frame sent from the first STA, wherein the fourth trigger frame is used for the multiple STAs to perform a simultaneous coordinated transmission;
wherein the multiple STAs comprise a third STA and the second STA; and the third STA is associated with the first STA.

103. The method according to claim 102, wherein the fourth trigger frame is used to trigger the third STA to perform a simultaneous uplink coordinated transmission, and trigger the second STA to perform a simultaneous downlink coordinated transmission.

104. The method according to claim 102 or 103, wherein the method further comprises:
in a case where a value of a first indication bit in a first PPDU carrying the fourth trigger frame being a second specified value is determined, parsing, by the second STA, the fourth trigger frame.

105. The method according to any one of claims 102 to 104, wherein the method further comprises:
in a case where the fourth trigger frame satisfies a fourth condition, enabling, by the second STA, downlink COFDMA and/or CSR, and sending, by the second STA, downlink data to the fourth STA on a second RU; wherein the second RU is a resource corresponding to the fourth STA;
receiving, by the second STA, a block acknowledgement (BA) sent from the fourth STA on the second RU.

106. The method according to claim 105, wherein the fourth condition comprises at least one of:
a value of a fourth sharing transmission indication subfield in a common information field of the fourth trigger frame being an eighth value;
the fourth trigger frame comprising a user information subfield of a second STA with identification information of the second STA;
a value of an uplink and downlink indication subfield of the second STA in the user information subfield of the second STA of the fourth trigger frame being a seventh value;
a value of a transmission mode subfield of the second STA in the user information subfield of the second STA of the fourth trigger frame, being not a first value;
the value of the transmission mode subfield of the second STA in the user information subfield of the second STA of the fourth trigger frame being a third value;
a value of an uplink and downlink indication subfield of a fourth STA in a user information subfield of the fourth STA of the fourth trigger frame being the seventh value; and
the fourth trigger frame comprising the user information subfield of the fourth STA with identification information of the fourth STA.

107. The method according to any one of claims 60 to 106, wherein the first STA is a sharing access point (AP), and the second STA is a shared AP.

108. A communication method, comprising:
receiving, by a third station (STA), a trigger frame sent from a first STA, wherein the trigger frame is used to establish a coordinated transmission between multiple STAs; and the third STA is associated with the first STA.

109. The method according to claim 108, wherein a common information field of the trigger frame comprises at least one of:
a trigger type subfield, wherein a value of the trigger type subfield is used to represent a type of the trigger frame;
a transmission mode subfield, wherein a value of the transmission mode subfield is used to indicate a coordinated transmission mode used by transmission opportunity (TXOP) sharing of the multiple STAs, and/or whether the multiple STAs enable a TXOP sharing mode;
an uplink and downlink indication subfield, wherein a value of the uplink and downlink indication subfield is used to indicate that a TXOP is used for a simultaneous uplink transmission or a simultaneous downlink transmission; and
a sharing transmission indication subfield, wherein the sharing transmission indication subfield is used to indicate whether the multiple STAs enable the TXOP sharing mode.

110. The method according to claim 109, wherein the value of the trigger type subfield is a first specified value, where the first specified value represents that the trigger frame is used to establish a coordinated transmission between the multiple STAs.

111. The method according to claim 109 or 110, wherein the transmission mode subfield occupies at least part of bits of a first reserved subfield in the common information field.

112. The method according to claim 111, wherein the first reserved subfield is an extremely high throughput (EHT) reserved subfield in the common information field.

113. The method according to any one of claims 109 to 112, wherein the uplink and downlink indication subfield occupies at least part of bits of a second reserved subfield in the common information field.

114. The method according to claim 113, wherein the second reserved subfield is an extremely high throughput (EHT) reserved subfield in the common information field.

115. The method according to any one of claims 109 to 114, wherein the sharing transmission indication subfield occupies at least part of bits of a third reserved subfield in the common information field.

116. The method according to claim 115, wherein the third reserved field is a reserved subfield before a number of HE/EHT-LTF symbol subfield in the common information field.

117. The method according to any one of claims 108 to 116, wherein the trigger frame comprises one or more user information subfields; a k-th user information subfield of the one or more user information subfields is a user information subfield of a k-th STA; k is an integer greater than or equal to 1;
the k-th user information subfield comprises at least one of:
an identification subfield of the k-th STA, wherein the identification subfield of the k-th STA is used to carry identification information of the k-th STA; k is an integer greater than or equal to 1, and the k-th STA is one of the multiple STAs;
a transmission mode subfield of the k-th STA, wherein a value of the transmission mode subfield of the k-th STA is used to indicate a coordinated transmission mode used by TXOP sharing of the k-th STA, and/or whether the k-th STA enables a TXOP sharing mode;
a transmit power subfield of the k-th STA, wherein the transmit power subfield of the k-th STA is used to indicate a maximum transmit power used by the k-th STA; and
an uplink and downlink indication subfield of the k-th STA, wherein the uplink and downlink indication subfield of the k-th STA is used to indicate that thecoordinated transmission of the k-th STA is a simultaneous uplink transmission or a simultaneous downlink transmission.

118. The method according to claim 117, wherein the identification information of the k-th STA is a 12-bit virtual association identifier (VAID) and/or 12 least significant bits of an association identifier (AID) of the k-th STA.

119. The method according to claim 118, wherein the transmission mode subfield of the k-th STA occupies at least part of bits of a trigger dependent user information subfield in the k-th user information subfield.

120. The method according to any one of claims 117 to 119, wherein the transmit power subfield of the k-th STA occupies at least part of bits of a trigger dependent user information subfield in the k-th user information subfield.

121. The method according to any one of claims 118 to 120, wherein
the uplink and downlink indication subfield of the k-th STA occupies at least part of bits of a trigger dependent user information subfield in the k-th user information subfield.

122. The method according to any one of claims 117 to 121, wherein an AID and/or VAID of the third STA is configured by a first STA for the third STA based on a first range of identification values, and the third STA is associated with the first STA.

123. The method according to claim 122, wherein the first range of identification values is within at least one of: 1-2007, 2008-2044, and 2047-4096.

124. The method according to any one of claims 108 to 123, wherein the trigger frame is carried by a first physical layer protocol unit (PPDU); wherein a value of a first indication bit in a preamble of the first PPDU is a second specified value.

125. The method according to claim 124, wherein the first PPDU is an EHT PPDU; and the first indication bit can be a MAP TXS indication bit.

126. The method according to any one of claims 109 to 125, wherein the trigger frame is a first trigger frame; and receiving, by the third station (STA), the trigger frame sent from the first STA comprises:
receiving, by the third STA, the first trigger frame sent from the first STA, wherein the first trigger frame is used for the multiple STAs to perform a simultaneous uplink coordinated transmission; the multiple STAs comprise at least one of: the third STA and a fourth STA; wherein the fourth STA is associated with a second STA, and the second STA is different from the first STA.

127. The method according to claim 126, wherein the method further comprises:
in a case where a fifth condition being satisfied based on the first trigger frame is determined, sending, by the third STA, uplink data to the first STA after a first duration from a moment when the first trigger frame is received; and receiving, by the third STA, a block acknowledgement (BA) sent from the first STA.

128. The method according to any one of claims 127, wherein the fifth condition comprises at least one of:
a value of a first transmission mode subfield in a common information field of the first trigger frame being not a first value;
the value of the first transmission mode subfield in the common information field of the first trigger frame being a second value;
a value of a first sharing transmission indication subfield in the common information field of the first trigger frame being an eighth value;
a value of a first uplink and downlink indication subfield in the common information field of the first trigger frame being a sixth value;
the first trigger frame comprising a user information subfield of the third STA with identification information of the third STA;
a value of an uplink and downlink indication subfield of the third STA in the user information subfield of the third STA of the first trigger frame being the sixth value;
a value of a transmission mode subfield of the third STA in the user information subfield of the third STA of the first trigger frame being the second value; and
the value of the transmission mode subfield of the third STA in the user information subfield of the third STA of the first trigger frame being not the first value.

129. The method according to claim 127, wherein the sending the uplink data to the first STA comprises:
sending, by the third STA on a first RU, the uplink data to the first STA with a first transmit power; wherein the first transmit power is determined based on a maximum transmit power indicated by a transmit power subfield of the third STA of the first trigger frame.

130. The method according to claim 129, wherein the receiving, by the third STA, the block acknowledgement (BA) sent from the first STA comprises: receiving, by the third STA on the first RU, the block acknowledgement (BA) sent from the first STA.

131. The method according to claim 129 or 130, wherein the fifth condition comprises at least one of:
a value of a first transmission mode subfield in a common information field of the first trigger frame being not a first value;
the value of the first transmission mode subfield in the common information field of the first trigger frame being a third value;
a value of a first sharing transmission indication subfield in the common information field of the first trigger frame being an eighth value;
a value of a first uplink and downlink indication subfield in the common information field of the first trigger frame being a sixth value;
the first trigger frame comprising a user information subfield of the third STA with identification information of the third STA;
a value of an uplink and downlink indication subfield of the third STA in the user information subfield of the third STA of the first trigger frame being the sixth value;
a value of a transmission mode subfield of the third STA in the user information subfield of the third STA of the first trigger frame being the third value; and
the value of the transmission mode subfield of the third STA in the user information subfield of the third STA of the first trigger frame being not the first value.

132. The method according to any one of claims 109 to 125, wherein the method further comprises:
receiving, by the third STA, a first frame sent from the first STA, wherein the first frame is sent from the first STA after sending the second trigger frame.

133. The method according to claim 132, wherein the method further comprises:
sending, by the third STA, uplink data to the first STA after receiving the first frame;
receiving, by the third STA, a BA sent from the first STA.

134. The method according to any one of claims 109 to 125, wherein the trigger frame is a third trigger frame; the receiving, by the third station (STA), the trigger frame sent from the first STA comprises: receiving, by the third STA, the third trigger frame sent from the first STA, wherein the third trigger frame is used for the multiple STAs to perform a simultaneous downlink coordinated transmission;
the multiple STAs comprise the first STA and a second STA; and the second STA is different from the first STA.

135. The method according to claim 134, wherein the method further comprises:
in a case where the third trigger frame satisfies a sixth condition, receiving, by the third STA, downlink data sent from the first STA; and sending, by the third STA, a block acknowledgment (BA) to the first STA.

136. The method according to claim 135, wherein the sixth condition comprises at least one of:
a value of a third sharing transmission indication subfield in a common information field of the third trigger frame being an eighth value;
a value of a third uplink and downlink indication subfield in the common information field of the third trigger frame being a seventh value;
a value of a third transmission mode subfield in the common information field of the third trigger frame being not a first value;
the third trigger frame comprising a user information subfield of the third STA with identification information of the third STA;
a value of a transmission mode subfield of the third STA in a user information subfield of the third STA of the third trigger frame being not the first value; and
a value of an uplink and downlink indication subfield of the third STA in the user information subfield of the third STA of the third trigger frame being the seventh value.

137. The method according to claim 136, wherein the sixth condition further comprises at least one of:
the value of the third transmission mode subfield in the common information field of the third trigger frame being a second value; and
the value of the transmission mode subfield of the third STA in the user information subfield of the third STA of the third trigger frame being the second value.

138. The method according to claim 136, wherein the sixth condition further comprises at least one of:
the value of the third transmission mode subfield in the common information field of the third trigger frame being a third value; and
the value of the transmission mode subfield of the third STA in the user information subfield of the third STA of the third trigger frame being the third value.

139. The method according to claim 136, wherein in a case where the third trigger frame satisfies the sixth condition, receiving, by the third STA, the downlink data sent from the first STA further comprises:
in a case where the third trigger frame satisfies the sixth condition, receiving, by the third STA, the downlink data sent from the first STA and receiving, by the third STA, downlink data sent from a second STA.

140. The method according to claim 139, wherein the sixth condition further comprises at least one of:
the value of the third transmission mode subfield in the common information field of the third trigger frame being a fourth value; and
the value of the transmission mode subfield of the third STA in the user information subfield of the third STA of the third trigger frame being the fourth value.

141. The method according to any one of claims 109 to 125, wherein the trigger frame is a fourth trigger frame; receiving, by the third station (STA), the trigger frame sent from the first STA comprises: receiving, by the third station (STA), the fourth trigger frame sent from the first STA, wherein the fourth trigger frame is used for the multiple STAs to perform a simultaneous coordinated transmission; and the multiple STAs comprise the third STA and a second STA.

142. The method according to claim 141, wherein the fourth trigger frame is used to trigger the third STA to perform a simultaneous uplink coordinatedtransmission, and trigger the second STA to perform a simultaneous downlink coordinated transmission.

143. The method according to claim 141 or 142, wherein the method further comprises:
in a case where the fourth trigger frame satisfies a seventh condition, sending, by the third STA, uplink data to the first STA based on a second transmit power after a fourth duration from that the fourth trigger frame is received; wherein the second transmit power is determined based on a transmit power subfield of the third STA of a user information subfield of the third STA of the fourth trigger frame;
receiving, by the third STA, a BA sent from the first STA.

144. The method according to claim 143, wherein the seventh condition comprises at least one of:
a common information field of the fourth trigger frame comprising a third sharing transmission indication subfield, wherein a value of the third sharing transmission indication subfield being an eighth value;
the fourth trigger frame comprising a user information subfield of the third STA with identification information of the third STA; and
a value of an uplink and downlink indication subfield of the third STA in the user information subfield of the third STA of the fourth trigger frame being a sixth value.

145. The method according to any one of claims 108 to 144, wherein the second STA is a shared access point (AP); and/or the first STA is a sharing access point (AP).

146. A communication method, comprising:
receiving, by a fourth station (STA), a trigger frame sent from a first STA, wherein the trigger frame is used to establish a coordinated transmission between multiple STAs; and the fourth STA is not associated with the first STA.

147. The method according to claim 146, wherein a common information field of the trigger frame comprises at least one of:
a trigger type subfield, wherein a value of the trigger type subfield is used to represent a type of the trigger frame;
a transmission mode subfield, wherein a value of the transmission mode subfield is used to indicate a coordinated transmission mode used by transmission opportunity (TXOP) sharing of the multiple STAs, and/or whether the multiple STAs enable a TXOP sharing mode;
an uplink and downlink indication subfield, wherein a value of the uplink and downlink indication subfield is used to indicate that a TXOP is used for a simultaneous uplink transmission or a simultaneous downlink transmission; and
a sharing transmission indication subfield, wherein the sharing transmission indication subfield is used to indicate whether the multiple STAs enable the TXOP sharing mode.

148. The method according to claim 147, wherein the value of the trigger type subfield is a first specified value, where the first specified value represents that the trigger frame is used to establish a coordinated transmission between the multiple STAs.

149. The method according to claim 147 or 148, wherein the transmission mode subfield occupies at least part of bits of a first reserved subfield in the common information field.

150. The method according to claim 149, wherein the first reserved subfield is an extremely high throughput (EHT) reserved subfield in the common information field.

151. The method according to any one of claims 147 to 150, wherein the uplink and downlink indication subfield occupies at least part of bits of a second reserved subfield in the common information field.

152. The method according to claim 151, wherein the second reserved subfield is an extremely high throughput (EHT) reserved subfield in the common information field.

153. The method according to any one of claims 147 to 152, wherein the sharing transmission indication subfield occupies a third reserved subfield in the common information field.

154. The method according to claim 153, wherein the third reserved field is a reserved subfield before a number of HE/EHT-LTF symbol subfield in the common information field.

155. The method according to any one of claims 146 to 154, wherein the trigger frame comprises one or more user information subfields; an m-th user information subfield of the one or more user information subfields is a user information subfield of an m-th STA; and m is an integer greater than or equal to 1;
the m-th user information subfield comprises at least one of:
an identification subfield of the m-th STA, wherein the identification subfield of the m-th STA is used to carry identification information of the m-th STA; m is an integer greater than or equal to 1, and the m-th STA is one of the multiple STAs;
a transmission mode subfield of the m-th STA, wherein a value of the transmission mode subfield of the m-th STA is used to indicate a coordinated transmission mode used by TXOP sharing of the m-th STA, and/or whether the m-th STA enables a TXOP sharing mode;
a transmit power subfield of the m-th STA, wherein the transmit power subfield of the m-th STA is used to indicate a maximum transmit power used by the m-th STA; and
an uplink and downlink indication subfield of the m-th STA, wherein the uplink and downlink indication subfield of the m-th STA is used to indicate that the coordinated transmission of the m-th STA is a simultaneous uplink transmission or a simultaneous downlink transmission.

156. The method according to claim 155, wherein the identification information of the m-th STA is a 12-bit virtual association identifier (VAID) and/or 12 least significant bits of an association identifier (AID) of the m-th STA.

157. The method according to claim 155 or 156, wherein the transmission mode subfield of the m-th STA occupies at least part of bits of a trigger dependent user information subfield in the m-th user information subfield.

158. The method according to any one of claims 155 to 157, wherein the transmit power subfield of the m-th STA occupies at least part of bits of a trigger dependent user information subfield in the m-th user information subfield.

159. The method according to any one of claims 155 to 158, wherein
the uplink and downlink indication subfield of the m-th STA occupies at least part of bits of a trigger dependent user information subfield in the m-th user information subfield.

160. The method according to any one of claims 146 to 159, wherein an AID and/or a VAID of the fourth STA is configured by a second STA based on a second range of identification values, and the fourth STA is associated with the second STA.

161. The method according to claim 160, wherein the second range of identification values is within at least one of: 1-2007, 2008-2044, and 2047-4096.

162. The method according to any one of claims 146 to 161, wherein the trigger frame is carried by a first physical layer protocol unit (PPDU); wherein a value of a first indication bit in a preamble of the first PPDU is a second specified value.

163. The method according to claim 162, wherein the first PPDU is an EHT PPDU; and the first indication bit can be a MAP TXS indication bit.

164. The method according to any one of claims 147 to 163, wherein the trigger frame is a first trigger frame; the receiving, by the fourth STA, the trigger frame sent from the first STA comprises: receiving, by the fourth STA, the first trigger frame sent from the first STA, wherein the first trigger frame is used for the multiple STAs to perform a simultaneous uplink coordinated transmission;
the multiple STAs comprise at least one of: a third STA and the fourth STA; wherein the third STA is associated with the first STA, the fourth STA is associated with a second STA, and the second STA is different from the first STA.

165. The method according to claim 164, wherein the method further comprises:
in a case where an eighth condition being satisfied based on the first trigger frame is determined, sending, by the fourth STA, uplink data to the second STA after a first duration from a moment when the first trigger frame is received; wherein the second STA is associated with the fourth STA;
receiving, by the fourth STA, a block acknowledgement (BA) sent from the second STA.

166. The method according to claim 165, wherein the eighth condition comprises at least one of:
a value of a first transmission mode subfield in a common information field of the first trigger frame being not a first value;
the value of the first transmission mode subfield in the common information field of the first trigger frame being a second value;
a value of a first sharing transmission indication subfield in the common information field of the first trigger frame being an eighth value;
a value of a first uplink and downlink indication subfield in the common information field of the first trigger frame being a sixth value;
the first trigger frame comprising a user information subfield of the fourth STA with identification information of the fourth STA;
a value of an uplink and downlink indication subfield of the fourth STA in the user information subfield of the fourth STA of the first trigger frame being the sixth value;
a value of a transmission mode subfield of the fourth STA in the user information subfield of the fourth STA of the first trigger frame being the second value; and
the value of the transmission mode subfield of the fourth STA in the user information subfield of the fourth STA of the first trigger frame being not the first value.

167. The method according to claim 165, wherein sending the uplink data to the second STA comprises:
sending, by the fourth STA on a second RU, the uplink data to the second STA with a third transmit power; wherein the third transmit power is determined based on a maximum transmit power indicated by a transmit power subfield of the fourth STA of the first trigger frame.

168. The method according to claim 167, wherein the receiving, by the fourth STA, the block acknowledgment (BA) sent from the second STA comprises:
receiving, by the fourth STA on the second RU, the block acknowledgement (BA) sent from the second STA.

169. The method according to claim 167 or 168, wherein the eighth condition comprises at least one of:
a value of a first transmission mode subfield in a common information field of the first trigger frame being not a first value;
the value of the first transmission mode subfield in the common information field of the first trigger frame being a third value;
a value of a first sharing transmission indication subfield in the common information field of the first trigger frame being an eighth value;
a value of a first uplink and downlink indication subfield in the common information field of the first trigger frame being a sixth value;
the first trigger frame comprising a user information subfield of the fourth STA with identification information of the fourth STA;
a value of an uplink and downlink indication subfield of the fourth STA in the user information subfield of the fourth STA of the first trigger frame being the sixth value;
a value of a transmission mode subfield of the fourth STA in the user information subfield of the fourth STA of the first trigger frame being the third value; and
the value of the transmission mode subfield of the fourth STA in the user information subfield of the fourth STA of the first trigger frame being not the first value.

170. The method according to any one of claims 147 to 163, wherein the method further comprises:
receiving, by the fourth STA, a first frame snet from a second STA, wherein the first frame is sent from the second STA after receiving a second trigger frame sent from the first STA;
sending, by the fourth STA, uplink data to the second STA after receiving the first frame;
receiving, by the fourth STA, a BA sent from the second STA.

171. The method according to any one of claims 147 to 163, wherein the receiving, by the fourth STA, the trigger frame sent from the first STA comprises:
receiving, by the fourth STA, a third trigger frame sent from the first STA, wherein the third trigger frame is used for the multiple STAs to perform a simultaneous downlink coordinated transmission; the multiple STAs comprise the first STA and a second STA; and the second STA is different from the first STA.

172. The method according to claim 171, wherein the method further comprises:
in a case where the fourth trigger frame satisfies a ninth condition, receiving, by the fourth STA, downlink data sent from the second STA; and sending, by the fourth STA, a block acknowledgment (BA) to the second STA.

173. The method according to claim 172, wherein the ninth condition comprises at least one of:
a value of a third sharing transmission indication subfield in a common information field of the third trigger frame being an eighth value;
a value of a third uplink and downlink indication subfield in the common information field of the third trigger frame being a seventh value;
a value of a third transmission mode subfield in the common information field of the third trigger frame being not a first value;
the third trigger frame comprising a user information subfield of the fourth STA with identification information of the fourth STA;
a value of a transmission mode subfield of the fourth STA in the user information subfield of the fourth STA of the third trigger frame being not the first value; and
a value of an uplink and downlink indication subfield of the fourth STA in the user information subfield of the fourth STA of the third trigger frame being the seventh value.

174. The method according to claim 173, wherein the ninth condition further comprises at least one of:
the value of the third transmission mode subfield in the common information field of the third trigger frame being a second value; and
the value of the transmission mode subfield of the fourth STA in the user information subfield of the fourth STA of the third trigger frame being the second value.

175. The method according to claim 174, wherein the ninth condition further comprises at least one of:
the value of the third transmission mode subfield in the common information field of the third trigger frame being a third value; and
the value of the transmission mode subfield of the fourth STA in the user information subfield of the fourth STA of the third trigger frame, being the third value.

176. The method according to any one of claims 147 to 163, wherein the trigger frame is a fourth trigger frame; and the receiving, by the fourth STA, the trigger frame sent from the first STA comprises:
receiving, by the fourth STA, the fourth trigger frame sent from the first STA, wherein the fourth trigger frame is used for the multiple STAs to perform a simultaneous coordinated transmission; the multiple STAs comprise a third STA and a second STA; and the third STA is associated with the first STA.

177. The method according to claim 176, wherein the fourth trigger frame is used to trigger the third STA to perform a simultaneous uplink coordinated transmission, and trigger the second STA to perform a simultaneous downlink coordinated transmission.

178. The method according to claim 176 or 177, wherein the method further comprises:
in a case where the fourth trigger frame satisfies a tenth condition, receiving, by the fourth STA, downlink data sent from the second STA; and sending, by the fourth STA, a block acknowledgment (BA) to the second STA.

179. The method according to claim 178, wherein the tenth condition comprises at least one of:
the fourth trigger frame comprising a user information subfield of the fourth STA with identification information of the fourth STA; and
a value of an uplink and downlink indication subfield of the fourth STA in the user information subfield of the fourth STA of the fourth trigger frame being a seventh value.

180. The method according to any one of claims 164 to 179, wherein the second STA is a shared access point (AP).

181. The method according to any one of claims 146 to 180, wherein the first STA is a sharing access point (AP).

182. A first station (STA), comprising:
a first communication unit, configured to send a trigger frame, wherein the trigger frame is used to establish a coordinated transmission between multiple STAs.

183. A second station (STA), comprising:
a second communication unit, configured to receive a trigger frame sent from a first STA, wherein the trigger frame is used to establish a coordinated transmission between multiple STAs.

184. A third station (STA), comprising:
a third communication unit, configured to receive a trigger frame sent from a first STA, wherein the trigger frame is used to establish a coordinated ransmission between multiple STAs; and the third STA is associated with the first STA.

185. A fourth station (STA), comprising:
a fourth communication unit, configured to receive a trigger frame sent from a first STA, wherein the trigger frame is used to establish a coordinated transmission between multiple STAs; and the fourth STA is not associated with the first STA.

186. A communication device, comprising: a processor and a memory, wherein the memory is configured to store a computer program, the processor is configured to call and run the computer program stored in the memory, to cause the communication device to perform the method according to any one of claims 1 to 59, or the method according to any one of claims 60 to 107, or the method according to any one of claims 108 to 145, or the method according to any one of claims 146 to 181.

187. A chip, comprising: a processor, wherein the processor is configured to call a computer program from a memory and run the computer program, so as to enable a device equipped with the chip to perform the method according to any one of claims 1 to 59, or the method according to any one of claims 60 to 107, or the method according to any one of claims 108 to 145, or the method according to any one of claims 146 to 181.

188. A computer-readable storage medium, wherein the computer-readable storage medium is configured to store a computer program, the computer program, upon being executed by a device, enables the device to perform the method according to any one of claims 1 to 59, or the method according to any one of claims 60 to 107, or the method according to any one of claims 108 to 145, or the method according to any one of claims 146 to 181.

189. A computer program product, comprising computer program instructions, wherein the computer program instructions enable a computer to perform the method according to any one of claims 1 to 59, or the method according to any one of claims 60 to 107, or the method according to any one of claims 108 to 145, or the method according to any one of claims 146 to 181.

190. A computer program, wherein the computer program enables a computer to perform the method according to any one of claims 1 to 59, or the method according to any one of claims 60 to 107, or the method according to any one of claims 108 to 145, or the method according to any one of claims 146 to 181.
